# EUROPÄISCHE PATENTSCHRIFT

(11) **EP 2 041 239 B1**
(45) Veröffentlichungstag und Bekanntmachung des Hinweises auf die Patenterteilung: **07.09.2011**
(21) Anmeldenummer: 07786124.3
(22) Anmeldetag: 17.07.2007
(51) Int. Cl.: C09K 19/30, C09K 19/42

(54) **FLÜSSIGKRISTALLINES MEDIUM**
LIQUID CRYSTALLINE MEDIUM
MILIEU CRISTALLIN LIQUIDE

(30) Priorität: 19.07.2006 EP 06015030
(43) Veröffentlichungstag der Anmeldung: 01.04.2009
(60) Teilanmeldung: 10002665.7
(73) Patentinhaber: Merck Patent GmbH, 64293 Darmstadt (DE)
(72) Erfinder: BERNATZ, Georg, 64289 Darmstadt (DE); REIFFENRATH, Volker, 64380 Roßdorf (DE); BREMER, Matthias, 64295 Darmstadt (DE); LIETZAU, Lars, 64295 Darmstadt (DE); KLASEN-MEMMER, Melanie, 67259 Darmstadt (DE); SAITO, Izumi, 64295 Darmstadt (DE)
(86) Internationale Anmeldenummer: PCT/EP2007/006327
(87) Internationale Veröffentlichungsnummer: WO 2008/009417

(56) Entgegenhaltungen:
- EP-A1- 0 969 071
- EP-A2- 1 081 123
- CH-A5- 678 947
- DE-A1- 3 734 116
- DE-A1- 3 906 052
- DE-A1- 10 013 681
- DE-A1- 10 107 544
- DE-A1- 10 158 081
- US-A- 5 271 864
- US-A1- 2005 104 039

## Beschreibung

Die vorliegende Erfindung betrifft Flüssigkristallmedien und deren Verwendung in Flüssigkristallanzeigen sowie diese Flüssigkristallanzeigen, besonders Flüssigkristallanzeigen, die den ECB- (Electrically Controlled Birefringence) Effekt mit dielektrisch negativen Flüssigkristallen in einer homeotropen Ausgangsorientierung verwenden. Die erfindungsgemäßen Flüssigkristallmedien zeichnen sich durch eine besonders niedrige Schaltzeit in den erfindungsgemäßen Anzeigen bei gleichzeitig hoher Voltage Holding Ratio aus.

Anzeigen, die den ECB-Effekt verwenden haben sich als so genannte VAN- (Vertically Aligned Nematic) Anzeigen beispielsweise in den Bauformen MVA (Multi-Domain Vertical Alignment, z. B.: Yoshide, H. et al., Vortrag 3.1: "MVA LCD for Notebook or Mobile PCs ...", SID 2004 International Symposium, Digest of Technical Papers, XXXV, Buch I, S. 6 bis 9 und Liu, C.T. et al., Vortrag 15.1: "A 46-inch TFT-LCD HDTV Technnology ...", SID 2004 International Symposium, Digest of Technical Papers, XXXV, Buch II, S. 750 bis 753), PVA (Patterned Vertical Alignment, z. B.: Kim, Sang Soo, Vortrag 15.4: "Super PVA Sets New State-of-the-Art for LCD-TV", SID 2004 International Symposium, Digest of Technical Papers, XXXV, Buch 11, S. 760 bis 763), ASV- (Avanced Super View, z. B.: Shigeta, Mitzuhiro und Fukuoka, Hirofumi, Vortrag 15.2: "Development of High Quality LCDTV", SID 2004 International Symposium, Digest of Technical Papers, XXXV, Buch II, S. 754 bis 757) Anzeigen neben IPS- (In Plane Switching) Anzeigen (z.B.: Yeo, S.D., Vortrag 15.3: "A LC Display for the TV Application", SID 2004 International Symposium, Digest of Technical Papers, XXXV, Buch II, S. 758 & 759), und den lange bekannten neben TN- (Twisted Nematic) Anzeigen, als eine der drei zur Zeit wichtigsten neueren Typen von Flüssigkristallanzeigen insbesondere für Femsehanwendungen etabliert. In allgemeiner Form werden die Technologien z.B. in Souk, Jun, SIDSeminar 2004, Seminar M-6: "Recent Advances in LCD Technology", Seminar Lecture Notes, M-6/1 bis M-6/26 und Miller, lan, SIDSeminar 2004, Seminar M-7: "LCD-Television", Seminar Lecture Notes, M-7/1 bis M-7/32, verglichen. Obwohl die Schaltzeiten moderner ECB-Anzeigen durch Ansteuerungsmethoden mit Übersteuerung (overdrive) bereits deutlich verbessert wurden, z.B.: Kim, Hyeon Kyeong et al., Vortrag 9.1: "A 57-in. Wide UXGA TFT-LCD for HDTV Application", SID 2004 International Symposium, Digest of Technical Papers, XXXV, Buch I, S. 106 bis 109, ist die Erzielung von videotauglichen Schaltzeiten insbesondere beim Schalten von Graustufen immer noch ein noch nicht zufriedenstellend gelöstes Problem.

ECB-Anzeigen verwenden wie ASV-Anzeigen flüssigkristalline Medien mit negativer dielektrischer Anisotropie (Δε), wohingegen TN- und bislang alle gebräuchlichen IPS-Anzeigen flüssigkristalline Medien mit positiver dielektrischer Anisotropie verwenden.

In derartigen Flüssigkristallanzeigen werden die Flüssigkristalle als Dielektrika verwendet, deren optische Eigenschaften sich bei Anlegen einer elektrischen Spannung reversibel ändern.

Da bei Anzeigen im allgemeinen, also auch bei Anzeigen nach diesen erwähnten Effekten, die Betriebsspannung möglichst gering sein soll, werden Flüssigkristallmedien eingesetzt, die in der Regel überwiegend aus Flüssigkristallverbindungen zusammengesetzt sind, die alle das gleiche Vorzeichen der dielektrischen Anisotropie aufweisen und einen möglichst großen Betrag der dielektrischen Anisotropie haben. Es werden in der Regel allenfalls geringere Anteile an neutralen Verbindungen und möglichst keine Verbindungen dem Medium entgegengesetzten Vorzeichen der dielektrischen Anisotropie eingesetzt. Bei den Flüssigkristallmedien mit negativer dielektrischer Anisotropie für ECB-Anzeigen werden somit überwiegend Verbindungen mit negativer dielektrischer Anisotropie eingesetzt. Die eingesetzten Flüssigkristallmedien bestehen in der Regel überwiegend und meist sogar weitestgehend aus Flüssigkristallverbindungen mit negativer dielektrischer Anisotropie.

Bei den gemäß der vorliegenden Anmeldung verwendeten Medien werden typischerweise allenfalls nennenswerte Mengen an dielektrisch neutralen Flüssigkristallverbindungen und in der Regel nur sehr geringe Mengen an oder gar keine dielektrisch positiven Verbindungen eingesetzt, da generell die Flüssigkristallanzeigen möglichst niedrige Ansteuerspannungen haben sollen.

Verschiedene Flüssigkristallzusammensetzungen sind dem Fachmann bekannt.

DE 37 34 116 A1 offenbart Verbindungen mit einer Cyclohexenylen-Einheit und gleichzeitig einer 3-Fluorpenyl-1,4-diyl- oder einer 3-Fluorpenylen-1,4-Einheit.

DE 100 13 681 A1 offenbart Verbindungen mit einer 1-Fluor-cyclohex-1-en-2,4-diyl-Einheit und gleichzeitig einer 2,3-Difluorphenylen-1,4-Einheit.

EP 0 969 071 A1, DE 39 06 040 A1 (korrespondiert zu CH 678 947 A5), DE 39 06 052 A1, DE 101 58 081 A1 und US 5,271,864 offenbaren Formeln von Verbindungen mit einer Cyxclohexenylen-Einheit und gleichzeitig einer 2,3-Difluorphenylen-1,4-Einheit.

EP 1 081 123 A2, US 2005/0104039 und DE 101 07 544 A1 offenbaren Verbindungen mit einer Cyclohexenylen-Einheit und gleichzeitig einer 2,3-Difluorphenylen-1,4-Einheit, sowie flüssigkristalline Medien die solche Substanzen enthalten.

Die Flüssigkristallmedien des Standes der Technik mit entsprechend niedrigen Ansteuerspannungen haben relativ geringe elektrische Widerstände bzw. eine geringe Voltage Holding Ratio und führen in den Anzeigen zu unerwünscht hohen Stromaufnahmen.

Außerdem ist die Ansteuerspannung der Anzeigen des Standes der Technik oft zu groß, insbesondere für Anzeigen die nicht direkt oder nicht durchgehend ans Stromversorgungsnetz angeschlossen werden wie z. B. Anzeigen für mobile Anwendungen.

Außerdem muss der Phasenbereich ausreichend breit für die beabsichtigte Anwendung sein.

Insbesondere müssen die Schaltzeiten der Flüssigkristallmedien in den Anzeigen verbessert, also verringert, werden. Dies ist besonders für Anzeigen für Fernseh- oder Multi-Media Anwendungen wichtig. Zur Verbesserung der Schaltzeiten ist in der Vergangenheit wiederholt vorgeschlagen worden, die Rotationsviskosität der Flüssigkristallmedien (γ1) zu optimieren, also Medien mit einer möglichst geringen Rotationsviskosität zu realisieren. Die dabei erzielten Ergebnisse sind jedoch nicht ausreichend für viele Anwendungen und lassen es daher wünschenswert erscheinen, weitere Optimierungsansätze aufzufinden.

Somit besteht ein großer Bedarf an Flüssigkristallmedien, die die Nachteile der Medien aus dem Stand der Technik nicht, oder zumindest in deutlich vermindertem Umfang, aufweisen.

Überraschend wurde gefunden, dass Flüssigkristallanzeigen realisiert werden konnten, die eine geringe Schaltzeit in ECB-Anzeigen aufweisen und gleichzeitig eine ausreichend breite nematische Phase, eine günstige Doppelbrechung (Δn) und eine hohe Voltage Holding Ratio aufweisen

Die Erfindung betrifft ein flüssigkristallines Medium auf der Basis eines Gemisches von polaren Verbindungen, dadurch gekennzeichnet, dass es
a) eine erste dielektrisch negative, mesogene Komponente (Komponente A), die aus einer oder mehreren dielektrisch negativen Verbindung(en) der Formel I besteht, 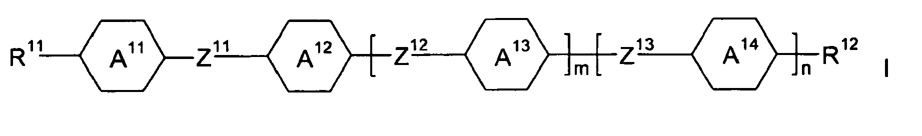 worin
   - R¹¹ und R¹²: jeweils unabhängig voneinander H, einen unsubstituierten Alkyl- oder Alkenylrest mit bis zu 15 C-Atomen, wobei in diesen Resten auch eine oder mehrere CH₂-Gruppen durch -O-, -S-, 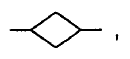 -C≡C-, -CF₂-O-, -O-CF₂-, -CO-O- oder -O-CO- so ersetzt sein können, dass O-Atome nicht direkt miteinander verknüpft sind,
   einer der vorhandenen Ringe 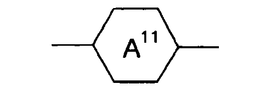 bis 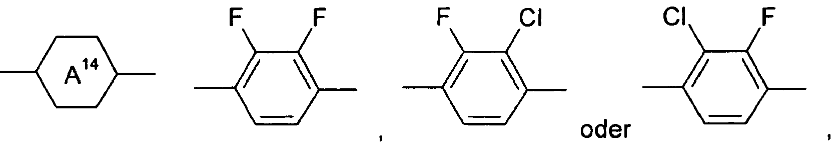 und ein weiterer der vorhandenen Ringe 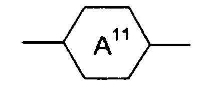 bis 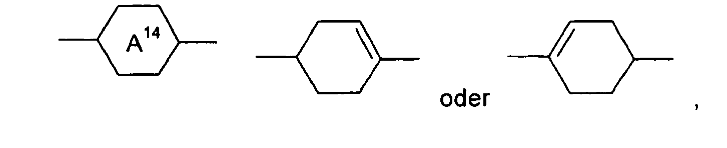 und die anderen, soweit vorhanden, jeweils unabhängig voneinander 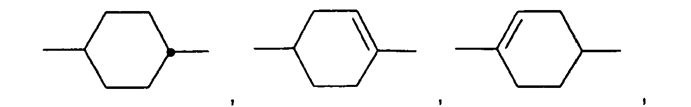 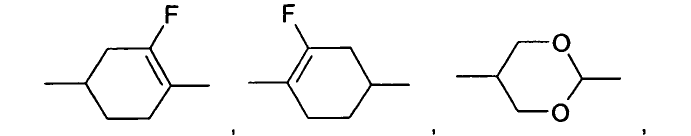 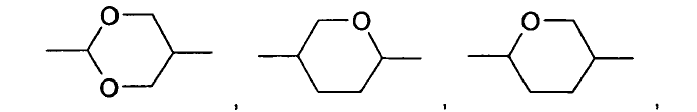 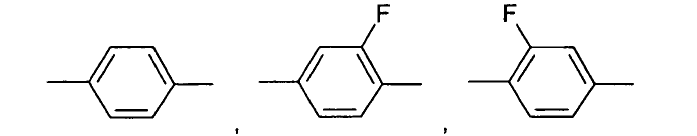 oder 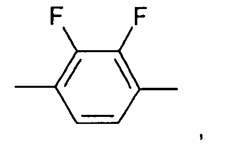
   - Z¹¹ bis Z¹³: jeweils unabhängig voneinander -CH₂-CH₂-, -CH=CH-, -C=C-, -CH₂-O-, -O-CH₂-, -CO-O-, -O-CO-, -CF₂-O-, -O-CF₂-, -CF₂-CF₂- oder eine Einfachbindung und
   - m und n: jeweils unabhängig voneinander 0 oder 1
   bedeuten,
b) eine zweite dielektrisch negative, mesogene Komponente (Komponente B), die aus einer oder mehreren dielektrisch negativen Verbindung(en) der Formel II besteht 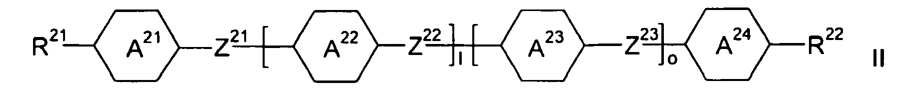 worin
   - R²¹ und R²²: jeweils unabhängig voneinander H, Alkyl- oder Alkenylrest mit bis zu 15 C-Atomen, wobei in diesen Resten auch eine oder mehrere CH₂-Gruppen durch -O-, -S-, 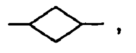 -C≡C-, -CF₂-O-, -O-CF₂-, -CO-O- oder -O-CO- so ersetzt sein können, dass O-Atome nicht direkt miteinander verknüpft sind,
   einer der vorhandenen Ringe 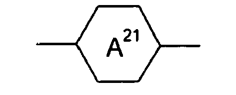 bis 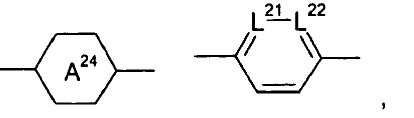 und die anderen, soweit vorhanden, jeweils unabhängig voneinander 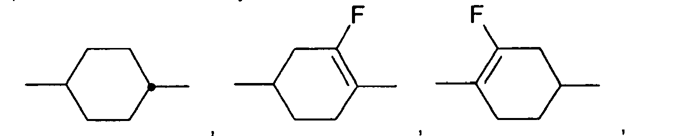 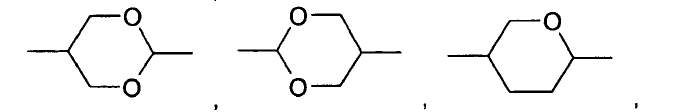 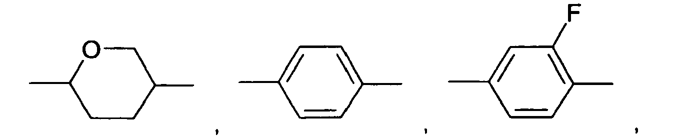 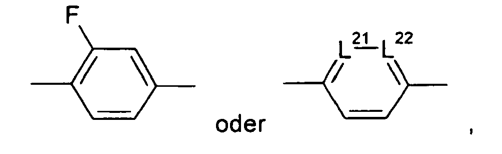
   - L²¹ und L²²: jeweils unabhängig voneinander =C(X²)- oder =N-,
   - X²: F, Cl, OCF₃, CF₃, CH₃, CH₂F, CHF₂,
   - Z²¹ bis Z²¹: jeweils unabhängig voneinander -CH₂-CH₂-, -CH₂-CF₂-, -CF₂-CH₂-, -CF₂-CF₂-,- CH=CH-, -CF=CH-, -CH=CF-, -C≡C-, -CH₂-O-, -O-CH₂-, -CO-O-, -O-CO-, -CF₂-O-, -O-CF₂- oder eine Einfachbindung und
   - I und o: jeweils unabhängig voneinander 0 oder 1
   bedeuten,
c) eine dielektrisch neutrale, mesogene Komponente (Komponente C), die aus einer oder mehreren dielektrisch neutralen Verbindungen der Formel III besteht 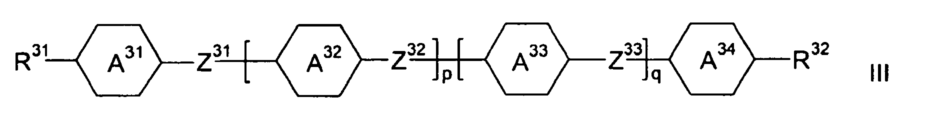
worin
- R³¹ und R³²: jeweils unabhängig voneinander, eine der für R¹¹ und R¹² gegebenen Bedeutung haben, 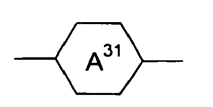
bis 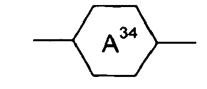 jeweils unabhängig voneinander, 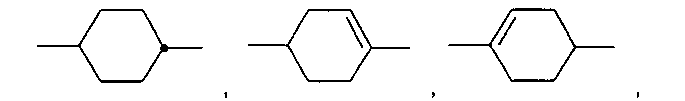 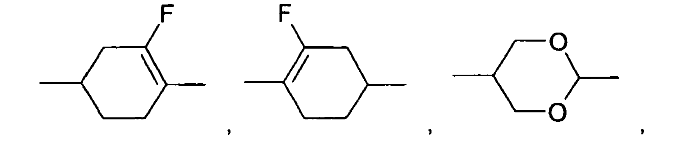 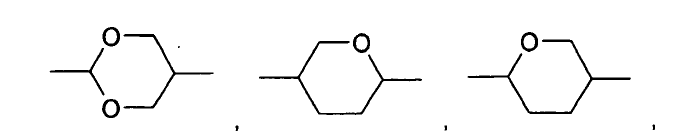 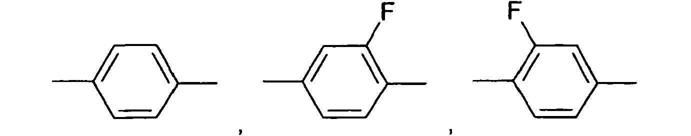 oder 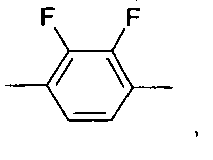
- Z³¹ bis Z³³: ,jeweils unabhängig voneinander, eine der für Z¹¹ bis Z¹³ gegebene Bedeutung haben und
- p und q: jeweils unabhängig voneinander, 0 oder 1,
bedeuten, und
d) eine weitere dielektrisch negative, mesogene Komponente (Komponente D), die aus einer oder mehreren dielektrisch negativen Verbindungen ausgewählt aus der Gruppe der Verbindungen der Formel IV besteht 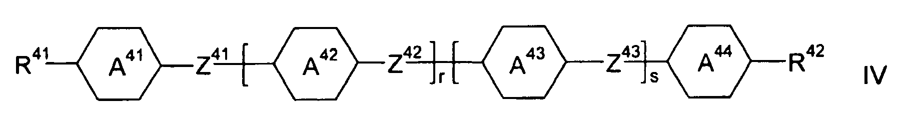
worin
- R⁴¹ und R⁴²: jeweils unabhängig voneinander eine der für R¹¹ und R¹² gegebenen Bedeutung,
einer der Ringe 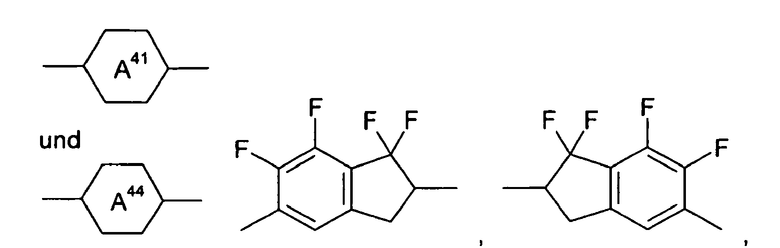 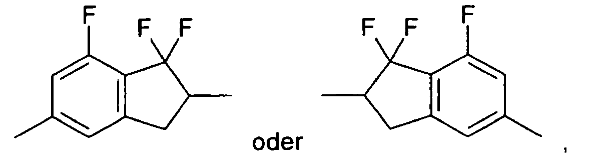 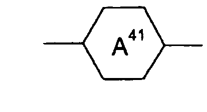 auch eine Einfachbindung, und die anderen Ringe 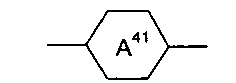 bis 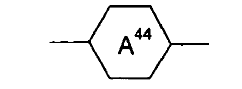 soweit vorhanden, jeweils unabhängig voneinander 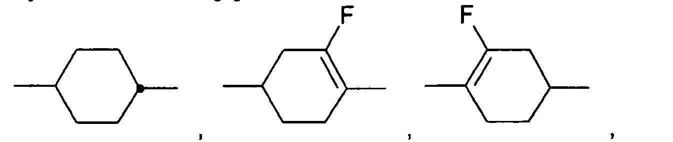 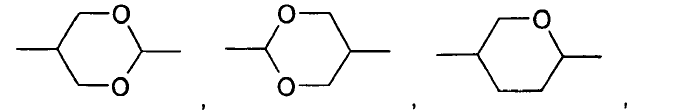 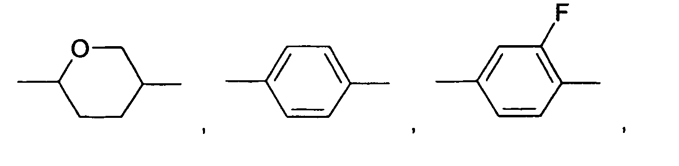 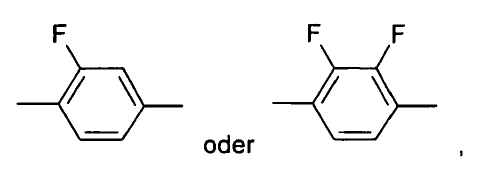
- Z⁴¹ bis Z⁴³: jeweils unabhängig voneinander, eine der für Z¹¹ bis Z¹³ gegebene Bedeutung haben,
- r und s: jeweils unabhängig voneinander, 0 oder 1, und
bedeuten,
enthält.

Die Erfindung betrifft bevorzugt ein flüssigkristallines Medium auf der Basis eines Gemisches von polaren Verbindungen, welches eine oder mehrere Verbindungen der Formel I, 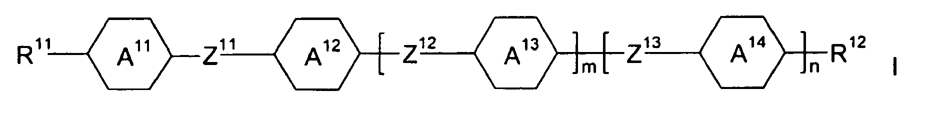 worin
- R¹¹ und R¹²: jeweils unabhängig voneinander H, einen unsubstituierten Alkyl- oder Alkenylrest mit bis zu 15 C-Atomen, wobei in diesen Resten auch eine oder mehrere CH₂-Gruppen durch -O-, -S-, 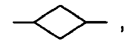 -C≡C-, -CF₂-O-, -O-CF₂-, -CO-O- oder -O-CO- so ersetzt sein können, dass O-Atome nicht direkt miteinander verknüpft sind, bevorzugt einen unsubstituierten Alkyl-, Alkenyl-, Alkoxy- oder Alkenyloxyrest, besonders bevorzugt einer von R¹¹ und R¹² einen Alkyl- oder Alkenylrest und der andere einen Alkyl-, Alkenyl-, Alkoxy- oder Alkenyloxyrest, besonders
bevorzugt R¹¹ geradkettiges Alkyl oder Alkenyl, insbesondere CH₂=CH-, E-CH₃-CH=CH-,
CH₂=CH-CH₂-CH₂-, CH₃-CH=CHC₂H₄-, CH₃-, C₂H₅-, *n*-C₃H₇, *n*-C₄H₉- oder *n*-C₅H₁₁-,
einer der vorhandenen Ringe 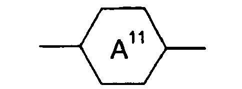 bis 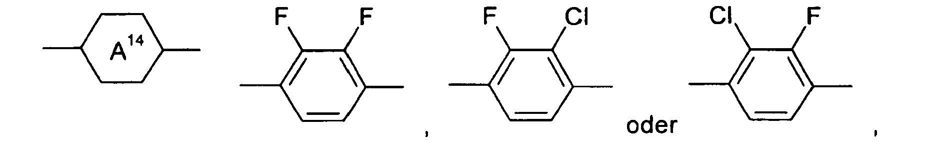 bevorzugt 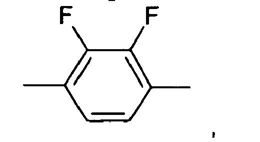 und ein weiterer der vorhandenen Ringe 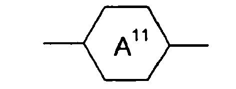 bis 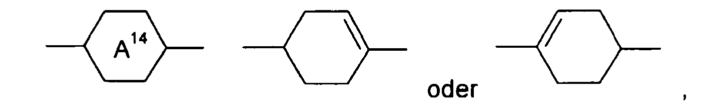 und die anderen, soweit vorhanden, jeweils unabhängig voneinander 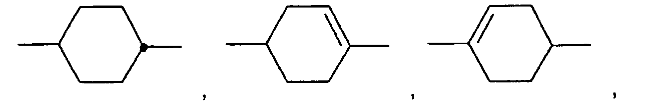 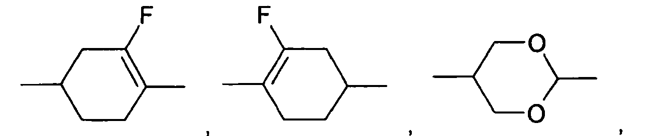 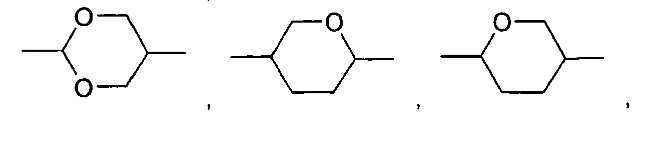 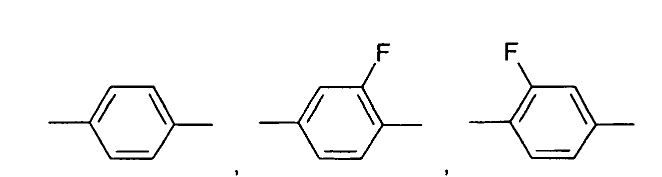 oder 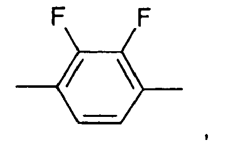 bevorzugt 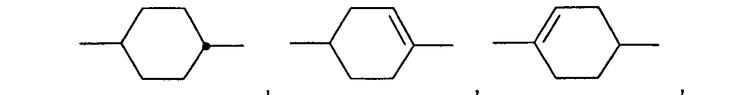 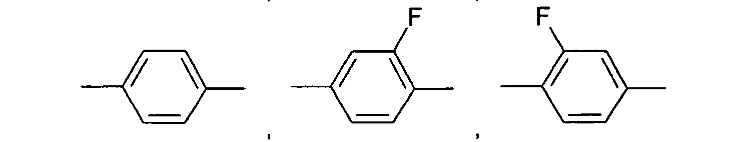 oder 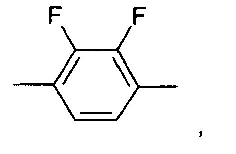
- Z¹¹ bis Z¹³: jeweils unabhängig voneinander -CH₂-CH₂-, -CH=CH-, -C≡C-, -CH₂-O-, -O-CH₂-, -CO-O-, -O-CO-, -CF₂-O-, -O-CF₂-, -CF₂-CF₂- oder eine Einfachbindung, bevorzugt -CH₂-CH₂-, -CH=CH-, -C≡C-, -CF₂-O-, -O-CF₂- oder eine Einfachbindung, besonders bevorzugt einer oder, soweit vorhanden, mehrere von Z¹¹ bis Z¹³ und ganz besonders bevorzugt Z¹¹ bis Z¹³ alle eine Einfachbindung,
- m und n: jeweils unabhängig voneinander 0 oder 1 und
- (m + n): bevorzugt 0 oder 1
bedeuten, enthält.

Derartige Medien sind insbesondere für elektrooptische Anzeigen mit einer Aktivmatrix-Addressierung basierend auf dem ECB-Effekt sowie für IPS-Anzeigen (In plane switching) zu verwenden. Vorzugsweise besitzt das erfindungsgemäße Medium eine negative dielektrische Anisotropie.

Das Prinzip der elektrisch kontrollierten Doppelbrechung, der ECB-Effekt (electrically controlled birefringence) oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, dass flüssigkristalline Phasen hohe Werte für das Verhältnis der elastischen Konstanten K₃/K₁, hohe Werte für die optische Anisotropie Δn und Werte für die dielektrische Anisotropie Δε ≤ -0,5 aufweisen müssen, um für hochinformative Anzeigeelemente basierend auf dem ECB-Effekt eingesetzt werden zu können. Auf dem ECB-Effekt basierende elektrooptische Anzeigeelemente weisen eine homöotrope Randorientierung auf (VA-Technologie = Vertical Aligned). Auch bei Anzeigen, die den so genannten IPS-Effekt verwenden, können dielektrisch negative Flüssigkristallmedien zum Einsatz kommen.

Für die technische Anwendung dieses Effektes in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich und elektrische Gleich- und Wechselfelder.

Ferner wird von technisch verwendbaren FK-Phasen eine flüssigkristalline Mesophase in einem geeigneten Temperaturbereich und eine niedrige Viskosität gefordert.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von zwei bis 25, vorzugsweise drei bis 18, Verbindungen hergestellt, um als FK-Phasen verwendbare Substanzen zu erhalten. Optimale Phasen konnten jedoch auf diese Weise nicht leicht hergestellt werden, da bisher keine Flüssigkristallmaterialien mit deutlich negativer dielektrischer Anisotropie und ausreichender Langzeitstabilität zur Verfügung standen.

Matrix-Flüssigkristallanzeigen (MFK-Anzeigen) sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor)-Transistoren auf Silizium-Wafer als Substrat.
2. Dünnfilm-Transistoren (TFT) auf einer Glasplatte als Substrat.

Bei Typ 1 wird als elektrooptischer Effekt üblicherweise die dynamische Streuung oder der Guest-Host-Effekt verwendet. Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher hier bevorzugt ist, wurde bisher als elektrooptischer Effekt überwiegend der TN-Effekt verwendet.

Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die bisher am meisten verwendeten TFT-Anzeigen arbeiten üblicherweise als TN-Zellen mit gekreuzten Polaristoren in Transmission und sind von hinten beleuchtet. Neuerdings finden für TV Anwendungen verstärkt Anzeigen mit IPS-Zellen oder mit ECN- (bzw. VAN-) Zellen Verwendung.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays in Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch einen nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige. Da der spezifische Widerstand der Flüssigkristallmischung durch Wechselwirkung mit den inneren Oberflächen der Anzeige im Allgemeinen über die Lebenszeit einer MFK-Anzeige abnimmt, ist ein hoher (Anfangs)-Widerstand sehr wichtig für Anzeigen die akzeptable Widerstandswerte über eine lange Betriebsdauer aufweisen müssen.

Der Nachteil der bisher bekannten MFK-TN-Anzeigen beruht in ihrem vergleichsweise niedrigen Kontrast, der relativ hohen Blickwinkelabhängigkeit und der Schwierigkeit in diesen Anzeigen Graustufen zu erzeugen.

Es besteht somit immer noch ein großer Bedarf nach MFK-Anzeigen mit sehr hohem spezifischen Widerstand bei gleichzeitig großem Arbeitstemperaturbereich, kurzen Schaltzeiten und niedriger Schwellenspannung, mit deren Hilfe verschiedene Graustufen erzeugt werden können.

Der Erfindung liegt die Aufgabe zugrunde MFK-Anzeigen, nicht nur für Monitor- und TV-Anwendungen, sondern auch für Mobiltelefone und Navigationssysteme, welche auf dem ECB- oder auf dem IPS-Effekt beruhen, bereitzustellen, die die oben angegebenen Nachteile nicht oder nur in geringerem Maße und gleichzeitig sehr hohe spezifische Widerstände aufweisen. Insbesondere muss für Mobiltelefone und Navigationssysteme gewährleistet sein, dass diese auch bei extrem hohen und extrem niedrigen Temperaturen arbeiten.

Überraschenderweise wurde nun gefunden, dass diese Aufgabe gelöst werden kann, wenn man in diesen Anzeigeelementen nematische Flüssigkristallmischungen verwendet, die mindestens eine Verbindung der Formel I enthalten. Verbindungen der Formel I sind beispielsweise bekannt aus der DE 39 06 040 als Flüssigkristalle und aus DE 102 04 236 als Zwischenprodukte bekannt. US 6,548,126 und US 6,395,353 offenbaren Verbindungen der Formel I in Flüssigkristallmischungen.

Gegenstand der Erfindung ist somit ein flüssigkristallines Medium auf der Basis eines Gemisches von polaren Verbindungen, welches mindestens eine Verbindung der Formel I enthält.

Die erfindungsgemäßen Mischungen zeigen sehr breite nematische Phasenbereiche mit Klärpunkten ≥ 85 °C, sehr günstige Werte für die kapazitive Schwelle, relativ hohe Werte für die Holding Ratio und gleichzeitig sehr gute Tieftemperaturstabilitäten bei -30 °C und -40 °C sowie sehr geringe Rotationsviskositäten. Weiterhin zeichnen sich die erfindungsgemäßen Mischungen durch ein gutes Verhältnis von Klärpunkt und Rotationsviskosität und eine hohe negative dielektrische Anisotropie aus.

Besonders bevorzugt sind Verbindungen der Formel I worin mindestens eine in der Verbindung der Formel vorhandenen Gruppen 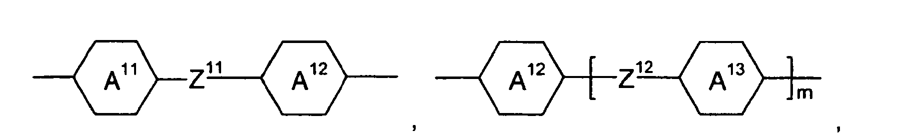 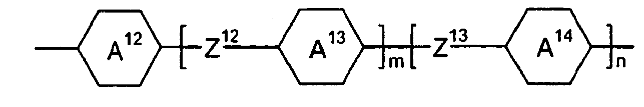 oder 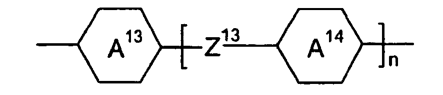 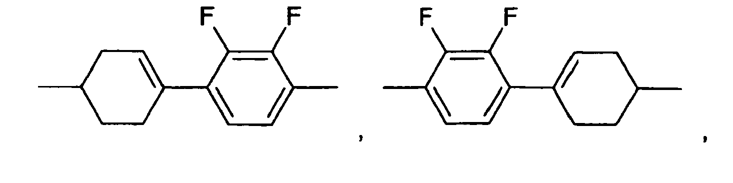 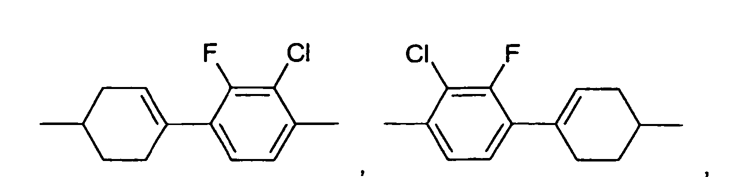 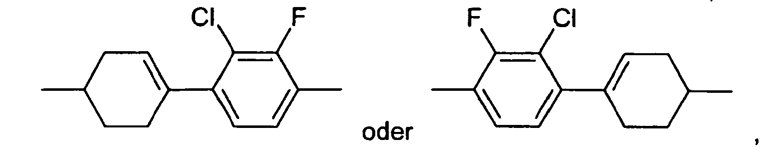 bevorzugt 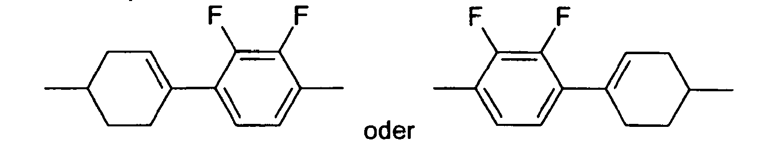 bedeutet.

Besonders bevorzugt sind Verbindungen der Formel I, worin
a) R¹¹ und/oder R¹² H, Alkyl, Alkenyl oder Alkoxy, bevorzugt mit bis zu 6 C-Atomen, R¹² ganz besonders bevorzugt Alkoxy oder Alkenyloxy bedeuten,
b) R¹¹ und R¹² beide Alkyl bedeuten, wobei der Alkylrest gleich oder verschieden sein kann,
c) R¹¹ geradkettiges Alkyl, Vinyl, 1 E-Alkenyl oder 3-Alkenyl bedeutet.
   Falls R¹¹ und/oder R¹² Alkenyl bedeuten, so ist dieses vorzugsweise CH₂=CH, CH₃-CH=CH, CH₂=CH-C₂H₅ oder CH₃-CH=CH-C₂H₅.

Vorzugsweise enthält das erfindungsgemäße Medium eine, zwei, drei, vier oder mehr, vorzugsweise eine, zwei oder drei, Verbindungen der Formel I.

Vorzugsweise sind die erfindungsgemäßen Medien dielektrisch negativ.

Die erfindungsgemäßen Flüssigkristallmedien enthalten bevorzugt
a) eine erste dielektrisch negative, mesogene Komponente (Komponente A), die aus einer oder mehreren dielektrisch negativen Verbindung(en) der Formel I besteht
b) eine zweite dielektrisch negative, mesogene Komponente (Komponente B), die aus einer oder mehreren dielektrisch negativen Verbindung(en) der Formel II besteht 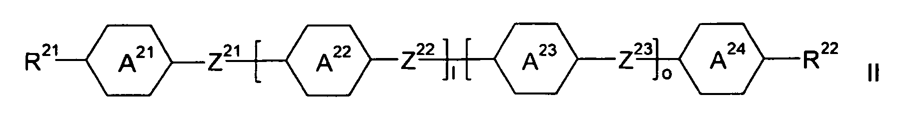 worin
   - R²¹ und R²²: jeweils unabhängig voneinander H, einen unsubstituierten Alkyl- oder Alkenylrest mit bis zu 15 C-Atomen, wobei in diesen Resten auch eine oder mehrere CH₂-Gruppen durch -O-, -S-, 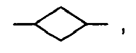 -C≡C-, -CF₂-O-, -O-CF₂-, -CO-O- oder -O-CO- so ersetzt sein können, dass O-Atome nicht direkt miteinander verknüpft sind, bevorzugt einen unsubstituierten Alkyl-, Alkenyl-, Alkoxy- oder Alkenyloxyrest, besonders bevorzugt einer von R²¹ und R²² einen Alkyl- oder Alkenylrest und der andere einen Alkyl-, Alkenyl-, Alkoxy- oder Alkenyloxyrest, bevorzugt unabhängig voneinander Alkyl mit 1 bis 7 C-Atomen, bevorzugt n-Alkyl, besonders bevorzugt n-Alkyl mit 1 bis 5 C-Atomen, Alkoxy mit 1 bis 7 C-Atomen, bevorzugt n- Alkoxy, besonders bevorzugt n-Alkoxy mit 1 bis 5 C- Atomen oder Alkoxyalkyl, Alkenyl oder Alkenyloxy mit 2 bis 7 C-Atomen, bevorzugt mit 2 bis 4 C-Atomen, bevorzugt Alkenyl, wobei in allen Gruppen eine oder mehrere H- Atome durch Halogenatome, bevorzugt F-Atome, ersetzt sein können, besonders bevorzugt einer von R²¹ und R²², bevorzugt R¹¹, einen Alkyl- oder Alkenylrest und der andere einen Alkyl-, Alkenyl-, Alkoxy- oder Alkenyloxyrest, besonders bevorzugt R²¹ geradkettiges Alkyl, insbesondere CH₃-, C₂H₅-, *n*-C₃H₇, *n*-C₄H₉- oder *n*-C₅H₁₁-, oder Alkenyl, insbesondere CH₂=CH-, E-CH₃-CH=CH-, CH₂=CH-CH₂-CH₂-, E-CH₃-CH=CH-CH₂-CH₂- oder E-*n*-C₃H₇-CH=CH-,
   einer der vorhandenen Ringe 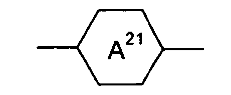 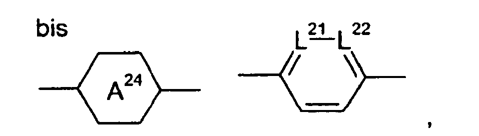 und die anderen, soweit vorhanden, jeweils unabhängig voneinander 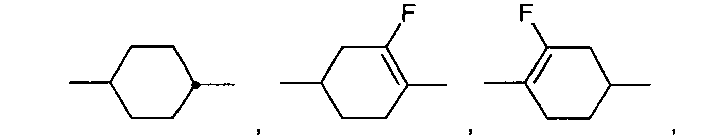 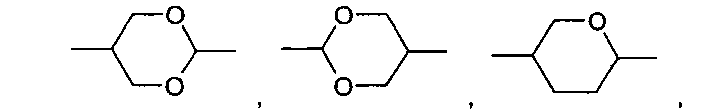 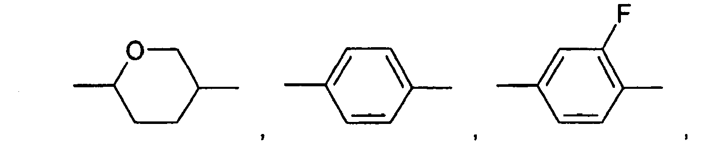 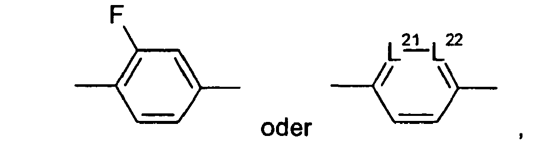 bevorzugt 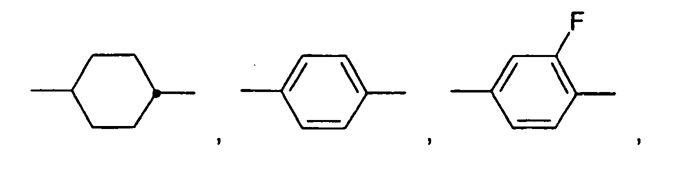 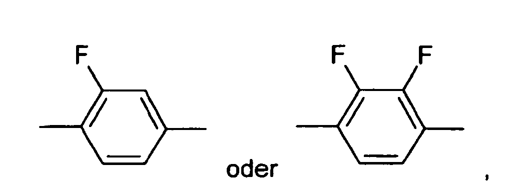 besonders bevorzugt 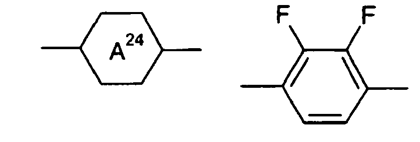 und 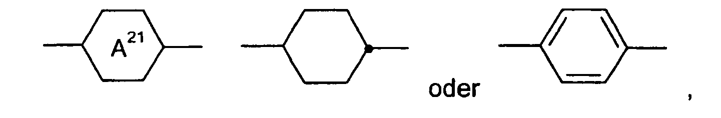
   - L²¹ und L²²: jeweils unabhängig voneinander =C(X²)- oder =N-, bevorzugt mindestens einer von L²¹ und L²² =C(-F)- und der andere =C(-F)- oder =C(-CI)-, besonders bevorzugt L²¹ und L²² beide =C(-F)-,
   - X²: F, Cl, OCF₃, CF₃, CH₃, CH₂F, CHF₂, bevorzugt F oder Cl, besonders bevorzugt F, 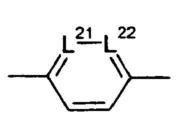
   bevorzugt 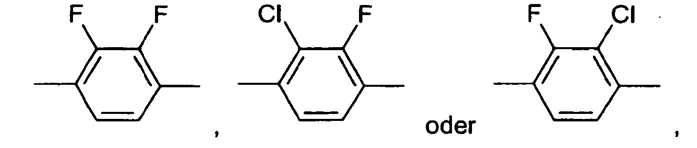 besonders bevorzugt 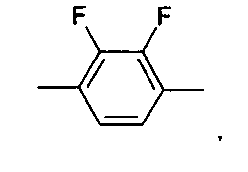
   - Z²¹ bis Z²³: jeweils unabhängig voneinander -CH₂-CH₂-, -CH₂-CF₂-, -CF₂-CH₂-, -CF₂-CF₂-,- CH=CH-, -CF=CH-, -CH=CF-, -C≡C-, -CH₂-O-, -O-CH₂-, -O-, -CH₂-, -CO-O-, -O-CO-, -CF₂-O-, -O-CF₂- oder eine Einfachbindung, bevorzugt -CH₂-CH₂-, -CH=CH-, -C=C-, -CF₂-O-, -O-CF₂- oder eine Einfachbindung, besonders bevorzugt einer oder, soweit vorhanden, mehrere von Z²¹ bis Z²³ eine Einfachbindung, und ganz besonders bevorzugt alle eine Einfachbindung,
   - I und o: jeweils unabhängig voneinander 0 oder 1 und
   - (I + o): bevorzugt 0 oder 1
   bedeuten und/oder
c) eine dielektrisch neutrale, mesogene Komponente (Komponente C), die aus einer oder mehreren dielektrisch neutralen Verbindungen der Formel III besteht 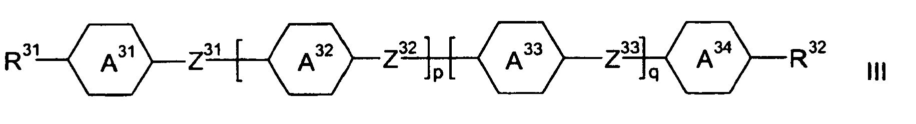 worin
   - R³¹ und R³²: jeweils unabhängig voneinander, eine der für R¹¹ und R¹² gegebenen Bedeutung haben und bevorzugt Alkyl mit 1 bis 7 C-Atomen, bevorzugt n-Alkyl und besonders bevorzugt n-Alkyl mit 1 bis 5 C-Atomen, Alkoxy mit 1 bis 7 C-Atomen, bevorzugt n-Alkoxy und besonders bevorzugt n-Alkoxy mit 2 bis 5 C-Atomen oder Alkoxyalkyl, Alkenyl oder Alkenyloxy mit 2 bis 7 C-Atomen, bevorzugt mit 2 bis 4 C-Atomen, bevorzugt Alkenyloxy, 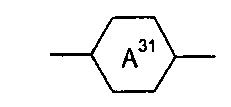
   bis 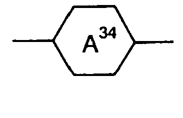 jeweils unabhängig voneinander, 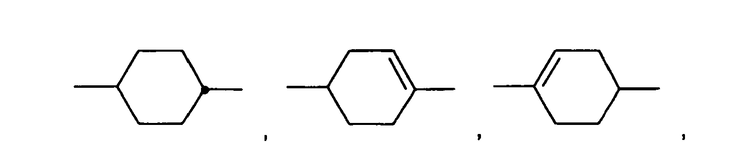 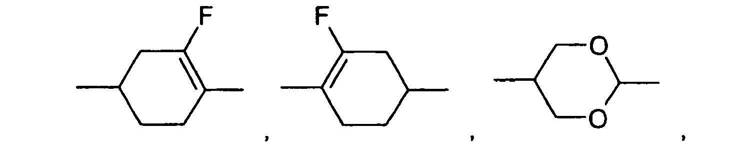 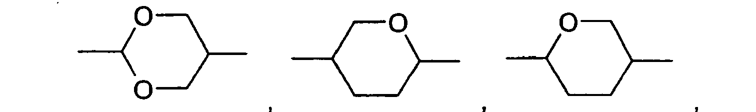 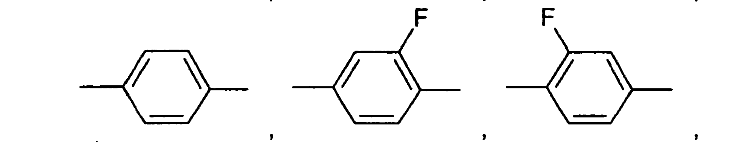 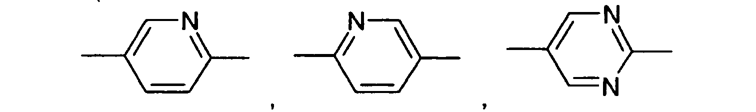 oder 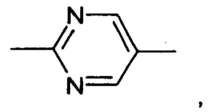 bevorzugt 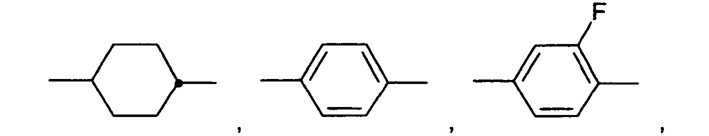 oder 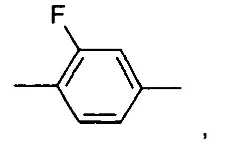 bevorzugt 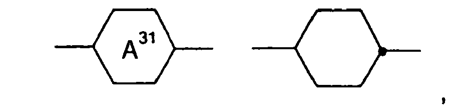 bevorzugt 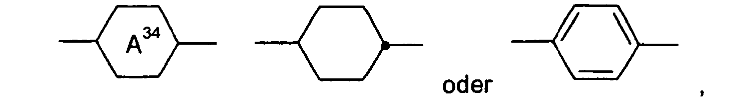 und, wenn vorhanden, bevorzugt 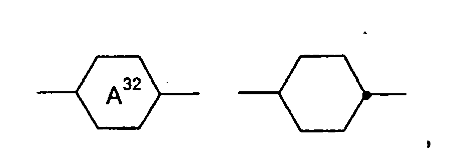
   - Z³¹ bis Z³³: ,jeweils unabhängig voneinander, eine der für Z¹¹ bis Z¹³ gegebene Bedeutung haben und bevorzugt -CH₂-CH₂-, -CH=CH-, -C≡C-, -COO- oder eine Einfachbindung, bevorzugt -CH₂-CH₂- oder eine Einfachbindung und besonders bevorzugt eine Einfachbindung,
   - p und q: jeweils unabhängig voneinander, 0 oder 1,
   - (p + q): bevorzugt 0 oder 1, bevorzugt 0,
   bedeuten und/oder
d) eine weitere dielektrisch negative, mesogene Komponente (Komponente D), die aus einer oder mehreren dielektrisch negativen Verbindungen ausgewählt aus der Gruppe der Verbindungen der Formeln IV und V besteht 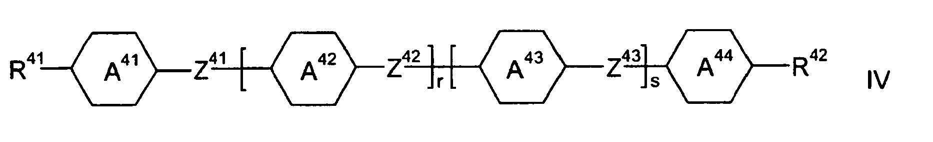 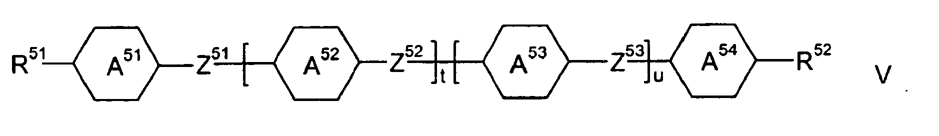 worin
   - R⁴¹, R⁴², R⁵¹ und R⁵²: jeweils unabhängig voneinander eine der für R¹¹ und R¹² gegebenen Bedeutung haben und bevorzugt Alkyl mit 1 bis 7 C-Atomen, bevorzugt n-Alkyl und besonders bevorzugt n-Alkyl mit 1 bis 5 C-Atomen, Alkoxy mit 1 bis 7 C-Atomen, bevorzugt n-Alkoxy und besonders bevorzugt n-Alkoxy mit 2 bis 5 C-Atomen oder Alkoxyalkyl, Alkenyl oder Alkenyloxy mit 2 bis 7 C-Atomen, bevorzugt mit 2 bis 4 C-Atomen, bevorzugt Alkenyloxy,
   einer der Ringe 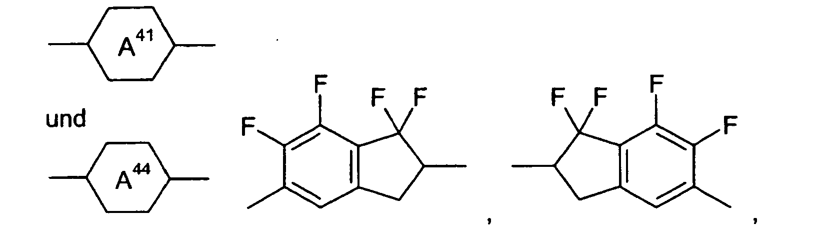 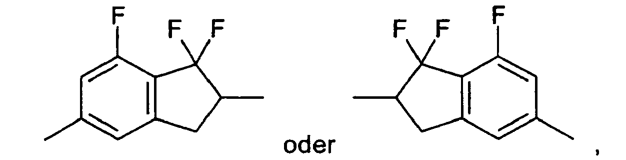
   bevorzugt 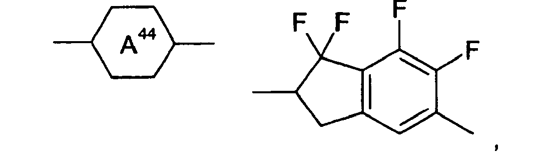 und die anderen Ringe 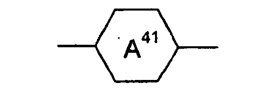 bis 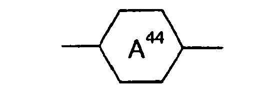 soweit vorhanden, jeweils unabhängig voneinander 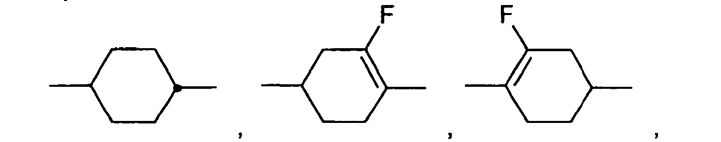 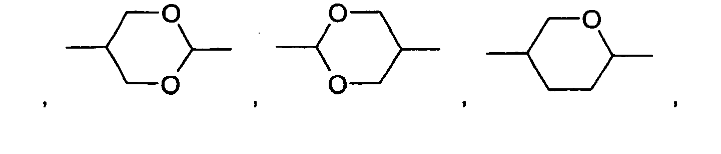 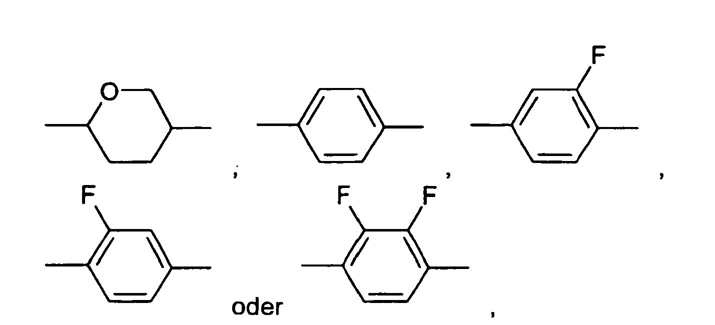 bevorzugt 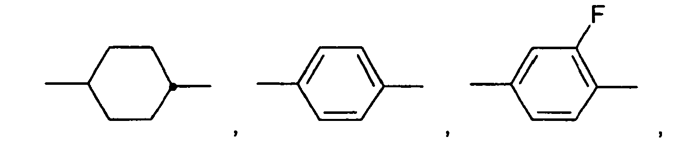 oder 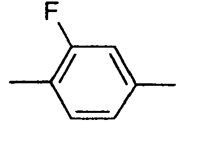 besonders bevorzugt 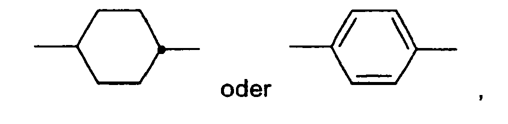 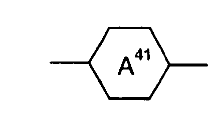 auch eine Einfachbindung,
   im Fall 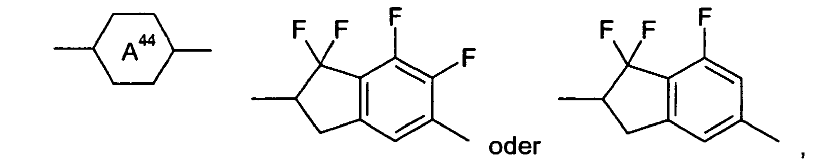 R⁴² bevorzugt H,
   einer der Ringe 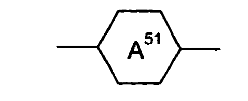 bis 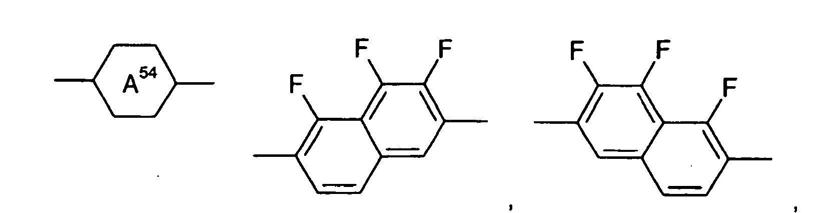 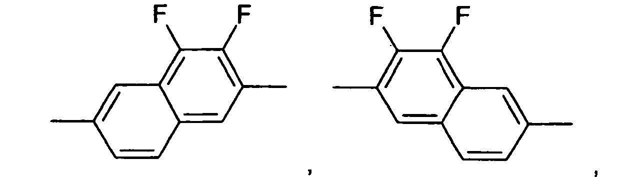 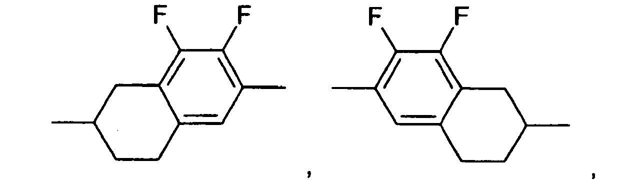 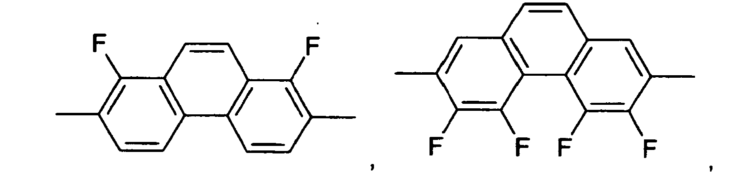 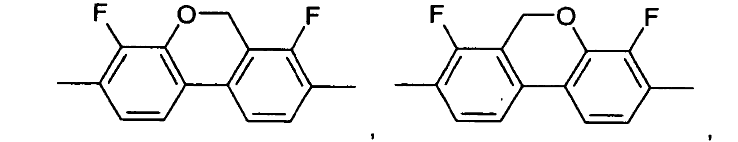 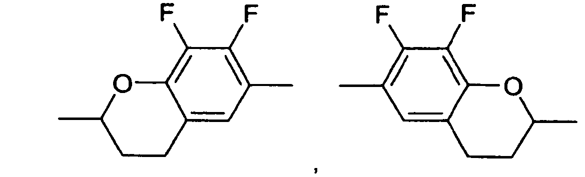 oder 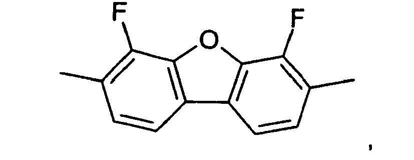 bevorzugt 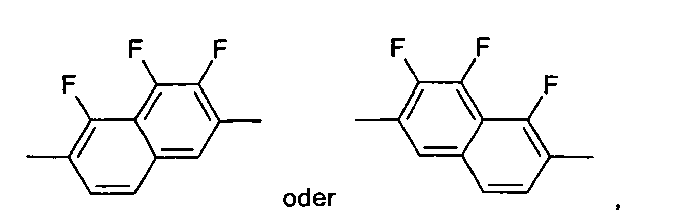 und die anderen, soweit vorhanden, jeweils unabhängig voneinander 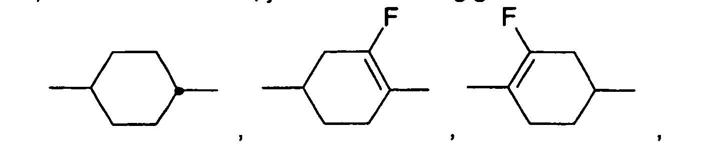 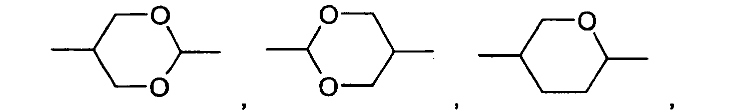 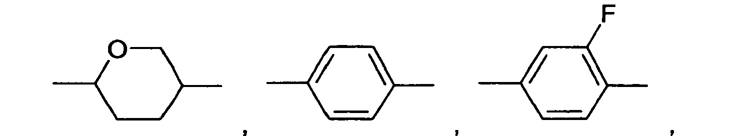 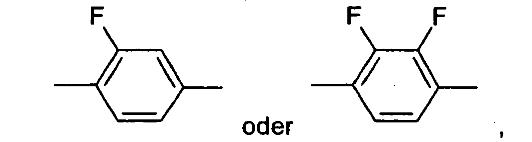 bevorzugt 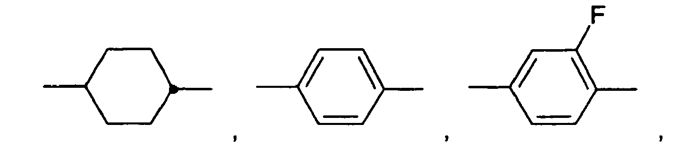 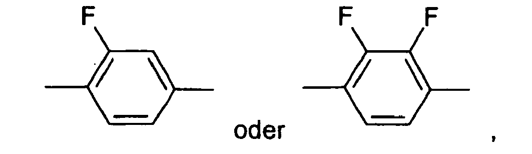 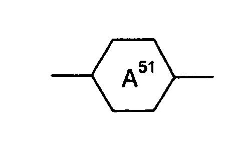 auch eine Einfachbindung,
   - Z⁴¹ bis Z¹³ und Z⁵¹ bis Z⁵³: jeweils unabhängig voneinander, eine der für Z¹¹ bis Z¹³ gegebene Bedeutung haben und bevorzugt -CH₂-CH₂-, -CH=CH-, -C≡C-, -COO- oder eine Einfachbindung, bevorzugt -CH₂-CH₂- oder eine Einfachbindung und besonders bevorzugt eine Einfachbindung,
   - r und s: jeweils unabhängig voneinander, 0 oder 1,
   - (r + s): bevorzugt 0 oder 1, bevorzugt 0,
   - t und u: jeweils unabhängig voneinander, 0 oder 1,
   - (t + u): bevorzugt 0 oder 1, bevorzugt 0,
   bedeuten und optional
e) eine chirale Komponente (Komponente E), die aus einer oder mehreren chiralen Verbindungen besteht,
enthält.

Bevorzugt sind die Verbindungen der Formel I ausgewählt aus den Unterformeln IA und IB, 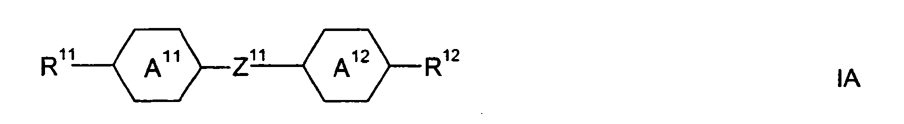 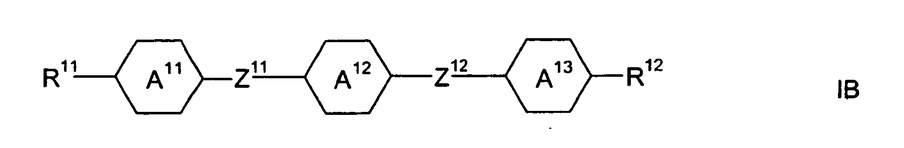 worin die Parameter die oben unter Formel I gegebene Bedeutung besitzen.

Besonders bevorzugt sind die Verbindungen der Formel I ausgewählt aus den Unterformeln IA-1 und IB-1 bis IB-10, bevorzugt IA-1, und IB-1 bis IB-3, B-9 und IB-10 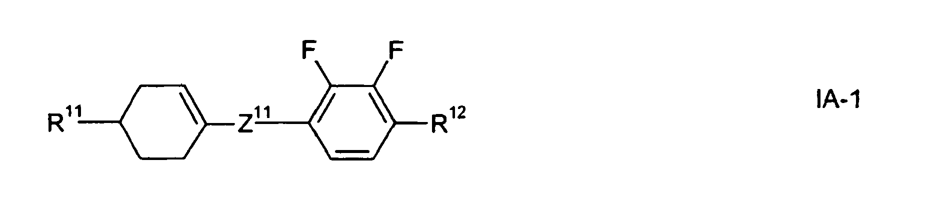 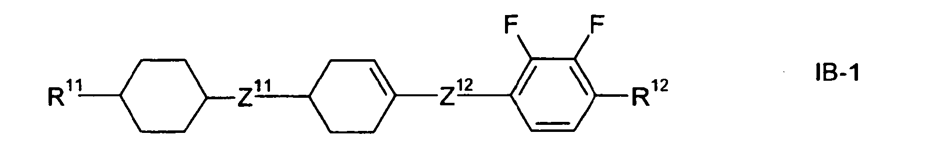 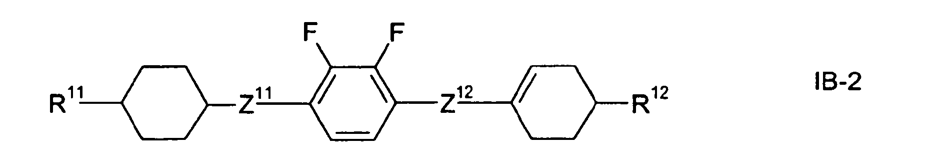 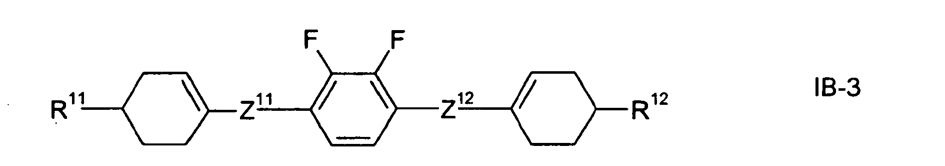 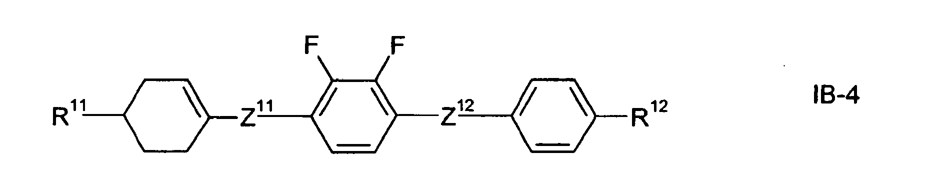 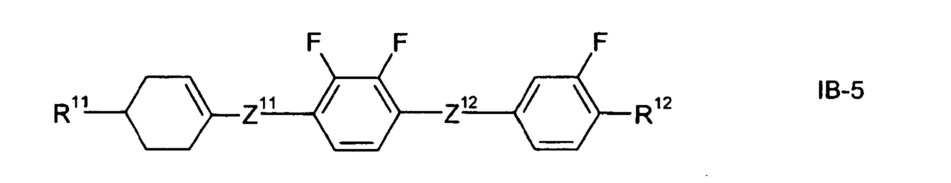 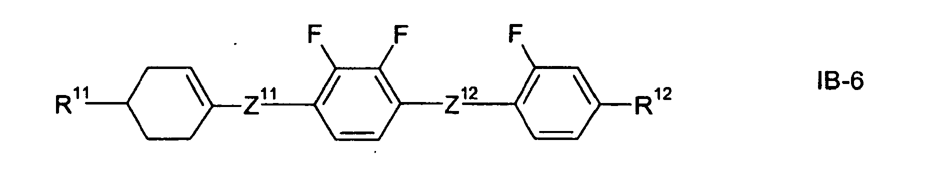 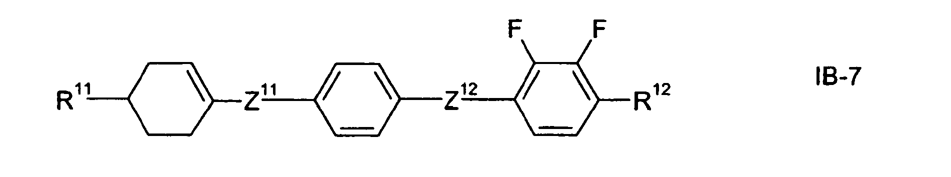 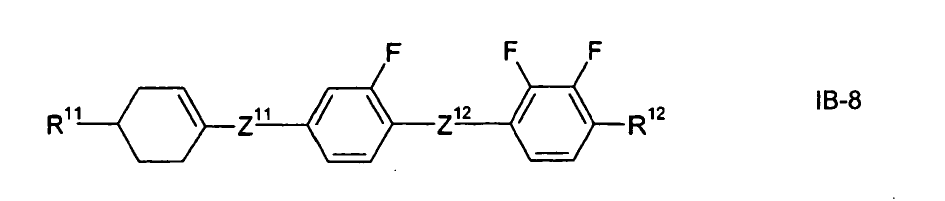 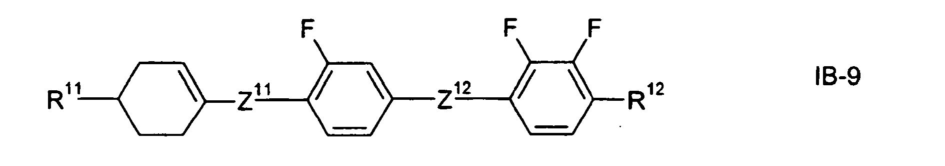 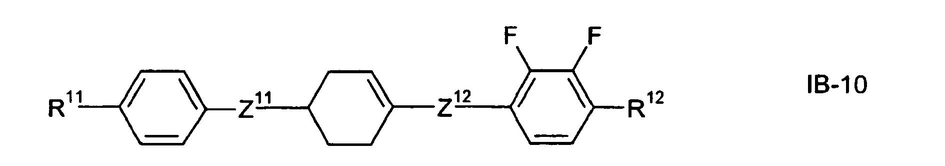 worin die Parameter die oben gegebene Bedeutung besitzen und bevorzugt einer oder beide von Z¹¹ und, soweit vorhanden, Z¹² eine Einfachbindung bedeuten.

Ganz besonders bevorzugt sind die Verbindungen der Formel I ausgewählt aus den Unterformeln IA'1 und IB'-1 bis IB'-4, bevorzugt der Formeln IA'-1 und/oder IB'-1 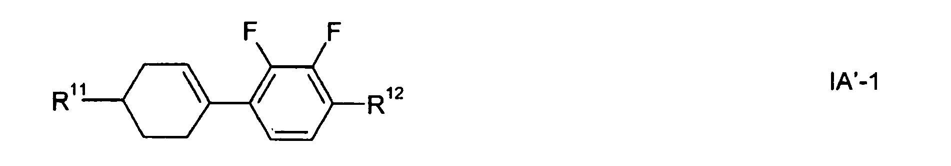 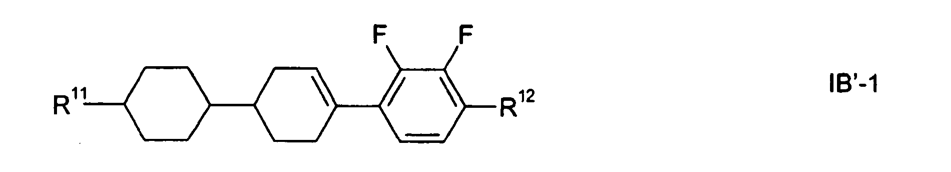 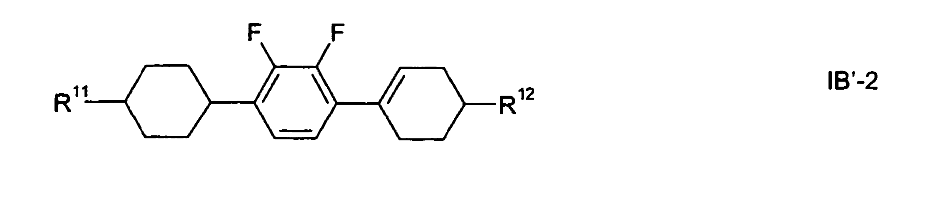 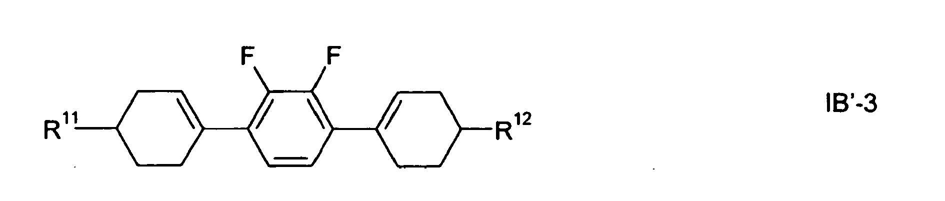 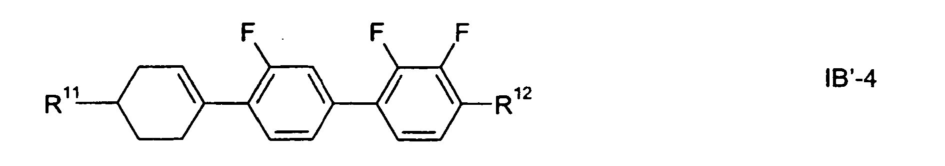 worin die Parameter die oben gegebene Bedeutung besitzen und R¹¹ und R¹² bevorzugt unabhängig voneinander Alkyl mit 1 bis 7, bevorzugt mit 1 bis 5, C-Atomen, bevorzugt n-Alkyl oder Alkenyl mit 2 bis 5 C-Atomen, bevorzugt 1-Alkenyl und besonders bevorzugt, insbesondere bei Formeln IA'-1 und IB'-1, R¹² (O)CᵥH₂ᵥ₊₁.mit v 1 bis 6 bedeuten.

In einer bevorzugten Ausführungsform enthält das Medium eine oder mehrere Verbindungen der Formel IA und/oder IB ausgewählt aus der Gruppe der Verbindungen der Formeln IA"-1, IB"-1 und IB"-2, bevorzugt der Formeln IA"-1 und/oder IB"-1, 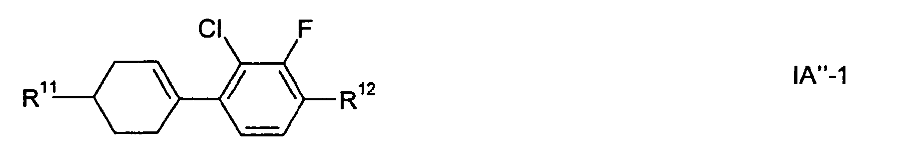 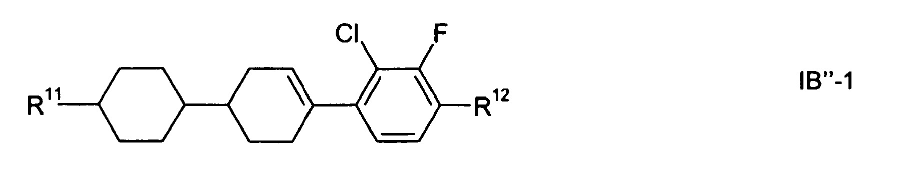 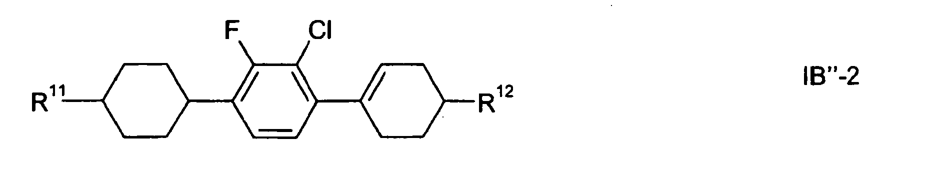 worin die Parameter die oben gegebene Bedeutung besitzen und R¹¹ und R¹² bevorzugt unabhängig voneinander Alkyl mit 1 bis 7, bevorzugt mit 1 bis 5, C-Atomen, bevorzugt n-Alkyl oder Alkenyl mit 2 bis 5 C-Atomen, bevorzugt 1-Alkenyl bedeuten und besonderes bevorzugt R¹² (O)CᵥH₂ᵥ₊₁, mit v 1 bis 6 bedeuten.

In einer weiteren bevorzugten Ausführungsform enthält das Medium eine oder mehrere Verbindungen der Formel IA und/oder IB ausgewählt aus der Gruppe der Verbindungen der Formeln IA"'-1, IB"'-1 und IB"'-2, bevorzugt der Formeln IA"-1 und/oder IB"-1, 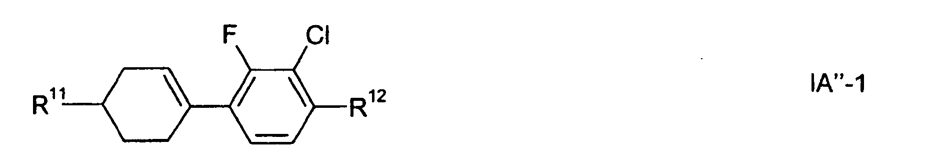 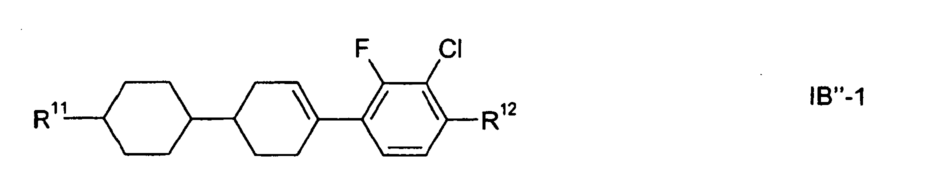 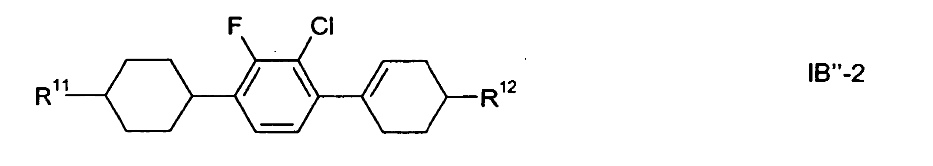 worin die Parameter die oben gegebene Bedeutung besitzen und R¹¹ und R¹² bevorzugt unabhängig voneinander Alkyl mit 1 bis 7, bevorzugt mit 1 bis 5, C-Atomen, bevorzugt n-Alkyl oder Alkenyl mit 2 bis 5 C-Atomen, bevorzugt 1-Alkenyl bedeuten und besonderes bevorzugt R¹² (O)CᵥH₂ᵥ₊₁, mit v 1 bis 6 bedeuten.

In einer weiteren bevorzugten Ausführungsform enthält das Medium eine oder mehrere Verbindungen der Formel IA'-1 ausgewählt aus der Gruppe der Verbindungen der Formeln IA'-1 a und IA'-1 b, bevorzugt der Formel IA'-1b, 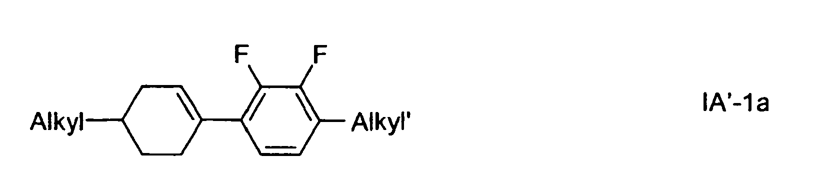 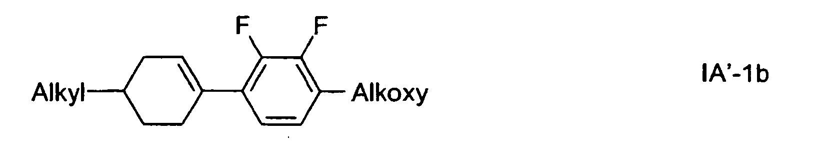 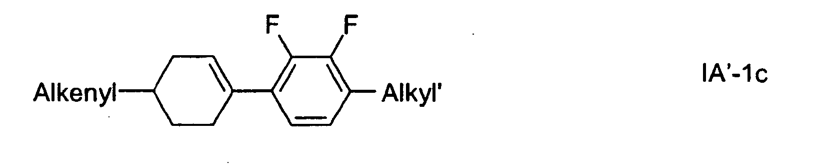 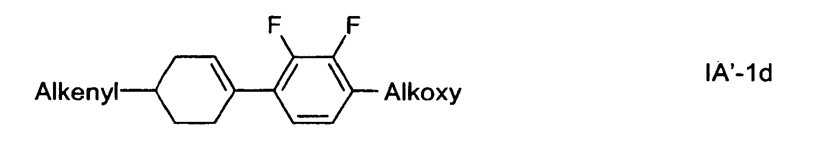 worin
- Alkyl und Alkyl': unabhängig voneinander Alkyl mit 1 bis 7 C-Atomen, bevorzugt mit 2 bis 5 C-Atomen
- Alkoxy: Alkoxy mit 1 bis 7 C-Atomen, bevorzugt mit 2 bis 4 C- Atomen und
- Alkenyl: Alkenyl mit 2 bis 7 C-Atomen, bevorzugt mit 2 bis 5 C-Atomen bedeuten.

In einer weiteren bevorzugten Ausführungsform enthält das Medium eine oder mehrere Verbindungen der Formel IB'-1 ausgewählt aus der Gruppe der Verbindungen der Formeln IB'-1a bis IB'-1d, bevorzugt der Formeln IB'-1 a und/oder IB'-1b, 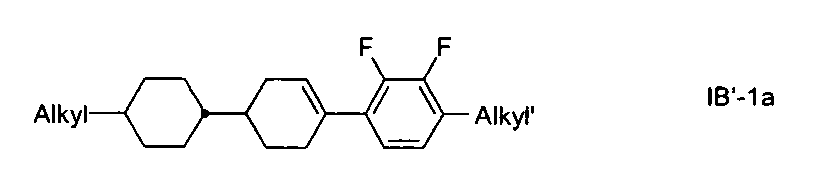 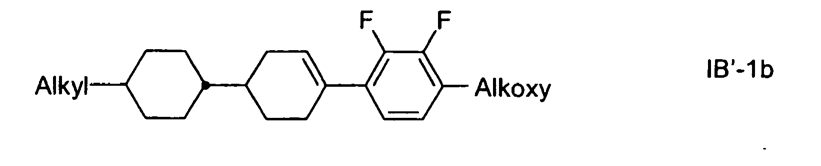 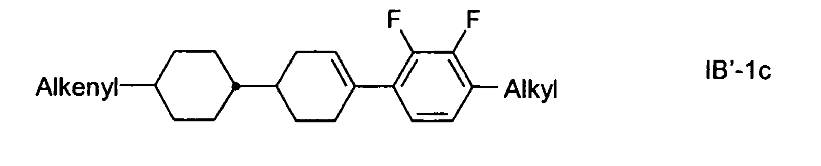 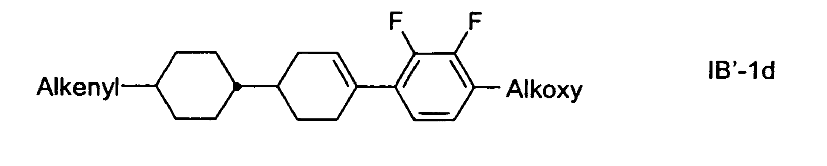 worin
- Alkyl und Alkyl': unabhängig voneinander Alkyl mit 1 bis 7 C-Atomen, bevorzugt mit 2 bis 5 C-Atomen
- Alkoxy: Alkoxy mit 1 bis 7 C-Atomen, bevorzugt mit 2 bis 4 C- Atomen und
- Alkenyl: Alkenyl mit 2 bis 7 C-Atomen, bevorzugt mit 2 bis 5 C-Atomen bedeuten.

In einer bevorzugten Ausführungsform enthält das Medium eine oder mehrere Verbindungen der Formel II, ausgewählt aus der Gruppe der Verbindungen der Formeln IIA bis IIC, bevorzugt IIA und IIB 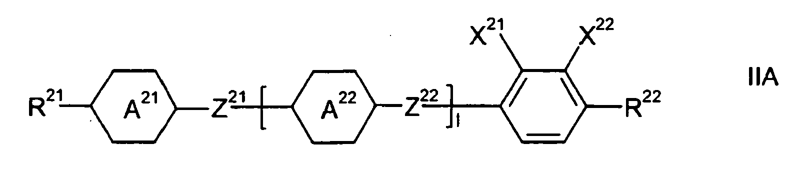 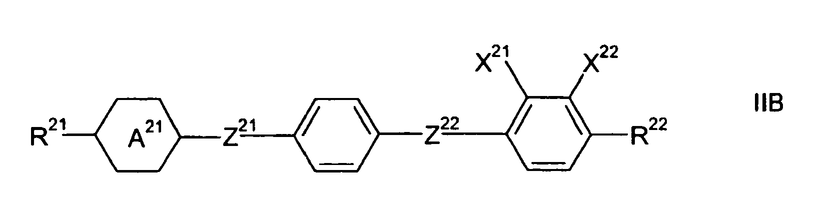 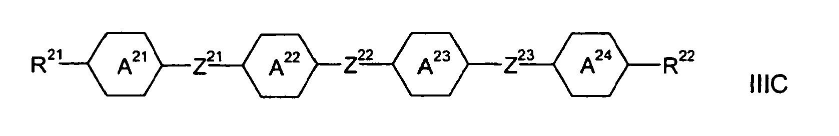 worin die Parameter die oben angegebenen Bedeutungen haben, in Formel IIA 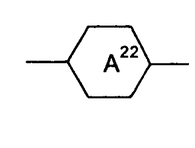 jedoch nicht 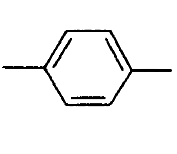 bedeutet, und bevorzugt 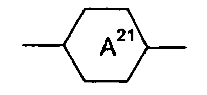 und 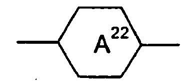 unabhängig voneinander 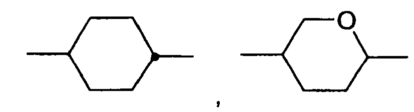 oder 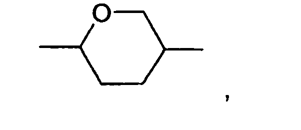 und besonders bevorzugt 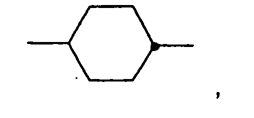
- R²¹: Alkyl,
- R²²: Alkyl oder Alkoxy, besonders bevorzugt (O)CᵥH₂ᵥ₊₁,

- X²¹ und X²²: beide F,
- Z²¹ und Z²²: unabhängig voneinander eine Einfachbindung, -CH₂-CH₂-, -CH=CH-, -CH₂O-, -OCH₂-, -O-, -CH₂-, -CF₂O-, oder -OCF₂-, bevorzugt vorzugsweise eine Einfachbindung oder -CH₂CH₂-, besonders bevorzugt eine Einfachbindung,
- p: 1 oder 2, und
- v: 1 bis 6
bedeuten.

In einer bevorzugten Ausführungsform enthält das Medium eine oder mehrere Verbindungen der Formel II, ausgewählt aus der Gruppe der Verbindungen der Formeln II-1 bis II-13 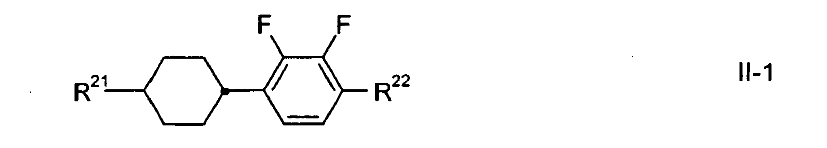 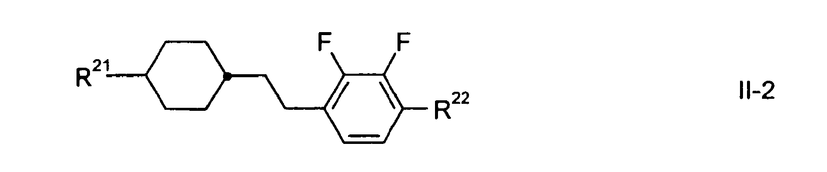 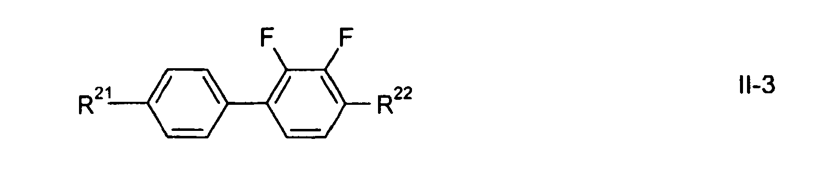 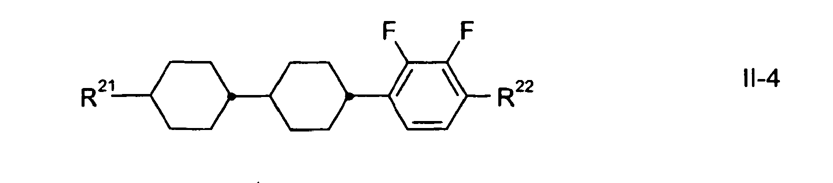 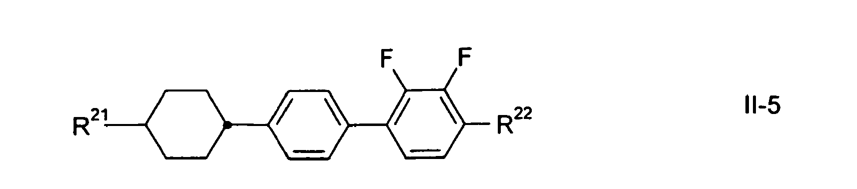 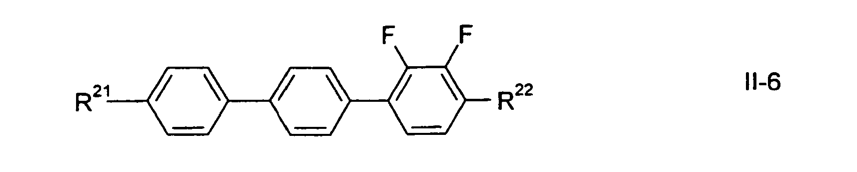 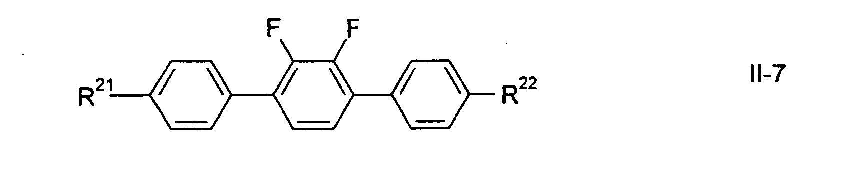 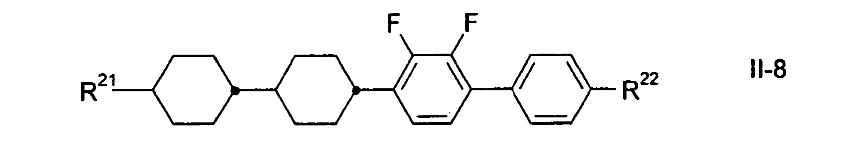 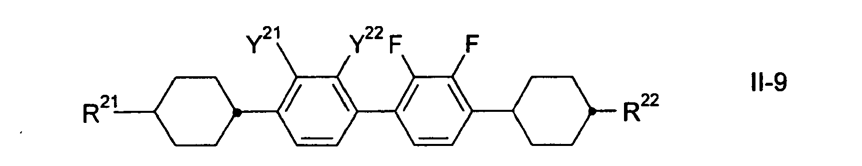 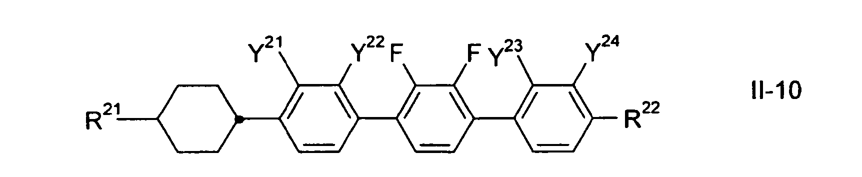 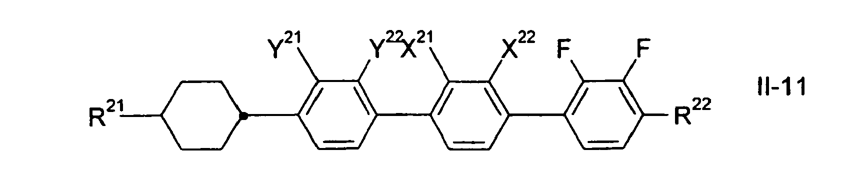 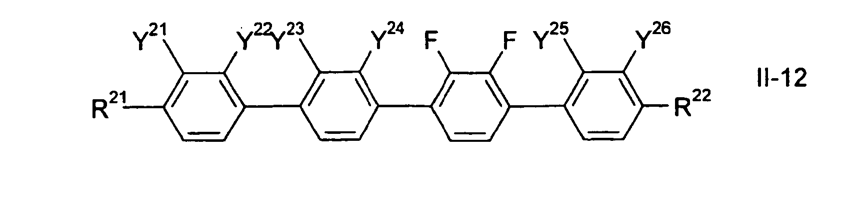 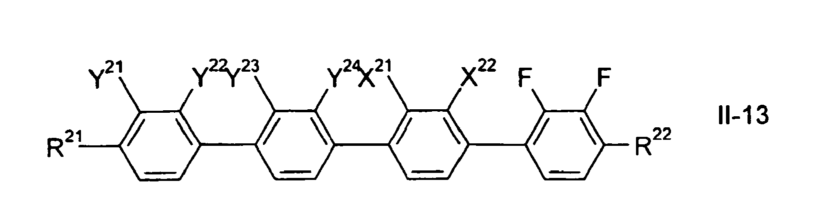 worin
- Y²¹ bis Y²⁶: unabhängig voneinander H oder F, und
- X²¹ und X²²: beide H oder einer von X²¹ und X²² H und der andere F,
jedoch bevorzugt höchstens vier, besonders bevorzugt höchstens drei und ganz besonders bevorzugt einer oder zwei, von Y²¹ bis Y²⁶, X²¹ und X²² F,
bedeuten und
die übrigen Parameter die jeweilige oben bei Formel II angegebene Bedeutung haben und bevorzugt
- R²¹: Alkyl oder Alkenyl und
- R²²: Alkyl, Alkenyl, Alkoxy oder Alkenyloxy, bevorzugt (O)CᵥH₂ᵥ₊₁ und
- v: eine ganze Zahl von 1 bis 6 bedeuten.

In einer weiteren bevorzugten Ausführungsform enthält das Medium eine oder mehrere Verbindungen der Formel II-1, ausgewählt aus der Gruppe der Verbindungen der Formeln II-1a bis II-1d, bevorzugt der Formeln II-1b und/oder II-1d, besonders bevorzugt der Formel II-1b, 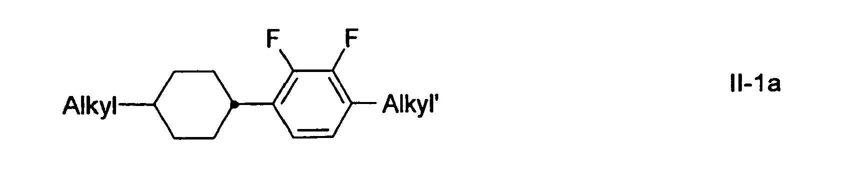 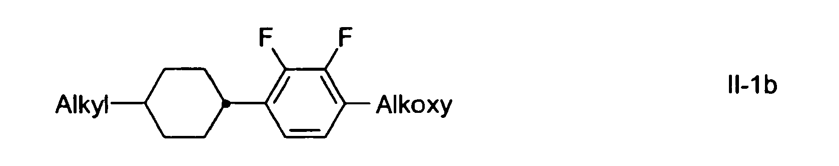 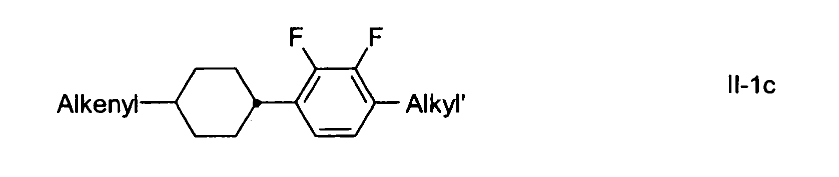 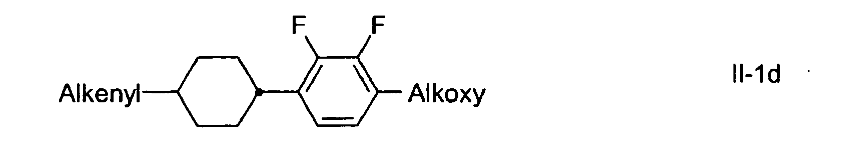 worin
- Alkyl und Alkyl': unabhängig voneinander Alkyl mit 1 bis 7 C-Atomen, bevorzugt mit 2 bis 5 C-Atomen
- Alkoxy: Alkoxy mit 1 bis 7 C-Atomen, bevorzugt mit 2 bis 4 C- Atomen und
- Alkenyl: Alkenyl mit 2 bis 7 C-Atomen, bevorzugt mit 2 bis 5 C-Atomen bedeuten.

Bevorzugte Verbindungen der Formeln II-1c bzw. II-1d sind die Verbindungen der folgenden Formeln 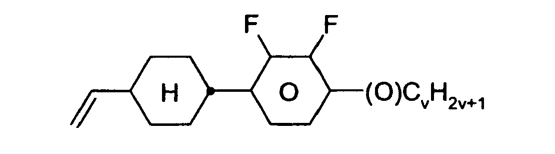 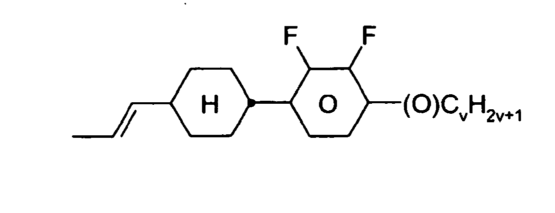 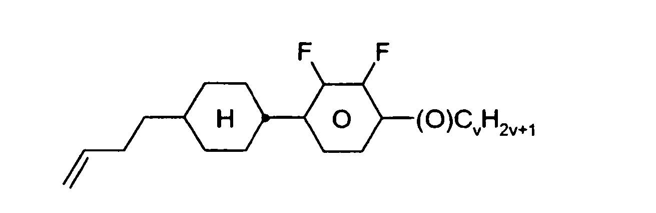 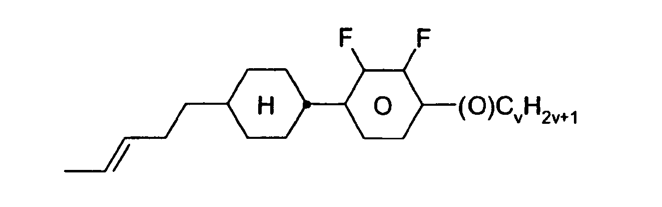 worin v die oben angegebene Bedeutung hat.

Weitere bevorzugte Verbindungen der Formeln II-1 sind die Verbindungen der folgenden Formeln 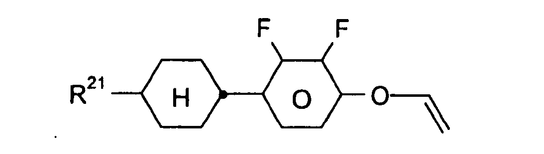 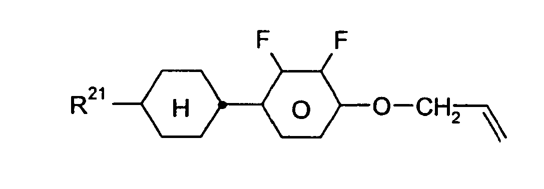 worin R²¹ die jeweilige oben bei Formel II angegebene Bedeutung hat.

In einer bevorzugten Ausführungsform enthält das Medium eine oder mehrere Verbindungen der Formel II-3, ausgewählt aus der Gruppe der Verbindungen der Formeln II-3a bis II-3d, bevorzugt der Formeln II-3b und/oder II-3d, besonders bevorzugt der Formel II-3b, 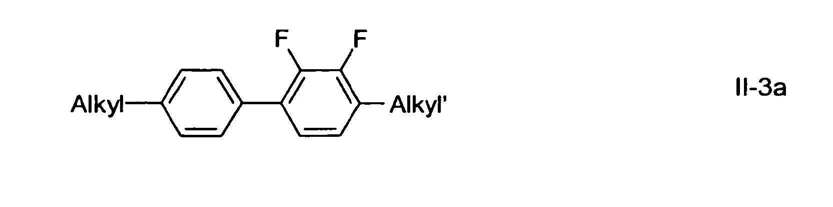 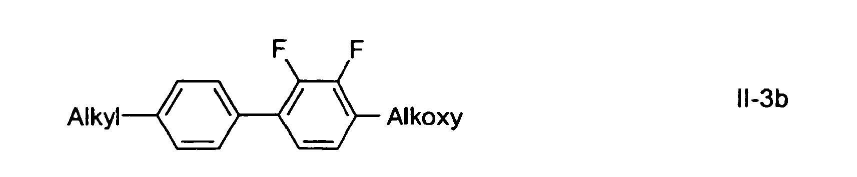 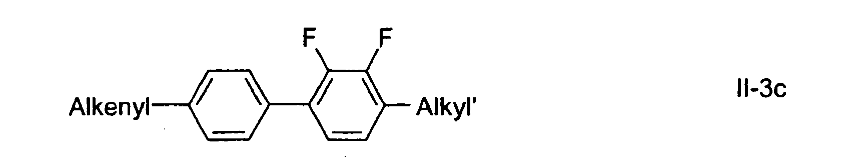 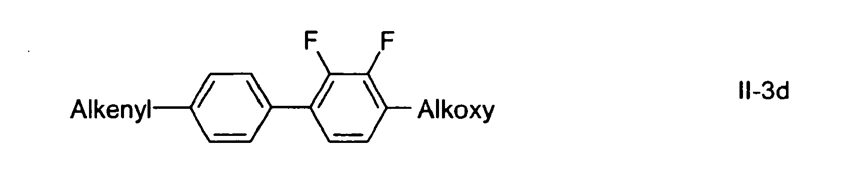 worin
- Alkyl und Alkyl': unabhängig voneinander Alkyl mit 1 bis 7 C-Atomen, bevorzugt mit 2 bis 5 C-Atomen
- Alkoxy: Alkoxy mit 1 bis 7 C-Atomen, bevorzugt mit 2 bis 4 C- Atomen und
- Alkenyl: Alkenyl mit 2 bis 7 C-Atomen, bevorzugt mit 2 bis 5 C-Atomen bedeuten.

Vorzugsweise beträgt die Konzentration dieser Biphenylverbindungen in der Gesamtmischung 3 Gew.-% oder mehr, insbesondere 5 Gew.-% oder mehr, und ganz besonders bevorzugt von 5 bis 25 Gew.-%.

In einer weiteren bevorzugten Ausführungsform enthält das Medium eine oder mehrere Verbindungen der Formel II-4, ausgewählt aus der Gruppe der Verbindungen der Formeln II-4a bis II-4d, bevorzugt der Formeln II-4a und/oder II-4b, besonders bevorzugt der Formel II-4b, 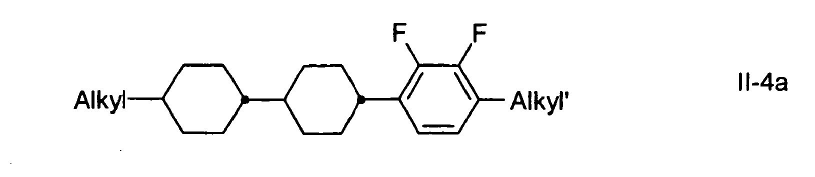 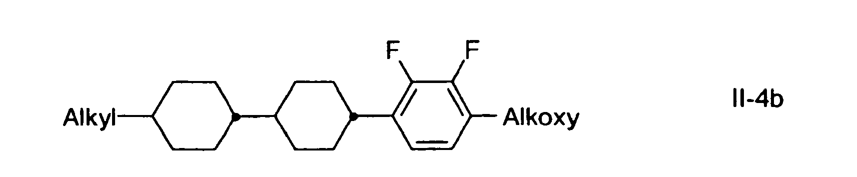 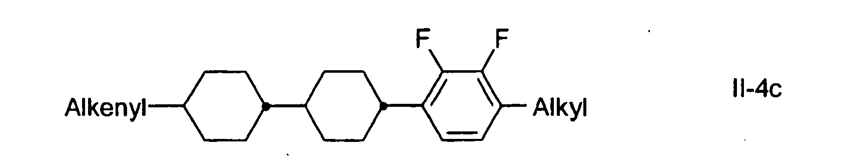 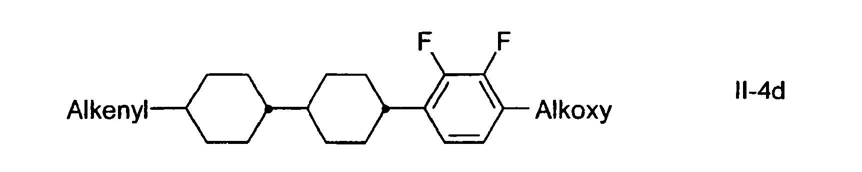 worin
- Alkyl und Alkyl': unabhängig voneinander Alkyl mit 1 bis 7 C-Atomen, bevorzugt mit 2 bis 5 C-Atomen
- Alkoxy: Alkoxy mit 1 bis 7 C-Atomen, bevorzugt mit 2 bis 4 C- Atomen und
- Alkenyl: Alkenyl mit 2 bis 7 C-Atomen, bevorzugt mit 2 bis 5 C-Atomen bedeuten.

Bevorzugte Verbindungen der Formeln II-4c bzw. II-4d sind die Verbindungen der folgenden Formeln 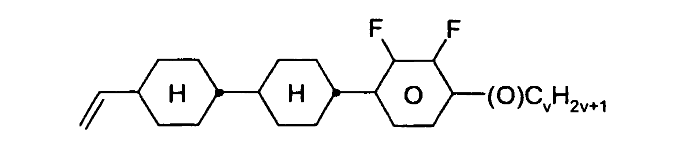 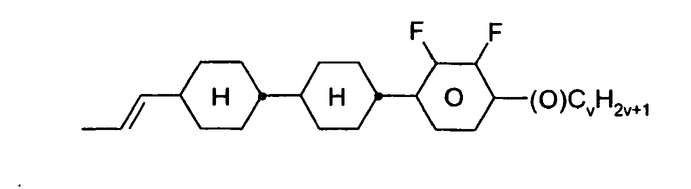 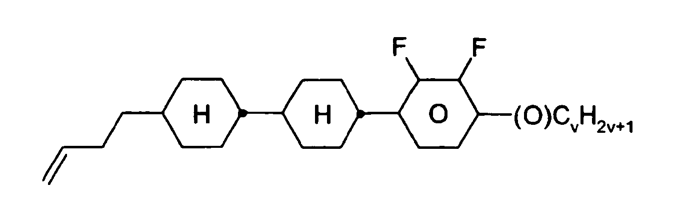 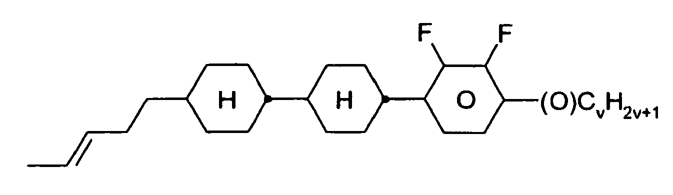 worin v die oben angegebene Bedeutung hat.

In einer weiteren bevorzugten Ausführungsform enthält das Medium eine oder mehrere Verbindungen der Formel II-4 der folgenden Unterformel II-4e 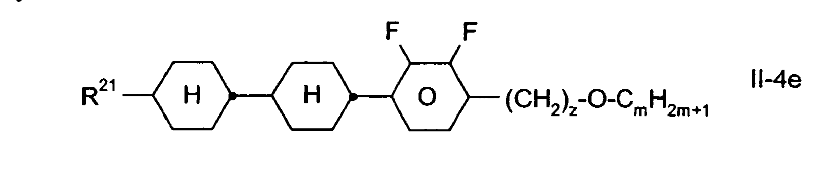 worin
- R²¹: die oben angegebene Bedeutung hat und
- m und z: jeweils unabhängig eine ganze Zahl von 1 bis 6 und
- m + z: bevorzugt eine ganze Zahl von 1 bis 6 bedeuten.

In einer weiteren bevorzugten Ausführungsform enthält das Medium eine oder mehrere Verbindungen der Formel II-5, ausgewählt aus der Gruppe der Verbindungen der Formeln II-5a bis II-5d, bevorzugt der Formeln II-5b und/oder II-5d, 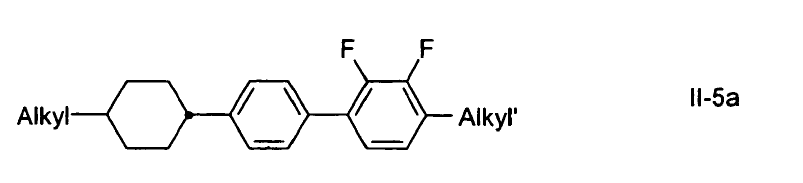 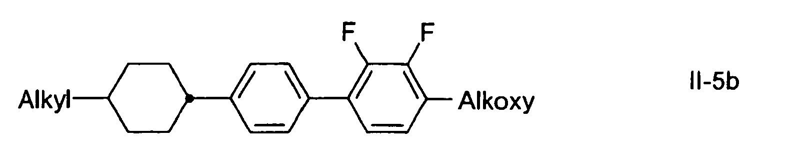 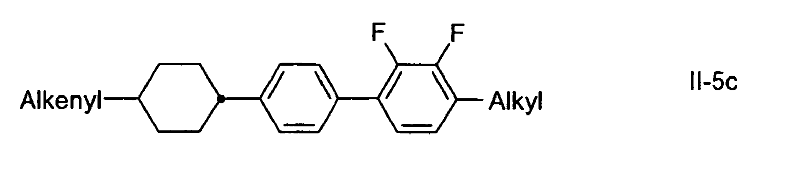 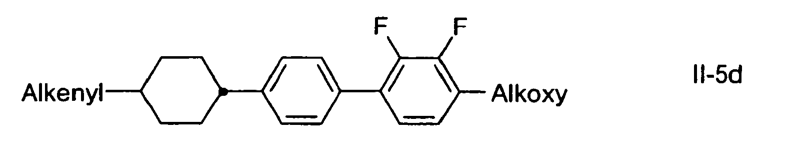 worin
- Alkyl und Alkyl': unabhängig voneinander Alkyl mit 1 bis 7 C-Atomen, bevorzugt mit 2 bis 5 C-Atomen
- Alkoxy: Alkoxy mit 1 bis 7 C-Atomen, bevorzugt mit 2 bis 4 C- Atomen und
- Alkenyl: Alkenyl mit 2 bis 7 C-Atomen, bevorzugt mit 2 bis 5 C-Atomen bedeuten.

Bevorzugte Verbindungen der Formeln II-5c bzw. II-5d sind die Verbindungen der folgenden Formeln 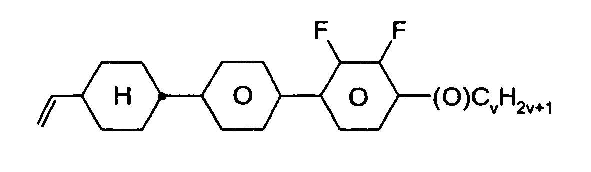 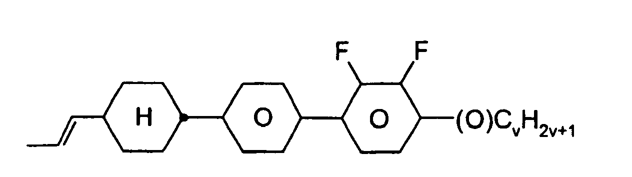 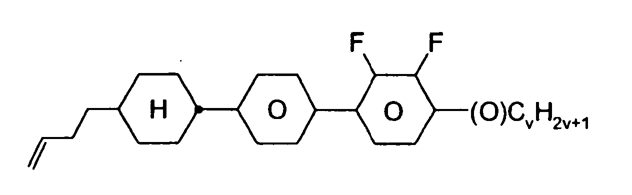 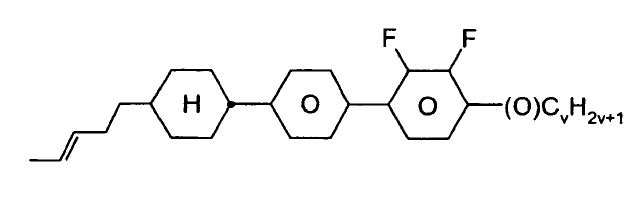 worin v die oben angegebene Bedeutung hat.

In einer weiteren bevorzugten Ausführungsform enthält das Medium eine oder mehrere Verbindungen der Formel I-4, ausgewählt aus der Gruppe der Verbindungen der Formeln II-6a bis II-6d, bevorzugt der Formeln II-6a und/oder II-6c, besonders bevorzugt der Formel II-6a, 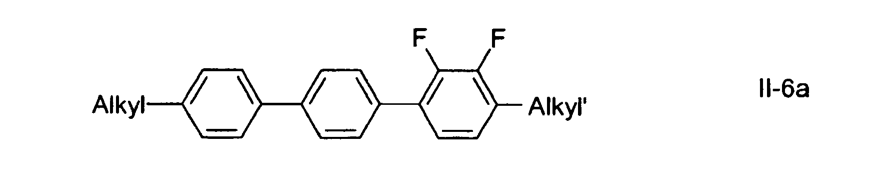 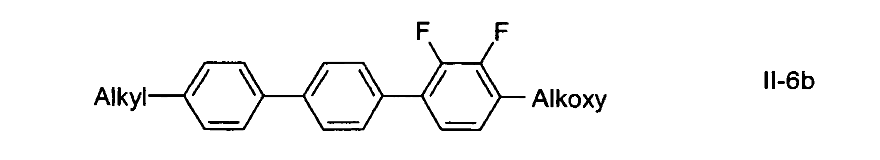 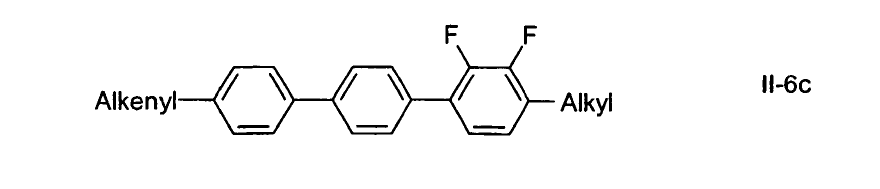 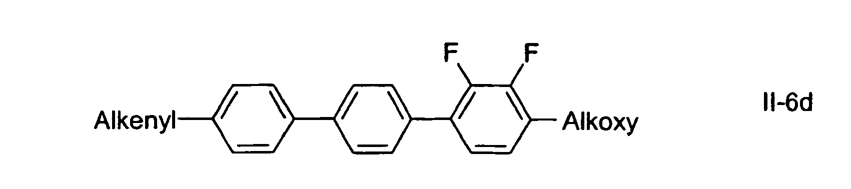 worin
- Alkyl und Alkyl': unabhängig voneinander Alkyl mit 1 bis 7 C-Atomen, bevorzugt mit 2 bis 5 C-Atomen
- Alkoxy: Alkoxy mit bis 1 bis 7 C-Atomen, bevorzugt mit 2 bis 4 C-Atomen und
- Alkenyl: Alkenyl mit 2 bis 7 C-Atomen, bevorzugt mit 2 bis 5 C-Atomen

bedeuten und/oder der Gruppe der Verbindungen der FormelnII-6e bis II-6m 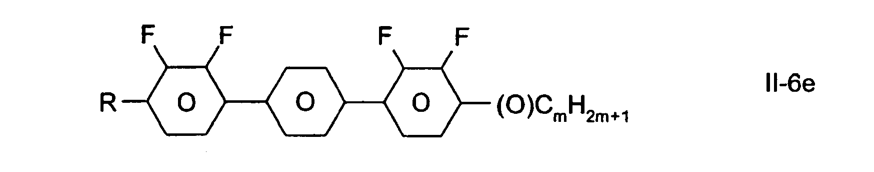 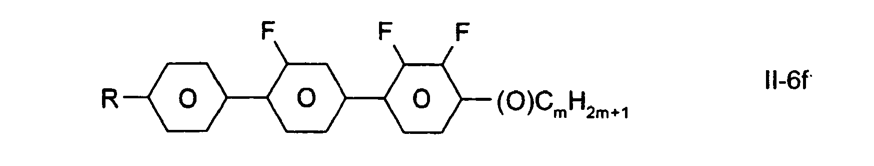 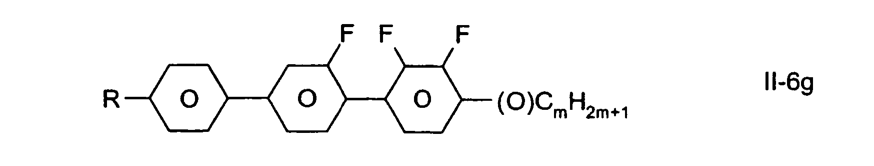 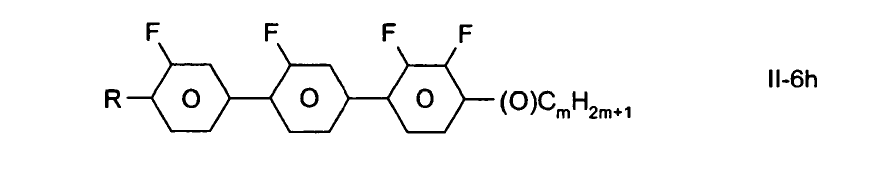 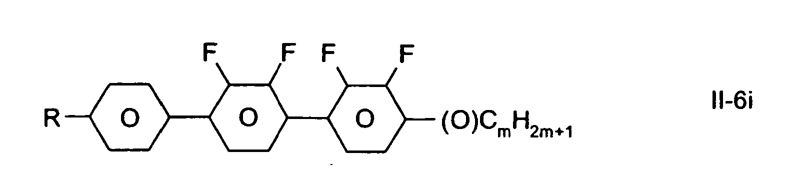 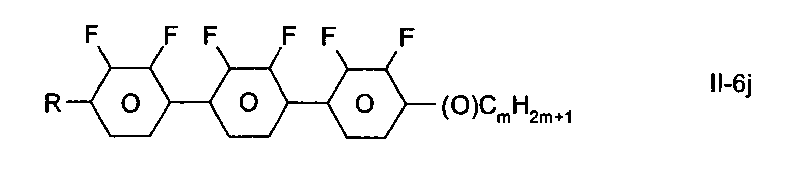 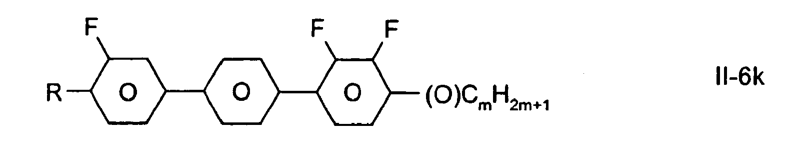 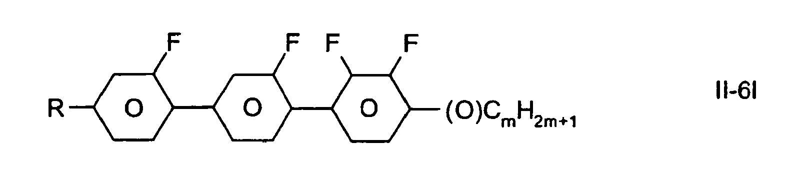 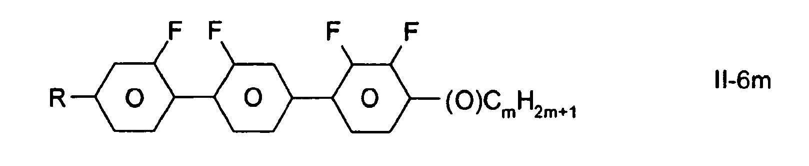 worin
R die oben für R²¹ gegeben Bedeutung hat und
- m: eine ganze Zahl von 1 bis 6 bedeutet.

Bevorzugt bedeutet R geradkettiges Alkyl oder Alkoxy mit jeweils 1 bis 6 C-Atomen oder Alkylalkoxy, Alkenyl oder Alkenyloxy mit 2-6 C-Atomen, besonders bevorzugt Alkyl mit 1-5 C-Atomen, vorzugsweise Methyl, Ethyl, Propyl, Butyl, oder ferner Alkoxy mit 1-5 C-Atomen, vorzugsweise Hexyl, Methoxy, Ethoxy, Propoxy, oder Butoxy.

In einer weiteren bevorzugten Ausführungsform enthält das Medium eine oder mehrere Verbindungen der Formel II-7, ausgewählt aus der Gruppe der Verbindungen der Formeln II-7a bis II-7d, bevorzugt der Formeln II-7a und/oder II-7c, besonders bevorzugt der Formel II-7a, 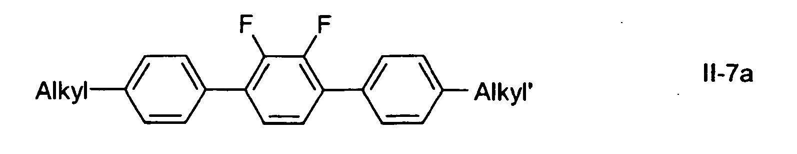 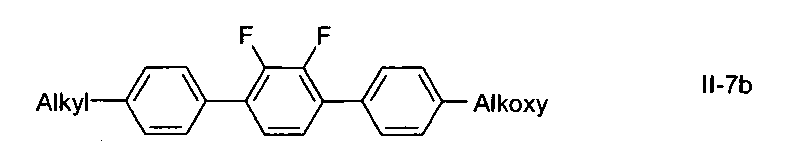 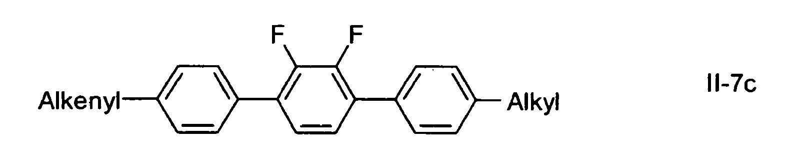 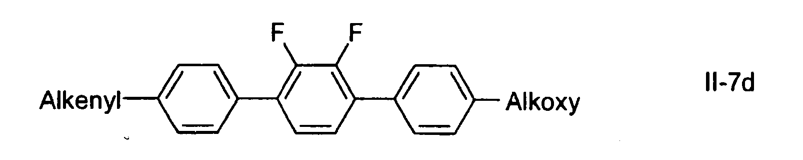 worin
- Alkyl und Alkyl': unabhängig voneinander Alkyl mit 1 bis 7 C-Atomen, bevorzugt mit 2 bis 5 C-Atomen
- Alkoxy: Alkoxy mit bis 1 bis 5 C-Atomen, bevorzugt mit 2 bis 4 C-Atomen und
- Alkenyl: Alkenyl mit 2 bis 7 C-Atomen, bevorzugt mit 2 bis 5 C-Atomen
bedeuten und/oder der Gruppe der Verbindungen der Formeln II-7e bis II-7i 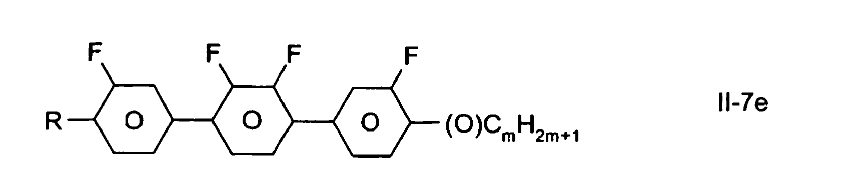 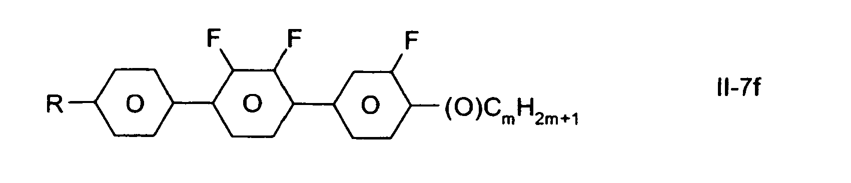 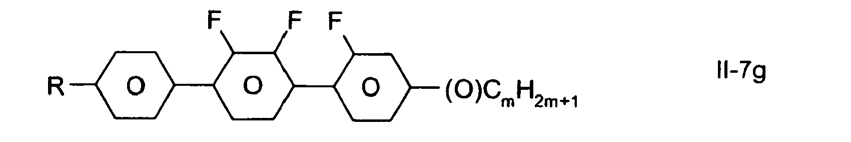 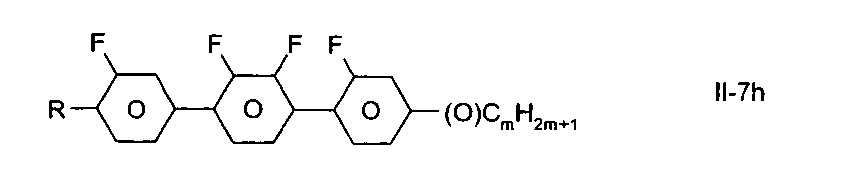 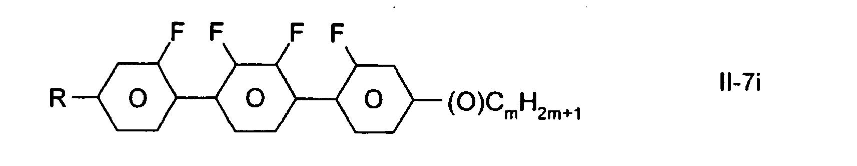 worin
R die oben für R²¹ gegeben Bedeutung hat und
- m: eine ganze Zahl von 1 bis 6 bedeutet.

Bevorzugt bedeutet R geradkettiges Alkyl oder Alkoxy mit jeweils 1 bis 6 C-Atomen oder Alkylalkoxy, Alkenyl oder Alkenyloxy mit 2-6 C-Atomen, besonders bevorzugt Alkyl mit 1-5 C-Atomen, vorzugsweise Methyl, Ethyl, Propyl, Butyl, oder ferner Alkoxy mit 1-5 C-Atomen, vorzugsweise Hexyl, Methoxy, Ethoxy, Propoxy, oder Butoxy.

In einer weiteren bevorzugten Ausführungsform enthält das Medium eine oder mehrere Verbindungen der Formel II-8, ausgewählt aus der Gruppe der Verbindungen der Formeln II-8a und II-8b, besonders bevorzugt II-8b 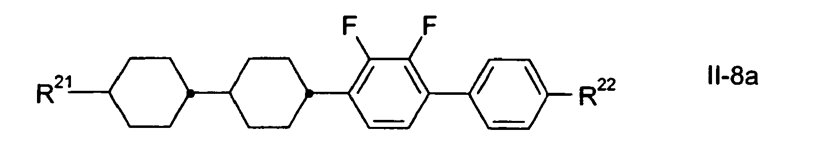 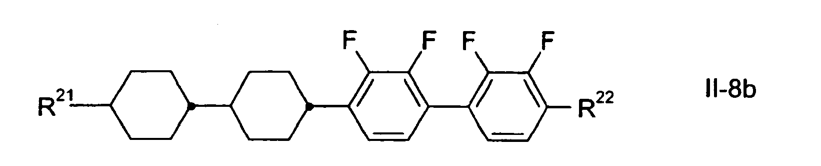 worin die Parameter die oben angegebenen Bedeutungen haben.

In einer weiteren bevorzugten Ausführungsform enthält das Medium eine oder mehrere Verbindungen der Formel II-9, ausgewählt aus der Gruppe der Verbindungen der Formeln II-9a bis II-9d 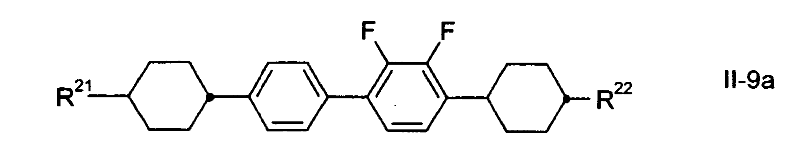 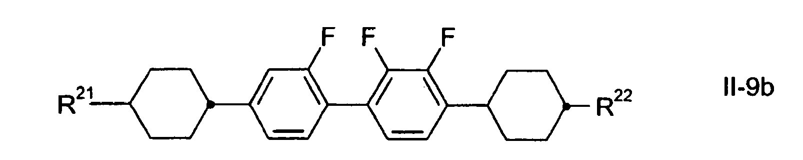 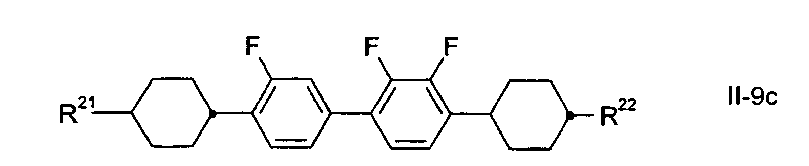 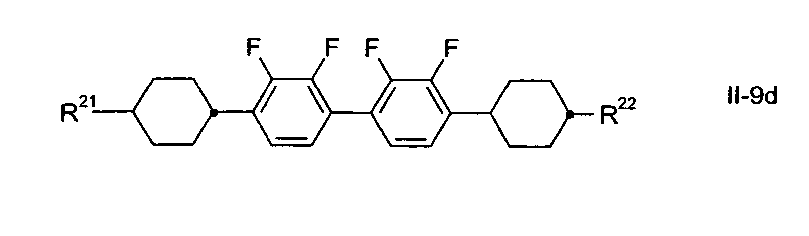 worin die Parameter die oben angegebenen Bedeutungen haben und bevorzugt
- R²²: CᵥH₂ᵥ₊₁ und
- v: eine ganze Zahl von 1 bis 6 bedeutet.

In einer weiteren bevorzugten Ausführungsform enthält das Medium eine oder mehrere Verbindungen der Formel 11-10, ausgewählt aus der Gruppe der Verbindungen der Formeln II-10a bis 11-10e 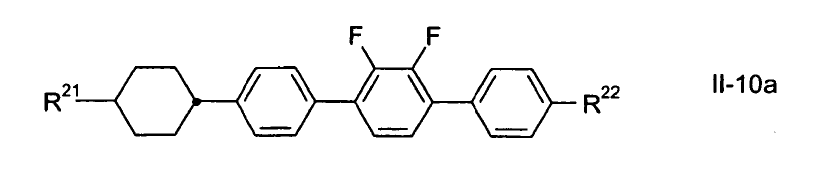 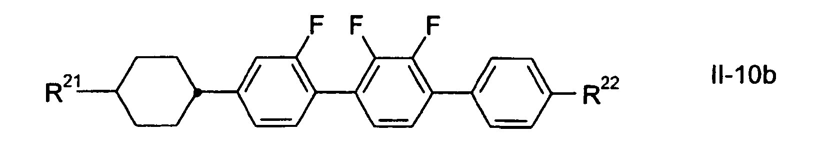 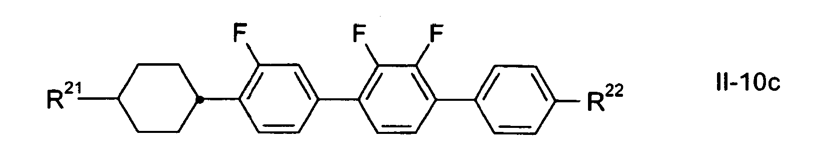 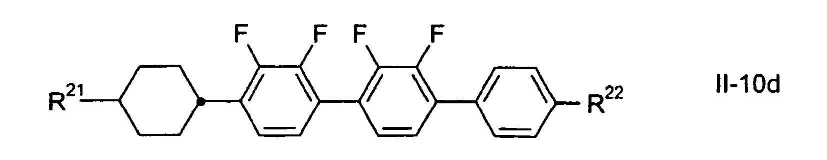 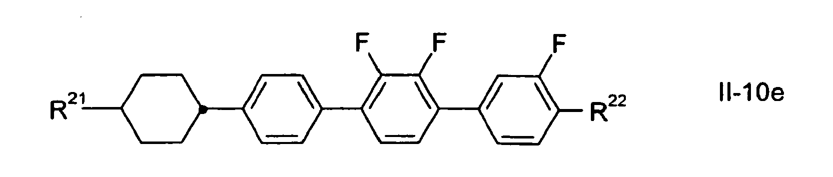 worin die Parameter die oben angegeben Bedeutungen haben und bevorzugt
- R²²: CᵥH₂ᵥ₋₁ und
- v: eine ganze Zahl von 1 bis 6 bedeutet.

In einer weiteren bevorzugten Ausführungsform enthält das Medium eine oder mehrere Verbindungen der Formel II-11, ausgewählt aus der Gruppe der Verbindungen der Formeln II-IIa und II-II b, besonders bevorzugt II-11b 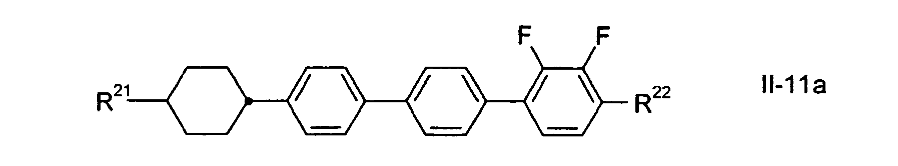 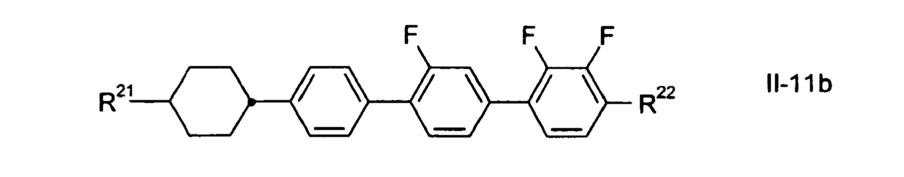 worin die Parameter die oben angegebenen Bedeutungen haben.

In einer bevorzugten Ausführungsform enthält das Medium eine oder mehrere Verbindungen der Formel II, ausgewählt aus der Gruppe der Verbindungen der Formeln II'-1 und II'-2 und/oder II"-1 und II"-2 und/oder II"'-1 bis II"'-3 und/oder II^{(IV)}-1 bis II^{(IV)}-3 und/oder II^{(V)}-1 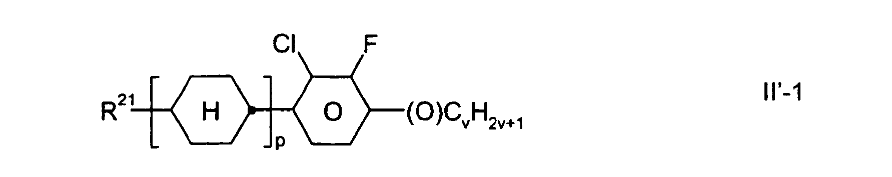 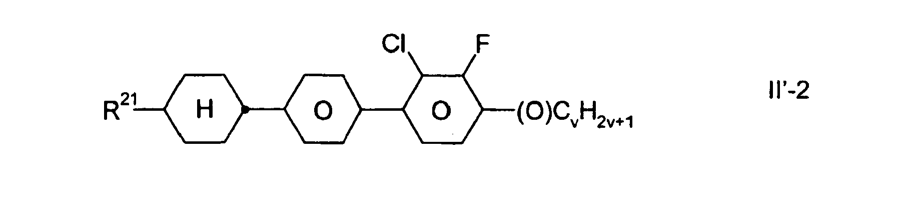 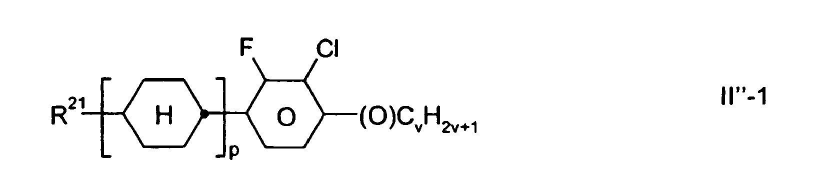 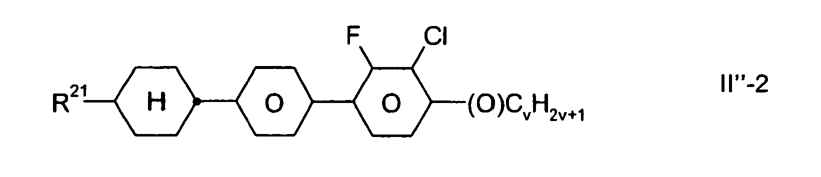 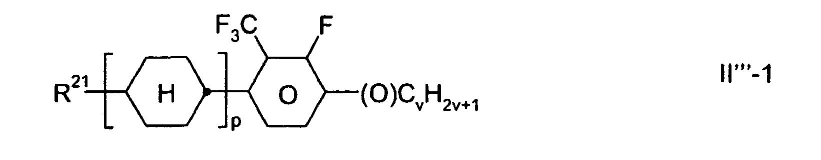 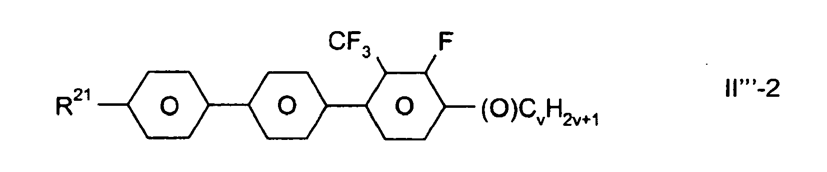 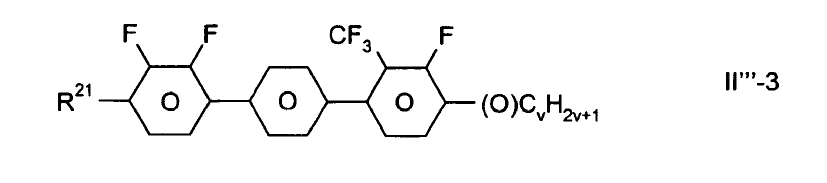 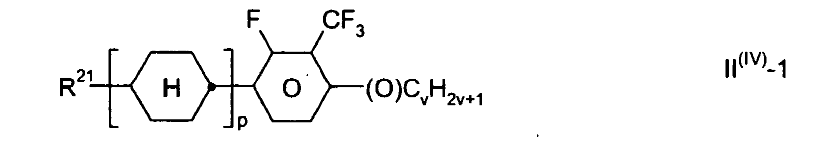 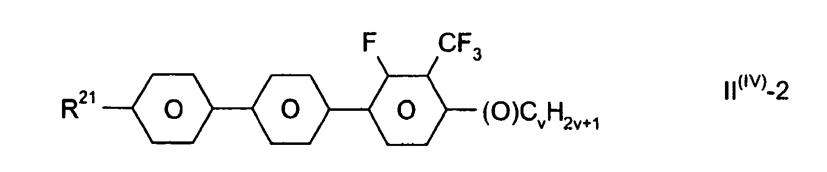 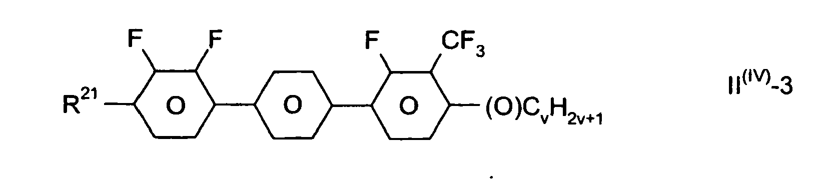 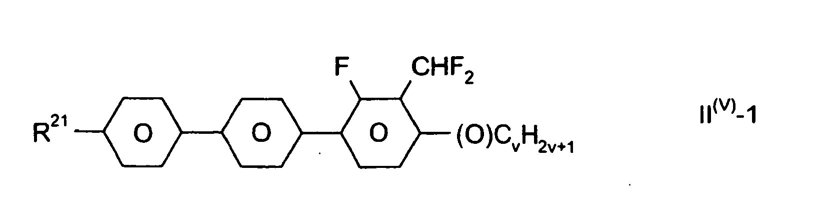 worin die Parameter die jeweilige oben gegebene Bedeutung haben und p 0 1 oder 2 und bevorzugt
- R²¹: Alkyl oder Alkenyl bedeuten

Insbesondere bevorzugt sind die Verbindungen der obigen Formeln in denen R²¹ geradkettiges Alkyl, insbesondere CH₃, C₂H₅, n-C₃H₇, n-C₄H₉ oder n-C₅H₁, oder Alkenyl, insbesondere CH₂=CH, CH₃CH=CH, CH₂=CHCH₂CH₂, CH₃CH=CHC₂H₄ oder C₃H₇CH=CH, bedeutet.

In einer weiteren bevorzugten Ausführungsform enthält das Medium eine oder mehrere Verbindungen der Formel III worin mindestens zwei der Ringe 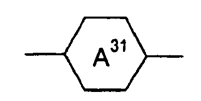 bis 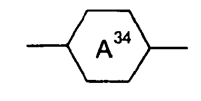 jeweils unabhängig voneinander, 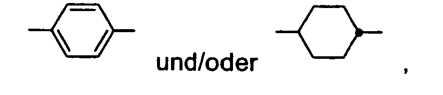 wobei ganz besonders bevorzugt zwei benachbarte Ringe direkt verknüpft sind und zwar bevorzugt 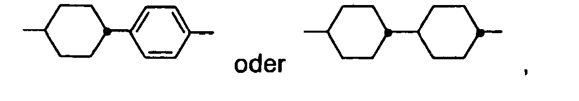 bedeuten, wobei bei dem Phenylenring ein oder mehrere H-Atome, unabhängig voneinander durch F oder CN, bevorzugt durch F und eine oder zwei nicht benachbarte CH₂-Gruppen des Cyclohexylenrings bzw. eines der beiden Cyclohexylenringe durch O-Atome ersetzt sein können.

In einer weiteren bevorzugten Ausführungsform enthält das Medium eine oder mehrere Verbindungen der Formel III aus der Gruppe der Verbindungen der Formeln III-1 bis III-11, bevorzugt ausgewählt aus der Gruppe der Verbindungen der Formeln III-1 bis III-9, bevorzugt aus der Gruppe III-1 bis III-6 und besonders bevorzugt aus der Gruppe III-1 und III-4, 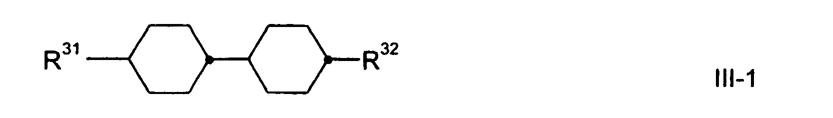 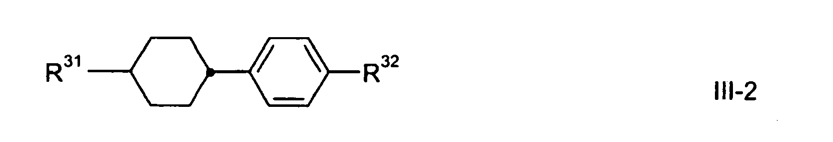 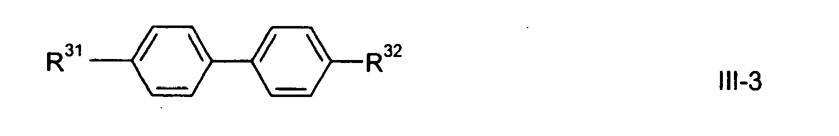 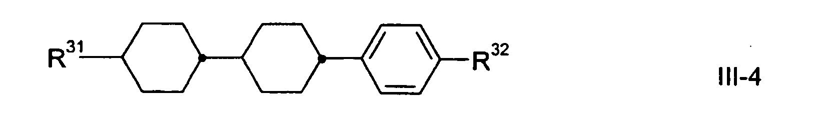 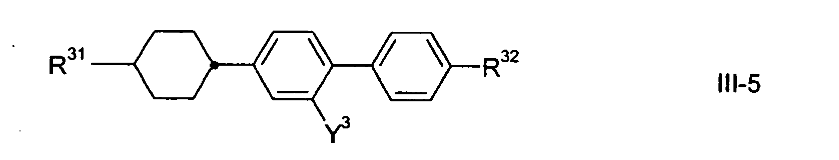 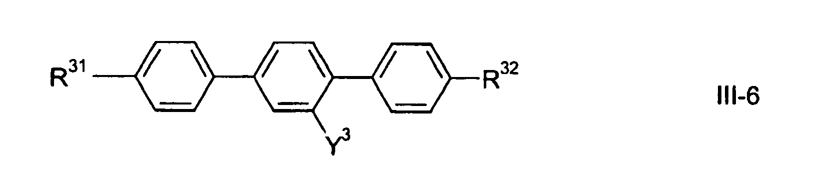 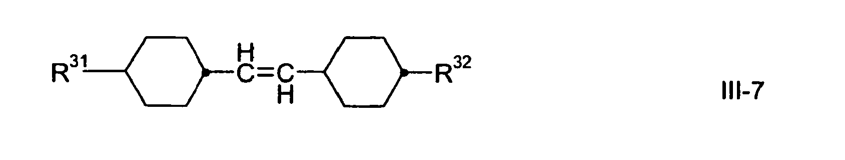 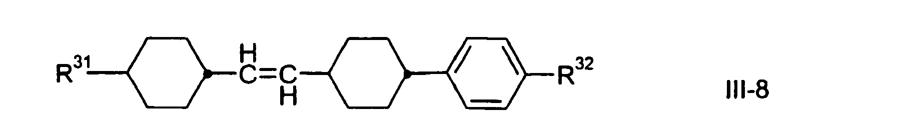 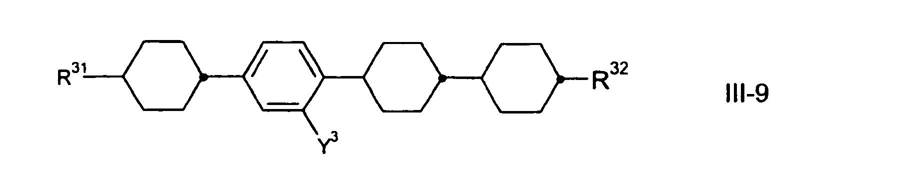 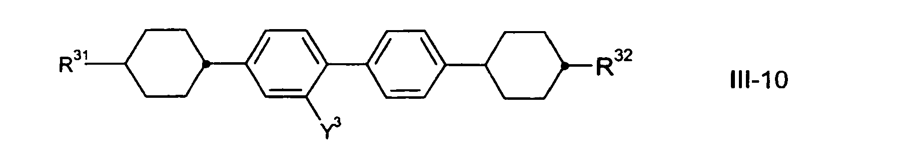 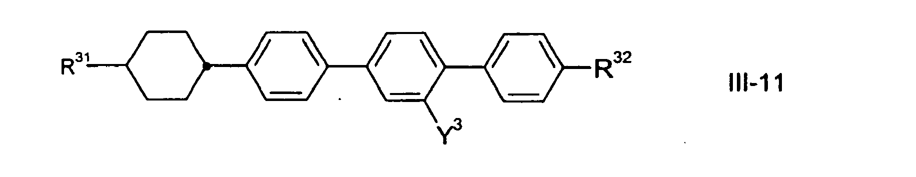 worin die Parameter die jeweilige oben bei Formel III angegebene Bedeutung haben und
- Y³: H oder F bedeutet und bevorzugt
- R³¹: Alkyl oder Alkenyl und
- R³²: Alkyl, Alkenyl oder Alkoxy, bevorzugt Alkyl oder Alkenyl, besonders bevorzugt Alkenyl,
bedeuten.
Besonders bevorzugt enthält das Medium eine oder mehrere Verbindung(en) der Formel III-1, ausgewählt aus der Gruppe
- der Formeln III-1c, insbesondere bevorzugt
- der Formel III-1 in der R³¹ Vinyl oder 1-Propenyl und R³² Alkyl, bevorzugt n-Alkyl, besonders bevorzugt R³¹ Vinyl und R³² Propyl bedeuten und
- der Formeln III-1d, insbesondere bevorzugt
- der Formel III-1 in der R³¹ und R³²unabhängig voneinander Vinyl oder 1-Propenyl, bevorzugt und R³¹ Vinyl und besonders bevorzugt R³¹ und R³² Vinyl bedeuten.

In einer weiteren bevorzugten Ausführungsform enthält das Medium eine oder mehrere Verbindungen der Formel III-1, ausgewählt aus der Gruppe der Verbindungen der Formeln III-1a bis III-1e, bevorzugt der Formeln III-1a und/oder Formeln III-1c und/oder III-1d, besonders bevorzugt der Formeln III-1c und/oder III-1d und ganz besonders bevorzugt der Formel III-1c und der Formel III-1d, 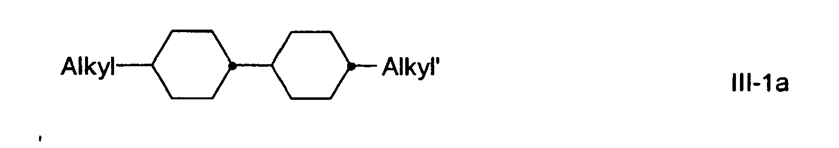 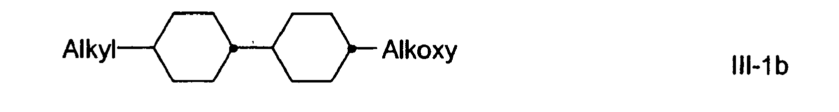 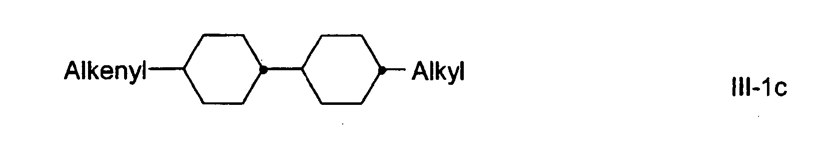 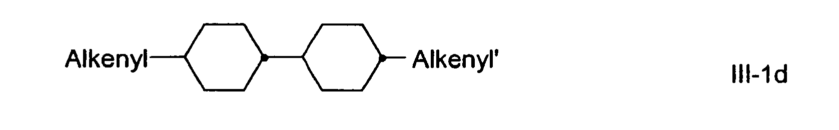 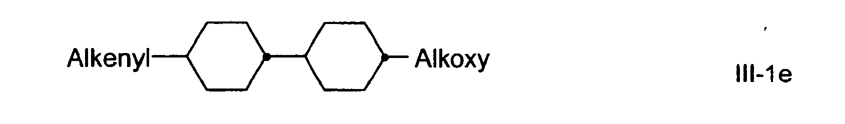 worin
- Alkyl und Alkyl': unabhängig voneinander Alkyl mit 1 bis 7 C-Atomen, bevorzugt mit 2 bis 5 C-Atomen
- Alkoxy: Alkoxy mit 1 bis 5 C-Atomen, bevorzugt mit 2 bis 4 C- Atomen und
- Alkenyl und Alkenyl': unabhängig voneinander, Alkenyl mit 2 bis 7 C- Atomen, bevorzugt mit 2 bis 5 C-Atomen bedeuten.

Besonders bevorzugt enthält das erfindungsgemäße Medium Verbindungen der Formel III-1 in Mengen von 20 Gew.-% oder mehr, insbesondere von 25 Gew.-% oder mehr, ganz besonders bevorzugt von 30 Gew.-% oder mehr, insbesondere Verbindungen der Formel III-1a' 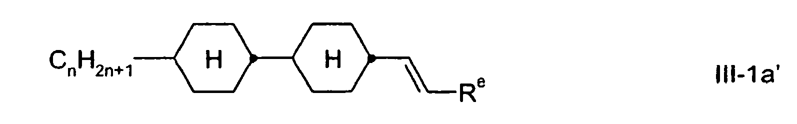 worin
n = 3, 4, 5 und R^{e} H oder CH₃
bedeuten.

In einer weiteren bevorzugten Ausführungsform enthält das Medium eine oder mehrere Verbindungen der Formel III-2, ausgewählt aus der Gruppe der Verbindungen der Formeln III-2a bis III-2d, bevorzugt der Formeln III-2a und/oder III-2b, besonders bevorzugt der Formel III-2b, 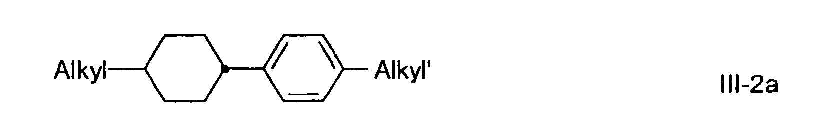 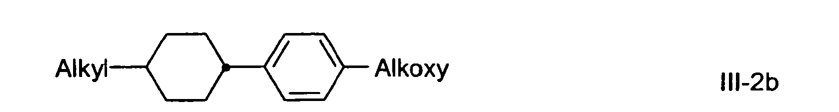 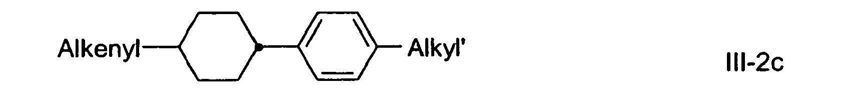 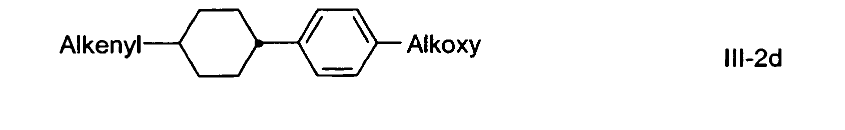 worin
- Alkyl und Alkyl': unabhängig voneinander Alkyl mit 1 bis 7 C-Atomen, bevorzugt mit 2 bis 5 C-Atomen
- Alkoxy: Alkoxy mit 1 bis 5 C-Atomen, bevorzugt mit 2 bis 4 C- Atomen und
- Alkenyl: Alkenyl mit 2 bis 7 C-Atomen, bevorzugt mit 2 bis 5 C-Atomen bedeuten.

In einer weiteren bevorzugten Ausführungsform enthält das Medium eine oder mehrere Verbindungen der Formel III-3, ausgewählt aus der Gruppe der Verbindungen der Formeln III-3a bis III-3c 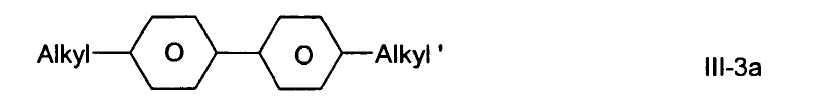 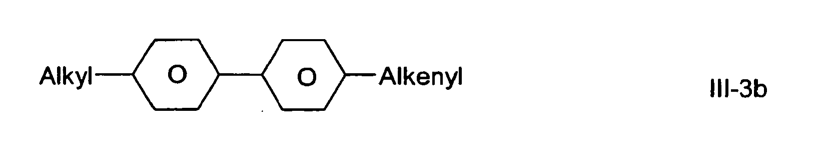 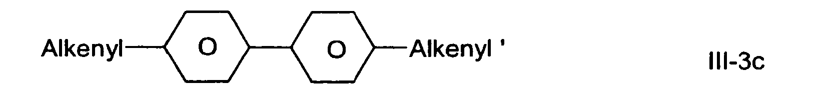 worin
- Alkyl und Alkyl': unabhängig voneinander Alkyl mit 1 bis 7 C-Atomen, bevorzugt mit 2 bis 5 C-Atomen
- Alkenyl: Alkenyl mit 2 bis 7 C-Atomen, bevorzugt mit 2 bis 5 C-Atomen bedeuten.

Der Anteil dieser Biphenyle in der Gesamtmischung beträgt vorzugsweise 3 Gew.-% oder mehr, insbesondere 5 Gew.-% oder mehr.

Bevorzugte Verbindungen der Formeln III-3a bzw. III-3b sind die Verbindungen der folgenden Formel 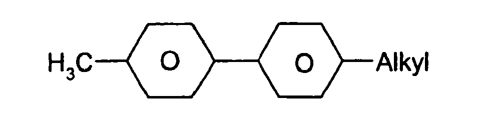 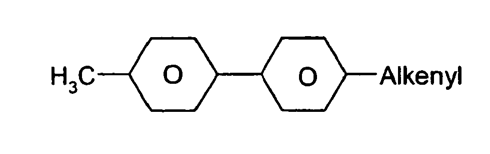 worin die Parameter oben angegebene Bedeutung haben.

Besonders bevorzugte Verbindungen der Formel III-3b sind die Verbindungen der folgenden Formel 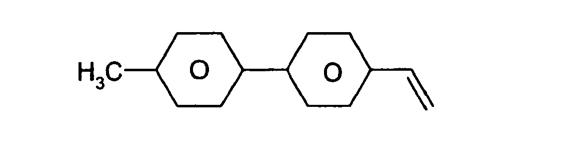 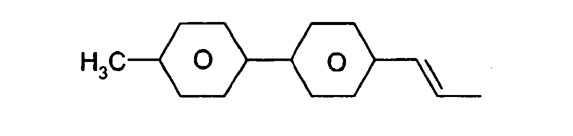 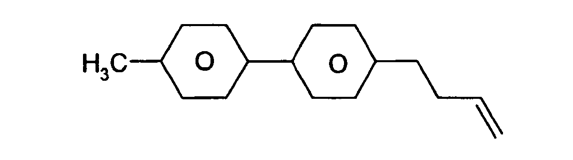 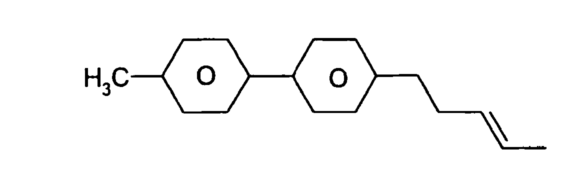 und hiervon insbesondere die der letzten Formel.

In einer bevorzugten Ausführungsform enthält das Medium eine oder mehrere Verbindungen der Formel III-4, insbesondere bevorzugt eine oder mehrere Verbindung(en), in denen R³¹ Vinyl oder 1-Propenyl und R³² Alkyl, bevorzugt n-Alkyl, besonders bevorzugt R³¹ Vinyl und R³² Methyl bedeuten.

In einer weiteren bevorzugten Ausführungsform enthält das Medium eine oder mehrere Verbindungen der Formel III-4, ausgewählt aus der Gruppe der Verbindungen der Formeln III-4a bis III-4d, bevorzugt der Formeln III-4a und/oder III-4b, besonders bevorzugt der Formel III-4b, 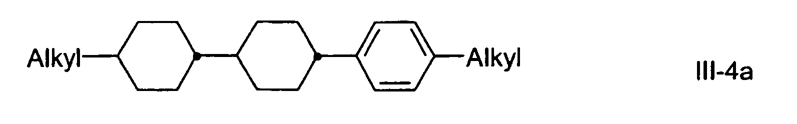 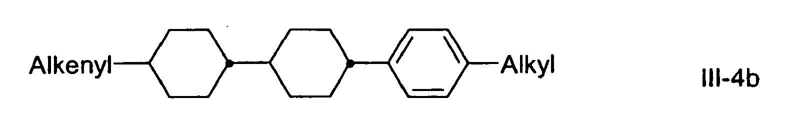 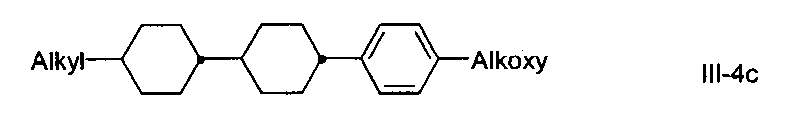 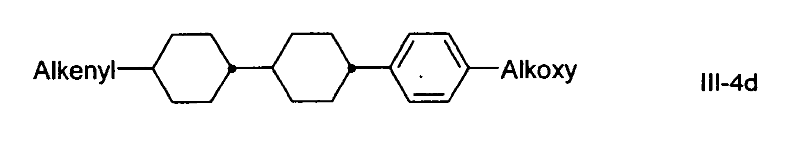 worin
- Alkyl und Alkyl': unabhängig voneinander Alkyl mit 1 bis7 C-Atomen, bevorzugt mit 2 bis 5 C-Atomen
- Alkoxy: Alkoxy mit bis 1 bis 5 C-Atomen, bevorzugt mit 2 bis 4 C-Atomen und
- Alkenyl: Alkenyl mit 2 bis 7 C-Atomen, bevorzugt mit 2 bis 5 C-Atomen bedeuten.

In einer bevorzugten Ausführungsform enthält das Medium eine oder mehrere Verbindungen der Formel III-5, insbesondere bevorzugt eine oder mehrere Verbindung(en), in denen R³¹ Alkyl, Vinyl oder 1-Propenyl und R³² Alkyl, bevorzugt n-Alkyl bedeuten.

In einer weiteren bevorzugten Ausführungsform enthält das Medium eine oder mehrere Verbindungen der Formel III-5 ausgewählt aus der Gruppe der Verbindungen der Formeln III-5a bis III-5d, bevorzugt der Formeln III-5a und/oder III-5b, besonders bevorzugt der Formel III-5a 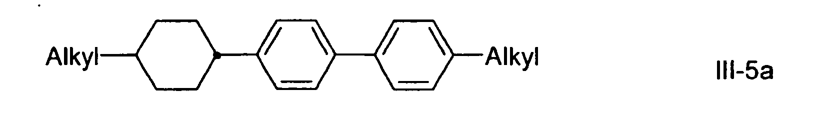 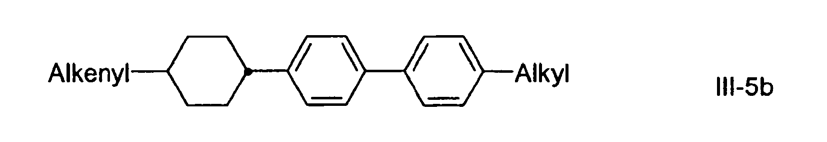 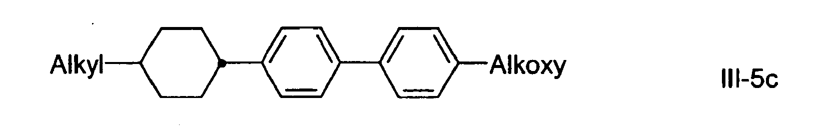 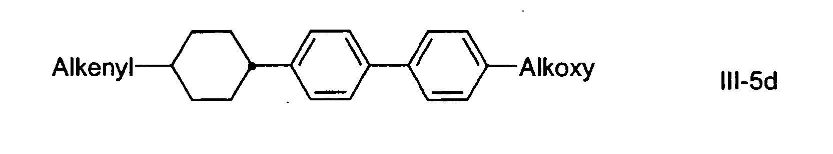 worin
- Alkyl und Alkyl': unabhängig voneinander Alkyl mit 1 bis 7 C-Atomen, bevorzugt mit 2 bis 5 C-Atomen
- Alkoxy: Alkoxy mit bis 1 bis 5 C-Atomen, bevorzugt mit 2 bis 4 C-Atomen und
- Alkenyl: Alkenyl mit 2 bis 7 C-Atomen, bevorzugt mit 2 bis 5 C-Atomen bedeuten.
und/oder der Formeln III-5e bis III-5h, bevorzugt der Formeln III-5e und/oder III-5f, besonders bevorzugt der Formel III-5e 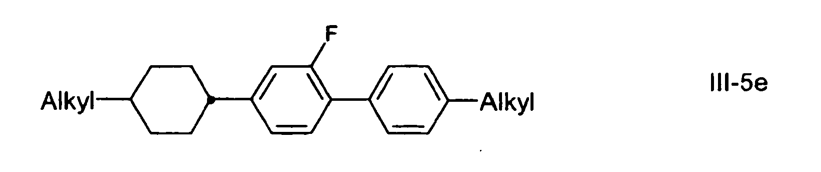 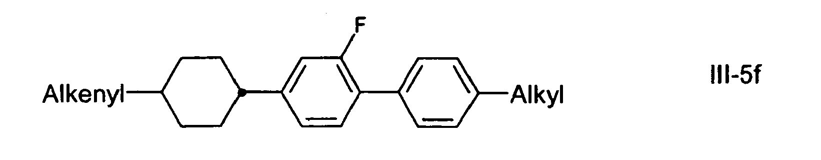 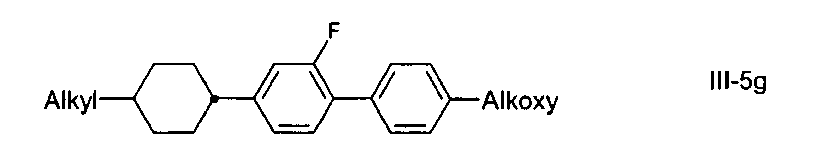 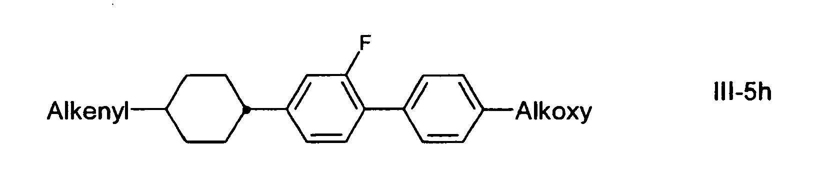 worin
- Alkyl und Alkyl': unabhängig voneinander Alkyl mit 1 bis 7 C-Atomen, bevorzugt mit 2 bis 5 C-Atomen
- Alkoxy: Alkoxy mit bis 1 bis 5 C-Atomen, bevorzugt mit 2 bis 4 C-Atomen und
- Alkenyl: Alkenyl mit 2 bis 7 C-Atomen, bevorzugt mit 2 bis 5 C-Atomen bedeuten.

In einer weiteren bevorzugten Ausführungsform enthält das Medium eine oder mehrere Verbindungen der Formel III-6 ausgewählt aus der Gruppe der Verbindungen der Formeln III-6a bis III-6c, bevorzugt der Formeln III-6a und/oder III-6b, besonders bevorzugt der Formel III-6a 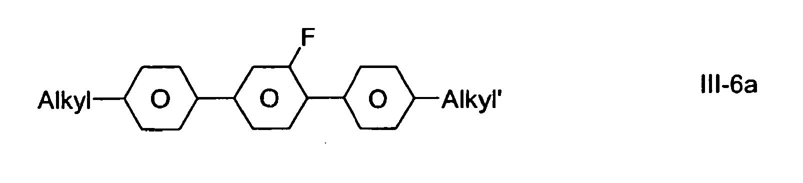 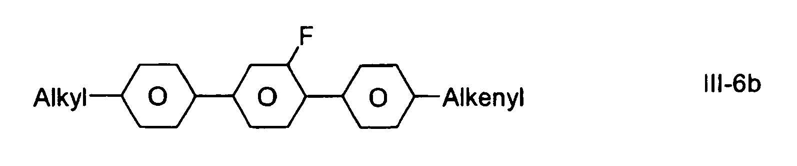 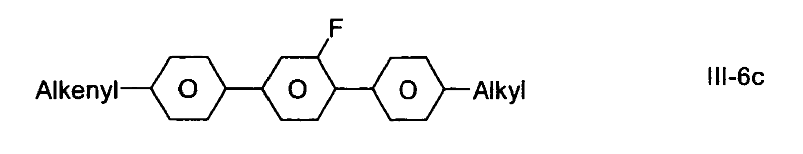 worin
- Alkyl und Alkyl': unabhängig voneinander Alkyl mit 1 bis 7 C- Atomen, bevorzugt mit 2 bis 5 C-Atomen,
- Alkoxy: Alkoxy mit bis 1 bis 5 C-Atomen, bevorzugt mit 2 bis 4 C-Atomen, und
- Alkenyl: Alkenyl mit 2 bis 7 C-Atomen, bevorzugt mit 2 bis 5 C-Atomen bedeuten.

In einer weiteren bevorzugten Ausführungsform enthält das Medium eine oder mehrere Verbindungen der Formel III-6 ausgewählt aus der Gruppe der Verbindungen der Formeln III-10a und III-10b 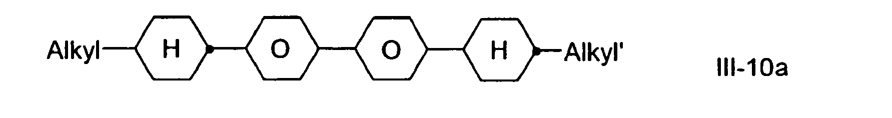 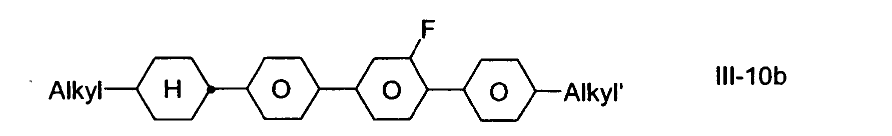 worin
- Alkyl und Alkyl': unabhängig voneinander Alkyl mit 1 bis 7 C-Atomen, bevorzugt mit 2 bis 5 C-Atomen bedeuten.

In einer weiteren bevorzugten Ausführungsform enthält das Medium eine oder mehrere Verbindungen der Formel III-11 der Verbindungen der Formeln III-11a 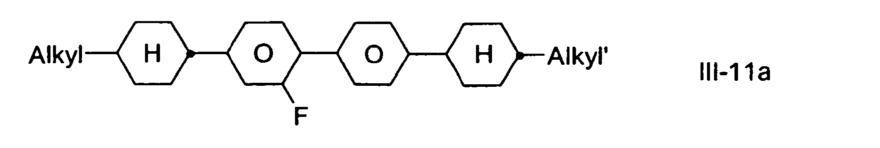 worin
- Alkyl und Alkyl': unabhängig voneinander Alkyl mit 1 bis 7 C-Atomen, bevorzugt mit 2 bis 5 C-Atomen bedeuten.

In einer weiteren bevorzugten Ausführungsform enthält das Medium (zusätzlich) eine oder mehrere Verbindungen die eine Indan -Einheit aufweisen, bevorzugt Verbindungen der Formel IV, bevorzugt ausgewählt aus der Gruppe der Verbindungen der Formeln IV-1 bis IV-2 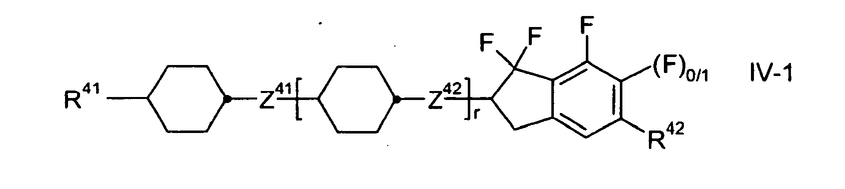 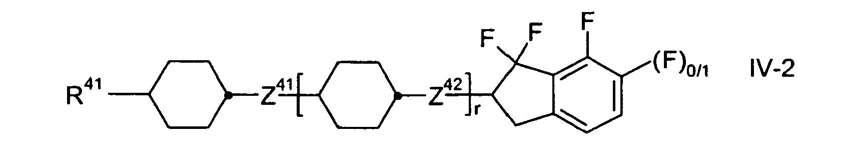 worin die Parameter die jeweilige oben bei Formel V angegebene Bedeutung haben und bevorzugt
- R⁴¹: Alkyl oder Alkenyl und
- R⁴²: Alkyl, Alkenyl, Alkoxy oder Alkenyloxy bedeuten,
- Z⁴¹: eine Einfachbindung und

- r: 0
bedeuten.

In einer weiteren bevorzugten Ausführungsform enthält das Medium (zusätzlich) eine oder mehrere Verbindungen die eine Tetrahydronaphthyl- oder Naphthyl-Einheit aufweisen, bevorzugt Verbindungen der Formel V, bevorzugt ausgewählt aus der Gruppe der Verbindungen der Formeln V-1 bis
V-8 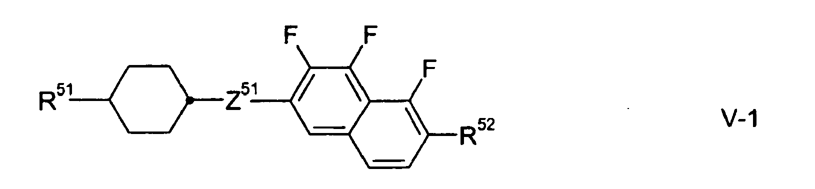 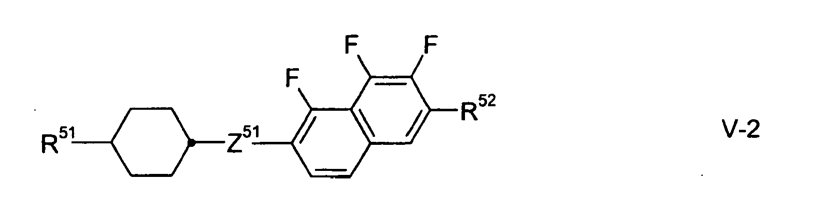 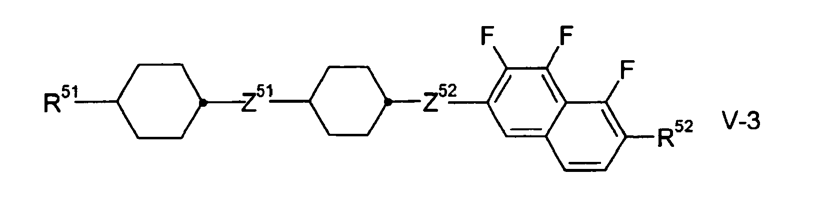 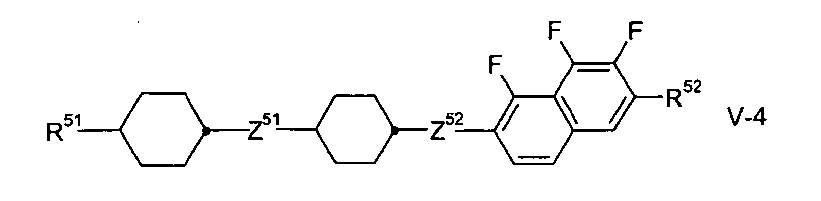 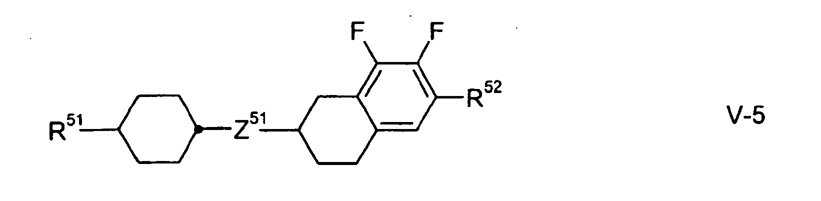 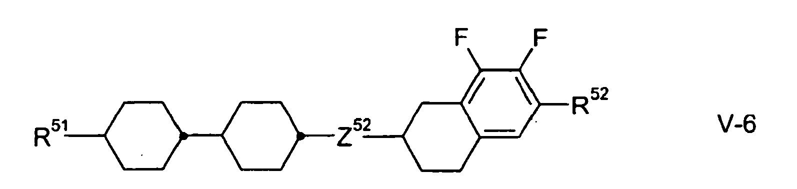 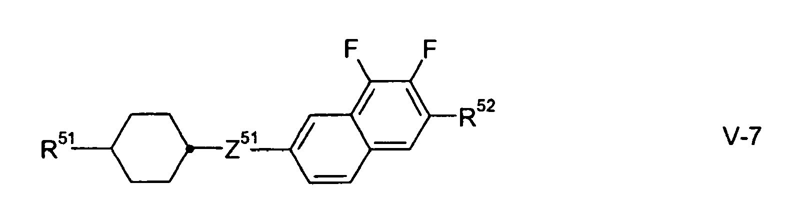 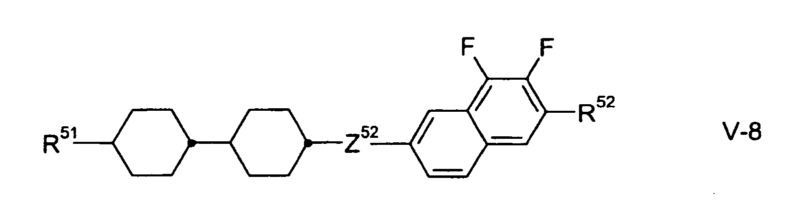 worin die Parameter die jeweilige oben bei Formel V angegebene Bedeutung haben und bevorzugt
- R⁵¹: Alkyl oder Alkenyl und
- R⁵²: Alkyl, Alkenyl, Alkoxy oder Alkenyloxy bedeuten,
und

in Formel V-1 und V-2
- Z⁵¹: -CH₂-CH₂- oder eine Einfachbindung,

in Formel V-3 und V-4
- Z⁵¹: eine Einfachbindung und
- Z⁵²: -CH₂-CH₂- oder eine Einfachbindung
bedeuten.

In einer weiteren bevorzugten Ausführungsform enthält das Medium (zusätzlich) eine oder mehrere Verbindungen die eine fluorierte Phenanthren-Einheit aufweisen, bevorzugt Verbindungen der Formel V, bevorzugt ausgewählt aus der Gruppe der Verbindungen der Formeln V-9 und V-10 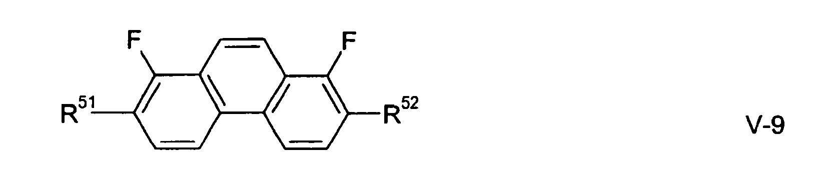 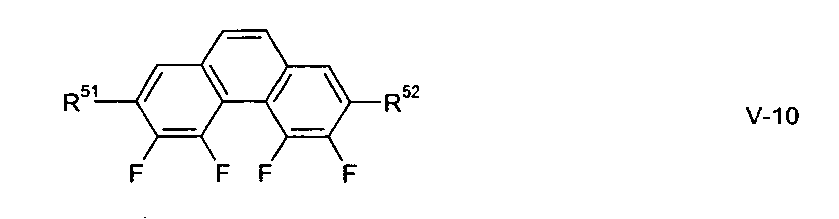 worin die Parameter die jeweilige oben bei Formel V angegebene Bedeutung haben und bevorzugt
- R⁵¹: Alkyl oder Alkenyl und
- R⁵²: Alkyl, Alkenyl, Alkoxy oder Alkenyloxy bedeuten.

In einer weiteren bevorzugten Ausführungsform enthält das Medium (zusätzlich) eine oder mehrere Verbindungen die eine fluorierte Dibenzofuran-Einheit aufweisen, bevorzugt Verbindungen der Formel V, bevorzugt der Formel V-11 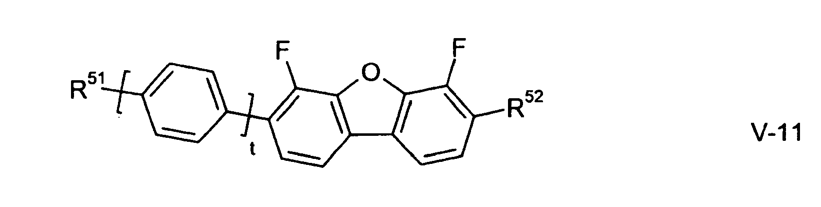 worin die Parameter die jeweilige oben bei Formel V angegebene Bedeutung haben und bevorzugt
- R⁵¹: Alkyl oder Alkenyl und
- R⁵²: Alkyl, Alkenyl, Alkoxy oder Alkenyloxy bedeuten.

Die chirale Verbindung oder die chiralen Verbindungen, die in Komponente E der Flüssigkristallmedien gemäß der vorliegenden Erfindung verwendet werden können, werden ausgewählt aus den bekannten chiralen Dotierstoffen. Bevorzugt besteht die Komponente E überwiegend, besonders bevorzugt im wesentlichen und ganz besonders bevorzugt nahezu vollständig aus einer oder mehreren Verbindungen ausgewählt aus der Gruppe der Verbindungen der folgenden Formeln VI bis VIII 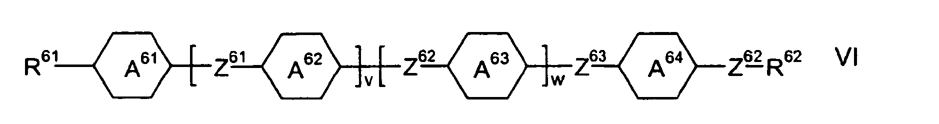 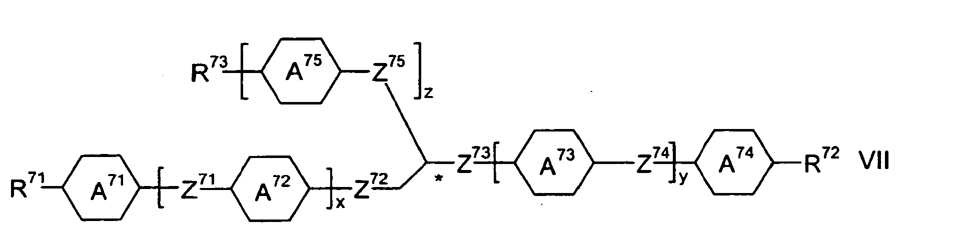 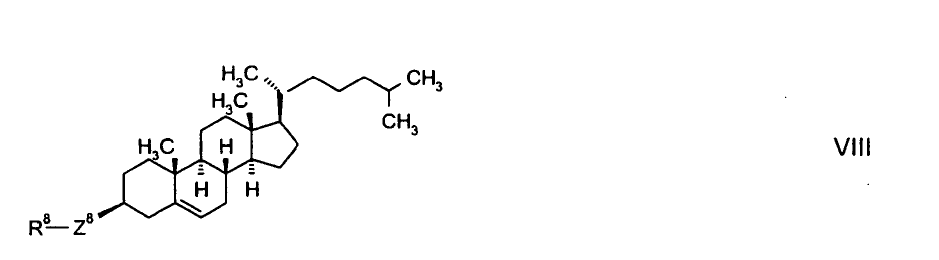 worin
- R⁶¹ und R⁶², R⁷¹ bis R⁷³ und R⁸: jeweils unabhängig voneinander, die oben bei Formel II für R²¹ gegebene Bedeutung besitzen, und alternativ H, CN, F, Cl CF₃, OCF₃, CF₂H oder OCF₂H und mindestens einer von R⁶¹ und R⁶² eine chirale Gruppe bedeuten,
- Z⁶¹ und Z⁶², Z⁷¹ bis Z⁷³ und Z⁸: jeweils unabhängig voneinander -CH₂CH₂-, -CH=CH-, -COO-, -O-CO- oder eine Einfachbindung, bevorzugt Z⁶¹, Z⁶², Z⁷¹, Z⁷⁴ und Z⁷⁵ eine Einfachbindung, Z⁶³, Z⁷² und Z⁷³ -COO- oder eine Einfachbindung, Z⁷² bevorzugt -COO- und Z⁷³ und Z⁸ -O-CO-, 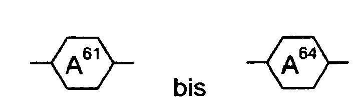
und 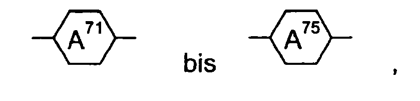 jeweils unabhängig voneinander, 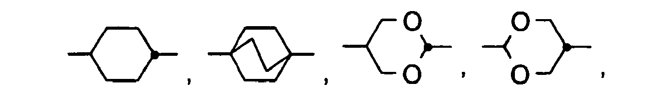 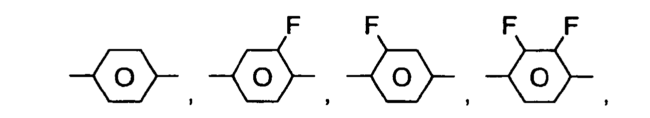 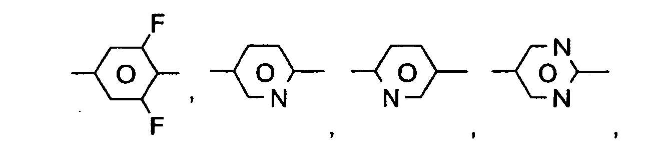 oder 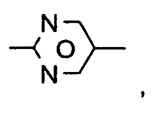 u und v, und
- x, y und z: jeweils unabhängig voneinander, 0 oder 1, bevorzugt
- u und v: beide 0 und
- x und v: beide 1, bedeuten.

Die Verbindungen der Formeln VI bis VIII werden bevorzugt ausgewählt aus der Gruppe der Verbindungen der Formeln VI-1 bis VI-3, VII-1 und VII-2 bzw. VIII-1 und VIII-2, 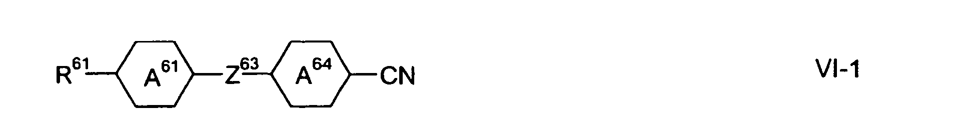 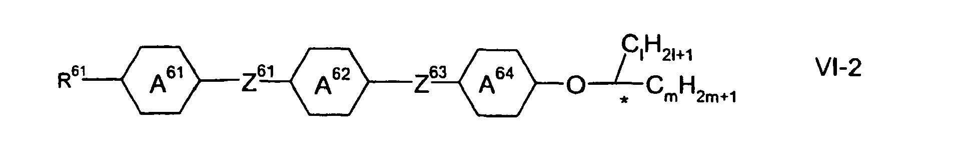 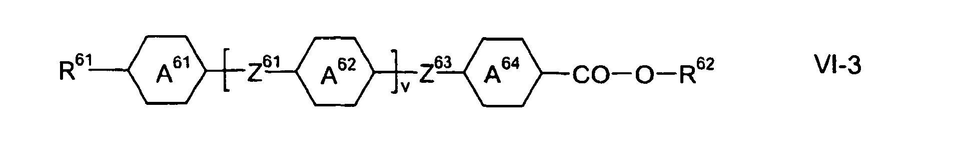 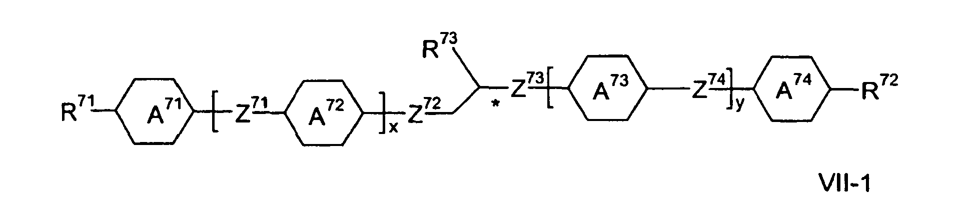 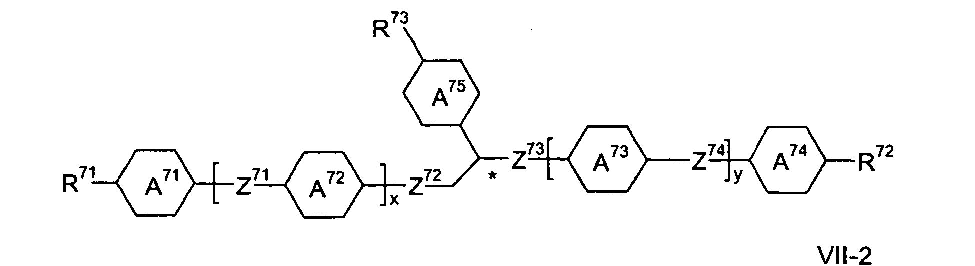 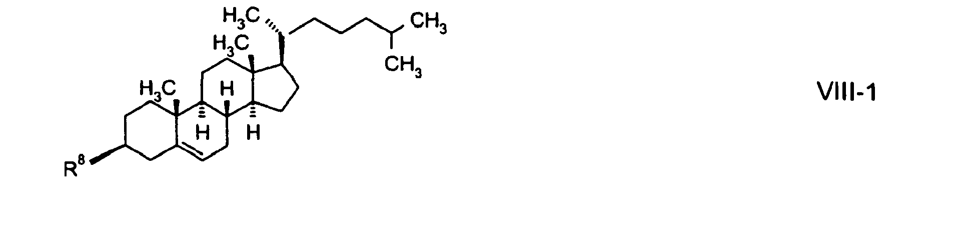 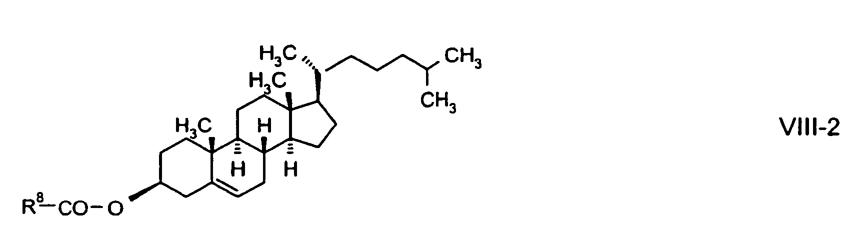 worin die Parameter jeweils die oben bei den Formeln VI bis VIII gegebene Bedeutung haben und bevorzugt
- R⁶¹ und R⁶², R⁷¹ bis R⁷³ und R⁸: Alkyl, Alkenyl oder Alkoxy H, CN, F, Cl, CF₃, OCF₃, CF₂H oder OCF₂H und mindestens einer von R³¹ und R³² eine chirale Gruppe, bevorzugt Isooctyloxy
- Z⁶¹: eine Einfachbindung,
- Z⁶³: in Formel V-2 eine Einfachbindung und in Formel V-3 -COO-,
- Z⁷²: -COO-,
- Z⁷³: -O-CO-,
- m: eine ganze Zahl von 1 bis 8, bevorzugt 6 und
- I: eine von m verschiedene ganze Zahl von 0 bis 8, bevorzugt 1,
bedeuten.

Insbesondere bevorzugt werden die Verbindungen ausgewählt aus der Gruppe der Verbindungen der folgenden Formeln VI-1a, VI-1b, VI-2a bis VI-2c und VI-3a, VII-1a und VII-2a bzw. VIII-1a und VIII-2a

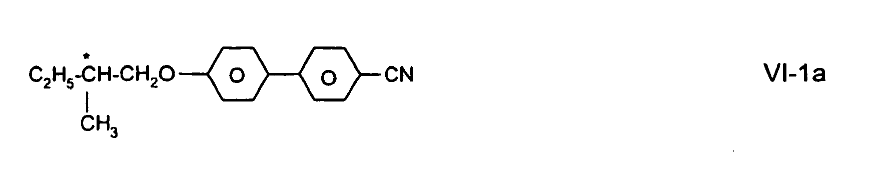

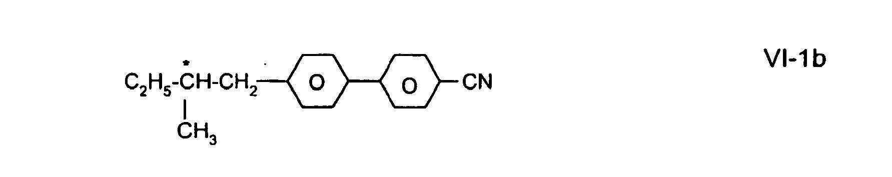

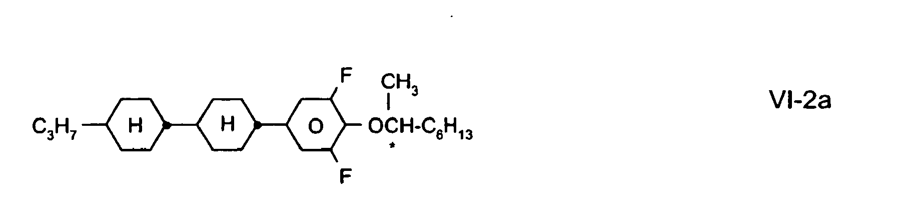

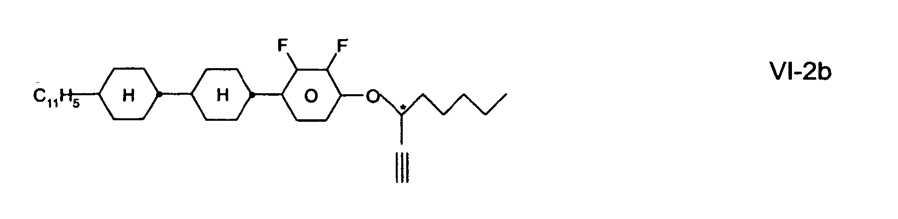

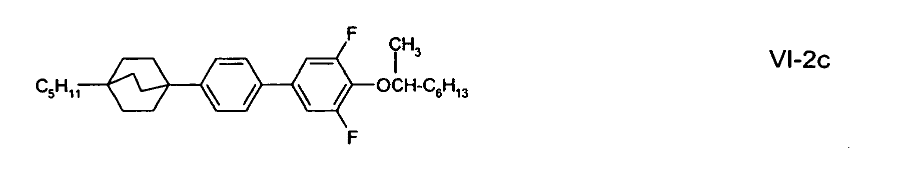

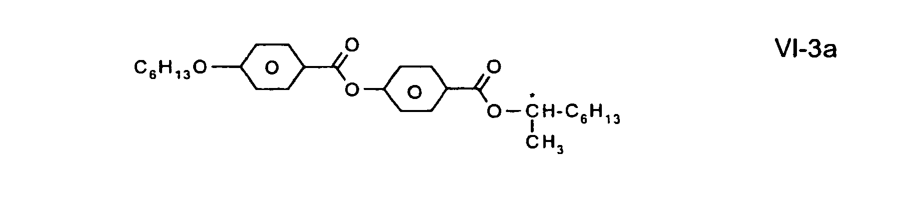

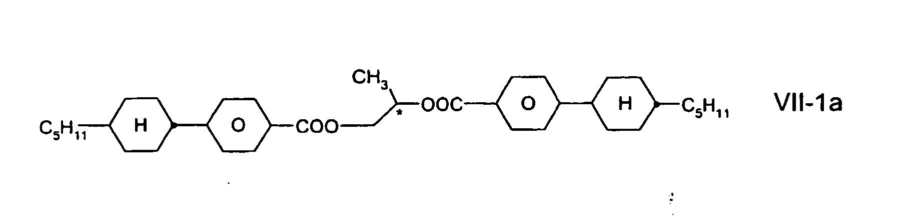

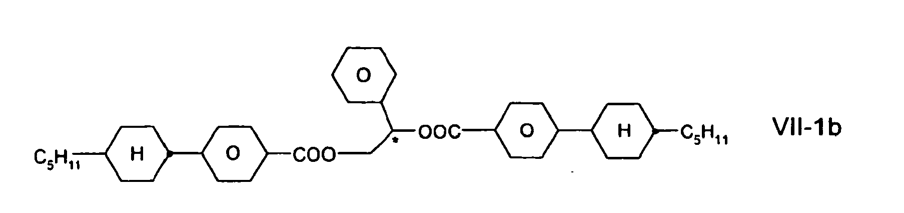

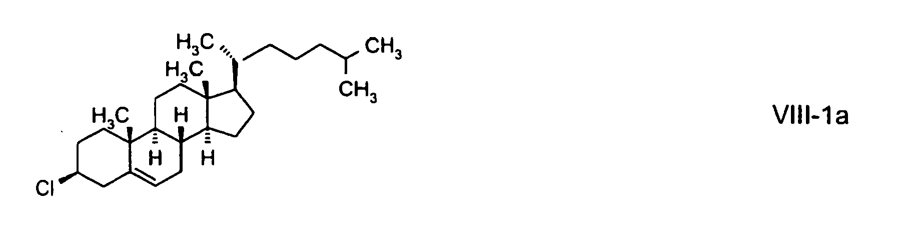

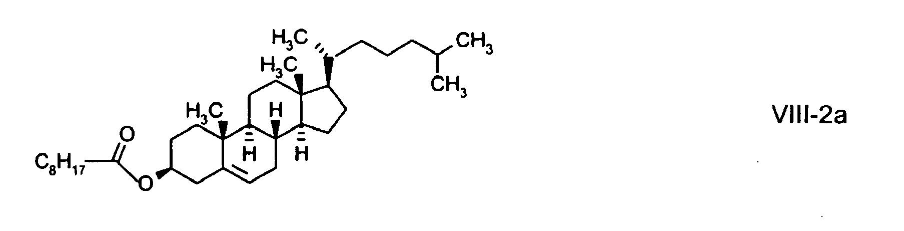

Besonders bevorzugte Ausführungsformen der vorliegenden Erfindung erfüllen eine oder mehrere der folgenden Bedingungen.
i. Das flüssigkristalline Medium enthält eine oder mehrere Verbindungen ausgewählt aus den Teilformeln IA-1 und IB-1 bis I-B-5, bevorzugt aus den Teilformeln IA'-1 und IB'-1 bis I-B'-5, besonders bevorzugt der Teilformeln IA-1 und/oder IB-1, bevorzugt der Teilformeln IA'-1 und/oder IB'-1.
ii. Der Anteil an Verbindungen der Formel II im Gesamtgemisch beträgt 20 Gew.-% oder mehr.
iii. Der Anteil an Verbindungen der Formel III im Gesamtgemisch beträgt 5 Gew.-% oder mehr.
iv. Das flüssigkristalline Medium enthält eine oder mehrere Verbindungen der Formel III der folgenden Teilformel, 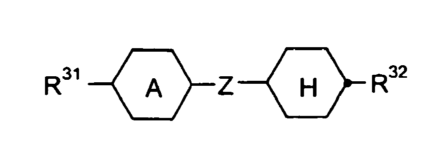 worin
   - R³¹ und R³²: jeweils unabhängig voneinander einen geradkettigen Alkyl-, Alkenyl-, Alkylalkoxy- oder Alkoxyrest mit bis zu 12 C-Atomen, und 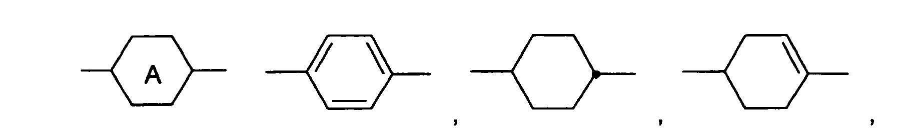 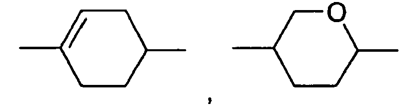
   oder 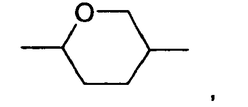 bevorzugt 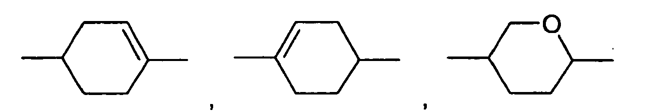 oder 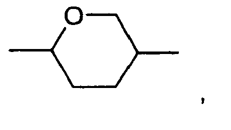
   - Z: eine Einfachbindung, -CH₂CH₂-, -CH=CH-, -CF₂O- -OCF₂-, -CH₂O-, -OCH₂-, -COO-, -OCO-, -C₂F₄-, oder -CF=CF-,
   bedeuten, wobei die Verbindungen der Formeln III-1 und III-2 ausgeschlossen sind.
v. Das flüssigkristalline Medium enthält eine oder mehrere Verbindungen der Formel II der folgenden Teilformel 11-6 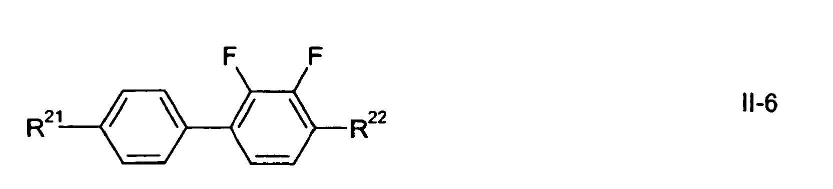 worin R²¹ und R²² die oben angegebene Bedeutung haben.
vi. Vorzugsweise enthält das erfindungsgemäße Medium eine oder mehrere Verbindungen ausgewählt aus der Gruppe der der Formeln III-1a, III-1b, III-1c und III-1d, bevorzugt der Formel III-1a, III-1b und III-1 c, besonders bevorzugt der Formel III-1 c.
vii. Das flüssigkristalline Medium enthält eine oder mehrere besonders bevorzugte Verbindungen der Formeln III-1c und III-1d ausgewählt aus den nachfolgend genannten den Teilformeln: 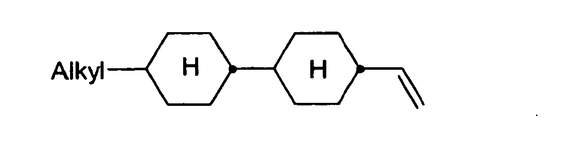 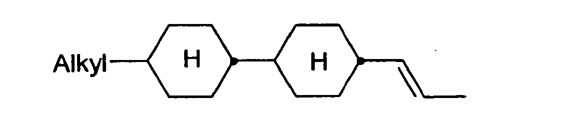 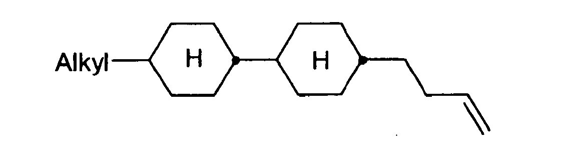 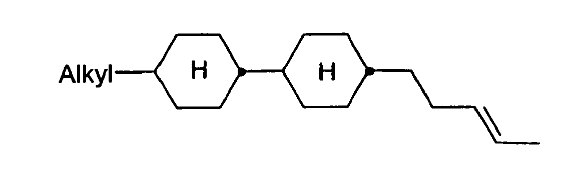 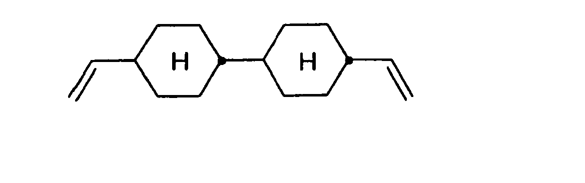 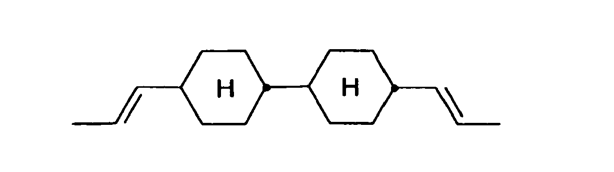 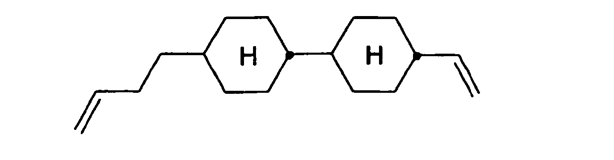 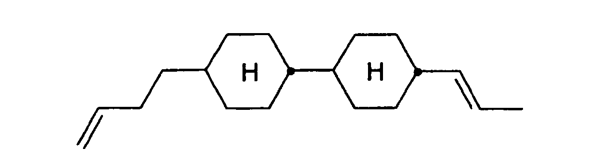 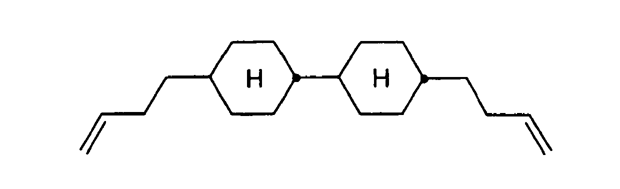 worin Alkyl die oben gegebene Bedeutung besitzt und bevorzugt, jeweils unabhängig voneinander Alkyl mit 1 bis 6 , bevorzugt mit 2 bis 5 C-Atomen, und im Fall, dass n 3 oder mehr bedeutet, bevorzugt n-Alkyl, bedeutet.
viii. Das flüssigkristalline Medium besteht im Wesentlichen aus
   - 2 bis 80: Gew.-% einer oder mehrerer Verbindungen der Formel I,
   - 2 bis 80: Gew.-% einer oder mehrerer Verbindungen der Formel II,
   - 2 bis 80: Gew.-% einer oder mehrerer Verbindungen der Formel III und/oder
   - 2 bis 80: einer oder mehrerer Verbindungen ausgewählt aus der Gruppe der Verbindungen der Formeln IV und/oder V.
ix. Das flüssigkristalline Medium enthält eine oder mehrere fluorierte Terphenyle der Formel ausgewählt aus der Gruppe der Verbindungen der Formeln II-6 und II-6 und/oder III-6, insbesondere bevorzugt ausgewählt aus deren jeweiligen bevorzugten Unterformeln, und/oder der Formeln II"'-2, II"'-3, II^{(IV)}-2, II^{(IV)}-3, II^{(V)}-1 und/oder der Formeln T-1 bis T-4, bevorzugt T-1 und/oder T-4, 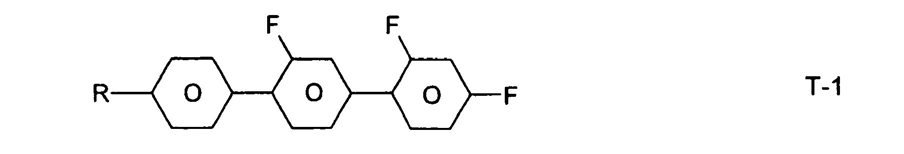 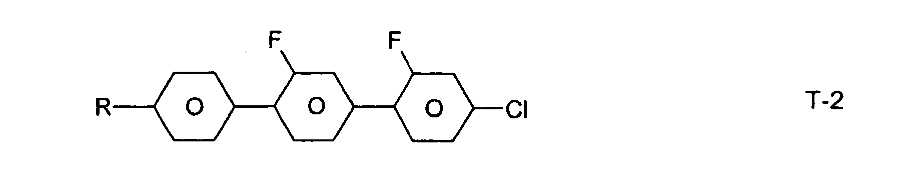 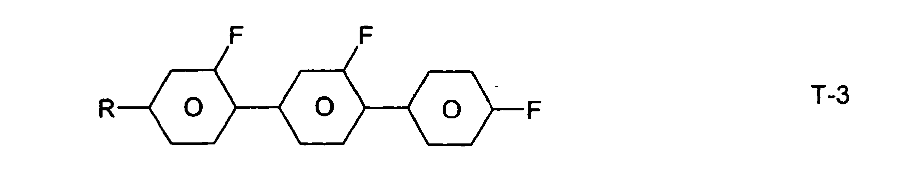 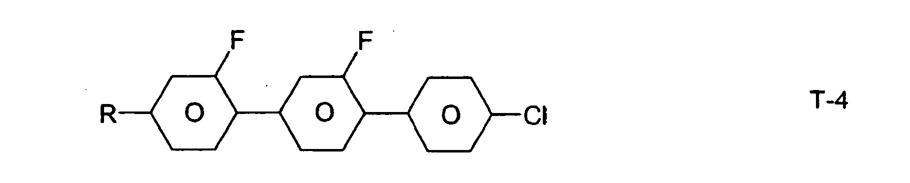 worin
   R die für R³¹ angegebenen Bedeutungen hat und bevorzugt Alkyl, Alkenyl, Alkoxy, Alkylalkoxy, Alkenyloxy mit 1 bzw. 2 bis 6 C-Atomen, besonders bevorzugt (O)CₘH₂ₘ₊₁, ganz besonders bevorzugt CₘH₂ₘ₊₁, und m eine ganze Zahl von 1 bis 6 bedeutet.
   Vorzugsweise ist R geradkettiges Alkyl, Alkoxy oder Alkylalkoxy mit jeweils 1-6 C-Atomen, Alkenyl oder Alkenyloxy mit 2-6 C-Atomen, vorzugsweise Alkyl, ferner Alkoxy jeweils mit 1-5 C-Atomen, vorzugsweise Methyl, Ethyl, Propyl, Butyl, Pentyl, Hexyl Methoxy, Ethoxy, Propoxy, Butoxy, Pentoxy.
   Vorzugsweise werden die Terphenyle in den erfindungsgemäßen Mischungen eingesetzt, wenn der Δn-Wert der Mischung 0,09 oder mehr sein soll. Bevorzugte Mischungen enthalten 2 bis 20 Gew.-% einer oder mehrerer Terphenyl-Verbindungen, bevorzugt ausgewählt aus der Gruppe der oben angegeben Terphenyle.
x. Das flüssigkristalline Medium enthält die oben genannten Terphenyle vorzugsweise in Mengen von 2 bis 30 Gew.-%, insbesondere von 5 bis 20 Gew.-%.
   Vorzugsweise werden die Terphenyle in Mischungen mit einem Δn von 0,10 oder mehr in Kombination mit den Verbindungen der Formeln I, II, und III eingesetzt. Bevorzugte Mischungen enthalten 2 bis 20 Gew.-% Terphenyle und 5 bis 60 Gew.-% weiterer Verbindungen der Formel III.
xi. Das flüssigkristalline Medium enthält eine oder mehrere Verbindungen der Formel I in Mengen von 2 bis 90 Gew.-%, insbesondere von 5 bis 80 Gew.-%, besonders bevorzugt von 10 bis 70 Gew.-% und ganz besonders bevorzugt von 15 bis 45 Gew.-%.
xii. Das flüssigkristalline Medium enthält eine oder mehrere Verbindungen der Formel IA in Mengen von 2 bis 25 Gew.-%, insbesondere von 3 bis 20 Gew.-%, und ganz besonders bevorzugt von 4 bis 17 Gew.-% pro Einzelverbindung.
xiii. Das flüssigkristalline Medium enthält eine oder mehrere Verbindungen der Formel I mit drei sechsgliedrigen Ringen in Mengen von 2 bis 20 Gew.-%, insbesondere von 2 bis 15 Gew.-%, und ganz besonders bevorzugt von 3 bis 10 Gew.-% pro Einzelverbindung.
xiv. Das flüssigkristalline Medium enthält eine oder mehrere Verbindungen der Formel I mit vier sechsgliedrigen Ringen in Mengen von 1 bis 15 Gew.-%, insbesondere von 2 bis 12 Gew.-%, und ganz besonders bevorzugt von 3 bis 8 Gew.-% pro Einzelverbindung.
xv. Das flüssigkristalline Medium enthält eine oder mehrere Verbindungen der Formel II mit zwei sechsgliedrigen Ringen, bevorzugt der Teilformeln II-1 und/oder II-6, vorzugsweise in Mengen von 1 bis 60 Gew.-%, insbesondere 5 Gew.-% oder mehr, und ganz besonders bevorzugt von 5 bis 45 Gew.-%, insbesondere im Bereich von 2 bis 20 % Gew.-% pro Einzelverbindung.
xvi. Das flüssigkristalline Medium enthält eine oder mehrere Verbindungen der Formel II mit drei sechsgliedrigen Ringen, bevorzugt der Teilformeln II-3 und/oder II-4, besonders bevorzugt der Formeln II-3b und/oder II-3d und/oder II-4b und/oder II-4d, vorzugsweise in Mengen von 1 bis 60 Gew.-%, insbesondere 10 Gew.-% oder mehr, und ganz besonders bevorzugt von 5 bis 45 Gew.-%, insbesondere im Bereich von 2 bis 20% pro Einzelverbindung.
xvii. Das flüssigkristalline Medium enthält eine oder mehrere Verbindungen der Formel II mit drei sechsgliedrigen Ringen, bevorzugt der Teilformeln II-4 und/oder II-6, und/oder II-7, besonders bevorzugt der Formeln II-4a und/oder II-4c und/oder II-5a und/oder II-5b und/oder II-6a und/oder II-6c, und/oder II-7a und/oder II-7c, vorzugsweise in Mengen von 1 bis 50 Gew.-%, insbesondere von 10 Gew.-% oder mehr, und ganz besonders bevorzugt von 5 bis 45 Gew.-%, insbesondere im Bereich von 2 bis 15 Gew.-% pro Einzelverbindung der Verbindungen der Formeln II-4a und/oder II-4c, von 2 bis 10 Gew.-% pro Einzelverbindung der Verbindungen der Formeln II-5a und II-5c und/oder von 2 bis 20% pro Einzelverbindung der Verbindungen der Formeln II-6a und II-6c.
xviii. Das flüssigkristalline Medium enthält eine oder mehrere Verbindungen der Formel IV vorzugsweise in Mengen von 2 Gew.-% oder mehr, insbesondere von 5 Gew.-% oder mehr, und ganz besonders bevorzugt von 5 bis 25 Gew.-% insbesondere im Bereich von 2 bis 12 Gew.-% pro Einzelverbindung.
xix. Das flüssigkristalline Medium enthält eine oder mehrere Verbindungen der Formel V vorzugsweise in Mengen von 3 Gew.-% oder mehr, insbesondere von 5 Gew.-% oder mehr, und ganz besonders bevorzugt von 5 bis 25 Gew.-%, insbesondere im Bereich von 2 bis 20 Gew.-% pro Einzelverbindung.
xx. Das flüssigkristalline Medium enthält eine oder mehrere Verbindungen der Formel III ausgewählt aus der Gruppe der folgenden Formen 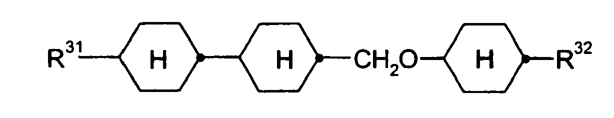 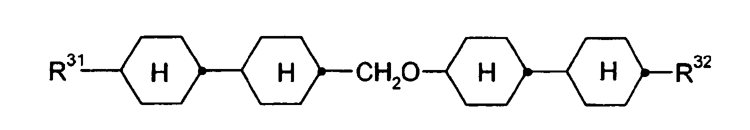 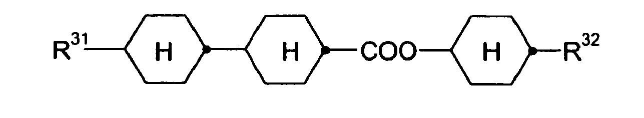 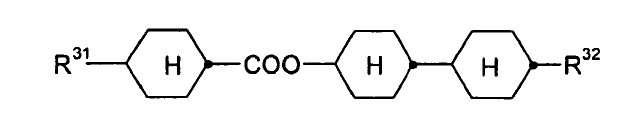 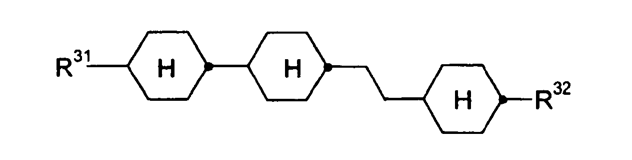 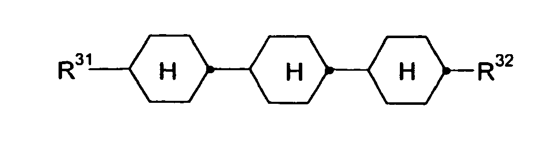 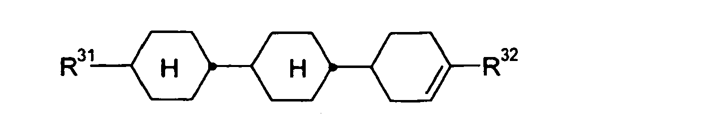 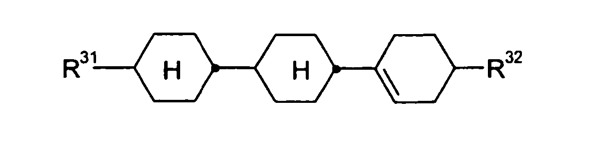 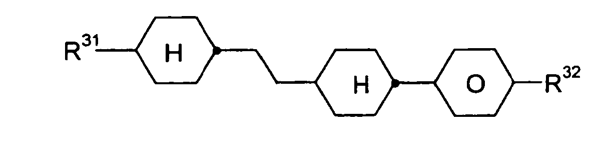 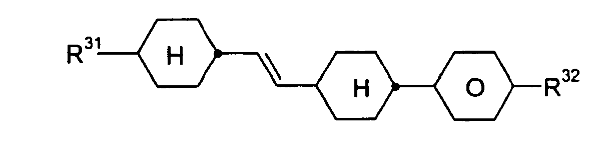 worin R³¹ und R³² die oben angegebene Bedeutung haben und bevorzugt R³¹ und R³² jeweils unabhängig voneinander einen geradkettiger Alkyl-, Alkoxy- oder Alkenylrest mit 1 bzw. 2 bis 7 C-Atomen, besonders bevorzugt geradkettiges Alkyl, ferner Alkenyl, bedeuten.
   Der Anteil dieser Verbindungen in der Mischung beträgt vorzugsweise 5 bis 40 Gew.-%.

Ein weiterer Gegenstand der Erfindung ist eine elektrooptische Anzeige mit einer Aktivmatrix-Adressierung basierend auf dem ECB-Effekt, dadurch gekennzeichnet, dass sie als Dielektrikum ein flüssigkristallines Medium gemäß der vorliegenden Erfindung enthält.

Vorzugsweise weist die Flüssigkristallmischung einen nematischen Phasenbereich von mindestens 60 Grad und eine Fließviskosität *v*₂₀ von maximal 30 mm² · s⁻¹ bei 20 °C auf.

Die erfindungsgemäße Flüssigkristallmischung weist ein Δε von etwa -0,5 bis -8,0, insbesondere von etwa -2,5 bis -6,0 auf, wobei Δε die dielektrische Anisotropie bedeutet. Die Rotationsviskosität γ₁ ist vorzugsweise 200 mPa·s oder weniger, insbesondere 170 mPa·s oder weniger.

Die Doppelbrechung Δn in der Flüssigkristallmischung liegt in der Regel, zwischen 0,06 und 0,16, vorzugsweise zwischen 0,08 und 0,12.

Die erfindungsgemäßen Mischungen sind für alle VA-TFT-Anwendungen geeignet, wie z.B. VAN, MVA, (S)-PVA, ASV. Weiterhin sind sie für IPS (In plane switching)-, FFS (Fringe field switching)- und PALC-Anwendungen mit negativem Δε geeignet.

Die nematischen Flüssigkristallmischungen in den erfindungsgemäßen Anzeigen enthalten in der Regel zwei Komponenten A und B, die ihrerseits aus einer oder mehreren Einzelverbindungen bestehen.

Für Komponente A wird vorzugsweise eine (oder mehrere) Einzelverbindung(en) gewählt, die einen Wert von Δε ≤ -0,8 haben. Dieser Wert muss umso negativer sein, je kleiner der Anteil A an der Gesamtmischung ist.

Für Komponente B wird vorzugsweise eine (oder mehrere) Einzelverbindung(en) gewählt, die einen Wert von Δε ≤ -0,8 haben. Dieser Wert muss umso negativer sein, je kleiner der Anteil B an der Gesamtmischung ist.

Die Komponente C weist eine ausgeprägte Nematogenität und eine Fließviskosität von nicht mehr als 30 mm² s⁻¹, vorzugsweise nicht mehr als 25 mm²· s⁻¹, bei 20°C auf.

Besonders bevorzugte Einzelverbindungen der Komponente C sind extrem niedrig viskose nematische Flüssigkristalle mit einer Fließviskosität von nicht mehr als 18, vorzugsweise nicht mehr als 12 mm²· s⁻¹, bei 20 °C.

Komponente C ist monotrop oder enantiotrop nematisch und kann in Flüssigkristallmischungen das Auftreten von smektischen Phasen bis zu sehr tiefen Temperaturen verhindern. Versetzt man beispielsweise eine smektische Flüssigkristallmischung mit jeweils verschiedenen Materialien mit hoher Nematogenität, so kann durch den erzielten Grad der Unterdrückung smektischer Phasen die Nematogenität dieser Materialien verglichen werden.

Dem Fachmann sind aus der Literatur eine Vielzahl geeigneter Materialien bekannt. Besonders bevorzugt sind Verbindungen der Formel III.

Daneben können diese Flüssigkristallphasen auch mehr als 18 Komponenten, vorzugsweise 18 bis 25 Komponenten, enthalten.

Vorzugsweise enthalten die Phasen 4 bis 15, insbesondere 5 bis 12, und besonders bevorzugt 10 oder weniger, Verbindungen der Formeln I und II und/oder III und/oder IV und/oder V.

Neben Verbindungen der Formeln I bis V können auch noch andere Bestandteile zugegen sein, z. B. in einer Menge von bis zu 45 % der Gesamtmischung, vorzugsweise jedoch bis zu 35 %, insbesondere bis zu 10 %.

Die anderen Bestandteile werden vorzugsweise ausgewählt aus den nematischen oder nematogenen Substanzen, insbesondere den bekannten Substanzen, aus den Klassen der Azoxybenzole, Benzylidenaniline, Biphenyle, Terphenyle, Phenyl- oder Cyclohexylbenzoate, Cyclohexan-carbonsäurephenyl- oder -cyclohexylester, Phenylcyclohexane, Cyclohexylbiphenyle, Cyclohexylcyclohexane, Cyclohexylnaphthaline, 1,4-Bis-cyclohexylbiphenyle oder Cylohexylpyrimidine, Phenyl- oder Cyclohexyldioxane, gegebenenfalls halogenierten Stilbene, Benzylphenylether, Tolane und substituierten Zimtsäureestern.

Die wichtigsten als Bestandteile derartiger Flüssigkristallphasen in Frage kommenden Verbindungen lassen sich durch die Formel IX charakterisieren,

R⁹¹-L-G-E-R⁹² IX

worin L und E je ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituierten Naphthalin, Di- und Tetrahydronaphthalin, Chinazolin und Tetrahydrochinazolin gebildeten Gruppe,

| | | |
|---|---|---|
| G | -CH=CH- | -N(O)=N- |
| | -CH-CQ- | -CH=N(O)- |
| | -C≡C- | -CH₂-CH₂- |
| | -CO-O- | -CH₂-O- |
| | -CO-S- | -CH₂-S- |
| | -CH=N- | -COO-Phe-COO- |
| | -CF₂O- | -CF=CF- |
| | -OCF₂- | -OCH₂- |
| | -(CH₂)₄- | -(CH₂)₃O- |

oder eine C-C-Einfachbindung, Q Halogen, vorzugsweise Chlor, oder -CN, und R⁹¹ und R⁹² jeweils Alkyl, Alkenyl, Alkoxy, Alkanoyloxy oder Alkoxycarbonyloxy mit bis zu 18, vorzugsweise bis zu 8 Kohlenstoffatomen, oder einer dieser Reste auch CN, NC, NO₂, NCS, CF₃, OCF₃, F, Cl oder Br bedeuten.

Bei den meisten dieser Verbindungen sind R⁹¹ und R⁹² voneinander verschieden, wobei einer dieser Reste meist eine Alkyl- oder Alkoxygruppe ist. Auch andere Varianten der vorgesehenen Substituenten sind gebräuchlich. Viele solcher Substanzen oder auch Gemische davon sind im Handel erhältlich. Alle diese Substanzen sind nach literaturbekannten Methoden herstellbar.

Die Konzentration der Verbindungen der Formel IX in der Gesamtmischung beträgt bevorzugt 1 % bis 25 %, besonders bevorzugt 1 bis 15 % und ganz besonders bevorzugt 2 % bis 9 %.

Optional können die erfindungsgemäßen Medien auch eine dielektrisch positive Komponente enthalten, deren Gesamtkonzentration bevorzugt 10 Gew.-% oder weniger bezogen auf das gesamte Medium beträgt.

In einer bevorzugten Ausführungsform enthalten die erfindungsgemäßen Flüssigkristallmedien insgesamt bezogen auf die Gesamtmischung 5 % oder mehr bis 80 % oder weniger, bevorzugt 10 % oder mehr bis 70 % oder weniger, bevorzugt 20 % oder mehr bis 60 % oder weniger und besonders bevorzugt 30 % oder mehr bis 50 % oder weniger und ganz besonders bevorzugt 35 % oder mehr bis 40 % oder weniger an Komponente A und
10 % oder mehr bis 85 % oder weniger, bevorzugt 20 % oder mehr bis 80 % oder weniger, bevorzugt 30 % oder mehr bis 70 % oder weniger und besonders bevorzugt 40 % oder mehr bis 60 % oder weniger und ganz besonders bevorzugt 45 % oder mehr bis 50 % oder weniger an Komponente B und
5 % oder mehr bis 70 % oder weniger, bevorzugt 10 % oder mehr bis 55 % oder weniger, bevorzugt 25 % oder mehr bis 50 % oder weniger an Komponente C.

In einer bevorzugten Ausführungsform enthalten die erfindungsgemäßen Flüssigkristallmedien die Komponente A und C und bevorzugt eine oder mehrere Komponenten ausgewählt aus der Gruppe der Komponenten B, D und E, bevorzugt bestehen sie überwiegend, besonders bevorzugt im wesentlichen und ganz besonders bevorzugt nahezu vollständig aus den genannten Komponenten.

Die erfindungsgemäßen Flüssigkristallmedien weisen bevorzugt eine nematische Phase von jeweils mindestens von -20°C oder weniger bis 70°C oder mehr, besonders bevorzugt von -30°C oder weniger bis 80°C oder mehr, ganz besonders bevorzugt von -40°C oder weniger bis 85°C oder mehr und am allermeisten bevorzugt von -40°C oder weniger bis 90°C oder mehr auf.

Hierbei bedeutet der Begriff "eine nematische Phase aufweisen" einerseits, dass bei tiefen Temperaturen bei der entsprechenden Temperatur keine smektische Phase und keine Kristallisation beobachtet wird und andererseits, dass beim Aufheizen aus der nematischen Phase noch keine Klärung auftritt. Die Untersuchung bei tiefen Temperaturen wird in einem Fließviskosimeter bei der entsprechenden Temperatur durchgeführt sowie durch Lagerung in Testzellen einer der elektrooptischen Anwendung entsprechenden Schichtdicke für mindestens 100 Stunden überprüft. Wenn die Lagerstabilität bei einer Temperatur von -20°C in einer entsprechenden Testzelle 1.000 h oder mehr beträgt, wird das Medium als bei dieser Temperatur stabil bezeichnet. Bei Temperaturen von -30°C bzw. -40°C betragen die entsprechenden Zeiten 500 h bzw. 250 h. Bei hohen Temperaturen wird der Klärpunkt nach üblichen Methoden in Kapillaren gemessen.

In einer bevorzugten Ausführungsform sind die erfindungsgemäßen Flüssigkristallmedien durch Werte der optischen Anisotropien im mittleren bis niedrigen Bereich gekennzeichnet. Die Werte der Doppelbrechung liegen bevorzugt im Bereich von 0,065 oder mehr bis 0,130 oder weniger, besonders bevorzugt im Bereich von 0,080 oder mehr bis 0,120 oder weniger und ganz besonders bevorzugt im Bereich von 0,085 oder mehr bis 0,110 oder weniger.

In dieser Ausführungsform haben die erfindungsgemäßen Flüssigkristallmedien eine negative dielektrische Anisotropie und weisen relativ hohe Werte des Betrags der dielektrischen Anisotropie (|Δε|) auf, die bevorzugt im Bereich von 2,7 oder mehr bis 5,3 oder weniger, bevorzugt bis 4,5 oder weniger, bevorzugt von 2,9 oder mehr bis 4,5oder weniger, besonders bevorzugt von 3,0 oder mehr bis 4,0 oder weniger und ganz besonders bevorzugt von 3,5 oder mehr bis 3,9 oder weniger, liegen.

Die erfindungsgemäßen Flüssigkristallmedien weisen relativ kleine Werte für die Schwellenspannung (V₀) im Bereich von 1,7 V oder mehr bis 2,5 V oder weniger, bevorzugt von 1,8 V oder mehr bis 2,4 V oder weniger, besonders bevorzugt von 1,9 V oder mehr bis 2,3 V oder weniger und ganz besonders bevorzugt von 1,95 V oder mehr bis 2,1 V oder weniger, auf.

In einer weiteren bevorzugten Ausführungsform weisen die erfindungsgemäßen Flüssigkristallmedien bevorzugt relativ niedrige Werte der mittleren dielektrischen Anisotropie (ε_{av.} ≡ (ε_{∥} + 2ε_{⊥})/3) auf, die bevorzugt im Bereich von 5,0 oder mehr bis 7,0 oder weniger, bevorzugt von 5,5 oder mehr bis 6,5 oder weniger, noch mehr bevorzugt von 5,7 oder mehr bis 6,4 oder weniger, besonders bevorzugt von 5,8 oder mehr bis 6,2 oder weniger und ganz besonders bevorzugt von 5,9 oder mehr bis 6,1 oder weniger, liegen.

In einer bevorzugten Ausführungsform, die sich insbesondere zur Anwendung in LCD TV Anzeigen eignet, weisen die erfindungsgemäßen Flüssigkristallmedien Werte des Betrags der dielektrischen Anisotropie (|Δε|) auf, die bevorzugt im Bereich von 1,7 oder mehr bis 4,9 oder weniger, bevorzugt bis 4,3 oder weniger, bevorzugt von 2,3 oder mehr bis 4,0 oder weniger, besonders bevorzugt von 2,8 oder mehr bis 3,8 oder weniger, liegen.

In dieser Ausführungsform weisen die erfindungsgemäßen Flüssigkristallmedien Werte für die Schwellenspannung (V₀) im Bereich von 1,9 V oder mehr bis 2,5 V oder weniger, bevorzugt von 2,1 V oder mehr bis 2,3 V oder weniger, auf.

Außerdem weisen die erfindungsgemäßen Flüssigkristallmedien hohe Werte für die Voltage Holding Ratio in Flüssigkristallzellen auf. Diese sind in frisch gefüllten Zellen bei 20°C in den Zellen größer oder gleich 95 %, bevorzugt größer oder gleich 97 %, besonders bevorzugt größer oder gleich 98 % und ganz besonders bevorzugt größer oder gleich 99 % und nach 5 Minuten im Ofen bei 100°C in den Zellen größer oder gleich 90 %, bevorzugt größer oder gleich 93 %, besonders bevorzugt größer oder gleich 96 % und ganz besonders bevorzugt größer oder gleich 98%.

In der Regel weisen dabei Flüssigkristallmedien mit einer geringen Ansteuerspannung bzw. Schwellenspannung eine geringere Voltage Holding Ratio auf als solche mit einer größeren Ansteuerspannung bzw. Schwellenspannung und umgekehrt.

Diese bevorzugten Werte für die einzelnen physikalischen Eigenschaften werden von den erfindungsgemäßen Medien bevorzugt auch jeweils miteinander kombiniert eingehalten.

In der vorliegenden Anmeldung bedeutet der Begriff "Verbindungen", auch geschrieben als "Verbindung(en)", sofern nicht explizit anders angegeben, sowohl eine als auch mehrere Verbindungen.

Die einzelnen Verbindungen werden, sofern nichts anderes angegeben, in den Mischungen in Konzentrationen generell jeweils von 1 % oder mehr bis 30 % oder weniger bevorzugt von 2 % oder mehr bis 30 % oder weniger und besonders bevorzugt von 4 % oder mehr bis 16 % oder weniger eingesetzt.

Für die vorliegende Erfindung bedeutet im Zusammenhang mit der Angabe der Bestandteile der Zusammensetzungen, wenn nicht im Einzelfall anders angegeben:
- "enthalten": die Konzentration der betreffenden Bestandteile in der Zusammensetzung beträgt bevorzugt 5 % oder mehr, besonders bevorzugt 10 % oder mehr,
- "überwiegend bestehen aus": die Konzentration der betreffenden Bestandteile in der Zusammensetzung beträgt bevorzugt 50 % oder mehr, besonders bevorzugt 55 % oder mehr und ganz besonders bevorzugt 60 % oder mehr,
- "im wesentlichen bestehen aus": die Konzentration der betreffenden Bestandteile in der Zusammensetzung beträgt bevorzugt 80 % oder mehr, besonders bevorzugt 90 % oder mehr und ganz besonders bevorzugt 95 % oder mehr und
- "nahezu vollständig bestehen aus": die Konzentration der betreffenden Bestandteile in der Zusammensetzung beträgt bevorzugt 98 % oder mehr, besonders bevorzugt 99 % oder mehr und ganz besonders bevorzugt 100,0 %.

Dies gilt sowohl für die Medien als Zusammensetzungen mit ihren Bestandteilen, die Komponenten und Verbindungen sein können, als auch für die Komponenten mit ihren Bestandteilen, den Verbindungen. Lediglich in Bezug auf die Konzentration einer einzelnen Verbindung im Verhältnis zum gesamten Medium bedeutet der Begriff enthalten: die Konzentration der betreffenden Verbindung beträgt bevorzugt 1 % oder mehr, besonders bevorzugt 2 % oder mehr, ganz besonders bevorzugt 4 % oder mehr.

Für die vorliegende Erfindung bedeutet "≤" kleiner oder gleich, bevorzugt kleiner und "≥" größer oder gleich, bevorzugt größer.

Für die vorliegende Erfindung bedeuten 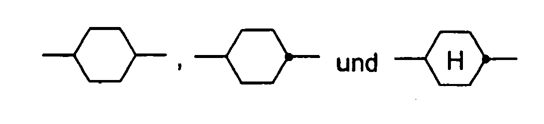 trans-1,4-Cyclohexylen und 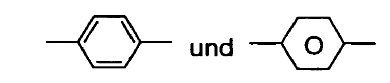 1,4-Phenylen.

Für die vorliegende Erfindung bedeuten die Begriffe "dielektrisch positive Verbindungen" solche Verbindungen mit einem Δε > 1,5, "dielektrisch neutrale Verbindungen" solche mit -1,5 ≤ Δε ≤ 1,5 und "dielektrisch negative" Verbindungen solche mit Δε < -1,5. Hierbei wird die dielektrische Anisotropie der Verbindungen bestimmt, indem 10 % der Verbindungen in einem flüssigkristallinen Host gelöst werden und von der resultierenden Mischung die Kapazität in mindestens jeweils einer Testzelle mit 20 µm Schichtdicke mit homeotroper und mit homogener Oberflächenorientierung bei 1 kHz bestimmt wird. Die Messspannung beträgt typischerweise 0,5 V bis 1,0 V, sie ist jedoch stets niedriger als die kapazitive Schwelle der jeweiligen untersuchten Flüssigkristallmischung.

Als Hostmischung für dielektrisch positive und dielektrisch neutrale Verbindungen wird ZLI-4792 und für dielektrisch negative Verbindungen ZLI-2857, beide von Merck KGaA, Deutschland, verwendet. Aus der Änderung der Dielektrizitätskonstante der Hostmischung nach Zugabe der zu untersuchenden Verbindung und Extrapolation auf 100 % der eingesetzten Verbindung werden die Werte für die jeweiligen zu untersuchenden Verbindungen erhalten. Die zu untersuchende Verbindung wird zu 10 % in der Hostmischung gelöst. Wenn die Löslichkeit der Substanz hierzu zu gering ist, wird die Konzentration schrittweise solange halbiert, bis die Untersuchung bei der gewünschten Temperatur erfolgen kann.

Die erfindungsgemäßen Flüssigkristallmedien können bei Bedarf auch weitere Zusatzstoffe wie z. B. Stabilisatoren und/oder pleochroitische Farbstoffe und/oder chirale Dotierstoffe in den üblichen Mengen enthalten. Die eingesetzte Menge dieser Zusatzstoffe beträgt bevorzugt insgesamt 0 % oder mehr bis 10 % oder weniger bezogen auf die Menge der gesamten Mischung, besonders bevorzugt 0,1 % oder mehr bis 6 % oder weniger. Die Konzentration der einzelnen eingesetzten Verbindungen beträgt bevorzugt 0,1 % oder mehr bis 3 % oder weniger. Die Konzentration dieser und ähnlicher Zusatzstoffe wird bei der Angabe der Konzentrationen sowie der Konzentrationsbereiche der Flüssigkristallverbindungen in den Flüssigkristallmedien in der Regel nicht berücksichtigt.

In einer bevorzugten Ausführungsform enthalten die erfindungsgemäßen Flüssigkristallmedien einen Polymervorläufer, der eine oder mehrere reaktive Verbindungen, bevorzugt reaktive Mesogene und bei Bedarf auch weitere Zusatzstoffe wie z. B. Polymerisationsinitiatoren und/oder Polymerisationsmoderatore in den üblichen Mengen enthalten. Die eingesetzte Menge dieser Zusatzstoffe beträgt insgesamt 0 % oder mehr bis 10 % oder weniger bezogen auf die Menge der gesamten Mischung bevorzugt 0,1 % oder mehr bis 2 % oder weniger. Die Konzentration dieser und ähnlicher Zusatzstoffe wird bei der Angabe der Konzentrationen sowie der Konzentrationsbereiche der Flüssigkristallverbindungen in den Flüssigkristallmedien nicht berücksichtigt.

Die Zusammensetzungen bestehen aus mehreren Verbindungen, bevorzugt aus 3 oder mehr bis 30 oder weniger, besonders bevorzugt aus 6 oder mehr bis 20 oder weniger und ganz besonders bevorzugt aus 10 oder mehr bis 16 oder weniger Verbindungen, die auf herkömmliche Weise gemischt werden. In der Regel wird die gewünschte Menge der in geringerer Menge verwendeten Komponenten in den Komponenten gelöst, die den Hauptbestandteil der Mischung ausmachenden. Dies erfolgt zweckmäßigerweise bei erhöhter Temperatur. Liegt die gewählte Temperatur über dem Klärpunkt des Hauptbestandteils, so ist die Vervollständigung des Lösungsvorgangs besonders leicht zu beobachten. Es ist jedoch auch möglich, die Flüssigkristallmischungen auf anderen üblichen Wegen, z. B. unter Verwendung von Vormischungen oder aus einem so genannten "Multi Bottle System" herzustellen.

Die erfindungsgemäßen Mischungen zeigen sehr breite nematische Phasenbereiche mit Klärpunkten 65°C oder mehr, sehr günstige Werte für die kapazitive Schwelle, relativ hohe Werte für die Holding Ratio und gleichzeitig sehr gute Tieftemperaturstabilitäten bei -30°C und -40°C. Weiterhin zeichnen sich die erfindungsgemäßen Mischungen durch niedrige Rotationsviskositäten γ₁ aus.

Einige weitere bevorzugte Ausführungsformen der erfindungsgemäßen Mischungen werden im Folgenden genannt.
a) Flüssigkristallines Medium, welches eine, zwei, drei, vier oder mehr, vorzugsweise ein, zwei oder drei, Verbindungen der Formel I enthält.
b) Flüssigkristallines Medium, wobei der Anteil an Verbindungen der Formel I im Gesamtgemisch 2 Gew.-% oder mehr, vorzugsweise 4 Gew.-% oder mehr, besonders bevorzugt 2 Gew.-% oder mehr bis 20 Gew.-% oder weniger, beträgt.
c) Flüssigkristallines Medium, wobei der Anteil an Verbindungen der Formeln IIA und/oder IIB im Gesamtgemisch mindestens 20 Gew.-% beträgt.
d) Flüssigkristallines Medium, welches
   - 2 bis 20: Gew.-% einer oder mehrerer Verbindungen der Formel I und
   - 20 bis 80: Gew.-% einer oder mehrerer Verbindungen der Formeln IIA und/oder IIB
   enthält bzw. im Wesentlichen daraus besteht.
e) Flüssigkristallines Medium, welches zusätzlich eine oder mehrere Verbindungen der Formel II ausgewählt aus einer oder mehreren der folgenden Formeln 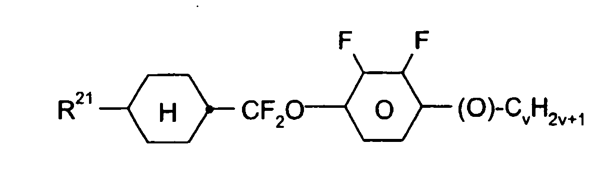 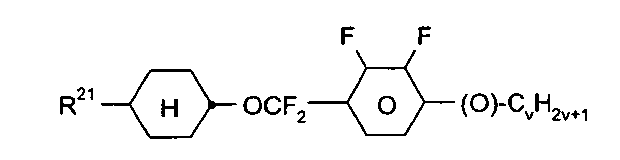 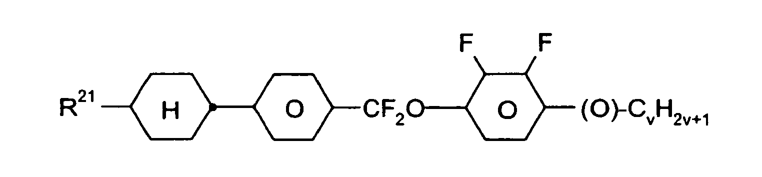 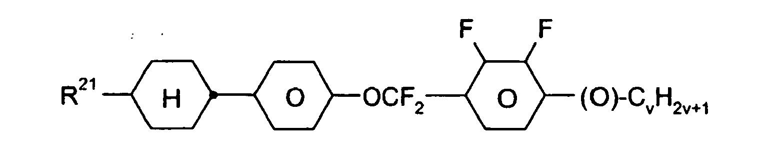 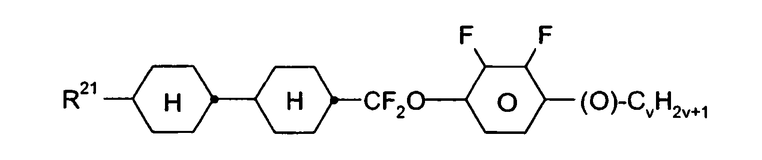 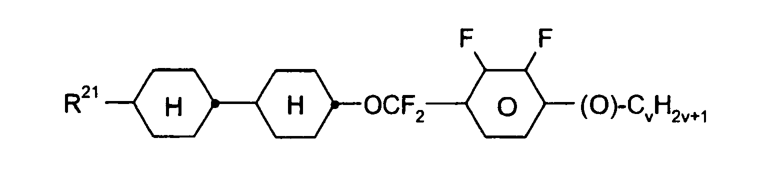 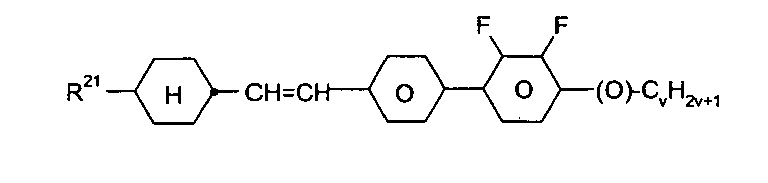 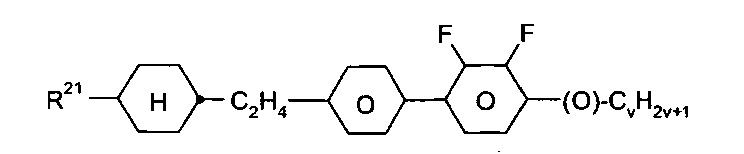 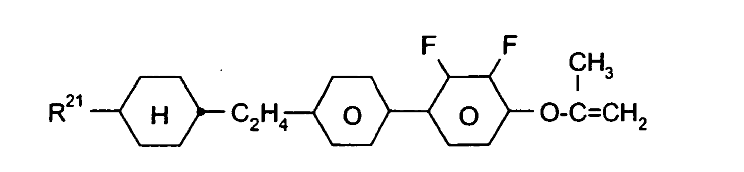 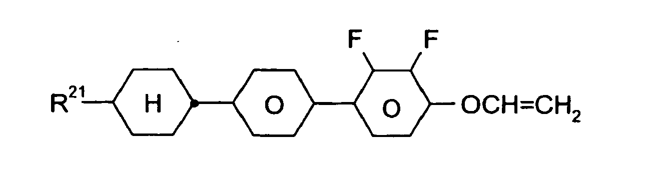 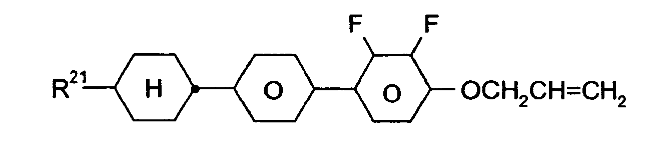 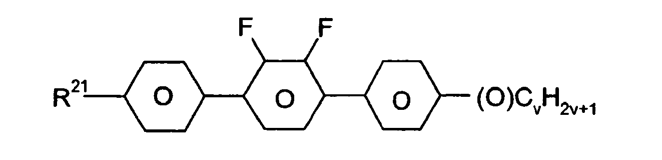 worin die Parameter die oben angegebene Bedeutung haben und bevorzugt R²¹ Alkyl und v 1 bis 6 bedeuten, enthält.
f) Flüssigkristallines Medium, welches (zusätzlich) eine oder mehrere Verbindungen der Formel II ausgewählt aus einer oder mehreren der folgenden Formeln 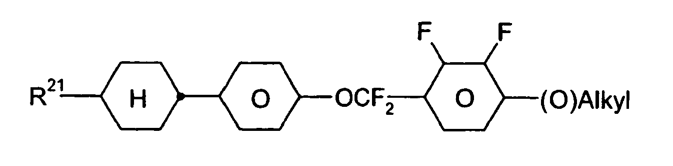 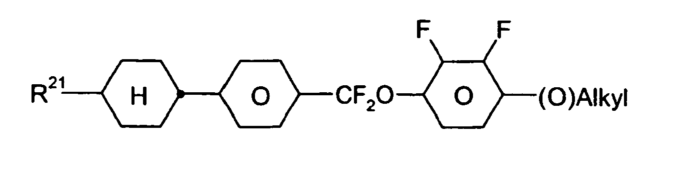 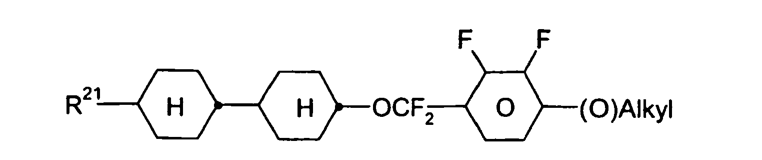 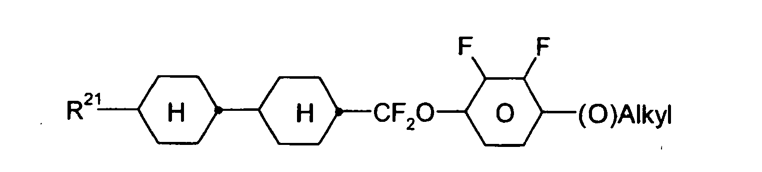 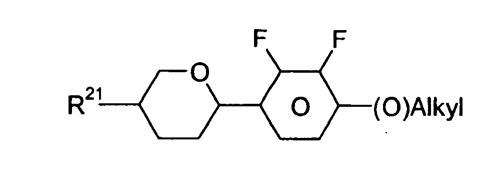 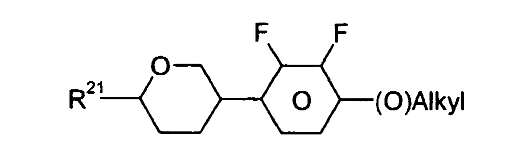 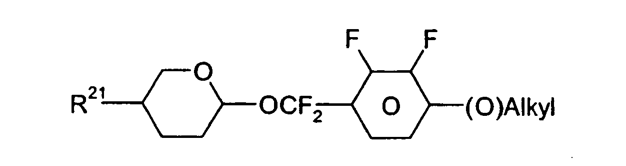 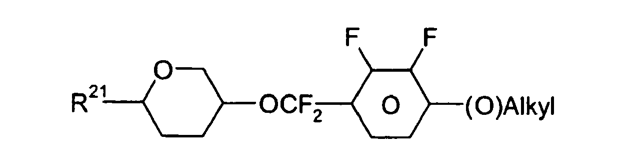 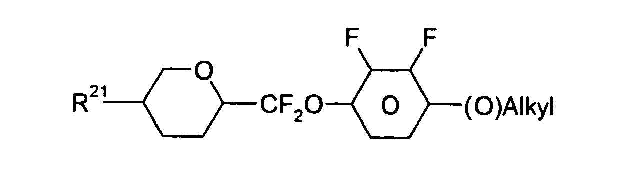 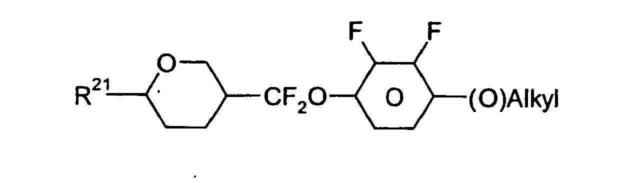 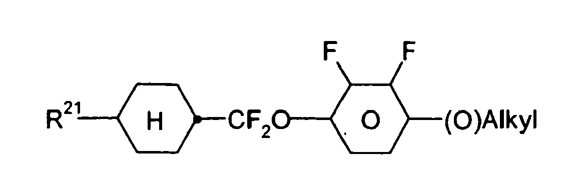 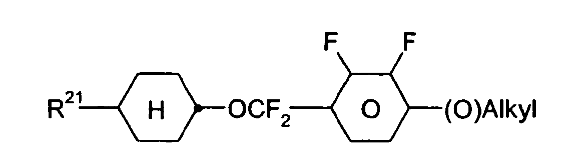 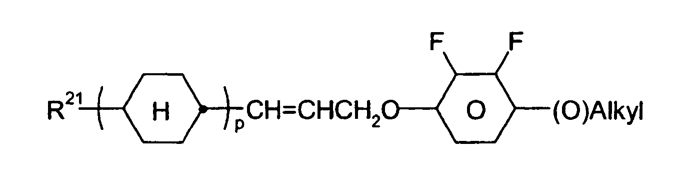 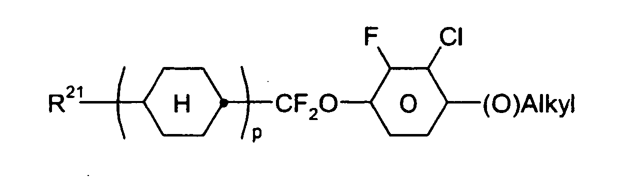 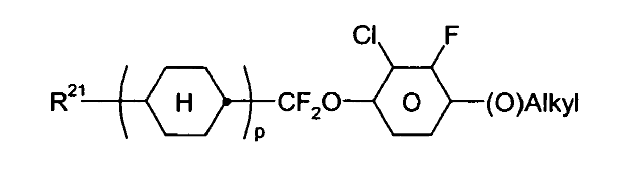 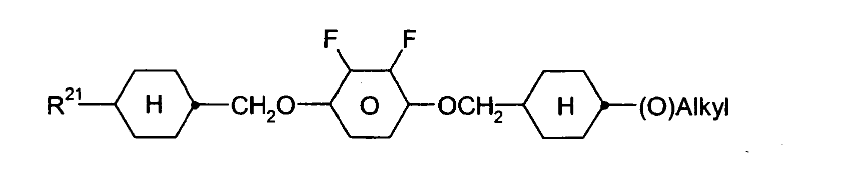 enthält, worin die Parameter die oben angegebene Bedeutung Alkyl hat und bevorzugt
   - R²¹: einen geradkettigen Alkyl-, Alkoxy- oder Alkenylrest mit 1 bzw. 2 bis 7 C-Atomen und
   - "Alkyl": einen geradkettigen Alkylrest mit 1 bis 6 C-Atomen, und
   bedeutet.
g) Flüssigkristallines Medium, welches eine, zwei, drei, vier oder mehr Verbindungen der Formel III enthält, bei denen R³¹ und R³² bevorzugt jeweils unabhängig voneinander geradkettiges Alkyl, Alkoxy und Alkenyl mit jeweils bis zu 6 C-Atomen und Z³¹ und Z³² bevorzugt jeweils unabhängig voneinander eine Einfachbindung, ferner -COO- oder -CH₂O- und die Ringe A³¹, A³², A³³ bevorzugt jeweils unabhängig voneinander 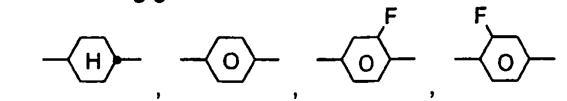 ferner 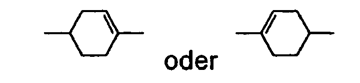 bedeuten.
h) Flüssigkristallines Medium, wobei der Anteil der Verbindungen der Formel III im Gesamtgemisch mindestens 5 Gew.-% beträgt.
i) Bevorzugte erfindungsgemäße flüssigkristalline Medien enthalten (zusätzlich) eine oder mehrere Verbindungen der Formel IV ausgewählt aus der einer oder mehreren Formeln der Gruppe der Formeln 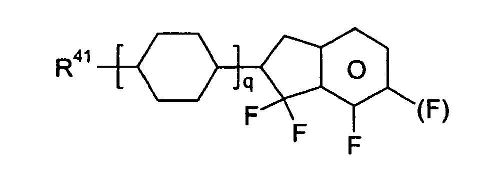 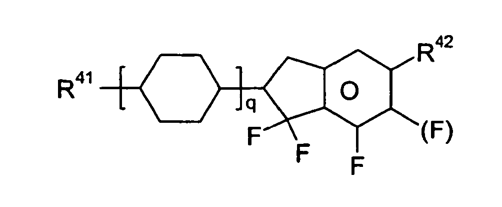 worin
   R⁴¹ und R⁴² die oben angegebenen Bedeutungen haben und q 1 oder 2 bedeutet und R⁴² bevorzugt CH₃, C₂H₅ oder *n*-C₃H₇ bedeutet, vorzugsweise in Mengen von 3 Gew.-% oder mehr, insbesondere von 5 Gew.-% oder mehr, und ganz besonders bevorzugt im Bereich von 5 bis 30 Gew.-%, enthält.
j) Bevorzugte erfindungsgemäße flüssigkristalline Medien enthalten (zusätzlich) eine oder mehrere Verbindungen der Formel V der folgenden Formel 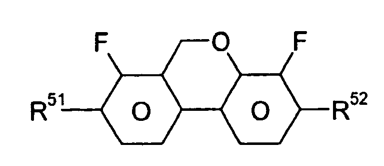 worin die Parameter die oben angegebenen Bedeutungen haben, vorzugsweise in Mengen von 3 bis 20 Gew.-%, insbesondere in Mengen von 3 bis 15 Gew.-%.
   Diese Verbindungen sind bevorzugt ausgewählt aus der Gruppe der Verbindungen der folgenden Formeln 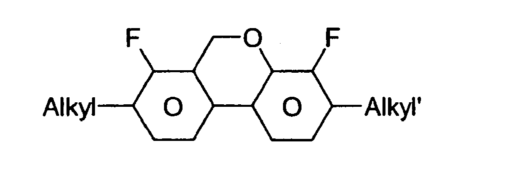 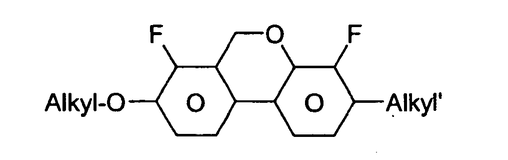 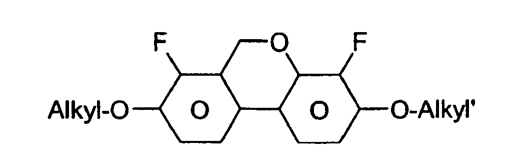 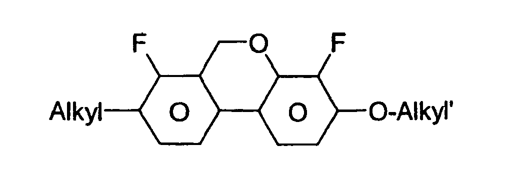 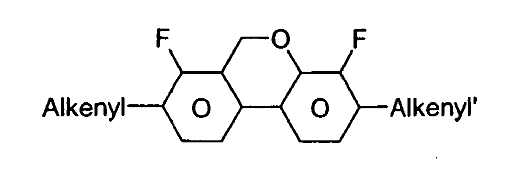 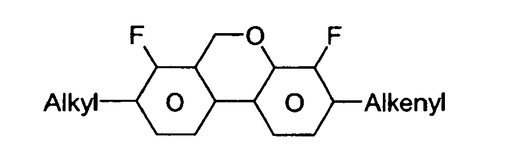 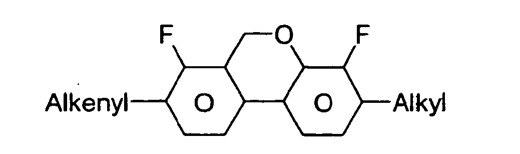 worin
   - Alkyl und Alkyl': jeweils unabhängig voneinander einen geradkettigen Alkylrest mit 1 bis 6 C-Atomen, und
   - Alkenyl und Alkenyl': jeweils unabhängig voneinander einen geradkettigen Alkenylrest mit 2 bis 6 C-Atomen,
   bedeuten.
k) Bevorzugte erfindungsgemäße flüssigkristalline Medien enthalten (zusätzlich) eine oder mehrere Verbindungen der Formel V der folgenden Formel 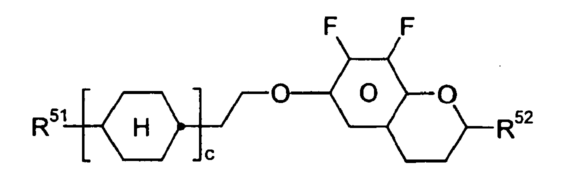 worin
   R⁵¹ und R⁵² die oben angegebenen Bedeutungen haben und c 1 oder 2 bedeutet, vorzugsweise in Mengen von 3 bis 20 Gew.-%, insbesondere in Mengen von 3 bis 15 Gew.-%.
   Besonders bevorzugte Verbindungen dieser Formel sind die Verbindungen der folgenden Formeln 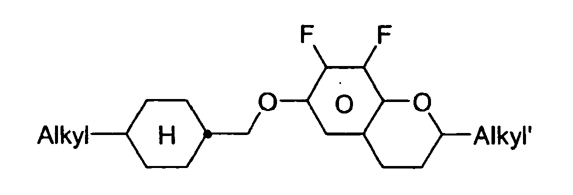 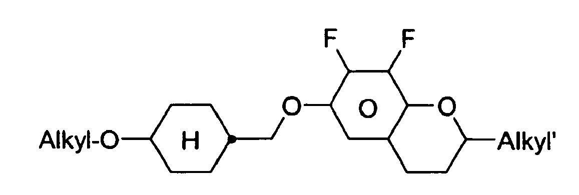 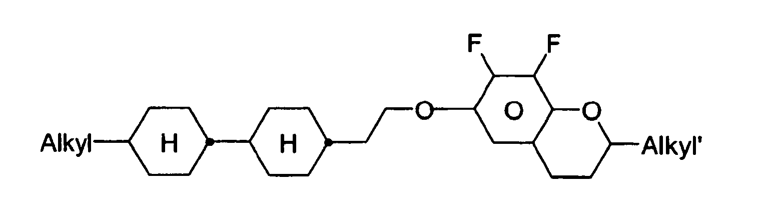 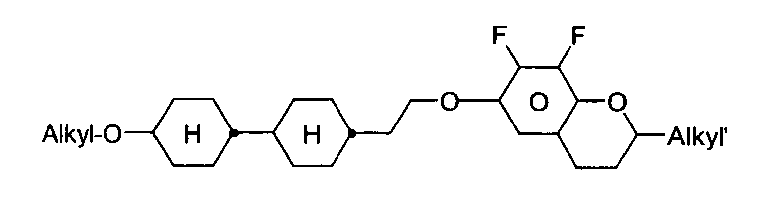 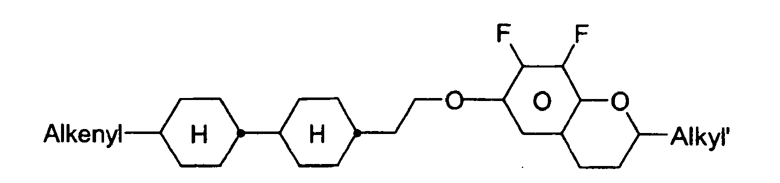 worin
   - Alkyl und Alkyl': jeweils unabhängig voneinander einen geradkettigen Alkylrest mit 1 bis 6 C-Atomen, und
   - Alkenyl und Alkenyl': jeweils unabhängig voneinander einen geradkettigen Alkenylrest mit 2 bis 6 C-Atomen,
   bedeuten.
l) Flüssigkristallines Medium, welches eine oder mehrere Verbindung der Formel V ausgewählt aus den folgenden Formeln enthält, 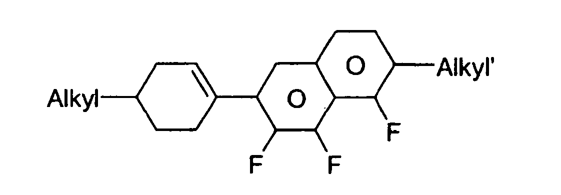 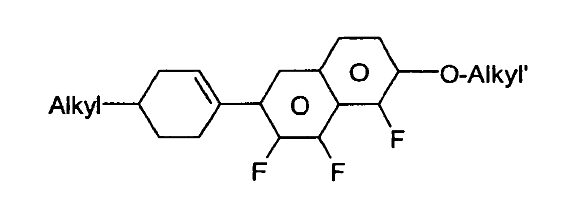 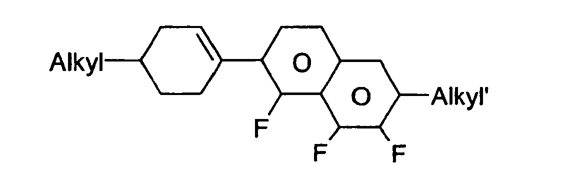 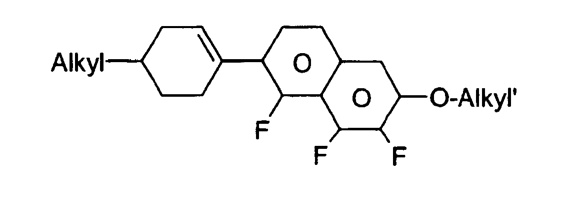 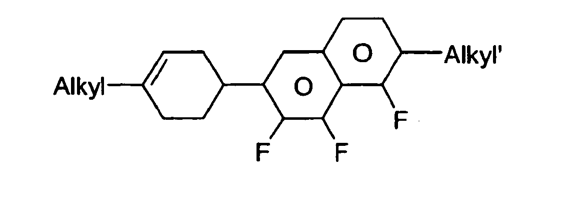 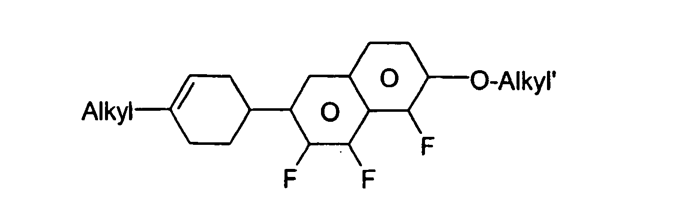 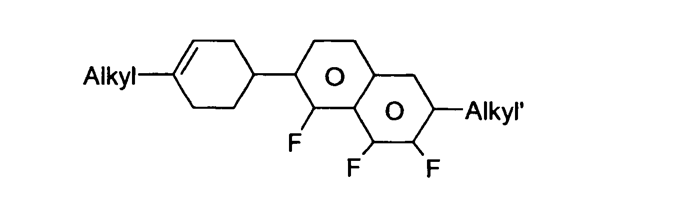 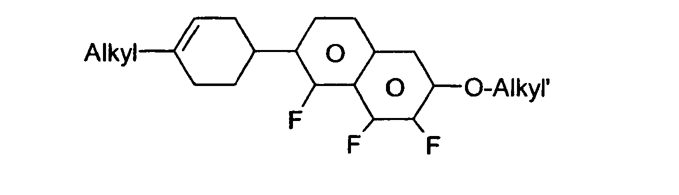 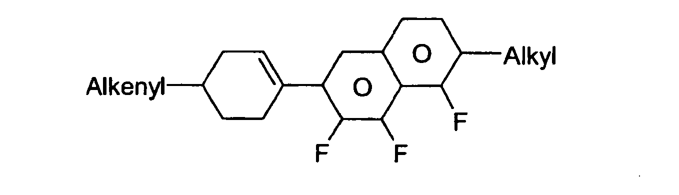 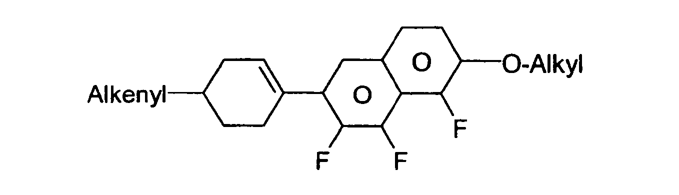 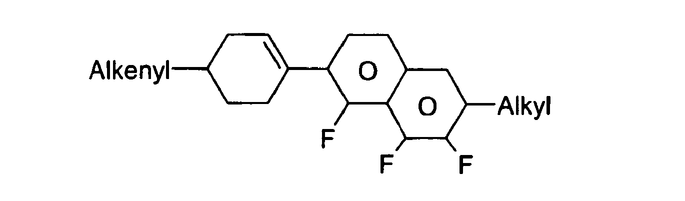 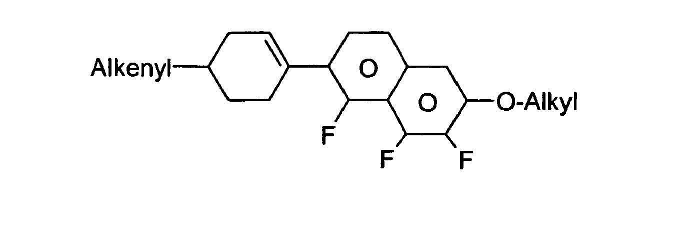 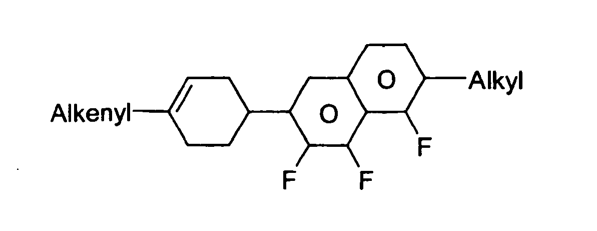 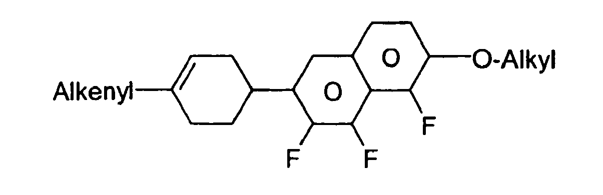 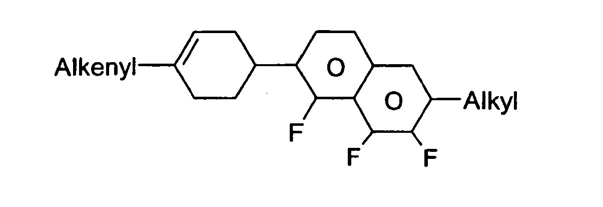 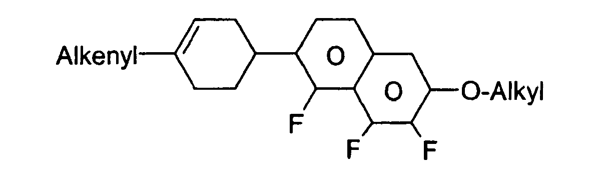 worin
   Alkyl und Alkyl' jeweils unabhängig voneinander einen geradkettigen Alkylrest mit 1 bis 6 C-Atomen bedeuten. Alkenyl bedeutet einen geradkettigen Alkenylrest mit 2 bis 6 C-Atomen.
m) Bevorzugte erfindungsgemäße flüssigkristalline Medien enthalten (zusätzlich) eine oder mehrere Verbindungen, die eine Tetrahydronaphthyl- oder Naphthyl-Einheit aufweisen, wie zum Beispiel die Verbindungen der folgenden Formel 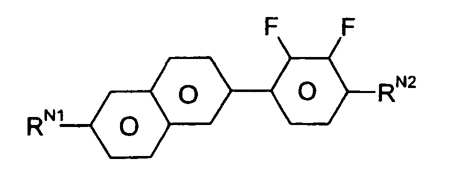 worin R^{N1} und R^{N2} jeweils unabhängig voneinander die für R¹¹ angegebenen Bedeutungen haben, vorzugsweise geradkettiges Alkyl, geradkettiges Alkoxy oder geradkettiges Alkenyl bedeuten.

Ein weiterer Gegenstand der Erfindung ist eine elektrooptische Anzeige mit einer Aktivmatrix-Adressierung basierend auf dem ECB-Effekt, dadurch gekennzeichnet, dass sie als Dielektrikum ein flüssigkristallines Medium nach der vorliegenden Anmeldung enthält.

Vorzugsweise weist die erfindungsgemäße Flüssigkristallmischung einen nematischen Phasenbereich von mindestens 60 Grad und eine Fließviskosität ν₂₀ bei 20°C von 30 mm².s⁻¹ oder weniger auf.

In einer bevorzugten Ausführungsform weist die erfindungsgemäße Flüssigkristallmischung weist ein Δε von etwa -0,5 bis -7,0, insbesondere von etwa -2,0 bis -4,0 auf, wobei Δε die dielektrische Anisotropie bedeutet. Die Rotationsviskosität γ₁ ist vorzugsweise 150 mPa·s oder weniger, insbesondere 130 mPa·s oder weniger.

Die Doppelbrechung Δn in der Flüssigkristallmischung ist in der Regel 0,13 oder weniger, vorzugsweise zwischen 0,06 und 0,12, und insbesondere zwischen 0,07 und 0,11.

In einer besonders bevorzugten Ausführungsform enthalten die erfindungsgemäßen Mischungen 1 bis 35 % einer oder mehrere Verbindungen der Formel I, bevorzugt der Formel IB'-1, besonders bevorzugt der Formel IB'-1b und ganz besonders ausgewählt aus den Formel CLY-n-Om. Bevorzugt werden die folgenden Einzelverbindungen eingesetzt CLY-2-O2, CLY-3-O2, CLY-3-O3 und/oder CLY-2-04. Die Konzentrationen der einzelnen Verbindungen liegen bevorzugt im Bereich von 1 % oder mehr bis 15 % oder weniger.
Die Erklärung der Bestandteile dieser Abkürzungen wird in den nachstehenden Tabellen A bis C gegeben und die verwendeten Abkürzungen werden in der nachfolgenden Tabelle D zusammengestellt.

In diesen Mischungen sind bevorzugt die folgenden Komponenten enthalten:
- optional eine oder mehrere Verbindungen der Formel II-5, bevorzugt in einer Gesamtkonzentration von 10 % oder weniger, besonders bevorzugt 5 % oder weniger,
- eine oder mehrere Verbindungen ausgewählt aus der Gruppe der der Verbindungen der Formeln II-1, bevorzugt II-1 b, IA'-1, bevorzugt IIA'-1b, AIY-n-Om und II-3, bevorzugt II-3b, bevorzugt in einer Gesamtkonzentration von 60 % oder weniger und die Konzentrationen der jeweiligen Einzelverbindungen liegen bevorzugt im Bereich von 2 bis 20 %,
- eine oder mehrere Verbindungen der Formeln II-4, bevorzugt II-4a und/oder II-4b, bevorzugt in einer Gesamtkonzentration von 60 % oder weniger und die Konzentrationen der jeweiligen Einzelverbindungen liegen bevorzugt im Bereich von 2 bis 20 %,
- eine oder mehrere Verbindungen ausgewählt aus der Gruppe der der Verbindungen der Formeln II-6, bevorzugt II-6a, und II-7, bevorzugt II-7a, bevorzugt in einer Gesamtkonzentration von 50 % oder weniger und die Konzentrationen der jeweiligen Einzelverbindungen liegen bevorzugt im Bereich von 2 bis 20 %,
- optional eine oder mehrere Verbindungen der Formel IV, bevorzugt der Formel IV-2, besonders bevorzugt mit r = 0 und/oder Z⁴¹ = eine Einfachbindung und/oder (F)_{0/1} = F, ganz besonders bevorzugt der Formel CK-n-F, bevorzugt in einer Gesamtkonzentration von 30 % oder weniger und die Konzentrationen der jeweiligen Einzelverbindungen liegen bevorzugt im Bereich von 2 bis 15 %,
- optional eine oder mehrere Verbindungen ausgewählt aus der Gruppe der Formeln III-1 und III-4, besonders bevorzugt der Formeln III-1 c und III-4 b, ganz besonders bevorzugt der Formeln CC-n-Vm, CCP-nVm und CCP-Vn-m, und insbesondere bevorzugt
   der Gruppe der Formeln CC-3-V1, CC-4-V2 und CCP-nV-m, bevorzugt in einer Gesamtkonzentration von 15 % oder weniger, besonders bevorzugt von 5 % oder weniger und ganz besonders bevorzugt enthält die Mischung keine dieser Verbindungen,
- optional eine oder mehrere Verbindungen ausgewählt aus der Gruppe der Formeln III-2, bevorzugt III-2a und/oder III-2b, III-1a, III-b, III-3, bevorzugt III-3c, III-4, bevorzugt III-4a, III-5, bevorzugt III-a, III-6, bevorzugt III-6a, III-11, CCZC-n-m, CCOC-n-m, CCZPC-n-m und PGIGI-n-F, bevorzugt in einer Gesamtkonzentration von 10 % oder mehr bis 70 % oder weniger.

Die nematischen Flüssigkristallmischungen in den erfindungsgemäßen Anzeigen enthalten in der Regel zwei Komponenten A und B, die ihrerseits aus einer oder mehreren Einzelverbindungen bestehen.

Die Komponente A weist eine deutlich negative dielektrische Anisotropie auf und verleiht der nematischen Phase eine dielektrische Anisotropie von -0,5 oder weniger. Sie enthält bevorzugt Verbindungen der Formeln I, IIA und/oder IIB.

Der Anteil der Komponente A liegt vorzugsweise im Bereich von 45 bis 100 %, insbesondere von 60 bis 100 %.

Für Komponente A wird vorzugsweise eine (oder mehrere) Einzelverbindung(en) gewählt, die einen Wert von Δε von -0,8 oder weniger haben. Dieser Wert muss umso negativer sein, je kleiner der Anteil A an der Gesamtmischung ist.

Die Komponente B weist eine ausgeprägte Nematogenität und eine Fließviskosität von nicht mehr als 30 mm²_{·}s⁻¹, vorzugsweise nicht mehr als 25 mm²·s⁻¹, bei 20°C auf.
Besonders bevorzugte Einzelverbindungen der Komponente B sind extrem niedrig viskose nematische Flüssigkristalle mit einer Fließviskosität von 18 mm²·s⁻¹ oder weniger, vorzugsweise von 12 mm²·s⁻¹' oder weniger, bei 20°C. Komponente B ist monotrop oder enantiotrop nematisch, weist keine smektischen Phasen auf und kann in Flüssigkristallmischungen das Auftreten von smektischen Phasen bis zu sehr tiefen Temperaturen verhindern. Versetzt man beispielsweise eine smektische Flüssigkristallmischung mit jeweils verschiedenen Materialien mit hoher Nematogenität, so kann durch den erzielten Grad der Unterdrückung smektischer Phasen die Nematogenität dieser Materialien verglichen werden.

Dem Fachmann sind aus der Literatur eine Vielzahl geeigneter Materialien bekannt. Besonders bevorzugt sind Verbindungen der Formel III.

Daneben können diese Flüssigkristallphasen auch mehr als 18 Komponenten, vorzugsweise 18 bis 25 Komponenten, enthalten.

Vorzugsweise enthalten die Phasen 4 bis 15, insbesondere 5 bis 12, Verbindungen der Formeln I, IIA und/oder IIB und optional III.

Neben Verbindungen der Formeln I, IIA und/oder IIB und III können auch noch andere Bestandteile zugegen sein, z. B. in einer Menge von bis zu 45 % der Gesamtmischung, vorzugsweise jedoch bis zu 35 %, insbesondere bis zu 10%.

Die anderen Bestandteile werden vorzugsweise ausgewählt aus den nematischen oder nematogenen Substanzen, insbesondere den bekannten Substanzen, aus den Klassen der Azoxybenzole, Benzylidenaniline, Biphenyle, Terphenyle, Phenyl- oder Cyclohexylbenzoate, Cyclohexan-carbonsäurephenyl- oder -cyclohexylester, Phenylcyclohexane, Cyclohexylbiphenyle, Cyclohexylcyclohexane, Cyclohexylnaphthaline, 1,4-Bis-cyclohexylbiphenyle oder Cylohexylpyrimidine, Phenyl- oder Cyclohexyldioxane, gegebenenfalls halogenierten Stilbene, Benzylphenylether, Tolane und substituierten Zimtsäureestern.

Die erfindungsgemäßen flüssigkristallinen Mischungen werden hergestellt, indem man eine oder mehrere Verbindungen der Formel I mit einer oder mehreren weiteren mesogenen Verbindungen mischt.

Es versteht sich für den Fachmann von selbst, dass die erfindungsgemäßen Medien für die Verwendung in VA-, IPS-, FFS- oder PALC-Anzeigen auch Verbindungen enthalten kann, worin beispielsweise H, N, O, Cl, F durch die entsprechenden Isotope ersetzt sind.

Den erfindungsgemäßen Mischungen können weiterhin polymerisierbare Verbindungen, so genannte reaktive Mesogene (RMs), beispielsweise wie in U.S. 6,861,107 offenbart, in Konzentrationen von bevorzugt 0,1 bis 5 Gew.-%, besonders bevorzugt 0,2 bis 2 Gew.-%, bezogen auf die Mischung zugesetzt werden. Derartige Mischungen können für so genannte Polymer Stabilized VA-Modes, bei denen eine Polymerisierung der reaktiven Mesogene in der flüssigkristallinen Mischung erfolgen soll, verwendet werden. Voraussetzung hierfür ist, dass die Flüssigkristallmischung selbst keine polymerisierbaren Komponenten, wie z. B. Verbindungen mit Alkenyl-Seitenketten, enthält.

Der Aufbau der erfindungsgemäßen Flüssigkristallanzeigen entspricht der üblichen Geometrie, wie sie z. B. in EP-OS 0 240 379, beschrieben wird.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z. B. in Aceton, Chloroform oder Methanol, zu mischen und das Lösungsmittel nach Durchmischung wieder zu entfernen, beispielsweise durch Destillation.

Mittels geeigneter Zusatzstoffe können die erfindungsgemäßen Flüssigkristallphasen derart modifiziert werden, dass sie in jeder bisher bekannt gewordenen Art von z. B. ECB-, VAN-, IPS-, GH- oder ASM-VA-LCD-Anzeige einsetzbar sind.
Die Dielektrika können vorteilhafter Weise auch einen oder mehrere weitere, dem Fachmann bekannte und in der Literatur beschriebene Zusätze, bevorzugt ausgewählt aus der Gruppe der UV-Absorber, Antioxidantien, Nanopartikel und Radikalfänger, enthalten. Beispielsweise können 0 bis 15 % pleochroitische Farbstoffe, Stabilisatoren und/oder chirale Dotierstoffe zugesetzt werden, ferner Leitsalze, vorzugsweise Ethyldimethyldodecylammonium-4-hexoxybenzoat, Tetrabutylammoniumtetraphenylboranat oder Komplexsalze von Kronenethern (vgl. z. B. Haller et al., Mol. Cryst. Liq. Cryst. Band 24, Seiten 249- 258 (1973)) zur Verbesserung der Leitfähigkeit oder Substanzen zur Veränderung der dielektrischen Anisotropie, der Viskosität und/oder der Orientierung der nematischen Phasen, sowie Nanopartikel. Derartige Substanzen sind z. B. in den DE-OS 22 09 127, 22 40 864, 23 21 632, 23 38 281, 24 50 088, 26 37 430 und 28 53 728 beschrieben.

In der nachfolgenden Tabelle E werden mögliche Dotierstoffe angegeben, die den erfindungsgemäßen Mischungen zugesetzt werden können. Sofern die Mischungen einen oder mehrere Dotierstoffe enthalten, wird er in Mengen von 0,01 bis 4 Gew.-%, vorzugsweise 0,1 bis 1,0 Gew.-%, eingesetzt.

Stabilisatoren, die beispielsweise den erfindungsgemäßen Mischungen zugesetzt werden können, vorzugsweise in Mengen von 0,01 bis 6 Gew.-%, insbesondere 0,1 bis 3 Gew.-%, werden nachfolgend in Tabelle F genannt.

Alle Konzentrationen sind für die Zwecke der vorliegenden Erfindung, soweit nicht explizit anders vermerkt, in Massenprozent angegeben und beziehen sich auf die entsprechende Mischung oder Mischungskomponente, soweit nicht explizit anders angegeben.

Alle angegebenen Werte für Temperaturen in der vorliegenden Anmeldung, wie z. B. der Schmelzpunkt T(C,N), der Übergang von der smektischen (S) zur nematischen (N) Phase T(S,N) und der Klärpunkt T(N,I), sind in Grad Celsius (°C) und alle Temperaturdifferenzen entsprechend Differenzgrad (° oder Grad) angegeben, sofern nicht explizit anders angegeben.

Der Begriff "Schwellenspannung" bezieht sich für die vorliegende Erfindung auf die kapazitive Schwelle (V₀), auch Freedericksz-Schwelle genannt, sofern nicht explizit anders angegeben.

Alle physikalischen Eigenschaften werden und wurden nach "Merck Liquid Crystals, Physical Properties of Liquid Crystals", Status Nov. 1997, Merck KGaA, Deutschland bestimmt und gelten für eine Temperatur von 20°C und Δn wird bei 589 nm und Δε bei 1 kHz bestimmt, sofern nicht jeweils explizit anders angegeben.

Die elektrooptischen Eigenschaften, z. B. die Schwellenspannung (V₀) (kapazitive Messung) werden, ebenso wie das Schaltverhalten, in bei der Merck KGaA hergestellten Testzellen bestimmt. Die Messzellen haben Substrate aus Natriumglas (Sodalime Glas) und sind in einer ECB- bzw. VA-Konfiguration mit Polyimidorientierungsschichten (SE-1211 mit Verdünner **26 (Mischungsverhältnis 1:1) beide der Firma Nissan Chemicals, Japan), die senkrecht zueinander gerieben sind und die eine homöotrope Orientierung der Flüssigkristalle bewirken, ausgeführt. Die Fläche der durchsichtigen, nahezu quadratischen Elektroden aus ITO beträgt 1 cm².

Die verwendeten Flüssigkristallmischungen sind, wenn nicht anders angegeben, nicht mit einem chiralen Dotierstoff versetzt, sie eignen sich aber auch besonders für Anwendungen, in denen eine solche Dotierung erforderlich ist.

Die Voltage Holding Ratio wird in bei der Merck KGaA hergestellten Testzellen bestimmt. Die Messzellen haben Substrate aus Natriumglas (Sodalime Glas) und sind mit Polyimidorientierungsschichten (AL-3046 der Firma Japan Synthetic Rubber, Japan) mit einer Schichtdicke von 50 nm, die senkrecht zueinander gerieben sind ausgeführt. Die Schichtdicke beträgt einheitlich 6,0 µm. Die Fläche der durchsichtigen Elektroden aus ITO beträgt 1 cm².

Die Voltage Holding Ratio wird bei 20°C (HR₂₀) und nach 5 Minuten im Ofen bei 100°C (HR₁₀₀) bestimmt. Die verwendete Spannung hat eine Frequenz von 60 Hz.

Die Rotationsviskosität wird mit der Methode des rotierenden Permanentmagneten und die Fließviskosität in einem modifizierten Ubbelohde-Viskosimeter bestimmt. Für die Flüssigkristallmischungen ZLI-2293, ZLI-4792 und MLC-6608, alle Produkte der Firma Merck KGaA, Darmstadt, Deutschland, betragen die bei 20°C bestimmten Werte der Rotationsviskosität 161 mPa·s, 133 mPa·s bzw. 186 mPa·s und die der Fließviskosität (v) 21 mm²·s⁻¹, 14 mm²·s·⁻¹ bzw. 27 mm²·s⁻¹.

Es werden die folgenden Symbole verwendet:
- Vₒ: Schwellenspannung, kapazitiv [V] bei 20°C,
- nₑ: außerordentlicher Brechungsindex gemessen bei 20°C und 589 nm,
- nₒ: ordentlicher Brechungsindex gemessen bei 20°C und 589 nm,
- Δn: optische Anisotropie gemessen bei 20°C und 589 nm,
- ε_{⊥}: dielektrische Suszeptibilität senkrecht zum Direktor bei 20°C und 1 kHz,
- ε∥: dielektrische Suszeptibilität parallel zum Direktor bei 20°C und 1 kHz,
- Δε: dielektrische Anisotropie bei 20°C und 1 kHz, cp. bzw.
- T(N,I): Klärpunkt [°C],
- γ₁: Rotationsviskosität gemessen bei 20°C [mPa·s],
- K₁: elastische Konstante, "splay"-Deformation bei 20°C [pN],
- K₂: elastische Konstante, "twist"-Deformation bei 20°C [pN],
- K₃: elastische Konstante, "bend"-Deformation bei 20°C [pN] und
- LTS: "low temperature stability" (Phase), bestimmt in Testzellen,

Die folgenden Beispiele erläutern die vorliegende Erfindung ohne sie zu begrenzen. Sie zeigen dem Fachmann jedoch bevorzugte Mischungskonzepte mit bevorzugt einzusetzenden Verbindungen und deren jeweiligen Konzentrationen sowie deren Kombinationen miteinander.
Außerdem illustrieren die Beispiele, welche Eigenschaften und Eigenschftskombinationen zugänglich sind.

Für die vorliegende Erfindung und in den folgenden Beispielen sind die Strukturen der Flüssigkristallverbindungen durch Acronyme angegeben, wobei die Transformation in chemische Formeln gemäß folgender Tabellen A bis C erfolgt. Alle Reste CₙH₂ₙ₊₁, CₘH₂ₘ₊₁ und CₗH₂ₗ₊₁ bzw. CₙH₂ₙ, CₘH₂ₘ und CₗH₂ₗ sind geradkettige Alkylreste bzw. Alkylenreste jeweils mit n, m bzw. I C-Atomen. In Tabelle A sind die Ringelemente der Kerne der Verbindung codiert, in Tabelle B sind die Brückenglieder aufgelistet und in Tabelle C sind die Bedeutungen der Symbole für die linken bzw. rechten Endgruppen der Moleküle aufgelistet. In Tabelle D sind exemplarisch Molekülstrukturen und deren Abkürzungen aufgelistet.

**Tabelle A: Ringelemente**

| | | | |
|---|---|---|---|
| **C** | 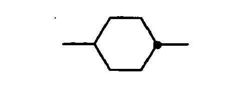 | | |
| **D** | 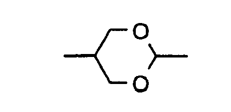 | **DI** | 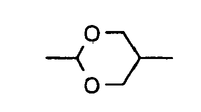 |
| **A** | 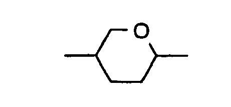 | **AI** | 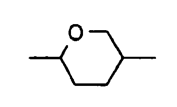 |
| **P** | 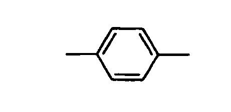 | | |
| **G** | 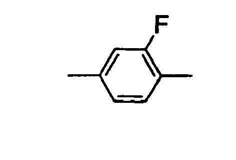 | **GI** | 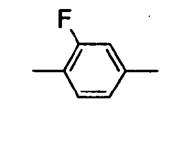 |
| **U** | 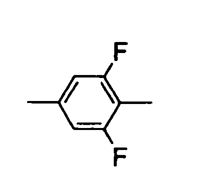 | **UI** | 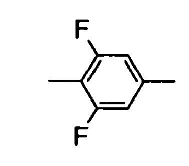 |
| **Y** | 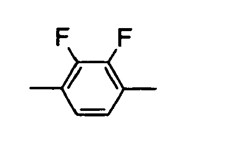 | | |
| **Np** | 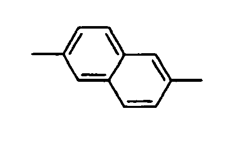 | | |
| **N3f** | 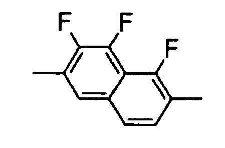 | **N3fI** | 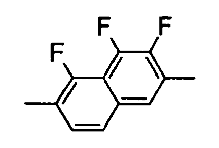 |
| **tH** | 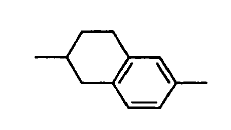 | **tHI** | 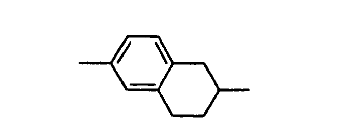 |
| **tH2f** | 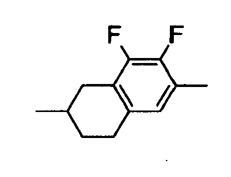 | **tH2fI** | 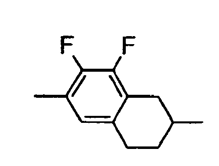 |
| **dH** | 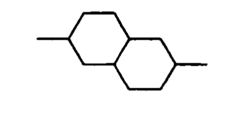 | | |
| **K** | 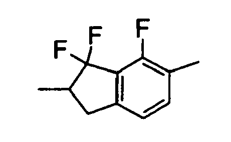 | **KI** | 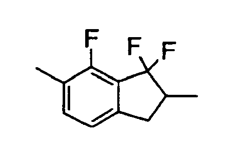 |
| **L** | 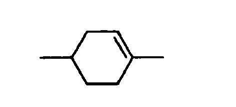 | **LI** | 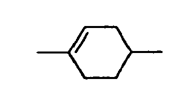 |
| **F** | 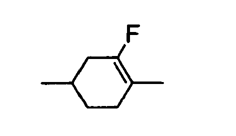 | **FI** | 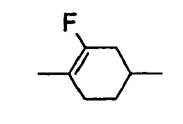 |

**Tabelle B: Brückenglieder**

| | | | |
|---|---|---|---|
| **E** | -CH₂-CH₂- | | |
| **V** | -CH=CH- | | |
| **T** | -C≡C- | | |
| **W** | -CF₂-CF₂- | | |
| **B** | -CF=CF- | | |
| **Z** | -CO-O- | **ZI** | -O-CO- |
| **X** | -CF=CH- | **XI** | -CH=CF- |
| **O** | -CH₂-O- | **OI** | -O-CH₂- |
| **Q** | -CF₂-O- | **QI** | -O-CF₂- |

**Tabelle C: Endgruppen**

| **Links einzelstehend oder in Kombination** | | **Rechts einzelstehend oder in Kombination** | |
|---|---|---|---|
| **-n-** | CₙH₂ₙ₊₁- | **-n** | -CₙH₂ₙ₊₁ |
| **-nO-** | CₙH₂ₙ₊₁-O- | **-nO** | -O- CₙH₂ₙ₊₁ |
| **-V-** | CH₂=CH- | **-V** | -CH=CH₂ |
| **-nV-** | CₙH₂ₙ₊₁-CH=CH- | **-nV** | -CₙH₂ₙ-CH=CH₂ |
| **-Vn-** | CH₂=CH- CnH2n- | **-Vn** | -CH=CH-CₙH₂ₙ₊₁ |
| **-nVm-** | CₙH₂ₙ₊₁-CH=CH-CₘH₂ₘ- | **-nVm** | - CₙH₂ₙ-CH=CH-CₘH₂ₘ₊₁ |
| **-N-** | N≡C- | **-N** | -C=N |
| **-S-** | S=C=N- | **-S** | -N=C=S |
| **-F-** | F- | **-F** | -F |
| **-CL-** | CI- | **-CL** | -CI |
| **-M-** | CFH₂- | **-M** | -CFH₂ |
| **-D-** | CF₂H- | **-D** | -CF₂H |
| **-T-** | CF₃- | **-T** | -CF₃ |
| **-MO-** | CFH₂O - | **-OM** | -OCFH₂ |
| **-DO-** | CF₂HO - | **-OD** | -OCF₂H |
| **-TO-** | CF₃O - | **-OT** | -OCF₃ |
| **-A-** | H-C=C- | **-A** | -C≡C-H |
| **-nA-** | CₙH₂ₙ₊₁-C≡C- | **-An** | -C≡C-CₙH₂ₙ₋₁ |
| **-NA-** | N=C-C=C- | **-AN** | -C≡C-C≡N |
| | | | |

| **Links nur in Kombination** | | **Rechts nur in Kombination** | |
|---|---|---|---|
| **-...n...-** | -CₙH₂ₙ- | **-...n...** | -CₙH₂ₙ- |
| **-...M...-** | -CFH- | **-...M...** | -CFH- |
| **-...D...-** | -CF₂- | **-...D...** | -CF₂- |
| **-...V...-** | -CH=CH- | **-...V...** | -CH=CH- |
| **-...Z...-** | -CO-O- | **-...Z...** | -CO-O- |
| **-...L..-** | -O-CO- | **-...ZI...** | -O-CO- |
| **-...K...-** | -CO- | **-...K...** | -CO- |
| **-...W...-** | -CF=CF- | **-...W...** | -CF=CF- |

worin n und m jeweils ganze Zahlen und die drei Punkte "..." Platzhalter für andere Abkürzungen aus dieser Tabelle sind.
Vorzugsweise enthalten die erfindungsgemäßen Mischungen neben den Verbindungen der Formeln I eine oder mehrere Verbindungen der nachfolgend genannten Verbindungen.

Folgende Abkürzungen werden verwendet:
(n, m = 1-6; z = 1-6)

| | |
|---|---|
| BCN-nm | 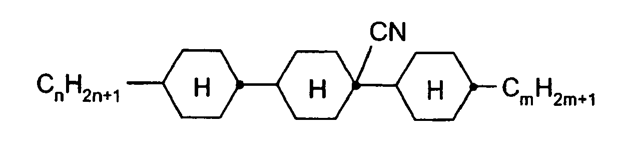 |
| CCN-nm | 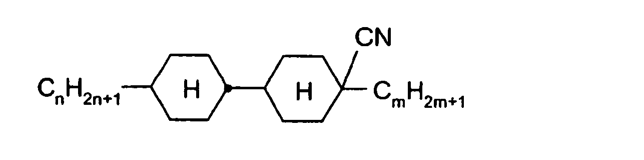 |

**Tabelle D**

| |
|---|
| 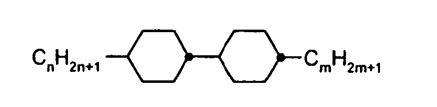 |
| **CC-n-m** |
| 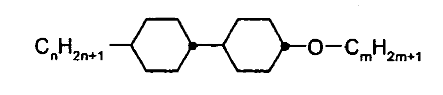 |
| **CC-n-Om** |
| 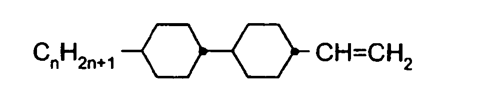 |
| **CC-n-V** |
| 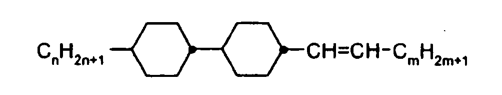 |
| **CC-n-Vm** |
| 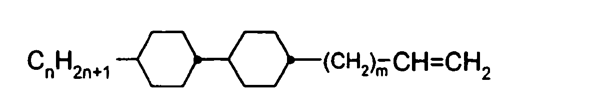 |
| **CC-n-mV** |
| 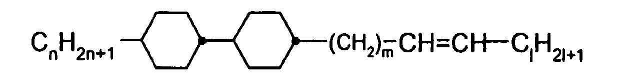 |
| **CC-n-mVI** |
| 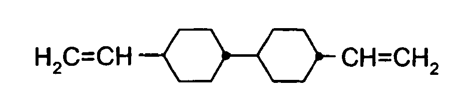 |
| **CC-V-V** |
| 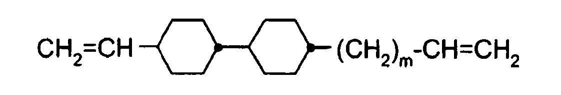 |
| **CC-V-mV** |
| 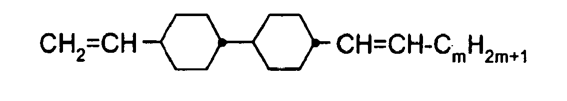 |
| **CC-V-Vm** |
| 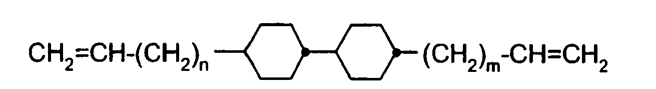 |
| **CC-Vn-mV** |
| 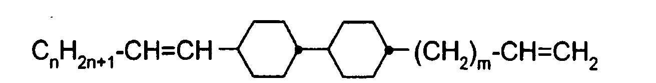 |
| **CC-nV-mV** |
| 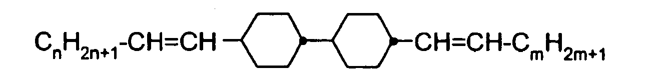 |
| **CC-nV-Vm** |
| 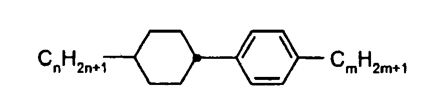 |
| **CP-n-m** |
| 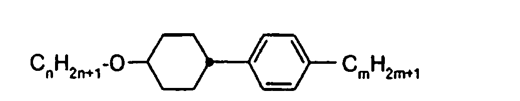 |
| **CP-nO-m** |
| 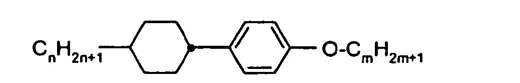 |
| **CP-n-Om** |
| 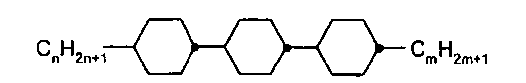 |
| **CCC-n-m** |
| 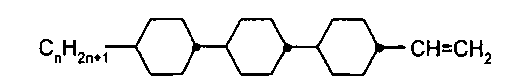 |
| **CCC-n-V** |
| 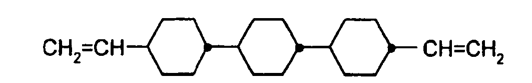 |
| **CCC-V-V** |
| 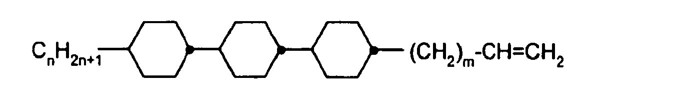 |
| **CCC-n-mV** |
| 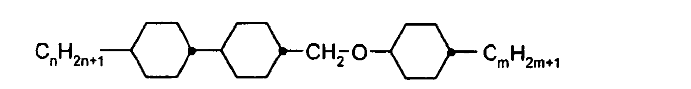 |
| **CCOC-n-m** |
| 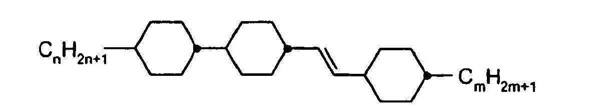 |
| **CCVC-n-m** |
| 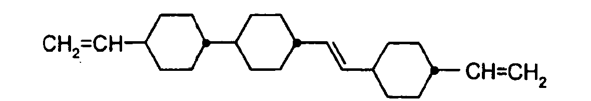 |
| **CCVC-V-V** |
| 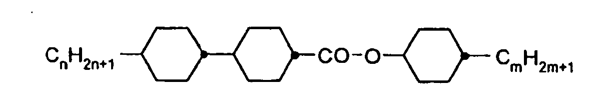 |
| **CCZC-n-Om** |
| 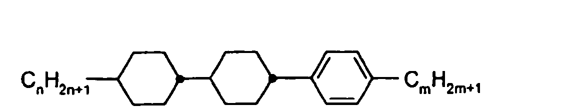 |
| **CCP-n-m** |
| 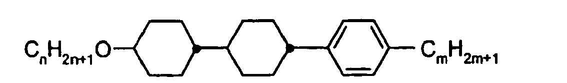 |
| **CCP-nO-m** |
| 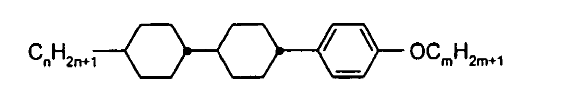 |
| **CCP-n-Om** |
| 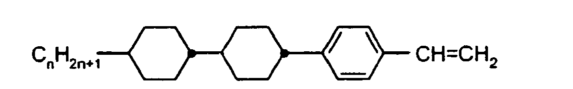 |
| **CCP-n-V** |
| 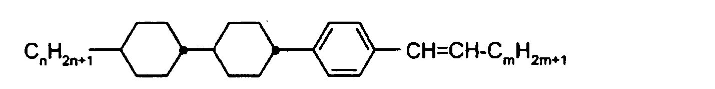 |
| **CCP-n-Vm** |
| 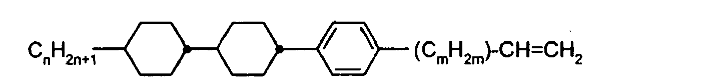 |
| **CCP-n-mV** |
| 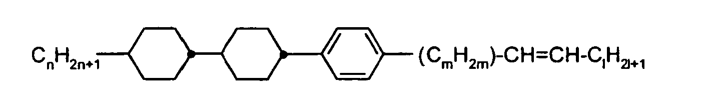 |
| **CCP-n-mVI** |
| 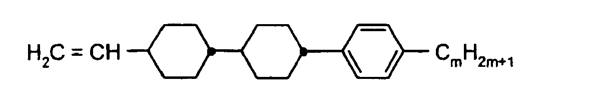 |
| **CCP-V-m** |
| 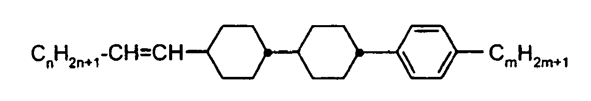 |
| **CCP-nV-m** |
| 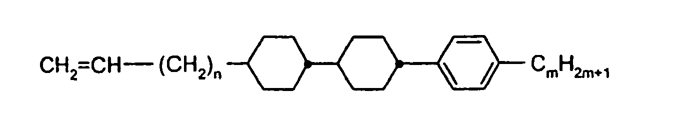 |
| **CCP-Vn-m** |
| 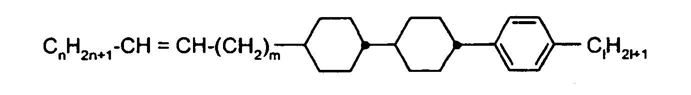 |
| **CCP-nVm-I** |
| 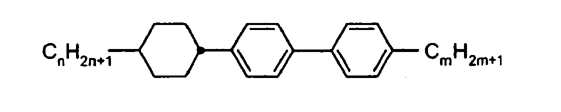 |
| **CPP-n-m** |
| 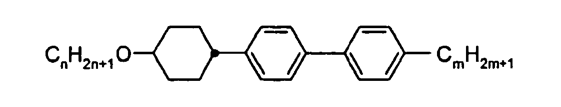 |
| **CPP-nO-m** |
| 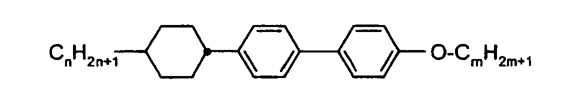 |
| **CPP-n-Om** |
| 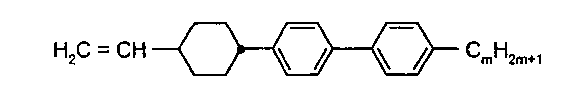 |
| **CPP-V-m** |
| 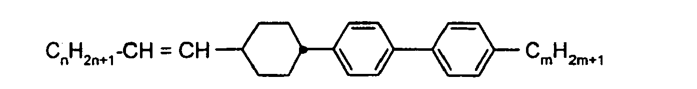 |
| **CPP-nV-m** |
| 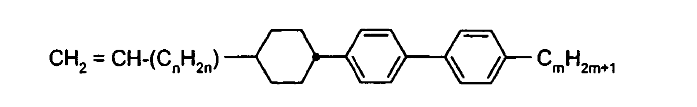 |
| **CPP-Vn-m** |
| 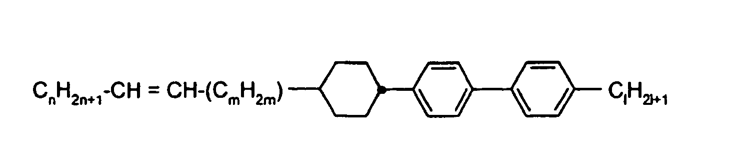 |
| **CPP-nVm-I** |
| 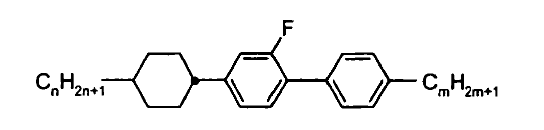 |
| **CGP-n-m** |
| 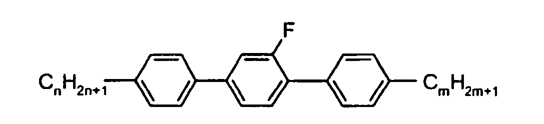 |
| **PGP-n-m** |
| 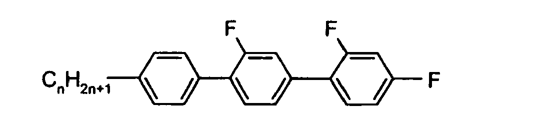 |
| **PGIGI-n-F** |
| 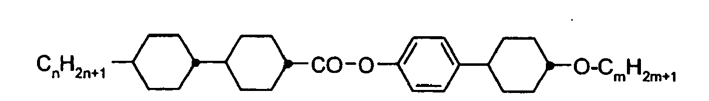 |
| **CCZPC-n-m** |
| 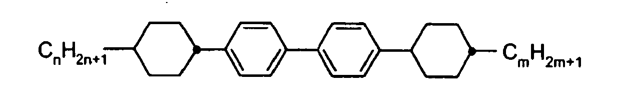 |
| **CPPC-n-m** |
| 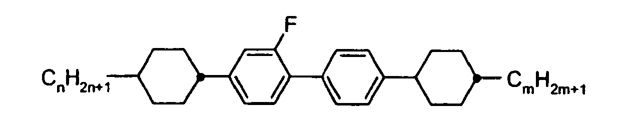 |
| **CGPC-n-m** |
| 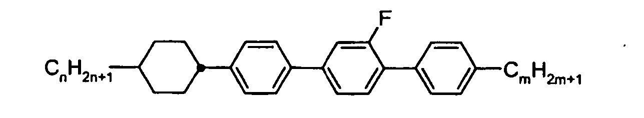 |
| **CPGP-n-m** |
| 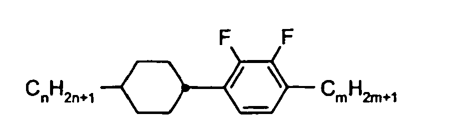 |
| **CY-n-m** |
| 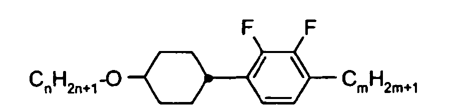 |
| **CY-nO-m** |
| 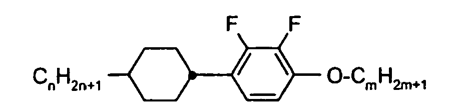 |
| **CY-n-Om** |
| 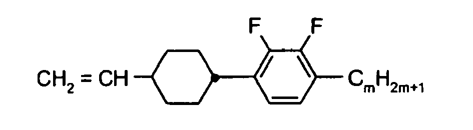 |
| **CY-V-m** |
| 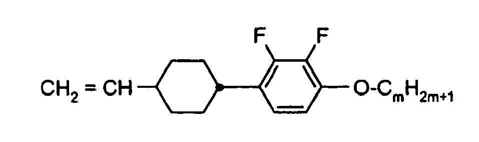 |
| **CY-V-Om** |
| 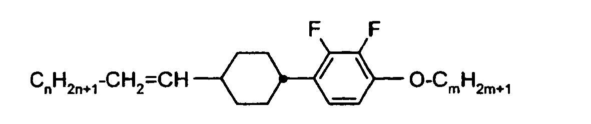 |
| **CY-nV-Om** |
| 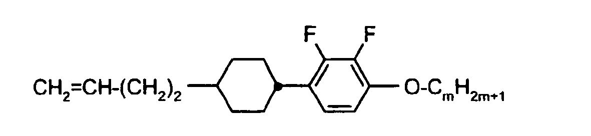 |
| **CY-V2-Om** |
| 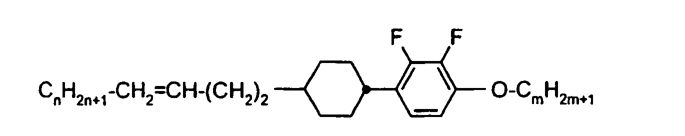 |
| **CY-nV2-Om** |
| 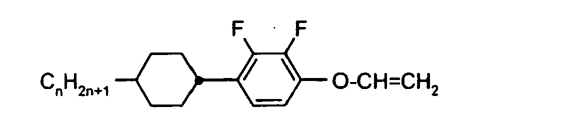 |
| **CY-n-OV** |
| 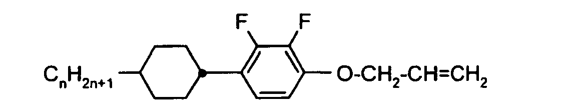 |
| **CY-n-O1V** |
| 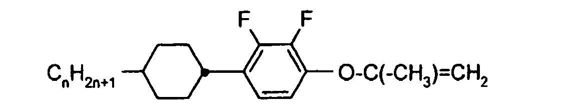 |
| **CY-n-OC(CH3)=CH2** |
| 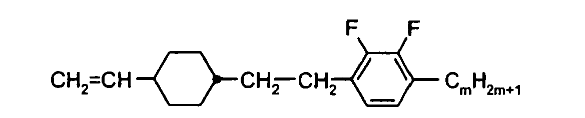 |
| **CEY-V-m** |
| 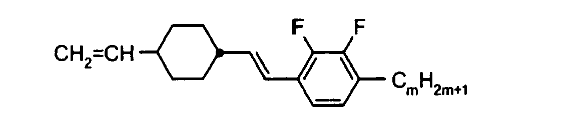 |
| **CVY-n-m** |
| 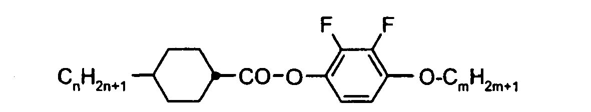 |
| **CZY-n-Om** |
| 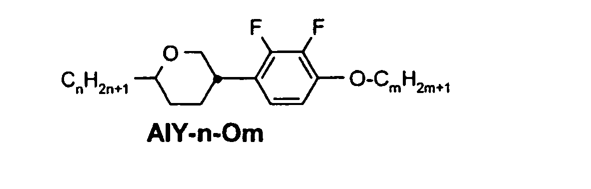 |
| |
| 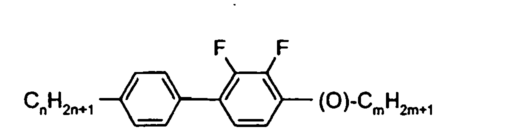 |
| **PY-n-(O)m** |
| 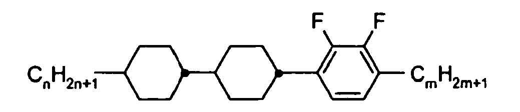 |
| **CCY-n-m** |
| 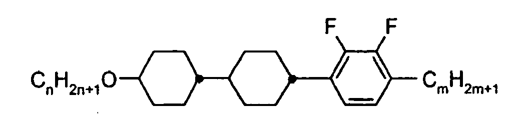 |
| **CCY-nO-m** |
| 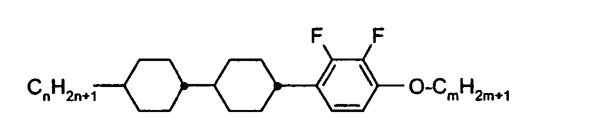 |
| **CCY-n-Om** |
| 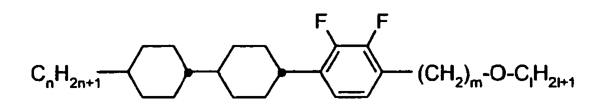 |
| **CCY-n-mOl** |
| 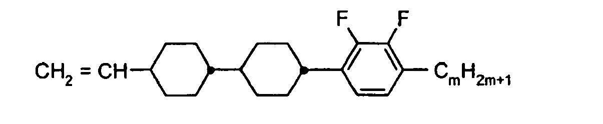 |
| **CCY-V-m** |
| 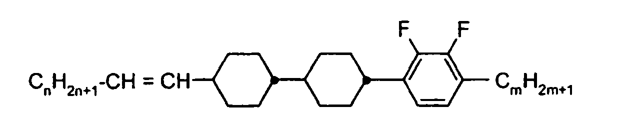 |
| **CCY-nV-m** |
| 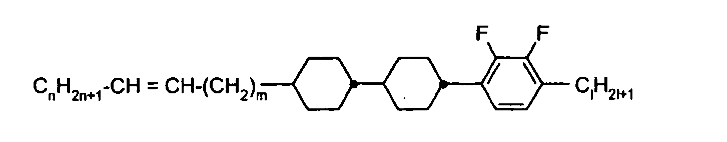 |
| **CCY-nVm-I** |
| 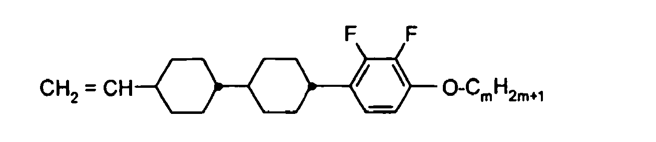 |
| **CCY-V-Om** |
| 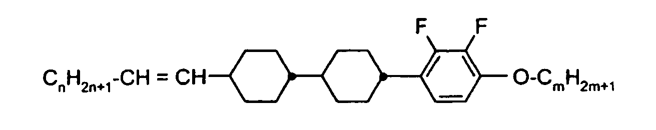 |
| **CCY-nV-Om** |
| 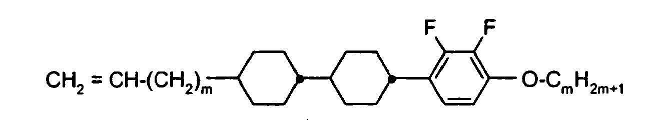 |
| **CCY-Vm-OI** |
| 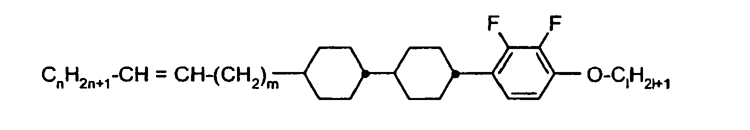 |
| **CCY-nVm-OI** |
| 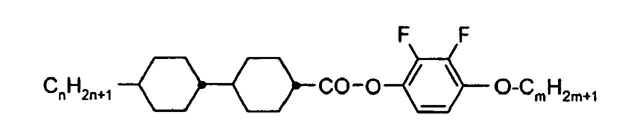 |
| **CCZY-n-Om** |
| 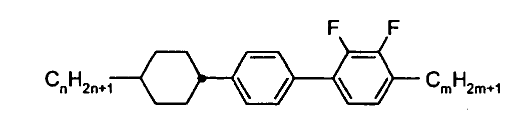 |
| **CPY-n-m** |
| 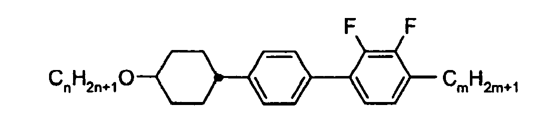 |
| **CPY-nO-m** |
| 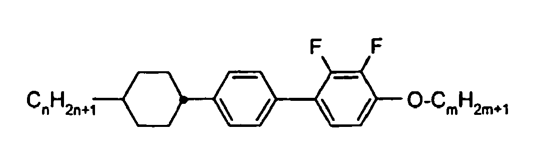 |
| **CPY-n-Om** |
| 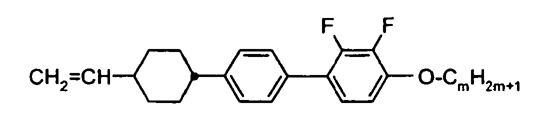 |
| **CPY-V-Om** |
| 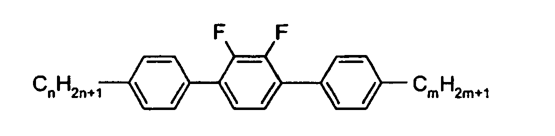 |
| **PYP-n-m** |
| 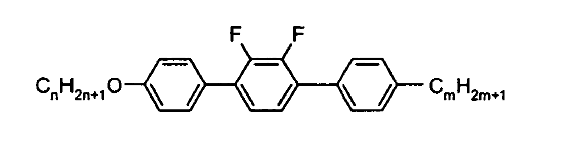 |
| **PYP-nO-m** |
| 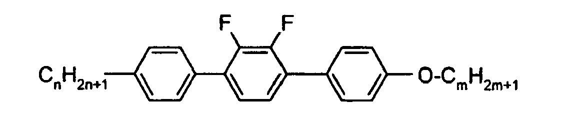 |
| **PYP-n-Om** |
| 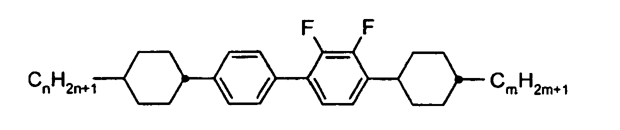 |
| **CPYC-n-m** |
| 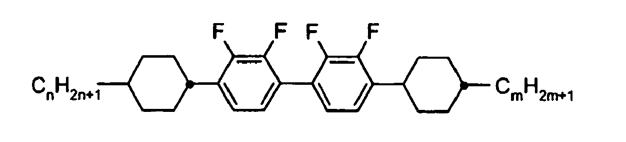 |
| **CYYC-n-m** |
| 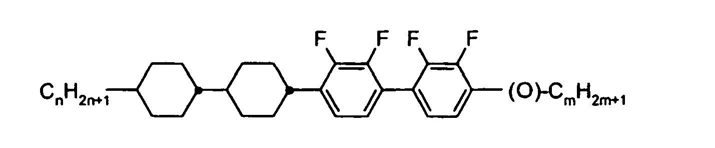 |
| **CCYY-n-(O)m** |
| 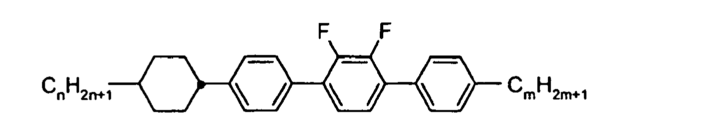 |
| **CPYP-n-m** |
| 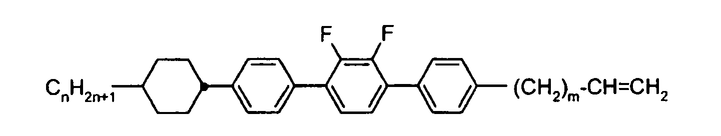 |
| **CPYP-n-mV** |
| 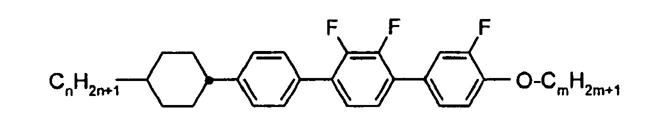 |
| **CPYG-n-Om** |
| 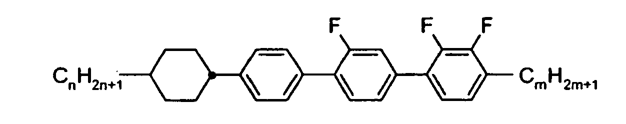 |
| **CPGIY-n-m** |
| 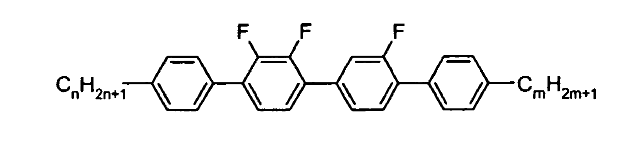 |
| **PYGP-n-m** |
| 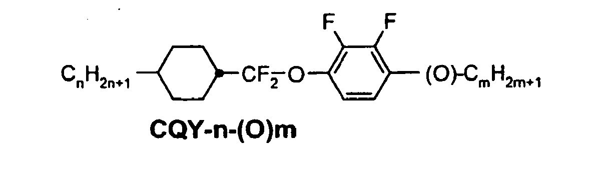 |
| |
| 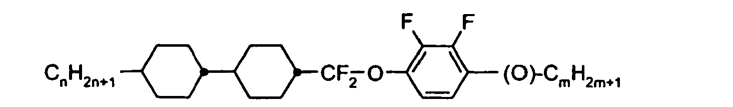 |
| **CCQY-n-(O)m** |
| 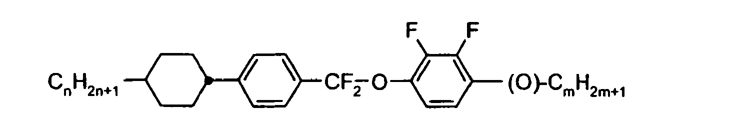 |
| **CPQY-n-(O)m** |
| 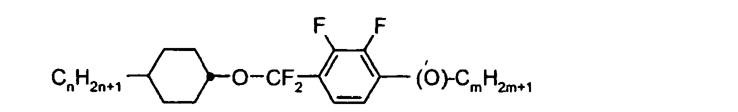 |
| **CQIY-n-(O)m** |
| 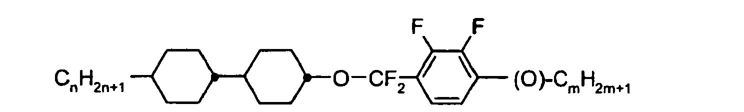 |
| **CCQIY-n-(O)m** |
| 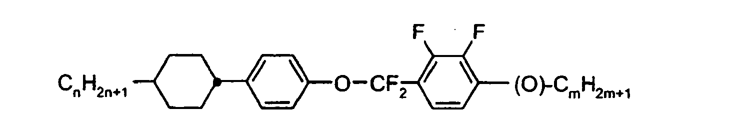 |
| **CPQIY-n-(O)m** |
| 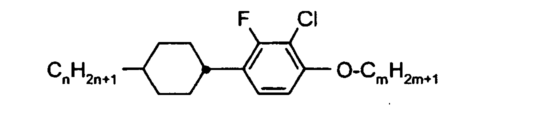 |
| **CP(F,CI)-n-Om** |
| 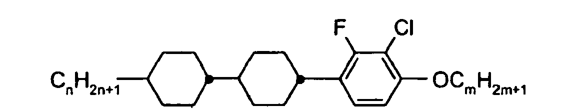 |
| **CCP(F,CI)-n-Om** |
| 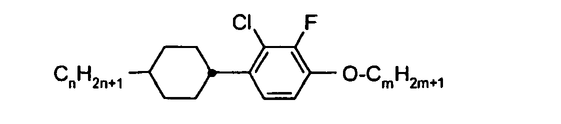 |
| **CP(CI,F)-n-Om** |
| 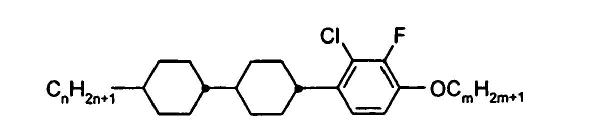 |
| **CCP(CI,F)-n-Om** |
| 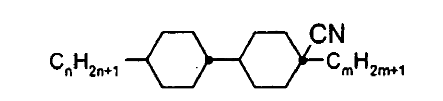 |
| **CN-n-m** |
| 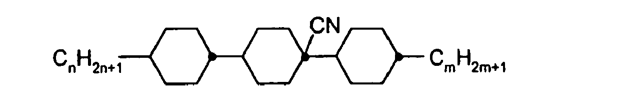 |
| **CNC-n-m** |
| 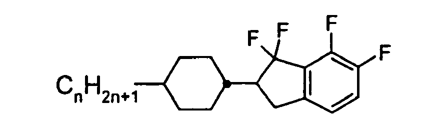 |
| **CK-n-F** |
| 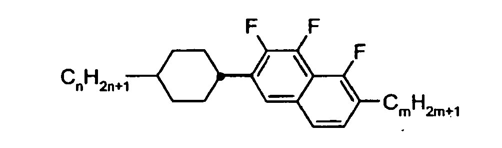 |
| **CN3f-n-m** |
| 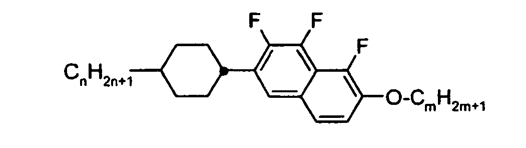 |
| **CN3f-n-Om** |
| 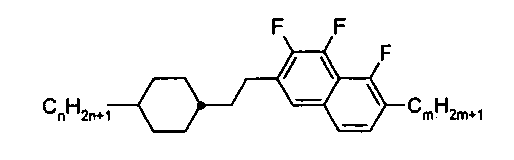 |
| **CEN3f-n-m** |
| 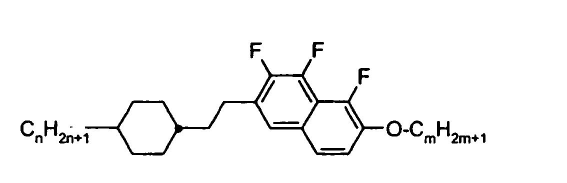 |
| **CEN3f-n-Om** |
| 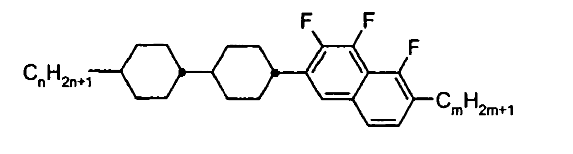 |
| **CCN3f-n-m** |
| 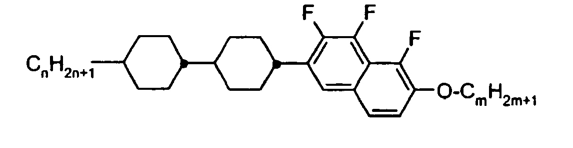 |
| **CCN3f-n-Om** |
| 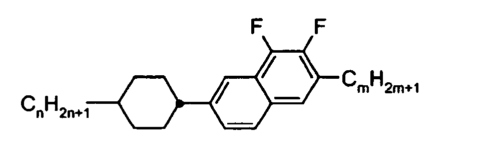 |
| **CN2f-n-m** |
| 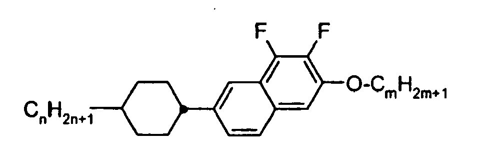 |
| **CN2f-n-Om** |
| 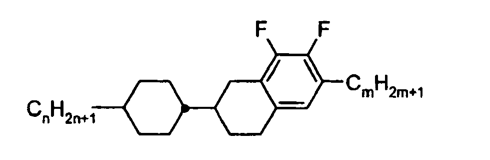 |
| **CT2f-n-m** |
| 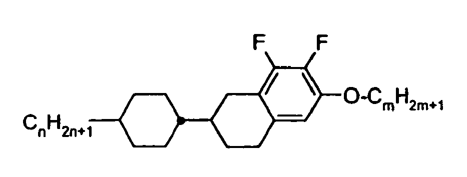 |
| **CT2f-n-Om** |
| 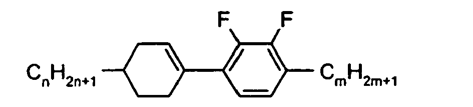 |
| **LY-n-m** |
| 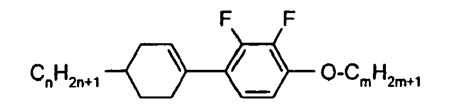 |
| **LY-n-Om** |
| 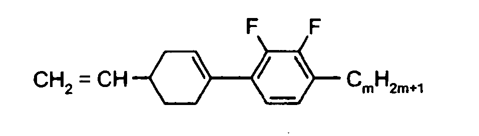 |
| **LY-V-m** |
| 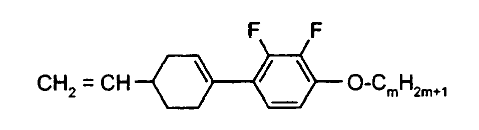 |
| **LY-V-Om** |
| 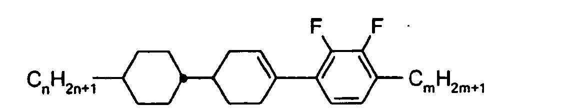 |
| **CLY-n-m** |
| 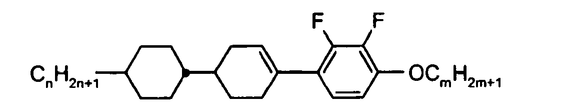 |
| **CLY-n-Om** |
| 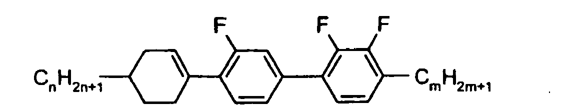 |
| **LGIY-n-m** |
| 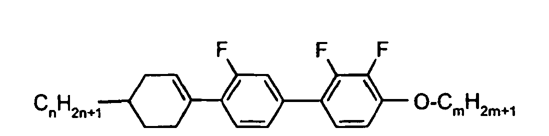 |
| **LGIY-n-Om** |
| 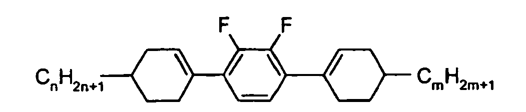 |
| **LYLI-n-m** |

In der Tabelle E werden chirale Dotierstoffe genannt, die bevorzugt in den erfindungsgemäßen Mischungen eingesetzt werden.

**Tabelle E**

| |
|---|
| 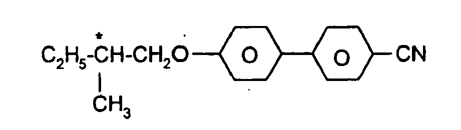 |
| **C15** |
| 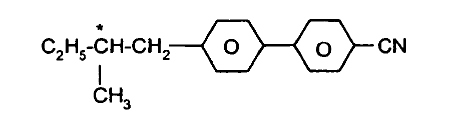 |
| **CB 15** |
| 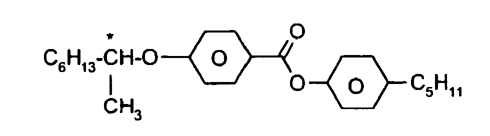 |
| **CM 21** |
| 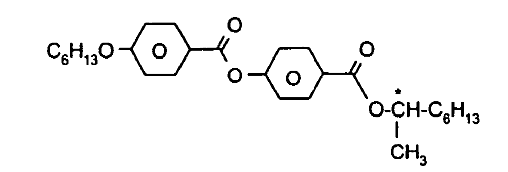 |
| **R S-811** / **S-811** |
| 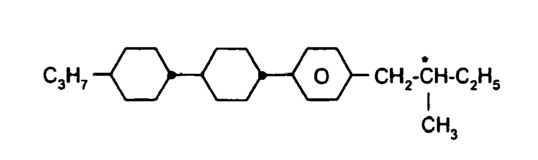 |
| **CM 44** |
| 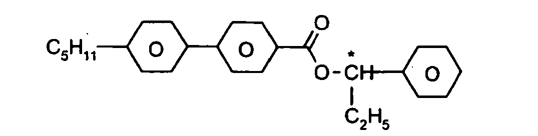 |
| **CM 45** |
| 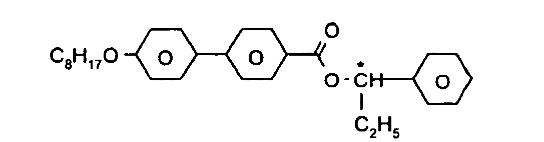 |
| **CM 47** |
| 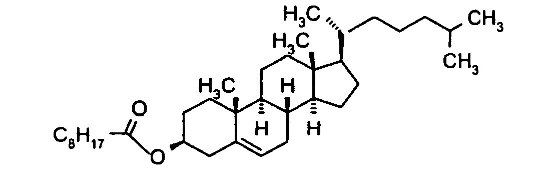 |
| **CN** |
| 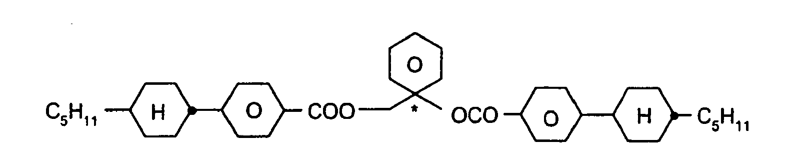 |
| **R-1011 / S-1011** |
| 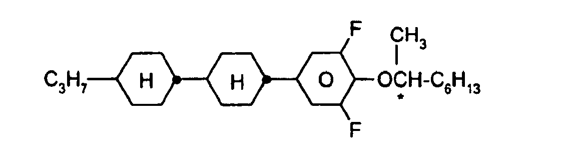 |
| **R-2011** / **S-2011** |
| 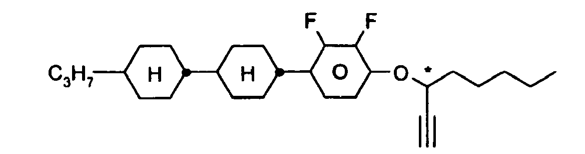 |
| **R-3011** / **S-3011** |
| 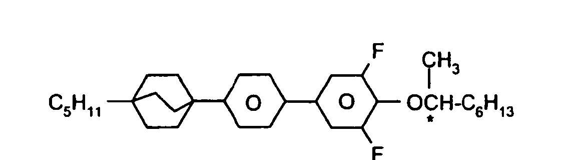 |
| **R-4011**/**S-4011** |
| 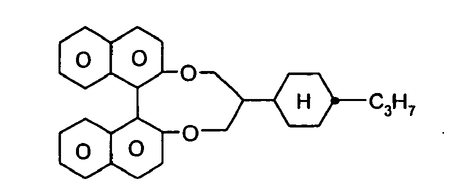 |
| **R-5011/S-5011** |

Verbindungen, ausgewählt aus der Gruppe der Verbindungen der Tabelle E.

**Tabelle F**

| | |
|---|---|
| (n bedeutet hier eine ganze Zahl von 1 bis 12) | |
| 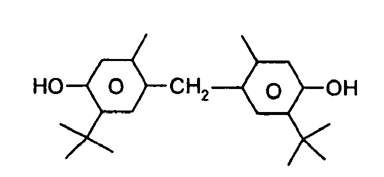 | 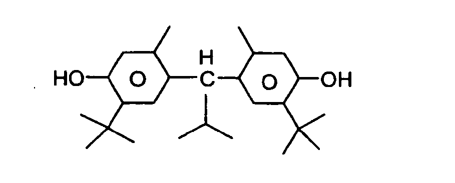 |
| 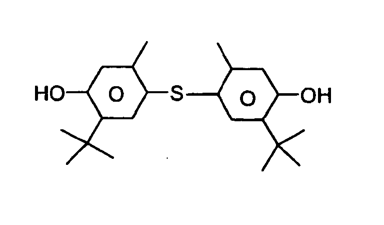 | 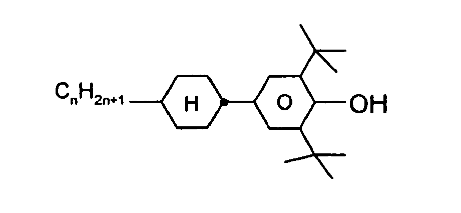 |
| 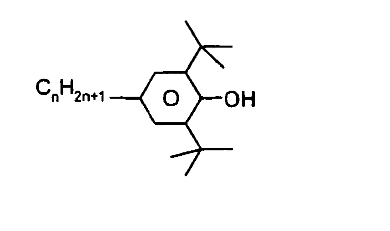 | 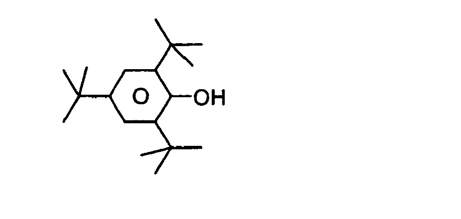 |
| 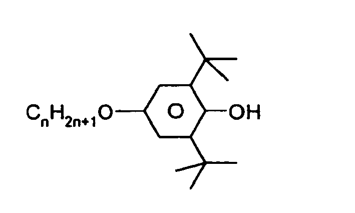 | 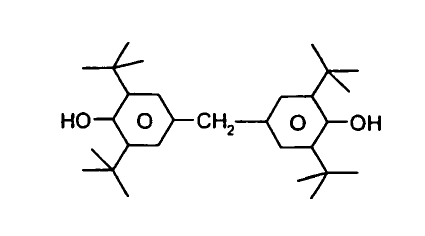 |
| 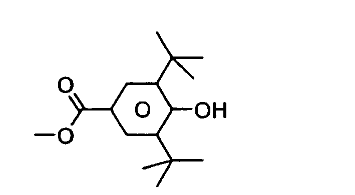 | 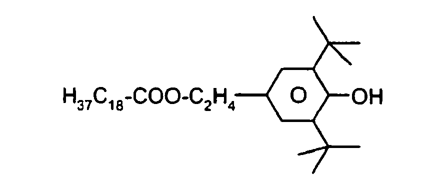 |
| 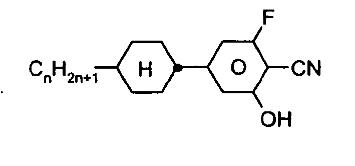 | 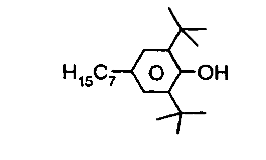 |
| 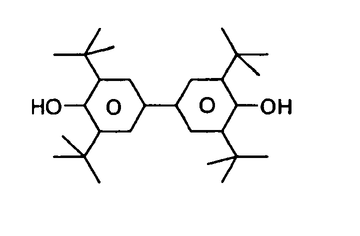 | 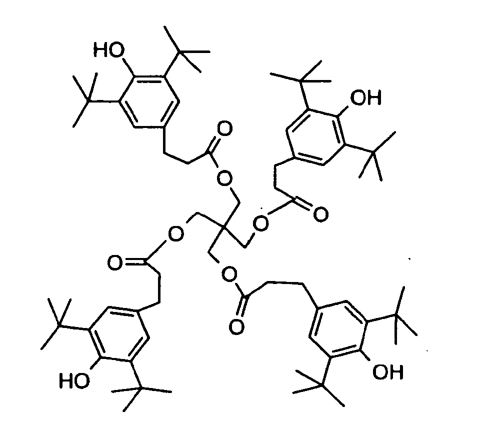 |
| 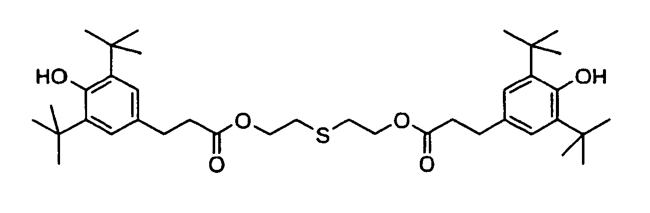 | |
| 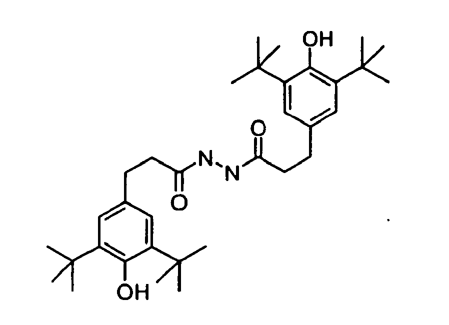 | 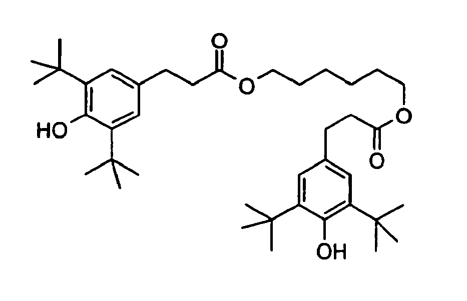 |
| 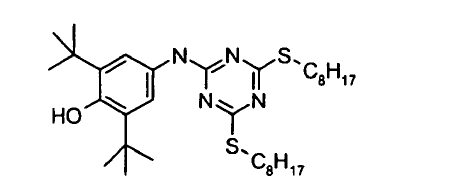 | 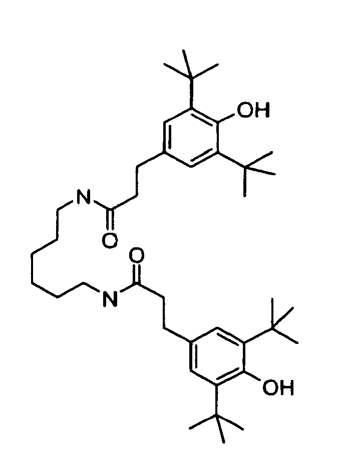 |
| 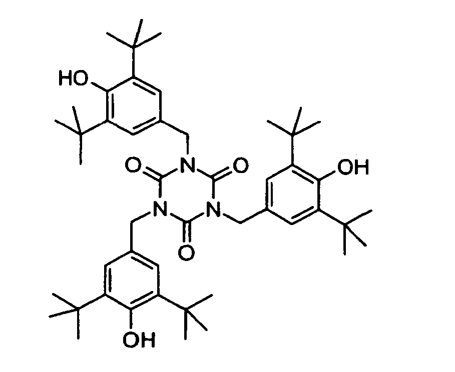 | 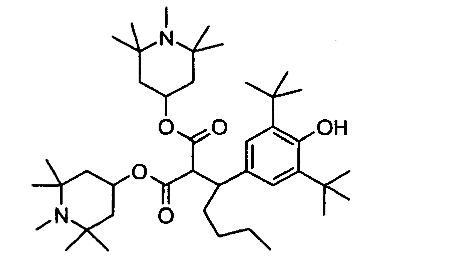 |
| 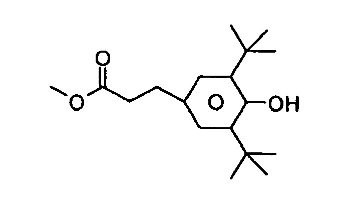 | 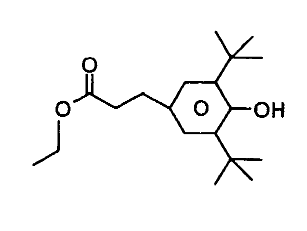 |
| 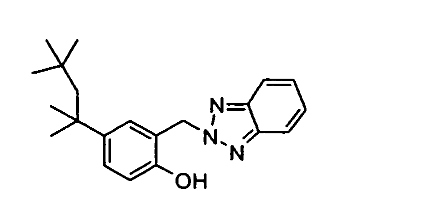 | 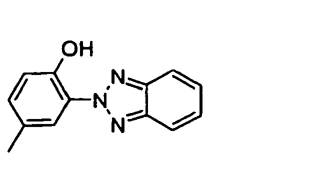 |
| 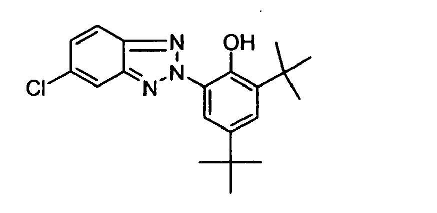 | 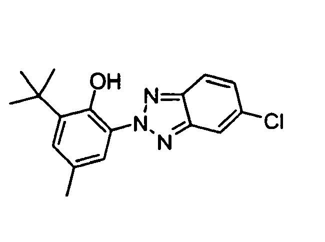 |
| 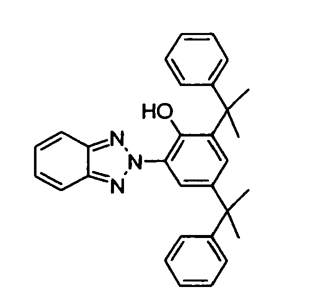 | 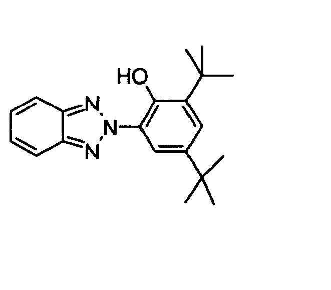 |
| 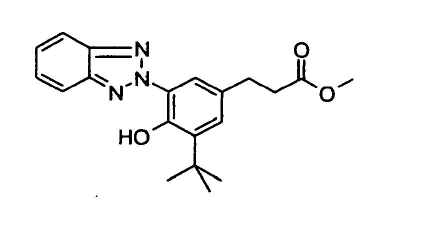 | 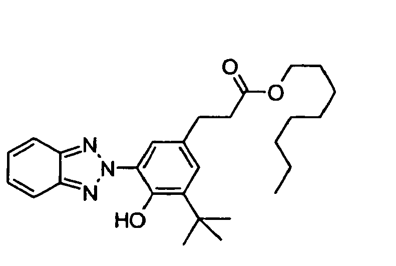 |
| 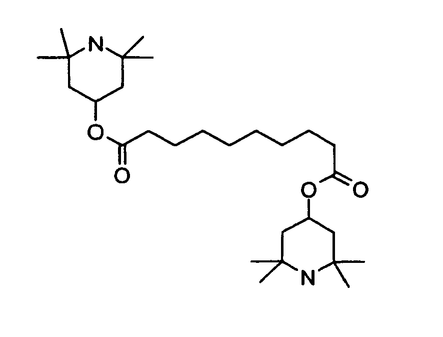 | 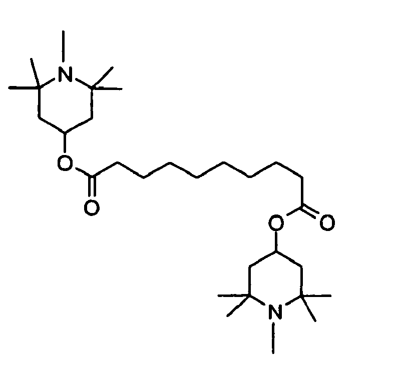 |
| 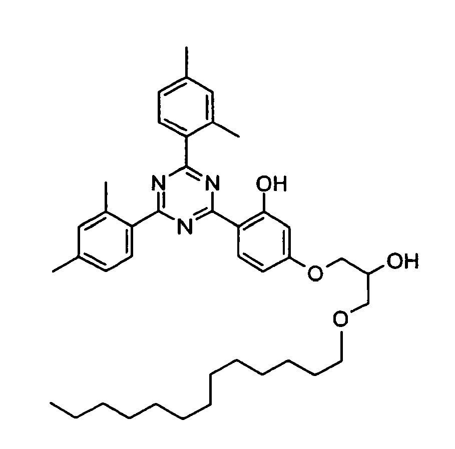 | 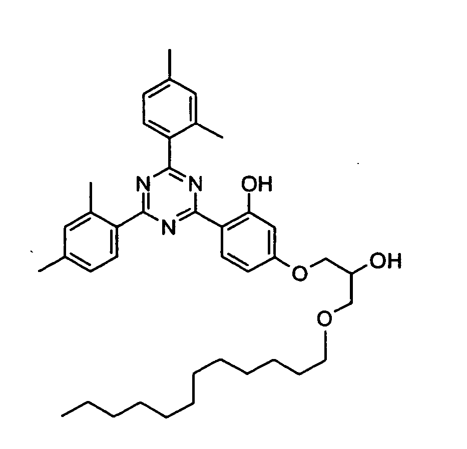 |

In einer bevorzugten Ausführungsform der vorliegenden Erfindung enthalten die erfindungsgemäßen Medien eine oder mehrere Verbindungen, ausgewählt aus der Gruppe der Verbindungen der Tabelle F.

### Mischungsbeispiele

### Beispiel 1 und Vergleichsbeispiele 1.1 bis 1.3

### Vergleichsbeispiel 1.1

| Zusammensetzung | | | Physikalische Eigenschaften | |
|---|---|---|---|---|
| Verbindung | | Konzentration | | |
| No. | Abkürzung | /Massen-% | | |
| | | | T(N, I) | = 86,0 °C |
| 1 | CY-3-O4 | 30,0 | nₑ(20°C, 589 nm) = | 1,5911 |
| 2 | CY-5-O2 | 12,0 | Δn(20°C, 589 nm) | = 0,1101 |
| 3 | CLY-3-O2 | 7,0 | ε_{⊥}(20°C, 1 kHz) | = 11,4 |
| 4 | CCY-3-O3 | 9,0 | Δε(20°C, 1 kHz) | = -7,0 |
| 5 | CCY-4-O2 | 8,0 | K₁(20°C) | = 15,4 pN |
| 6 | CLY-5-O2 | 7,0 | K₃/K₁(20°C) | = 1,05 |
| 7 | CLY-3-1 | 9,0 | γ₁(20°C) | = 295 mPa·s |
| 8 | CPY-2-O2 | 8,0 | V₀(20°C) | = 1,60 V |
| 9 | CPY-3-O2 | 8,0 | | |
| 10 | CC-4-V | 2,0 | | |
| ∑ | | 100,0 | | |

### Beispiel 1

| Zusammensetzung | | | Physikalische Eigenschaften | |
|---|---|---|---|---|
| Verbindung | | Konzentration | | |
| No. | Abkürzung | /Massen-% | | |
| | | | T(N, I) | = 87,0 °C |
| 1 | CY-3-O4 | 24,0 | | |
| 2 | CLY-3-O2 | 7,0 | Δn(20°C, 589 nm) | = 0,1090 |
| 3 | CCY-3-O3 | 4,0 | | |
| 4 | CCY-4-O2 | 5,0 | Δε(20°C, 1 kHz) | = -7,0 |
| 5 | CLY-5-02 | 7,0 | | |
| 6 | CLY-3-1 | 9,0 | γ₁(20°C) | = 260 mPa·s |
| 7 | CPY-2-O2 | 8,0 | | |
| 8 | CPY-3-O2 | 8,0 | | |
| 9 | CC-4-V | 8,0 | | |
| 10 | PYP-2-3 | 3,0 | | |
| 11 | CK-3-F | 5,0 | | |
| 12 | CK-4-F | 7,0 | | |
| 13 | CK-5-F | 5,0 | | |
| ∑ | | 100,0 | | |

### Vergleichsbeispiel 1.2

| Zusammensetzung | | | Physikalische Eigenschaften | |
|---|---|---|---|---|
| Verbindung | | Konzentration | | |
| No. | Abkürzung | /Massen-% | | |
| | | | T(N, I) | = 86,5 °C |
| 1 | CY-3-O4 | 22,0 | | |
| 2 | CLY-3-O2 | 7,0 | Δn(20°C,589nm) | = 0,1100 |
| 3 | CCY-3-O3 | 5,0 | | |
| 4 | CCY-4-O2 | 5,0 | Δε(20°C, 1 kHz) | = -6,9 |
| 5 | CLY-5-O2 | 7,0 | | |
| 6 | CLY-3-1 | 9,0 | γ₁(20°C) | = 280 mPa·s |
| 7 | CPY-2-O2 | 7,0 | | |
| 8 | CPY-3-O2 | 7,0 | | |
| 9 | CC-4-V | 15,0 | | |
| 10 | CN3f-3-O4 | 9,0 | | |
| 11 | CN3f-5-O2 | 7,0 | | |
| ∑ | | 100,0 | | |

### Vergleichsbeispiel 1.3

| Zusammensetzung | | | Physikalische Eigenschaften | |
|---|---|---|---|---|
| Verbindung | | Konzentration | | |
| No. | Abkürzung | /Massen-% | | |
| | | | T(N, I) | = 86,7 °C |
| 1 | CY-V-O2 | 20,0 | | |
| 2 | CY-V-O4 | 10,0 | Δn(20°C,589 nm) | = 0,1090 |
| 3 | CLY-3-O2 | 10,0 | | |
| 4 | CCY-V-O2 | 12,0 | Δε(20°C, 1 kHz) | = -7,0 |
| 5 | CCY-V-O4 | 12,0 | | |
| 6 | CLY-5-O2 | 10,0 | γ₁(20°C) | = 238 mPa·s |
| 7 | CLY-3-1 | 9,0 | | |
| 8 | CPY-V-O2 | 5,0 | | |
| 9 | CPY-V-O4 | 5,0 | | |
| 10 | CC-4-V | 7,0 | | |
| ∑ | | 100,0 | | |

### Beispiel 2 und Vergleichsbeispiele 2.1 bis 2.3

### Verpleichsbeispiel 2.1

| Zusammensetzung | | | Physikalische Eigenschaften | |
|---|---|---|---|---|
| Verbindung | | Konzentration | | |
| No. | Abkürzung | /Massen-% | | |
| | | | T(N, I) | = 82,0 °C |
| 1 | CY-3-O4 | 13,0 | nₑ(20°C, 589 nm) - | 1,5834 |
| 2 | CY-5-O2 | 8,0 | Δn(20°C, 589 nm) | = 0,1008 |
| 3 | CLY-3-O2 | 10,0 | ε_{⊥}(20°C, 1 kHz) | = 7,4 |
| 4 | CLY-3-1 | 7,0 | Δε(20°C, 1 kHz) | = -3,7 |
| 5 | CPY-2-O2 | 12,0 | K₁(20°C) | = 14,9 pN |
| 6 | CPY-3-O2 | 12,0 | K₃/K₁(20°C) | = 1,05 |
| 7 | CC-3-5 | 12,0 | γ₁(20°C) | = 159 mPa·s |
| 8 | CP-3-O1 | 10,0 | V₀(20°C) | = 2,17 V |
| 9 | CC-5-O1 | 11,0 | | |
| 10 | CCOC-3-3 | 5,0 | | |
| ∑ | | 100,0 | | |

### Beispiel 2

| Zusammensetzung | | | Physikalische Eigenschaften | |
|---|---|---|---|---|
| Verbindung | | Konzentration | | |
| No. | Abkürzung | /Massen-% | | |
| | | | T(N, I) | = 81,0 °C |
| 1 | CY-3-O4 | 6,0 | | |
| 2 | CLY-3-O2 | 10,0 | Δn(20°C,589nm) | = 0,0982 |
| 3 | CLY-3-1 | 7,0 | | |
| 4 | CPY-2-O2 | 10,0 | Δε(20°C, 1 kHz) | = -3,7 |
| 5 | CPY-3-O2 | 10,0 | | |
| 6 | CC-3-5 | 12,0 | γ₁(20°C) | = 140 mPa·s |
| 7 | CP-3-O1 | 12,0 | | |
| 8 | CC-5-O1 | 12,0 | | |
| 9 | CC-3-4 | 4,0 | | |
| 10 | PYP-2-4 | 4,0 | | |
| 11 | CK-3-F | 4,0 | | |
| 12 | CK-4-F | 5,0 | | |
| 13 | CK-5-F | 4,0 | | |
| E | | 100,0 | | |

### Vergleichsbeispiel 2.2

| Zusammensetzung | | | Physikalische Eigenschaften | |
|---|---|---|---|---|
| Verbindung | | Konzentration | | |
| No. | Abkürzung | /Massen-% | | |
| | | | T(N, I) | = 82,0 °C |
| 1 | CY-3-O4 | 6,0 | | |
| 2 | CLY-3-O2 | 10,0 | Δn(20°C, 589 nm) | = 0,1005 |
| 3 | CLY-3-1 | 7,0 | | |
| 4 | CPY-2-O2 | 9,0 | Δε(20°C, 1 kHz) | = -3,8 |
| 5 | CPY-3-O2 | 8,0 | | |
| 6 | CC-3-5 | 12,0 | γ₁(20°C) | = 148 mPa·s |
| 7 | CP-3-O1 | 12,0 | | |
| 8 | CC-5-O1 | 12,0 | | |
| 9 | CC-3-4 | 9,0 | | |
| 10 | PYP-2-4 | 2,0 | | |
| 11 | CN3f-3-O4 | 8,0 | | |
| 12 | CN3f-5-O2 | 5,0 | | |
| ∑ | | 100,0 | | |

### Vergleichsbeispiel 2.3

| Zusammensetzung | | | Physikalische Eigenschaften | |
|---|---|---|---|---|
| Verbindung | | Konzentration | | |
| No. | Abkürzung | /Massen-% | | |
| | | | T(N, I) | = 81,0 °C |
| 1 | CY-V-O2 | 14,0 | | |
| 2 | CLY-3-O2 | 12,0 | Δn(20°C, 589 nm) | = 0,1010 |
| 3 | CCY-V-O2 | 6,0 | | |
| 4 | CLY-3-1 | 7,0 | Δε(20°C, 1 kHz) | = -3,7 |
| 5 | CPY-V-O2 | 10,0 | | |
| 6 | CPY-V-O4 | 10,0 | γ₁(20°C) | = 143 mPa·s |
| 7 | CC-3-5 | 12,0 | | |
| 8 | CP-3-O1 | 12,0 | | |
| 9 | CC-5-O1 | 12,0 | | |
| 10 | CCOC-3-3 | 5,0 | | |
| ∑ | | 100,0 | | |

### Beispiel 3 und Vergleichsbeispiele 3.1 bis 3.4

### Vergleichsbeispiel 3.1

| Zusammensetzung | | | Physikalische Eigenschaften | |
|---|---|---|---|---|
| Verbindung | | Konzentration | | |
| No. | Abkürzung | /Massen-% | | |
| | | | T(N, I) | = 81,5 °C |
| 1 | LY-3-O2 | 18,0 | nₑ(20°C, 589nm) = | 1,6159 |
| 2 | CY-5-O2 | 14,0 | Δn(20°C, 589 nm) | = 0,1265 |
| 3 | CCY-3-O2 | 5,0 | ε_{⊥}(20°C, 1 kHz) | = 7,6 |
| 4 | CPY-2-O2 | 12,0 | Δε(20°C, 1 kHz) | = -3,9 |
| 5 | CPY-3-O2 | 12,0 | K₁(20°C) | = 15,4 pN |
| 6 | CPP-3-2 | 13,0 | K₃/K₁(20°C) | = 1,10 |
| 7 | CC-3-V1 | 12,0 | γ₁(20°C) | = 156 mPa·s |
| 8 | CC-5-V | 9,0 | V₀(20°C) | = 2,21 V |
| 9 | PGIGI-3-F | 5,0 | | |
| ∑ | | 100,0 | | |

### Beispiel 3

| Zusammensetzung | | | Physikalische Eigenschaften | |
|---|---|---|---|---|
| Verbindung | | Konzentration | | |
| No. | Abkürzung | /Massen-% | | |
| | | | T(N, I) | = 82,0 °C |
| 1 | LY-3-O2 | 17,0 | | |
| 2 | CPY-2-O2 | 12,0 | Δn(20°C, 589 nm) | = 0,1264 |
| 3 | CPY-3-O2 | 12,0 | | |
| 4 | CPP-3-2 | 12,0 | Δε(20°C, 1 kHz) | = -3,8 |
| 5 | CC-3-V1 | 11,0 | | |
| 6 | CC-5-V | 12,0 | γ₁(20°C) | = 150 mPa·s |
| 7 | PGIGI-3-F | 9,0 | | |
| 8 | CK-3-F | 5,0 | | |
| 9 | CK-4-F | 5,0 | | |
| 10 | CK-5-F | 5,0 | | |
| ∑ | | 100,0 | | |

### Vergleichsbeispiel 3.2

| Zusammensetzung | | | Physikalische Eigenschaften | |
|---|---|---|---|---|
| Verbindung | | Konzentration | | |
| No. | Abkürzung | /Massen-% | | |
| | | | T(N, I) | = 81,0 °C |
| 1 | LY-3-O2 | 17,0 | | |
| 2 | CPY-2-O2 | 11,0 | Δn(20°C, 589 nm) | = 0,1273 |
| 3 | CPY-3-O2 | 11,0 | | |
| 4 | CPP-3-2 | 12,0 | Δε(20°C, 1 kHz) | = -3,9 |
| 5 | CC-3-V1 | 10,0 | | |
| 6 | CC-5-V | 19,0 | γ₁(20°C) | = 161 mPa·s |
| 7 | PGIGI-3-F | 6,0 | | |
| 8 | CN3f-3-O4 | 7,0 | | |
| 9 | CN3f-5-O2 | 7,0 | | |
| ∑ | | 100,0 | | |

### Vergleichsbeispiel 3.3

| Zusammensetzung | | | Physikalische Eigenschaften | |
|---|---|---|---|---|
| Verbindung | | Konzentration | | |
| No. | Abkürzung | /Massen-% | | |
| | | | T(N, I) | = 81,5 °C |
| 1 | LY-3-O2 | 18,0 | | |
| 2 | CY-5-O2 | 6,0 | Δn(20°C, 589 nm) | = 0,1268 |
| 3 | CLY-3-O2 | 12,0 | | |
| 4 | CCY-3-O2 | 2,0 | Δε(20°C, 1 kHz) | = -3,8 |
| 5 | CPY-2-O2 | 7,0 | | |
| 6 | CPY-3-O2 | 7,0 | γ₁(20°C) | = 134 mPa·s |
| 7 | CC-3-V1 | 12,0 | | |
| 8 | CC-5-V | 19,0 | | |
| 9 | PYP-2-4 | 9,0 | | |
| 10 | PYP-2-3 | 8,0 | | |
| ∑ | | 100,0 | | |

### Vergleichsbeispiel 3.4

| Zusammensetzung | | | Physikalische Eigenschaften | |
|---|---|---|---|---|
| Verbindung | | Konzentration | | |
| No. | Abkürzung | /Massen-% | | |
| | | | T(N, I) | = 81,0 °C |
| 1 | LY-3-O2 | 17,0 | | |
| 2 | CY-V-O2 | 4,0 | Δn(20°C, 589 nm) | = 0,1271 |
| 3 | CLY-3-O2 | 12,0 | | |
| 4 | CCY-V-O2 | 5,0 | Δε(20°C, 1 kHz) | = -3,8 |
| 5 | CPY-V-O2 | 7,0 | | |
| 6 | CPY-V-O4 | 6,0 | γ₁(20°C) | = 131 mPa·s |
| 7 | CC-3-V1 | 12,0 | | |
| 8 | CC-5-V | 20,0 | | |
| 9 | PYP-2-4 | 9,0 | | |
| 10 | PYP-2-3 | 8,0 | | |
| ∑ | | 100,0 | | |

### Beispiel 4

| Zusammensetzung | | | Physikalische Eigenschaften | |
|---|---|---|---|---|
| Verbindung | | Konzentration | | |
| No. | Abkürzung | /Massen-% | | |
| | | | T(N, I) | = 96,5 °C |
| 1 | CLY-3-O2 | 10,0 | nₑ(20°C, 589nm) = | 1,4539 |
| 2 | CLY-3-O4 | 9,0 | Δn(20°C, 589 nm) | = 0,0854 |
| 3 | CCY-3-O3 | 10,0 | ε_{⊥}(20°C, 1 kHz) | = 6,6 |
| 4 | CPY-3-O2 | 8,0 | Δε(20°C, 1 kHz) | = -3,1 |
| 5 | CCP-V-1 | 6,0 | K₁(20°C) | = 17,0 pN |
| 6 | CC-3-O1 | 9,0 | K₃/K₁(20°C) | = 1,03 |
| 7 | CC-3-V1 | 11,0 | γ₁(20°C) | = 110 mPa·s |
| 8 | CC-4-V | 20,0 | V₀(20°C) | = 2,50 V |
| 9 | CC-3-4 | 4,0 | | |
| 10 | CK-3-F | 4,0 | | |
| 11 | CK-4-F | 5,0 | | |
| 12 | CK-5-F | 4,0 | | |
| ∑ | | 100,0 | | |

### Vergleichsbeispiel 4

### Es wird die folgende Mischung hergestellt und untersucht.

| Zusammensetzung | | | Physikalische Eigenschaften | |
|---|---|---|---|---|
| Verbindung | | Konzentration | | |
| No. | Abkürzung | /Massen-% | | |
| | | | T(N, I) | = 70,0 °C |
| 1 | CY-3-O4 | 14,0 | nₑ(20°C, 589 nm) | = 1,5600 |
| 2 | CY-5-O4 | 13,0 | Δn(20°C, 589 nm) | = 0,0825 |
| 3 | CCY-2-1 | 9,0 | ε_{⊥}(20°C, 1 kHz) | = 7,0 |
| 4 | CCY-2-1 | 9,0 | Δε(20°C, 1 kHz) | = -3,5 |
| 5 | CCY-3-O2 | 8,0 | K₁(20°C) | = 13,3 pN |
| 6 | CCY-5-O2 | 8,0 | K₃/K₁ (20°C) | = 1,00 |
| 7 | CPY-2-O2 | 8,0 | γ₁(20°C) | = 141 mPa·s |
| 8 | CC-3-5 | 14,0 | V₀(20°C) | = 2,06 V |
| 9 | CC-5-O1 | 9,0 | | |
| 10 | CP-5-3 | 8,0 | HR₂₀ | = 99 % |
| ∑ | | 100,0 | HR₂₀ (2h, UV) | = 90 % |

Zu dieser Mischung werden 10 % der Verbindung CLY-3-03 und 0,3 % der reaktiven mesogenen Verbindung der folgenden Formel 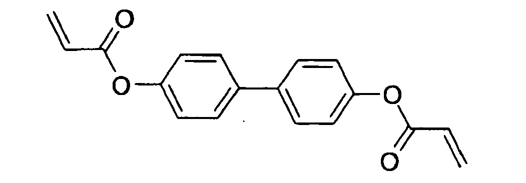 gegeben und die resultierende Mischung wird in eine Testzelle mit Elektroden gefüllt und mit UV bestrahlt. Dann wird die HR untersucht. Der Wert beträgt HR₂₀ = 99 %.

## Patentansprüche

1. Flüssigkristallines Medium auf der Basis eines Gemisches von dielektrisch negativen, polaren Verbindungen, **dadurch gekennzeichnet, dass** es
a) eine erste dielektrisch negative, mesogene Komponente (Komponente A), die aus einer oder mehreren dielektrisch negativen Verbindung(en) der Formel I besteht, 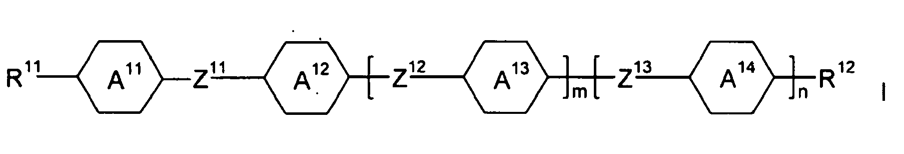 worin
R¹¹ und R¹² jeweils unabhängig voneinander H, einen unsubstituierten Alkyl- oder Alkenylrest mit bis zu 15 C-Atomen, wobei in diesen Resten auch eine oder mehrere CH₂-Gruppen durch -O-, -S-, 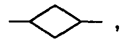 -C≡C-, -CF₂-O-, -O-CF₂-, -CO-O- oder -O-CO- so ersetzt sein können, dass O-Atome nicht direkt miteinander verknüpft sind,
einer der vorhandenen Ringe 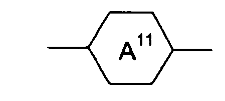 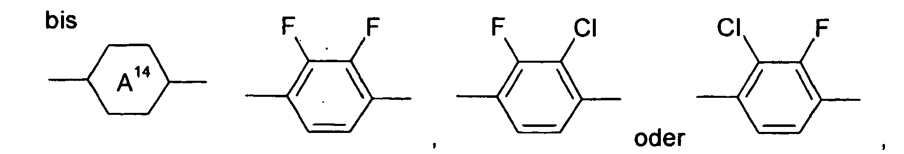 und ein weiterer der vorhandenen Ringe 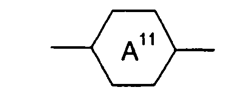 bis 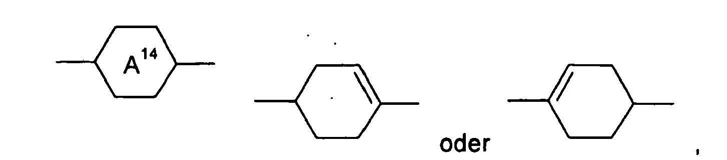 und die anderen, soweit vorhanden, jeweils unabhängig voneinander 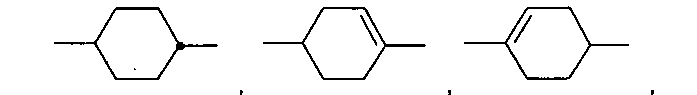 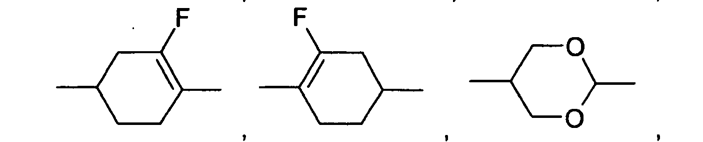 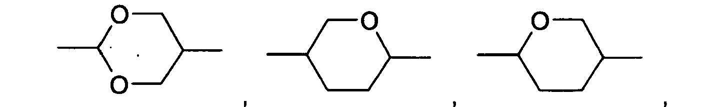 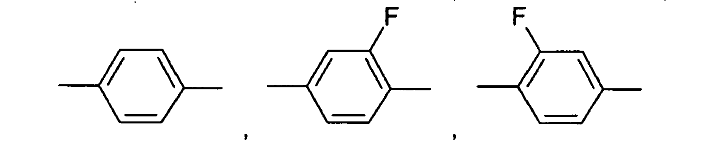 oder 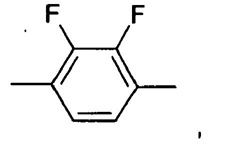
Z¹¹ bis Z¹³ jeweils unabhängig voneinander -CH₂-H₂-, -CH=CH-, -C≡C-, -CH₂-O-, -O-CH₂-, -CO-O-, -O-CO-, -CF₂-O-, -O-CF₂-, -CF₂-CF₂- oder eine Einfachbindung und
m und n jeweils unabhängig voneinander 0 oder 1
bedeuten,
b) eine zweite dielektrisch negative, mesogene Komponente (Komponente B), die aus einer oder mehreren dielektrisch negativen Verbindung(en) der Formel II besteht 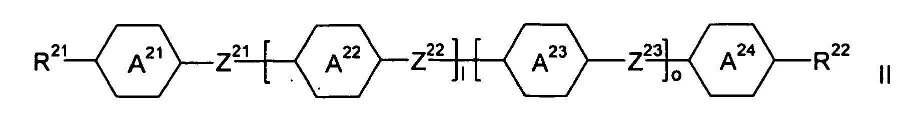 worin R²¹ und R²² jeweils unabhängig voneinander H, Alkyl- oder Alkenylrest mit bis zu 15 C-Atomen, wobei in diesen Resten auch eine oder mehrere CH₂-Gruppen durch -O-, -S-, 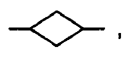 -C≡C-, -CF₂-O-, -O-CF₂-, -CO-O- oder -O-CO- so ersetzt sein können, dass O-Atome nicht direkt miteinander verknüpft sind, einer der vorhandenen Ringe 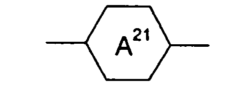 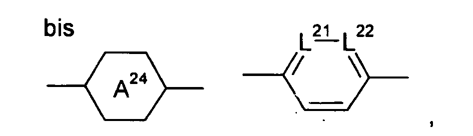 und die anderen, soweit vorhanden, jeweils unabhängig voneinander 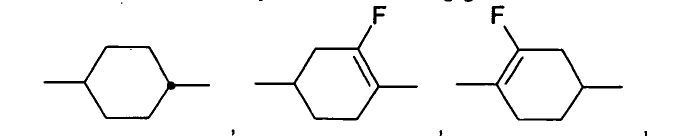 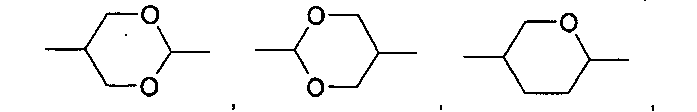 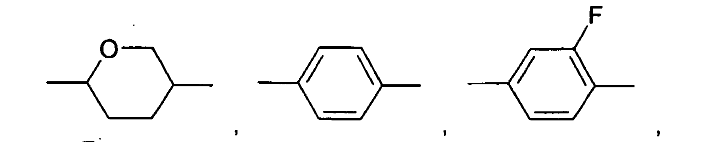 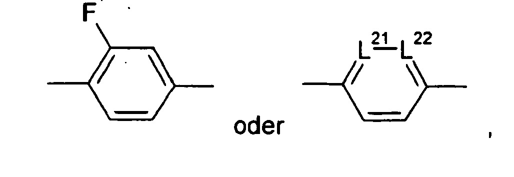
L²¹ und L²² jeweils unabhängig voneinander =C(X²)- oder =N-,
X² F, Cl, OCF₃, CF₃, CH₃, CH₂F, CHF₂,
Z²¹ bis Z²³ jeweils unabhängig voneinander -CH₂-CH₂-, -CH₂-CF₂-, -CF₂-CH₂-, -CF₂-CF₂-,- CH=CH-, -CF=CH-, -CH=CF-, -C≡-, -CH₂-O-, -O-CH₂-, -CO-O-, -O-CO-, -CF₂-O-, -O-CF₂- oder eine Einfachbindung und
I und o jeweils unabhangig voneinander 0 oder 1
bedeuten,
c) eine dielektrisch neutrale, mesogene Komponente (Komponente C), die aus einer oder mehreren dielektrisch neutralen Verbindungen der Formel III besteht 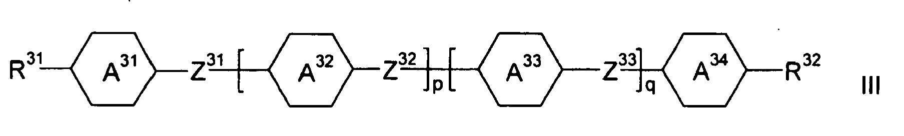 worin
R³¹ und R³² jeweils unabhängig voneinander, eine der für R¹¹ und R¹² gegebenen Bedeutung haben, 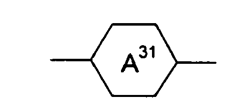
bis 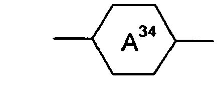 jeweils unabhängig voneinander, 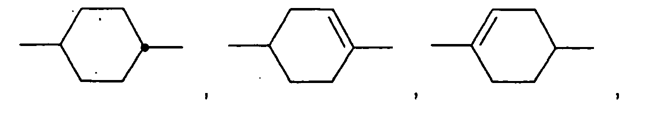 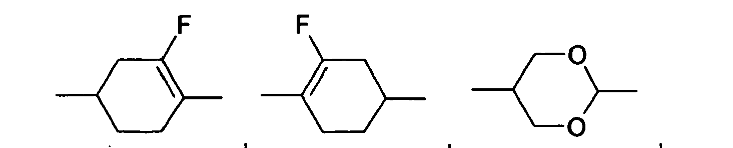 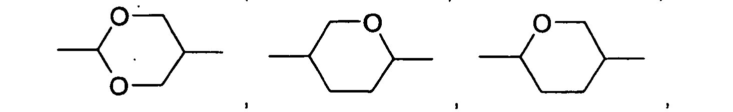 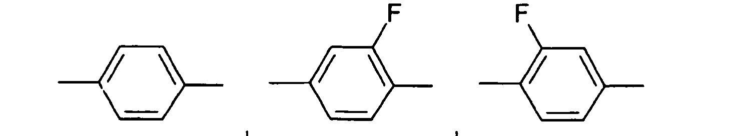 oder 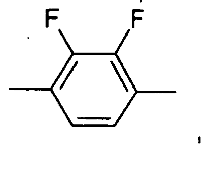
Z³¹ bis Z³³ ,jeweils unabhängig voneinander, eine der für Z¹¹ bis Z¹³ gegebene Bedeutung haben und
p und q jeweils unabhängig voneinander, 0 oder 1,
bedeuten, und
d) eine weitere dielektrisch negative, mesogene Komponente (Komponente D), die aus einer oder mehreren dielektrisch negativen Verbindungen ausgewählt aus der Gruppe der Verbindungen der Formel IV besteht 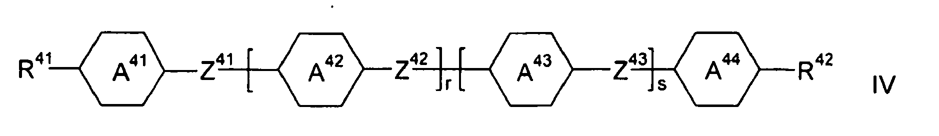 worin
R⁴¹ und R⁴² jeweils unabhängig voneinander eine der für R¹¹ und R¹² gegebenen Bedeutung,
einer der Ringe 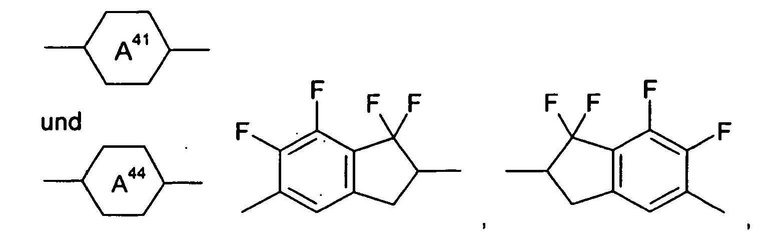 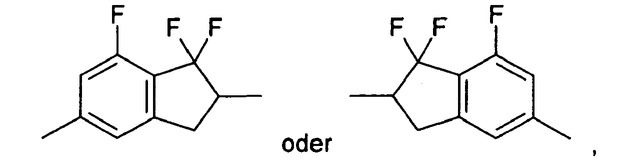 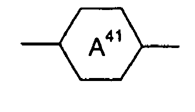 auch eine Einfachbindung, und die anderen Ringe 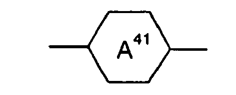 bis 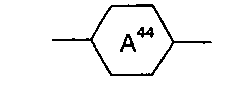 soweit vorhanden, jeweils unabhängig voneinander 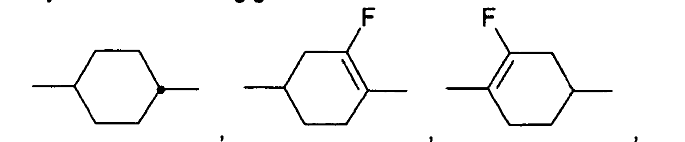 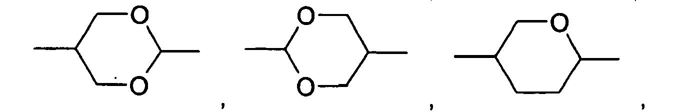 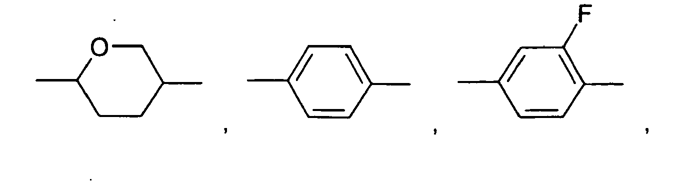 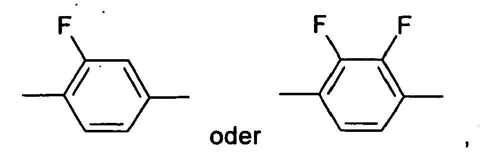
Z⁴¹ bis Z⁴³ jeweils unabhängig voneinander, eine der für Z¹¹ bis Z¹³ gegebene Bedeutung haben,
r und s jeweils unabhängig voneinander, 0 oder 1, und
bedeuten,
enthält

2. Medium nach Anspruch 1, **dadurch gekennzeichnet, dass** es zusätzlich
e) eine chirale Komponente (Komponente E), die aus einer oder mehreren chiralen Verbindungen besteht enthält.

3. Medium nach mindestens einem der Ansprüche 1 und 2, **dadurch gekennzeichnet, dass** es
eine oder mehrere dielektrisch negative Verbindungen der Formel 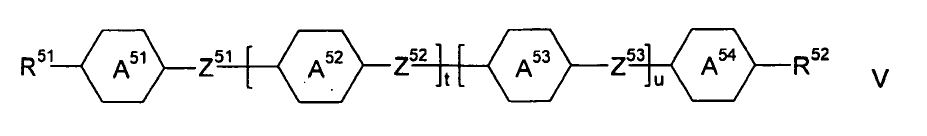 worin
R⁵¹ und R⁵² jeweils unabhängig voneinander eine der in Anspruch 1 für R¹¹ und R¹² gegebenen Bedeutung haben,
einer der Ringe 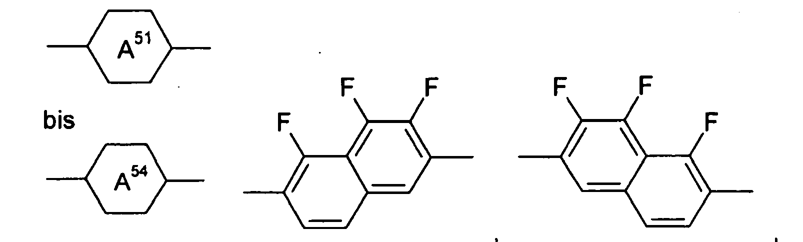 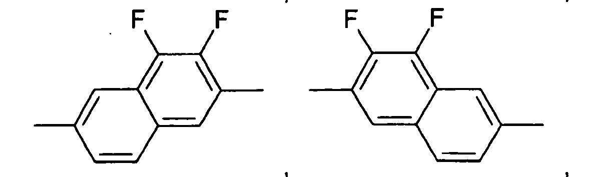 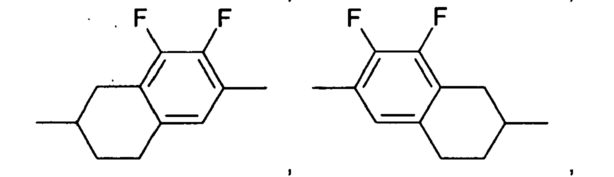 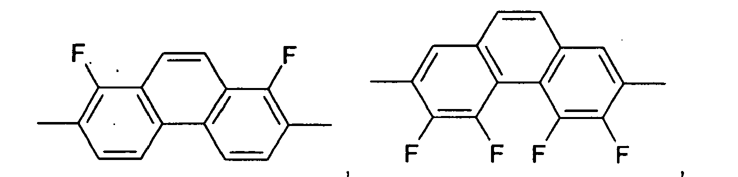 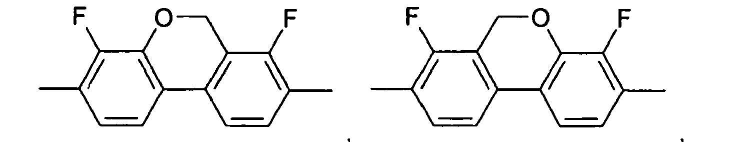 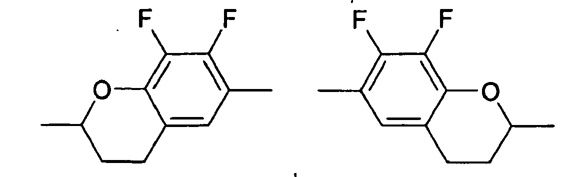 oder 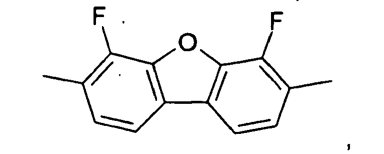 und die anderen, soweit vorhanden, jeweils unabhängig voneinander 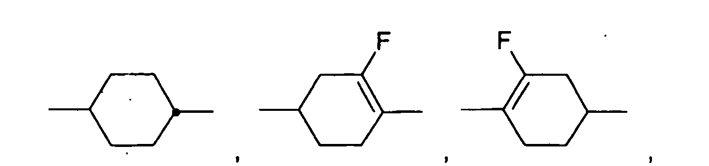 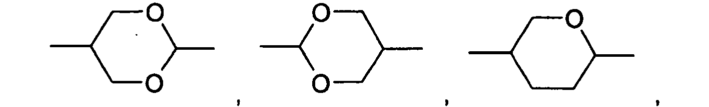 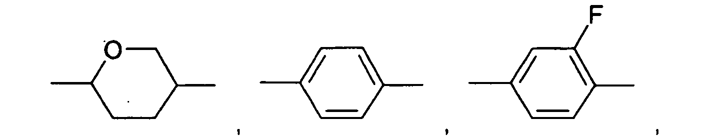 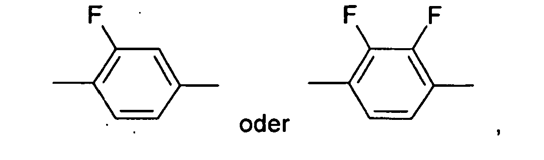 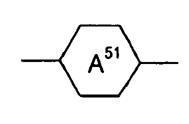 auch eine Einfachbindung,
Z⁵¹ bis Z⁵³ jeweils unabhängig voneinander, eine der für Z¹¹ bis Z¹³ gegebene Bedeutung haben,
t und u jeweils unabhängig voneinander, 0 oder 1,
bedeuten, enthält

4. Medium nach einem oder mehreren der Ansprüche 1 bis 3, **dadurch gekennzeichnet, dass** es eine oder mehrere Verbindungen der Formel I enthält worin mindestens eine in der Verbindung der Formel vorhandenen Gruppen 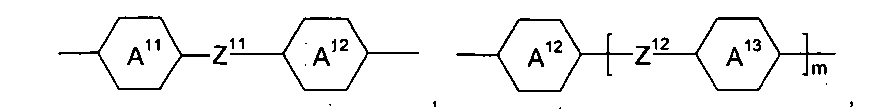 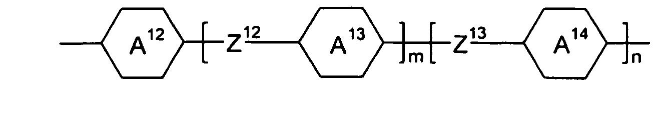 oder 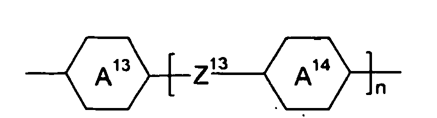 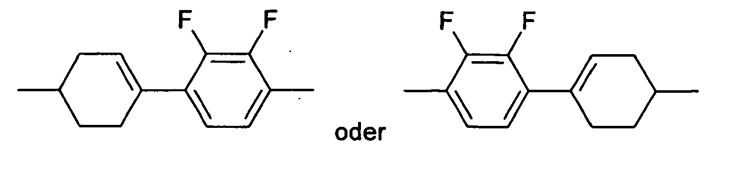 bedeuten.

5. Medium nach einem oder mehreren der Ansprüche 1 bis 4, **dadurch gekennzeichnet, dass** es ein, zwei, drei, vier oder mehr Verbindungen der Formel I enthält.

6. Medium nach einem oder mehreren der Ansprüche 1 bis 5, **dadurch gekennzeichnet, dass** der Anteil an Verbindungen der Formel I im Gesamtgemisch mindestens 15 Gew.% beträgt.

7. Flüssigkristallines Medium nach einem oder mehreren der Ansprüche 1 bis 6, **dadurch gekennzeichnet, dass** der Anteil an Verbindungen der Formeln IA-1 und IB-1 bis IB-4 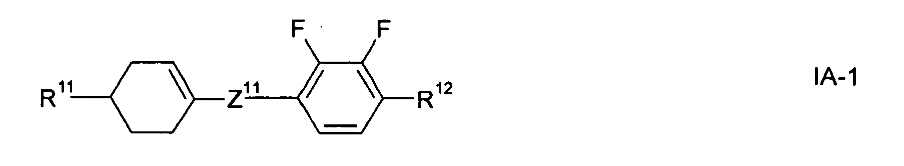 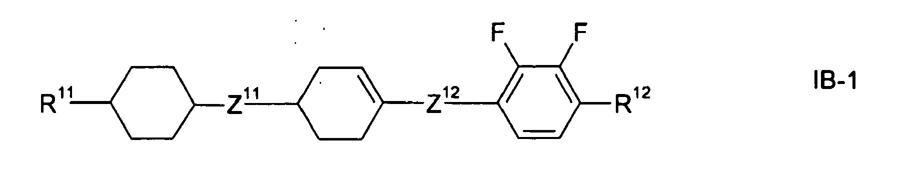 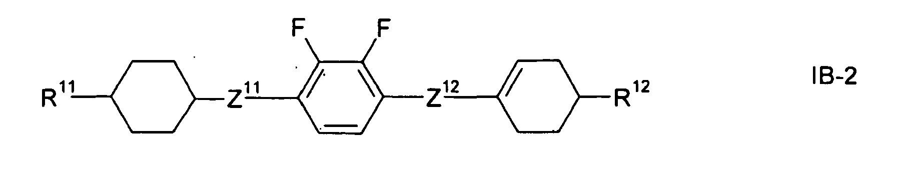 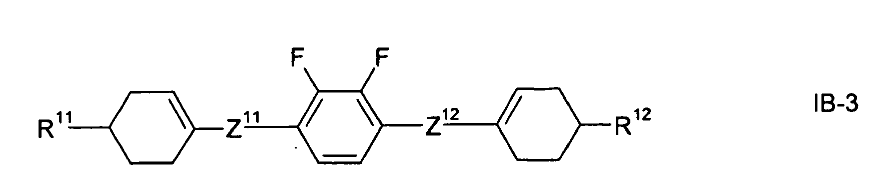 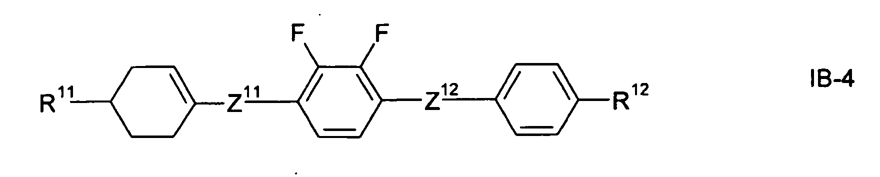 worin die Parameter die in Anspruch 1 gegebene Bedeutung haben,
im Gesamtgemisch mindestens 20 Gew.% beträgt.

8. Medium nach einem oder mehreren der Ansprüche 1 bis 6, **dadurch gekennzeichnet, dass** es mindestens eine Verbindung ausgewählt aus den Formeln. IA-1, IB-1 bis IB-3 und IB-9 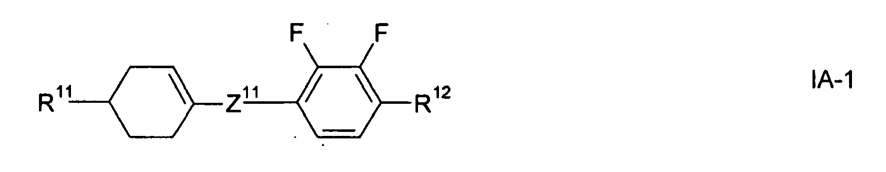 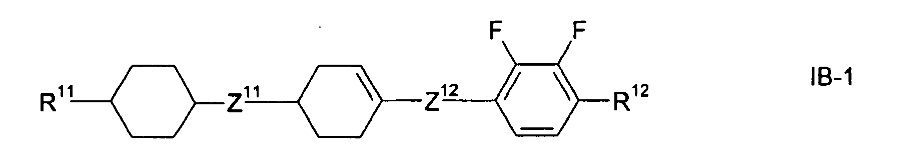 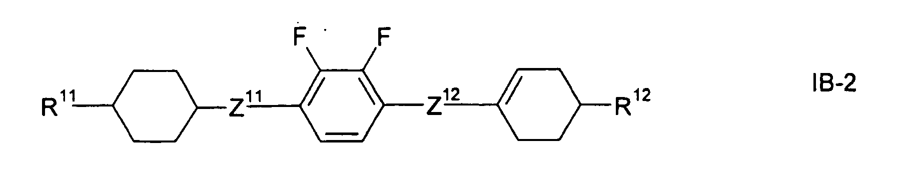 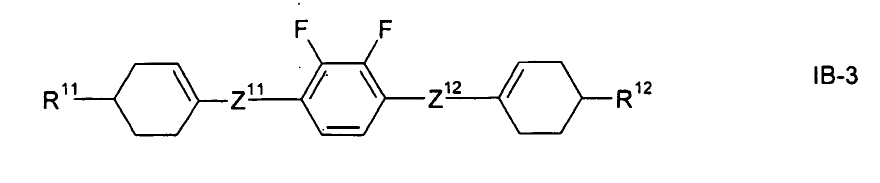 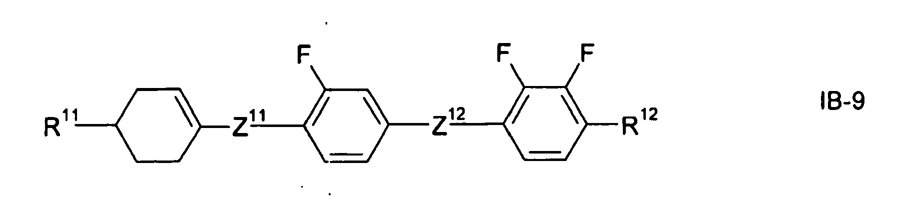 worin die Parameter die in Anspruch 1 gegebene Bedeutung haben, enthält.

9. Medium nach einem oder mehreren der Ansprüche 1 bis 8, **dadurch gekennzeichnet, dass** es eine oder mehrere Verbindungen der Formel I enthält worin Z¹¹ bis Z¹³ jeweils eine Einfachbindung bedeutet.

10. Medium nach einem oder mehreren der Ansprüche 1 bis 9, **dadurch gekennzeichnet, dass** es
2-80 Gew.-% einer oder mehrerer Verbindungen der Formel I,
2-80 Gew.-% einer oder mehrerer Verbindungen der Formel II,
2-80 Gew.-% einer oder mehrerer Verbindungen der Formel III und
2-80 Gew.-% einer oder mehrerer Verbindungen der Formeln IV und/oder V
enthält, wobei der Gesamtgehalt aller Verbindungen der Formeln I in dem Medium 100 Gew.-% oder weniger beträgt.

11. Medium nach einem oder mehreren der Ansprüche 1 bis 10, **dadurch gekennzeichnet, dass** es einen Polymervorläufer enthält, der seinerseits eine oder mehrere reaktive Verbindungen enthält.

12. Elektrooptische Anzeige **dadurch gekennzeichnet, dass** sie als Dielektrikum ein flüssigkristallines Medium nach einem oder mehreren der Ansprüche 1 bis 11 enthält.

13. Anzeige nach Anspruch 12, **dadurch gekennzeichnet, dass** sie eine Aktivmatrix-Addressierungseinrichtung aufweist.

14. Anzeige nach Anspruch 12 oder 13, **dadurch gekennzeichnet, dass** sie auf dem VA-, ECB-, PALC-, FFS- oder dem IPS-Effekt basiert.

15. Verwendung eines flüssigkristallinen Mediums nach mindestens einem oder mehreren der Ansprüche 1 bis 11 einer elektrooptischen Anzeige.

16. Verwendung eines flüssigkristallinen Mediums nach Anspruch 15 in einer elektrooptischen Anzeige, die eine Aktivmatrix-Addressierungseinrichtung aufweist.

## Claims

1. Liquid-crystalline medium based on a mixture of dielectrically negative, polar compounds, **characterised in that** it comprises
a) a first dielectrically negative, mesogenic component (component A), which consists of one or more dielectrically negative compound(s) of the formula I, 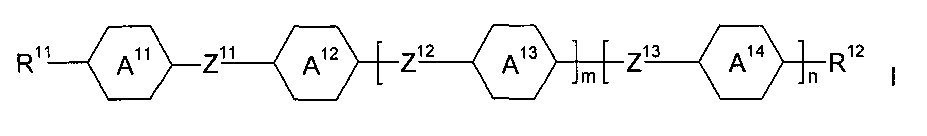 in which
R¹¹ and R¹² each, independently of one another, denote H, an unsub- stituted alkyl or alkenyl radical having up to 15 C atoms, where, in addition, one or more CH₂ groups in these radicals may be replaced by -O-, -S-, -◇-, -C≡C-, -CF₂-O-, -O-CF₂-, -CO-O- or -O-CO- in such a way that O atoms are not linked directly to one another,
one of the rings 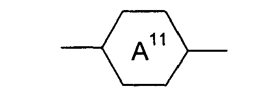 to 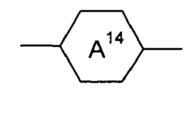 present denotes 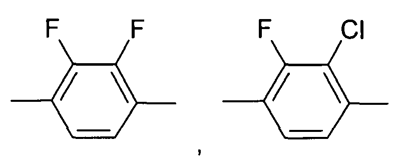 or 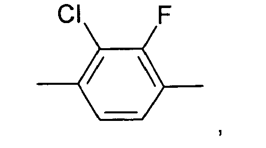 and another of the rings 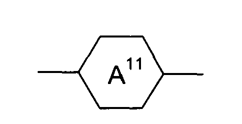 to 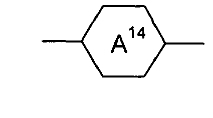 present denotes 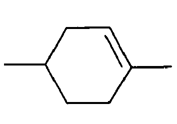 or 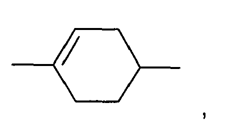 and the others, if present, each, independently of one another, denote 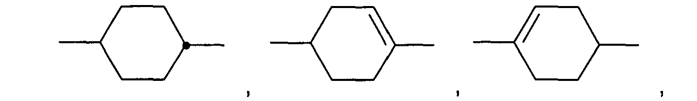 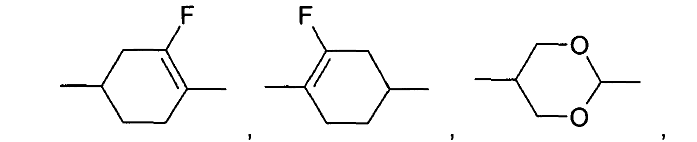 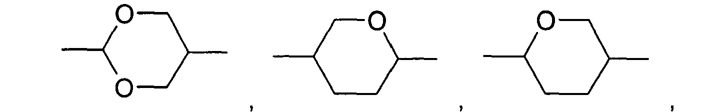 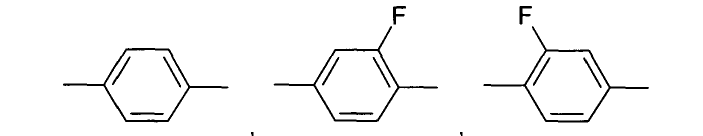 or 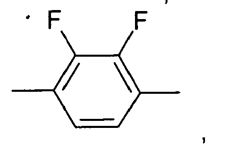
Z¹¹ to Z¹³ each, independently of one another, denote -CH₂-CH₂-, -CH=CH-, -C≡C-, -CH₂-O-, -O-CH₂-, -CO-O-, -O-CO-, -CF₂-O-, -O-CF₂-, -CF₂-CF₂- or a single bond, and
m and n each, independently of one another, denote 0 or 1,
b) a second dielectrically negative, mesogenic component (component B), which consists of one or more dielectrically negative compound(s) of the formula II 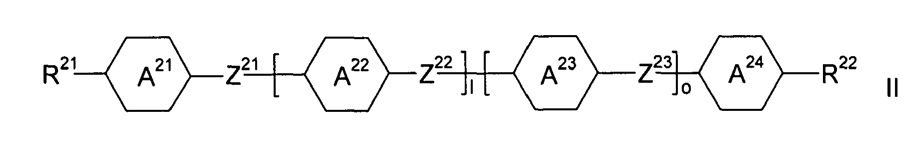 in which
R²¹ and R²² each, independently of one another, denote H, an alkyl or alkenyl radical having up to 15 C atoms, where, in addition, one or more CH₂ groups in these radicals may be replaced by -O-, -S-, 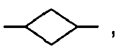 -C≡C-, -CF₂-O-, -O-CF₂-, -CO-O- or -O-CO- in such a way that O atoms are not linked directly to one another,
one of the rings 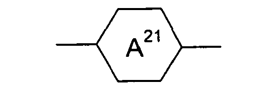 to 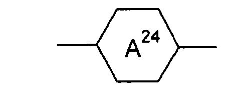 present denotes 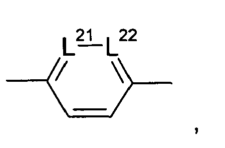 and the others, if present, each, independently of one another, denote 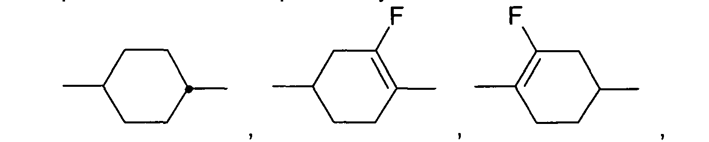 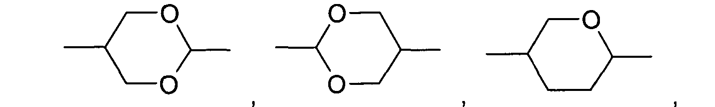 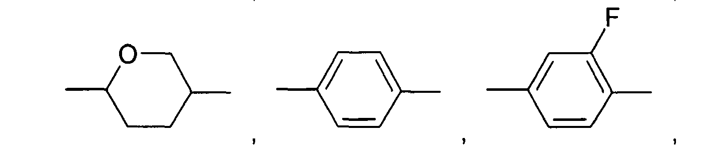 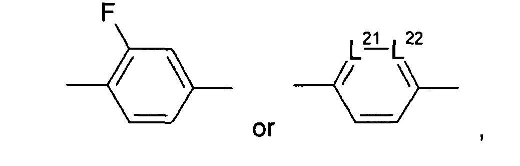
L²¹ and L²² each, independently of one another, denote =C(X²)- or =N-,
X² denotes F, Cl, OCF₃, CF₃, CH₃, CH₂F, CHF₂,
Z²¹ to Z²³ each, independently of one another, denote -CH₂-CH₂-, -CH₂-CF₂-, -CF₂-CH₂-, -CF₂-CF₂-, -CH=CH-, -CF=CH-, -CH=CF-, -C≡C-, -CH₂-O-, -O-CH₂-, -CO-O-, -O-CO-, -CF₂-O-, -O-CF₂- or a single bond, and
I and o each, independently of one another, denote 0 or 1,
c) a dielectrically neutral, mesogenic component (component C), which consists of one or more dielectrically neutral compounds of the formula III 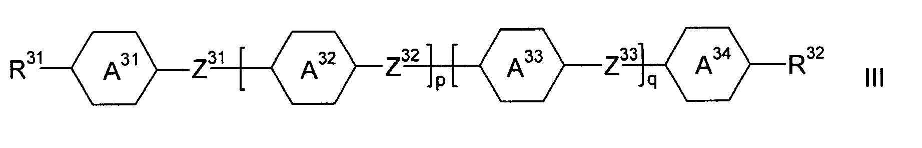 in which
R³¹ and R³² each, independently of one another, have one of the meanings given for R¹¹ and R¹², 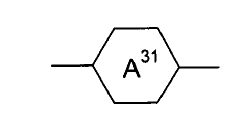
to 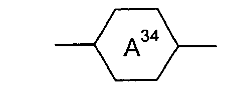 each, independently of one another, denote 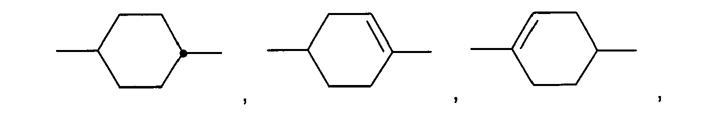 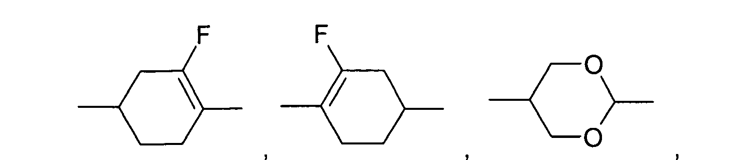 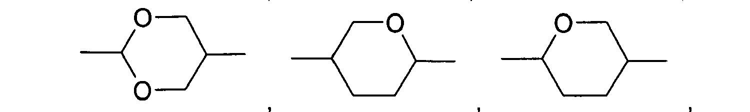 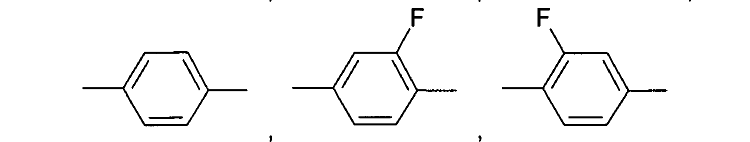 or 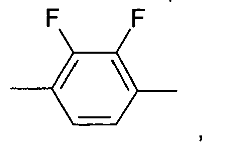
Z³¹ to Z³³ each, independently of one another, have one of the meanings given for Z¹¹ to Z¹³, and
p and q each, independently of one another, denote 0 or 1,
and
d) a further dielectrically negative, mesogenic component (component D), which consists of one or more dielectrically negative compounds selected from the group of the compounds of the formula IV 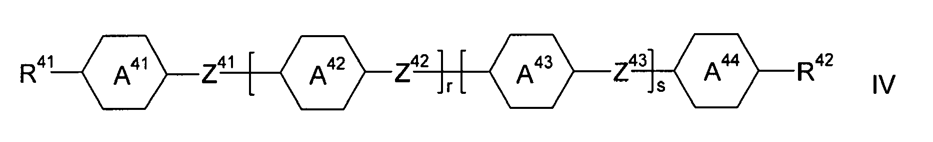 in which
R⁴¹ and R⁴² each, independently of one another, have one of the meanings given for R¹¹ and R¹²,
one of the rings 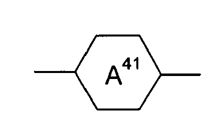 and 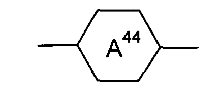 denotes 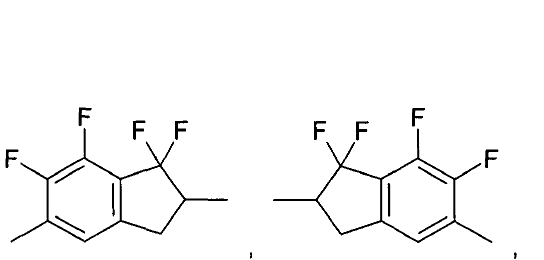 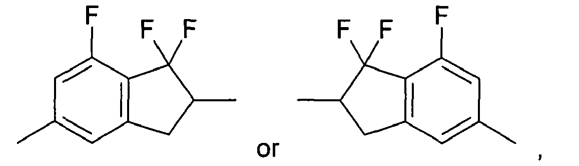 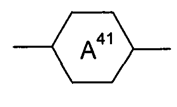 also denotes a single bond, and the other rings 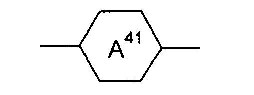
to 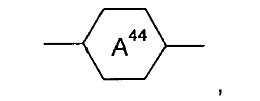 if present, each, independently of one another, denote 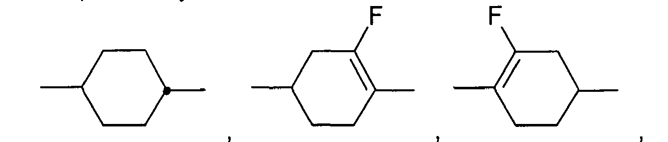 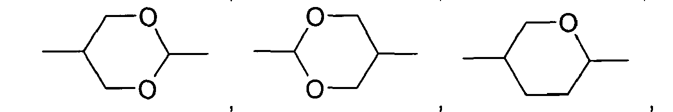 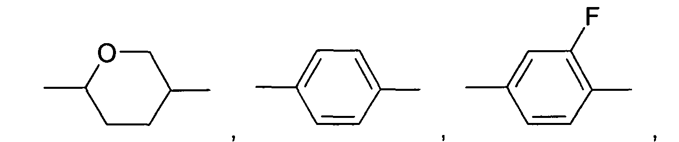 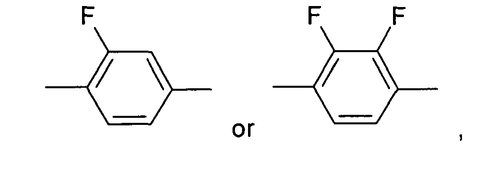
Z⁴¹ to Z⁴³ each, independently of one another, have one of the meanings given for Z¹¹ to Z¹³, and
r and s each, independently of one another, denote 0 or 1.

2. Medium according to Claim 1, **characterised in that** it additionally comprises
e) a chiral component (component E), which consists of one or more chiral compounds.

3. Medium according to at least one of Claims 1 and 2, **characterised in that** it comprises
one or more dielectrically negative compounds of the formula 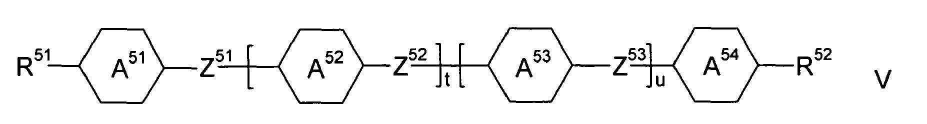 in which
R⁵¹ and R⁵² each, independently of one another, have one of the meanings given for R¹¹ and R¹² in Claim 1,
one of the rings 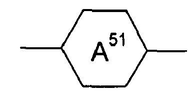 to 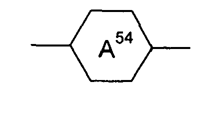 denotes 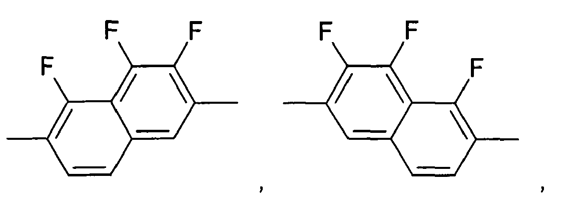 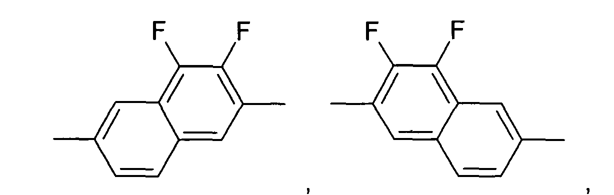 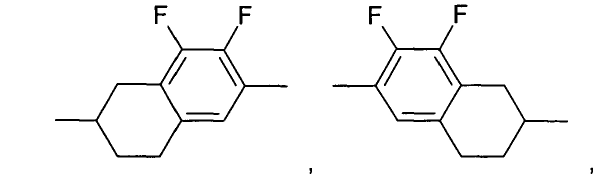 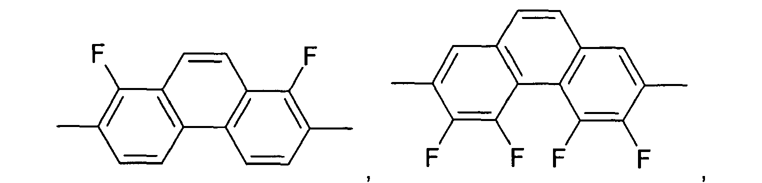 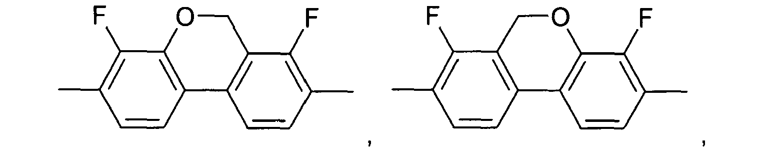 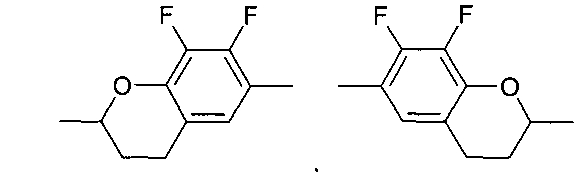 or 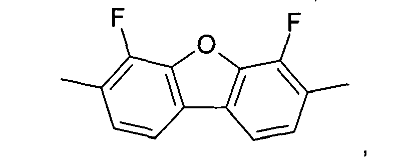 and the others, if present, each, independently of one another, denote 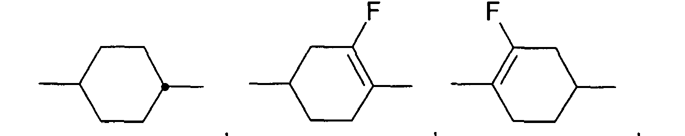 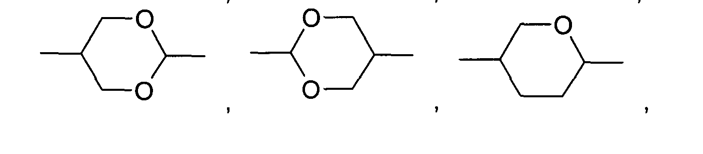 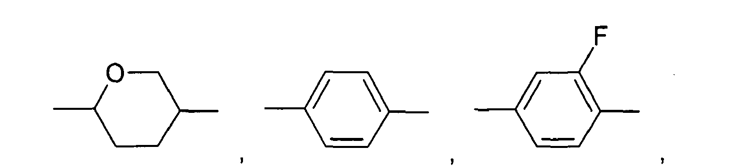 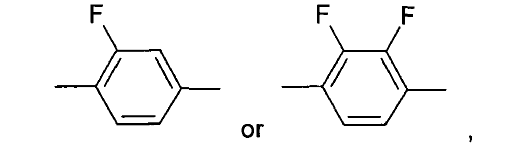 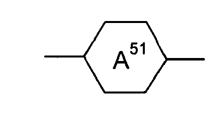 also denotes a single bond,
Z⁵¹ to Z⁵³ each, independently of one another, have one of the meanings given for Z¹¹ to Z¹³, and
t and u each, independently of one another, denote 0 or 1.

4. Medium according to one or more of Claims 1 to 3, **characterised in that** it comprises one or more compounds of the formula I in which at least one of the groups 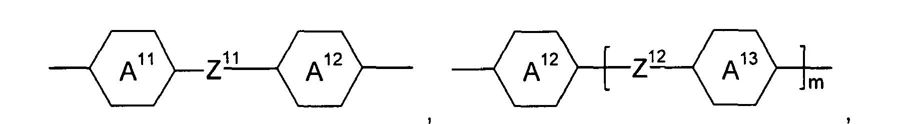 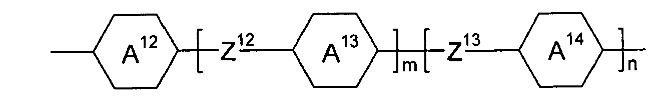 and 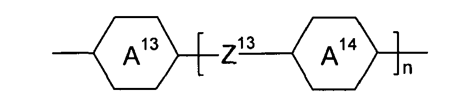 present in the compound of the formula I denotes

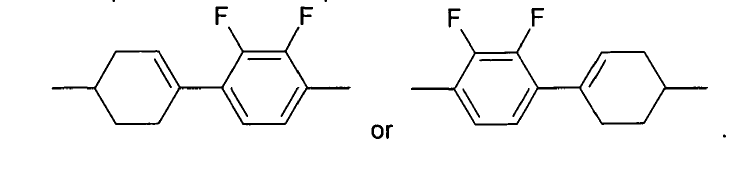

5. Medium according to one or more of Claims 1 to 4, **characterised in that** it comprises one, two, three, four or more compounds of the formula I.

6. Medium according to one or more of Claims 1 to 5, **characterised in that** the proportion of compounds of the formula I in the mixture as a whole is at least 15% by weight.

7. Liquid-crystalline medium according to one or more of Claims 1 to 6, **characterised in that** the proportion of compounds of the formulae IA-1 and IB-1 to IB-4 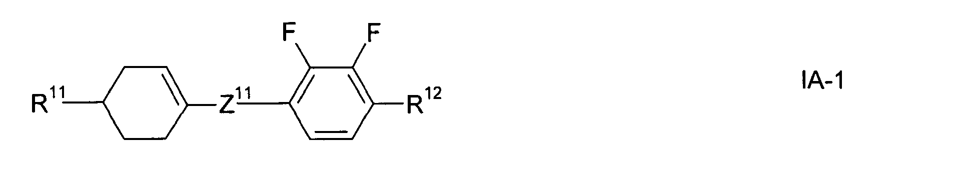 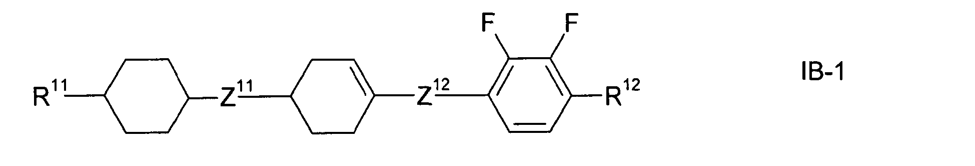 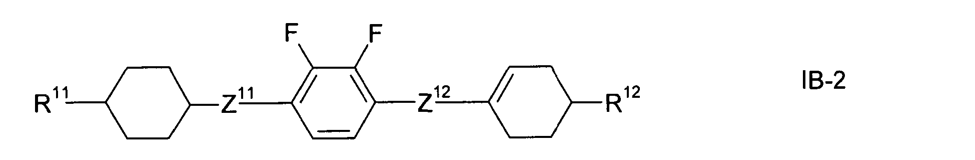 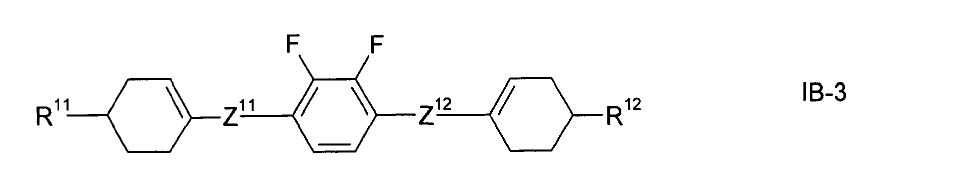 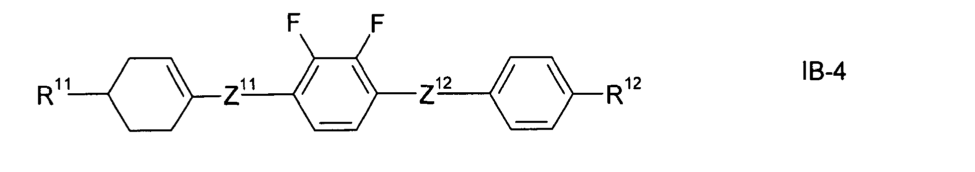 in which the parameters have the meaning given in Claim 1, in the mixture as a whole is at least 20% by weight.

8. Medium according to one or more of Claims 1 to 6, **characterised in that** it comprises at least one compound selected from the formulae IA-1, IB-1 to IB-3 and IB-9 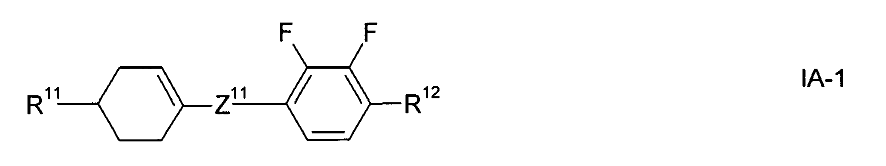 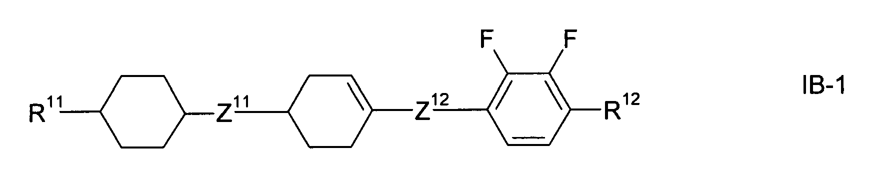 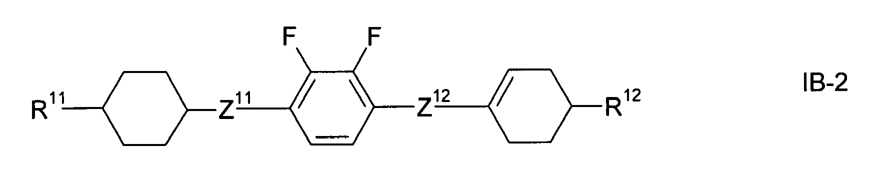 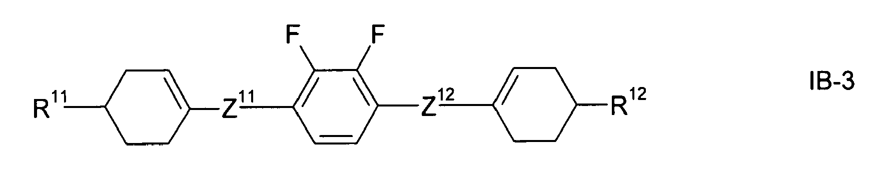 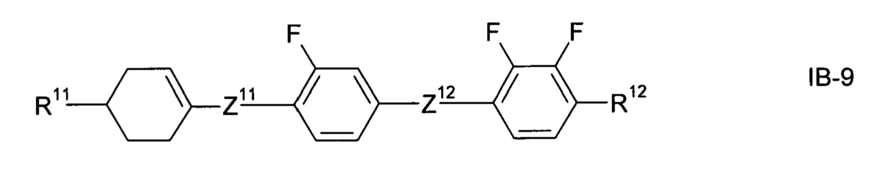 in which the parameters have the meaning given in Claim 1.

9. Medium according to one or more of Claims 1 to 8, **characterised in that** it comprises one or more compounds of the formula I in which Z¹¹ to Z¹³ each denote a single bond.

10. Medium according to one or more of Claims 1 to 9, **characterised in that** it comprises
2-80% by weight of one or more compounds of the formula I,
2-80% by weight of one or more compounds of the formula II,
2-80% by weight of one or more compounds of the formula III, and
2-80% by weight of one or more compounds of the formulae IV and/or V,
where the total content of all compounds of the formula I in the medium is 100% by weight or less.

11. Medium according to one or more of Claims 1 to 10, **characterised in that** it comprises a polymer precursor which itself comprises one or more reactive compounds.

12. Electro-optical display, **characterised in that** it contains, as dielectric, a liquid-crystalline medium according to one or more of Claims 1 to 11.

13. Display according to Claim 12, **characterised in that** it has an active-matrix addressing device.

14. Display according to Claim 12 or 13, **characterised in that** it is based on the VA, ECB, PALC, FFS or IPS effect.

15. Use of a liquid-crystalline medium according to at least one or more of Claims 1 to 11 in an electro-optical display.

16. Use of a liquid-crystalline medium according to Claim 15 in an electro-optical display which has an active-matrix addressing device.

## Revendications

1. Milieu cristallin liquide basé sur un mélange de composés polaires diélectriquement négatifs, **caractérisé en ce qu'**il comprend :
a) un premier composant mésogène diélectriquement négatif (composant A), lequel est constitué par un ou plusieurs composé(s) diélectriquement négatif(s) de la formule I, 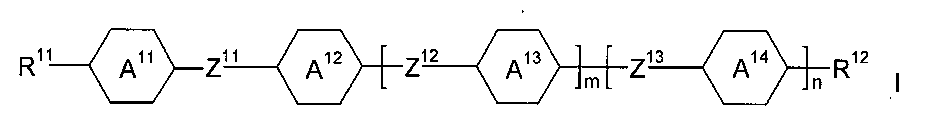 dans laquelle
R¹¹ et R¹² représentent, chacun indépendamment de l'autre, H, un radical alkyle ou alkényle non substitué comportant jusqu'à 15 atomes de C, où, en outre, un ou plusieurs groupes CH₂ dans ces radicaux peuvent être remplacés par -O-, -S-, 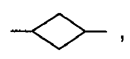 -C=C-, -CF₂-O-, -O-CF₂-, -CO-O- ou -O-CO- de telle sorte que des atomes de O ne soient pas liés directement les uns aux autres,
l'un des cycles 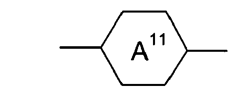 à 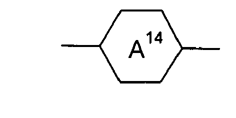 qui est présent représente 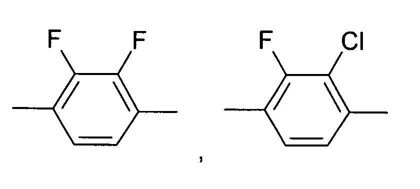 ou 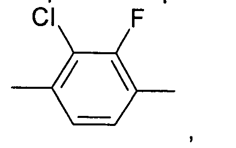 et un autre des cycles 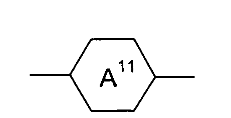 à 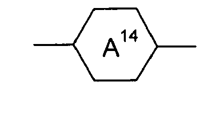 qui est présent représente 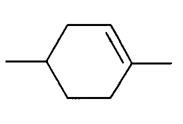 ou 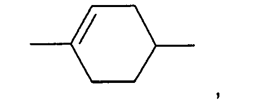 et les autres cycles représentent, s'ils sont présents, chacun indépendamment des autres 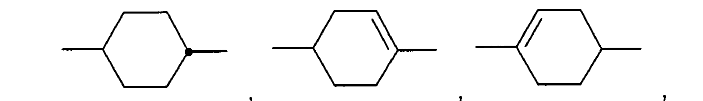 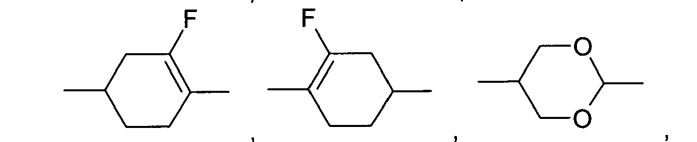 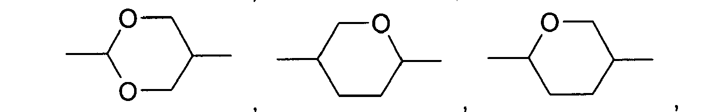 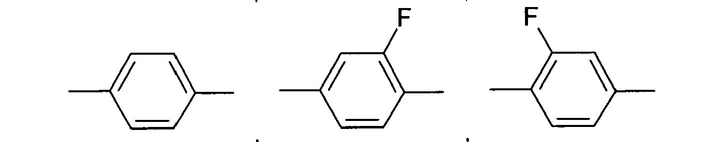 ou 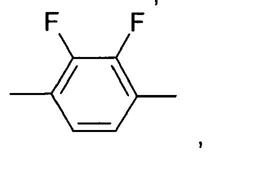
Z¹¹ à Z¹³ représentent, chacun indépendamment des autres, -CH₂-CH₂-, -CH=CH-, -C≡C-, -CH₂-O-, -O-CH₂-, -CO-O-, -O-CO-, -CF₂-O-, -O-CF₂-, -CF₂-CF₂- ou une liaison simple, et
m et n représentent, chacun indépendamment de l'autre, 0 ou 1,
b) un second composant mésogène diélectriquement négatif (composant B), lequel est constitué par un ou plusieurs composé(s) diélectriquement négatif(s) de la formule II 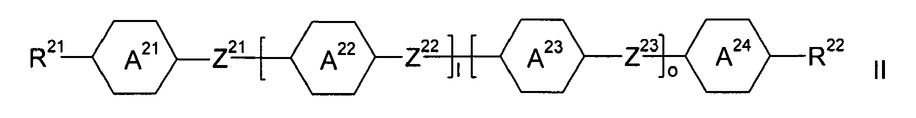 dans laquelle
R²¹ et R²² représentent, chacun indépendamment de l'autre, H, un radical alkyle ou alkényle comportant jusqu'à 15 atomes de C, où, en outre, un ou plusieurs groupes CH₂ dans ces radicaux peuvent être remplacés par -O-, -S-, 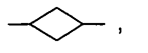 -C≡C-, -CF₂-O-, -O-CF₂-, -CO-O- ou -O-CO- de telle sorte que des atomes de O ne soient pas liés directement les uns aux autres,
l'un des cycles 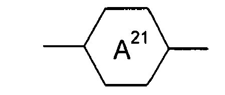 à 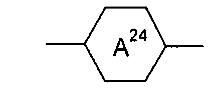 qui est présent représente 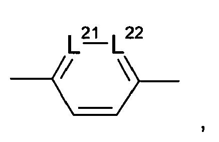 et les autres cycles représentent, s'ils sont présents, chacun indépendamment des autres 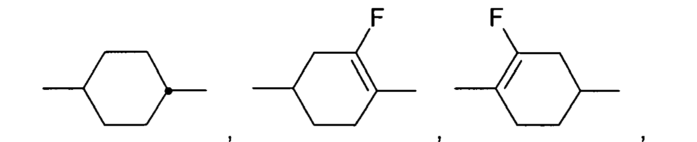 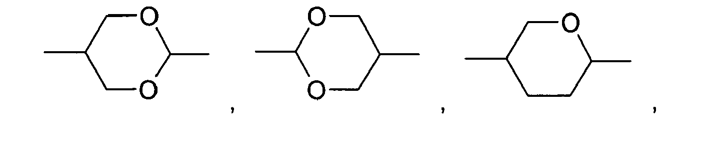 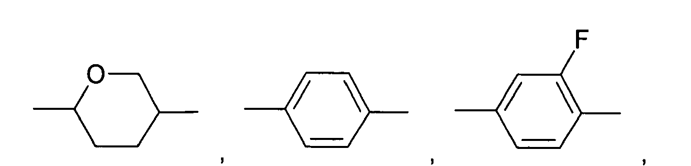 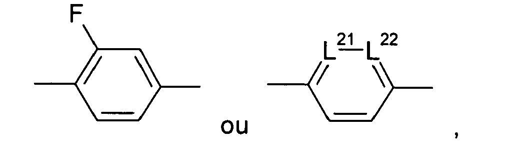
L²¹ et L²² représentent, chacun indépendamment de l'autre, =C(X²)- ou =N-,
X² représente F, CI, OCF₃, CF₃, CH₃, CH₂F, CHF₂,
Z²¹ à Z²³ représentent, chacun indépendamment des autres, -CH₂-CH₂-, -CH₂-CF₂-, -CF₂-CH₂-, -CF₂-CF₂-, -CH=CH-, -CF=CH-, -CH=CF-, -C=C-, -CH₂-O-, -O-CH₂-, -CO-O-, -O-CO-, -CF₂-O-, -O-CF₂- ou une liaison simple, et
l et o représentent, chacun indépendamment de l'autre, 0 ou 1,
c) un composant mésogène diélectriquement neutre (composant C), lequel est constitué par un ou plusieurs composé(s) diélectriquement neutre(s) de la formule III 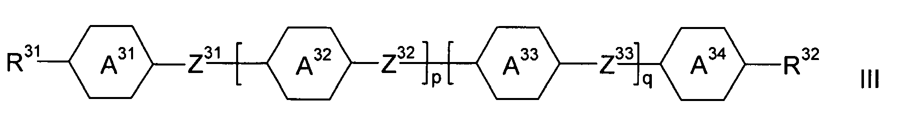 dans laquelle
R³¹ et R³² présentent, chacun indépendamment de l'autre, l'une des significations données pour R¹¹ et R¹², 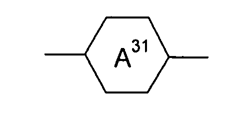
à 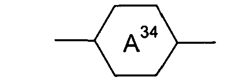 représentent, chacun indépendamment des autres, 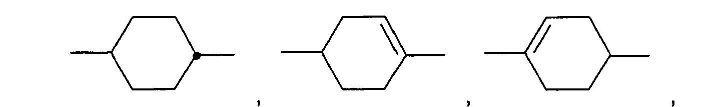 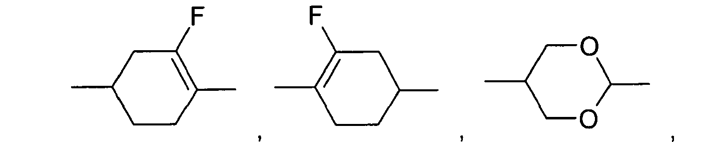 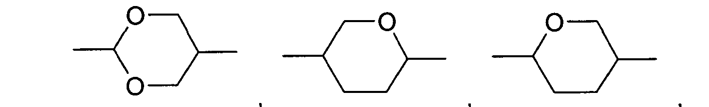 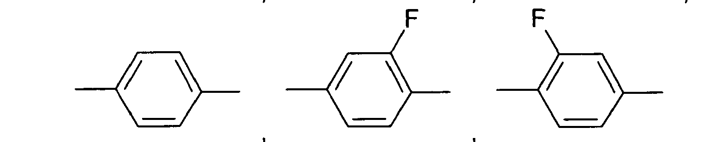 ou 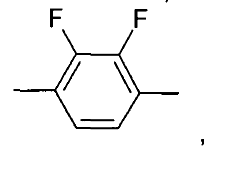
Z³¹ à Z³³ présentent, chacun indépendamment des autres, l'une des significations données pour Z¹¹ à Z¹³, et
p et q représentent, chacun indépendamment de l'autre, 0 ou 1,
et
d) un autre composant mésogène diélectriquement négatif (composant D), lequel est constitué par un ou plusieurs composé(s) diélectriquement négatif(s) choisis parmi le groupe des composés de la formule IV 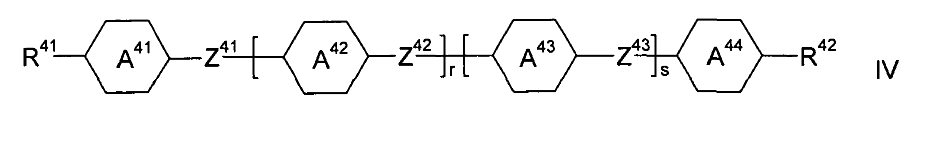 dans laquelle
R⁴¹ et R⁴² présentent, chacun indépendamment de l'autre, l'une des significations données pour R¹¹ et R¹²,
l'un des cycles 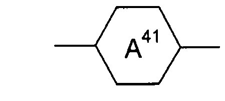 et 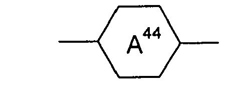 représente 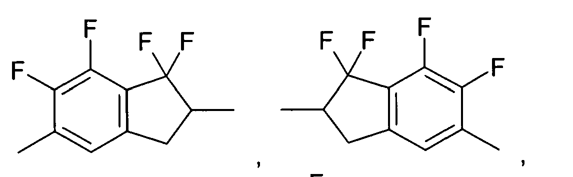 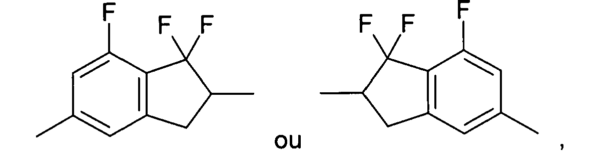 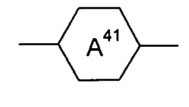 représente également une liaison simple, et les autres cycles 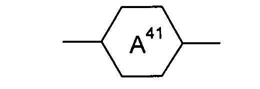 à 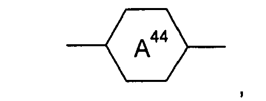 représentent, s'ils sont présents, chacun indépendamment des autres 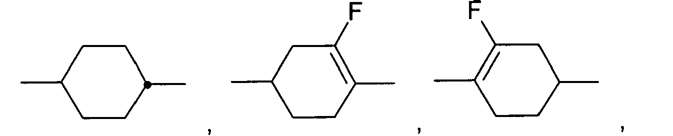 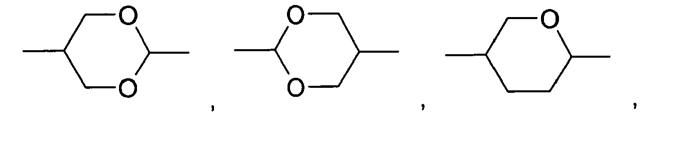 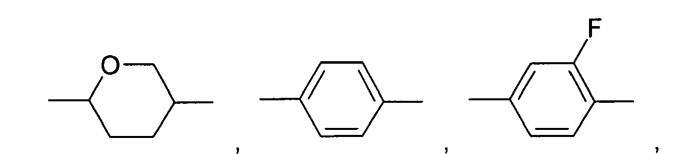 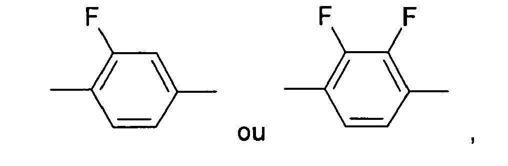
Z⁴¹ à Z⁴³ présentent, chacun indépendamment des autres, l'une des significations données pour Z¹¹ à Z¹³, et
r et s représentent, chacun indépendamment de l'autre, 0 ou 1.

2. Milieu selon la revendication 1, **caractérisé en ce qu'**il comprend additionnellement
e) un composant chiral (composant E), lequel est constitué par un ou plusieurs composants chiraux.

3. Milieu selon au moins l'une des revendications 1 et 2, **caractérisé en ce qu'**il comprend
un ou plusieurs composé(s) diélectriquement négatif(s) de la formule V 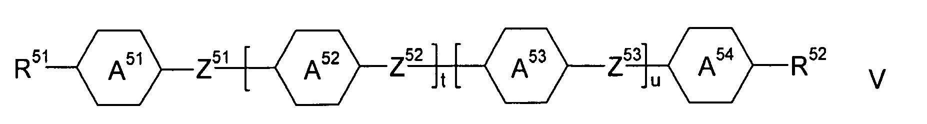 dans laquelle
R⁵¹ et R⁵² présentent, chacun indépendamment de l'autre, l'une des significations données pour R¹¹ and R¹² selon la revendi- cation 1,
l'un des cycles 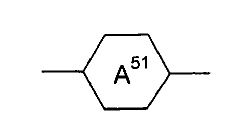 à 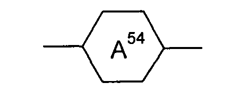 représente 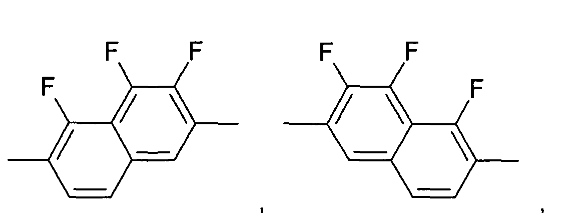 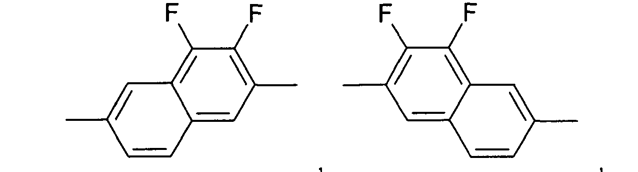 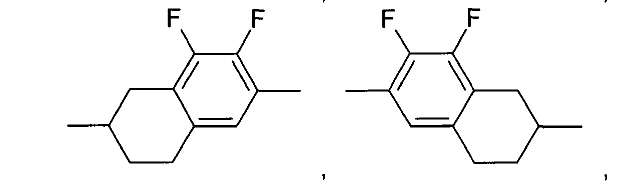 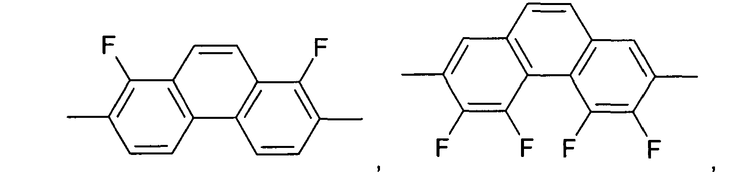 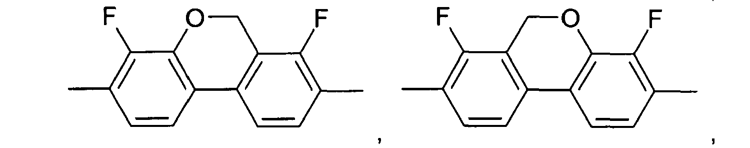 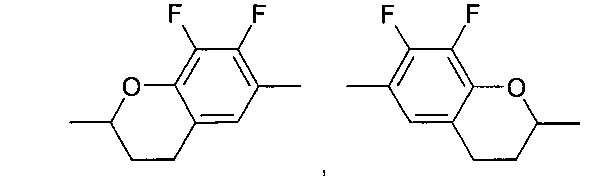 ou 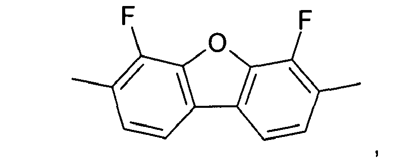 et les autres cycles représentent, s'ils sont présents, chacun indépendamment des autres 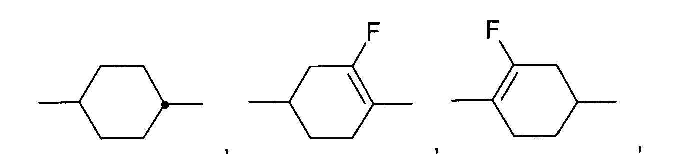 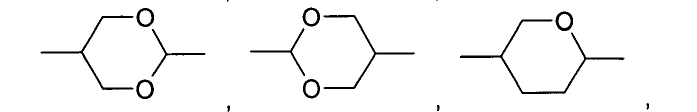 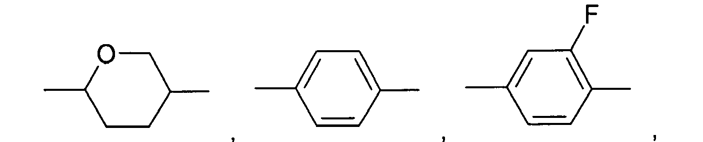 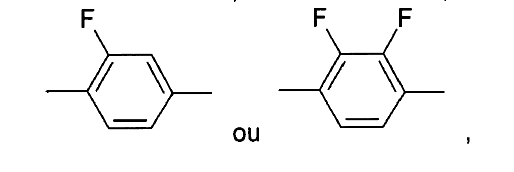 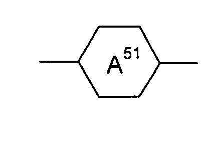 représente également une liaison simple,
Z⁵¹ à Z⁵³ présentent, chacun indépendamment des autres, l'une des significations données pour Z¹¹ à Z¹³, et
t et u représentent, chacun indépendamment de l'autre, 0 ou 1.

4. Milieu selon une ou plusieurs des revendications 1 à 3, **caractérisé en ce qu'**il comprend un ou plusieurs composés de la formule I où au moins l'un des groupes 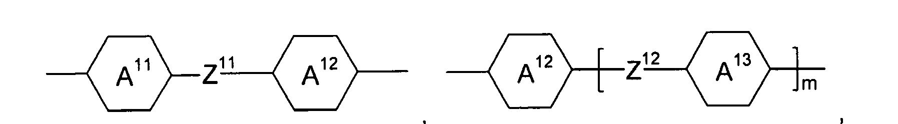 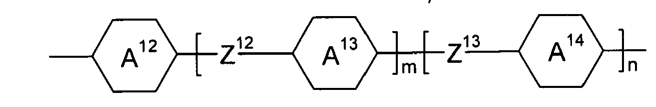 et 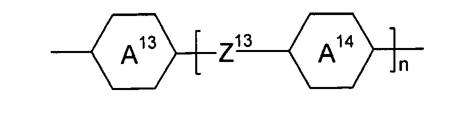 présent dans le composé de la formule I représente

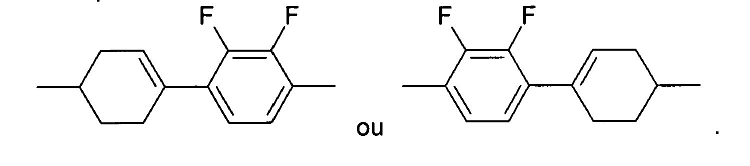

5. Milieu selon une ou plusieurs des revendications 1 à 4, **caractérisé en ce qu'**il comprend un, deux, trois ou quatre composés ou plus de la formule I.

6. Milieu selon une ou plusieurs des revendications 1 à 5, **caractérisé en ce que** la proportion de composés de la formule I dans le mélange pris dans sa globalité est d'au moins 15% en poids.

7. Milieu cristallin liquide selon une ou plusieurs des revendications 1 à 6, **caractérisé en ce que** la proportion de composés des formules IA-1 et IB-1 à IB-4 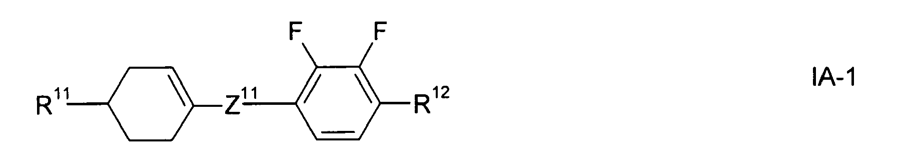 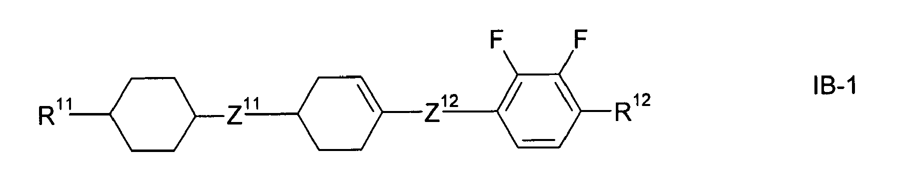 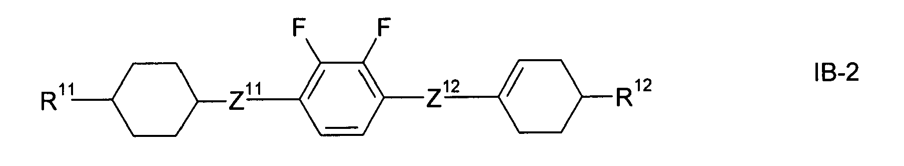 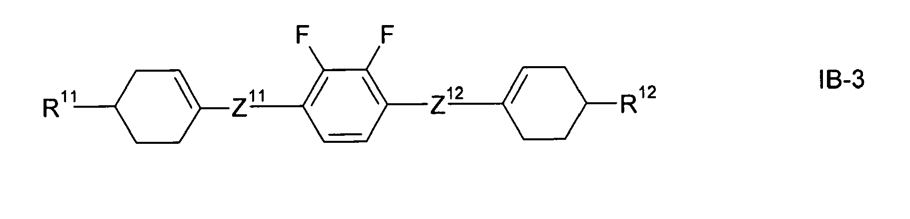 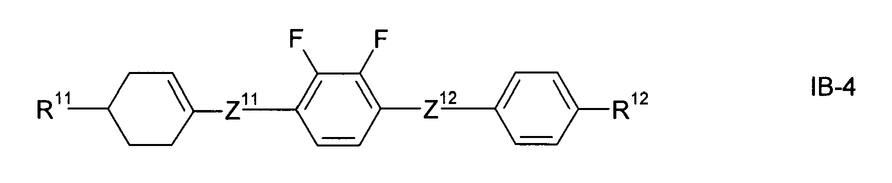 dans lesquelles les paramètres présentent la signification donnée selon la revendication 1,
dans le mélange pris dans sa globalité est d'au moins 20% en poids.

8. Milieu selon une ou plusieurs des revendications 1 à 6, **caractérisé en ce qu'**il comprend au moins un composé choisi parmi les formules IA-1, IB-1 à IB-3 et IB-9 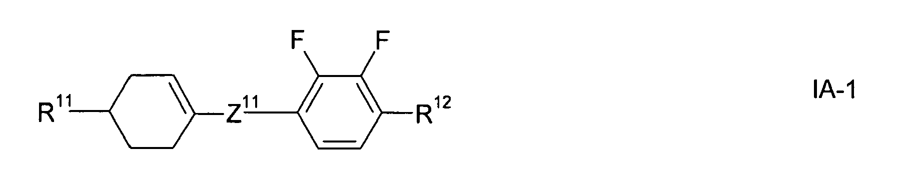 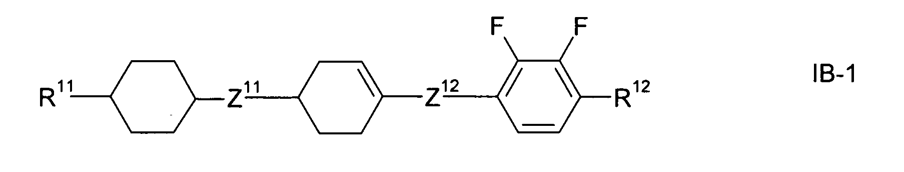 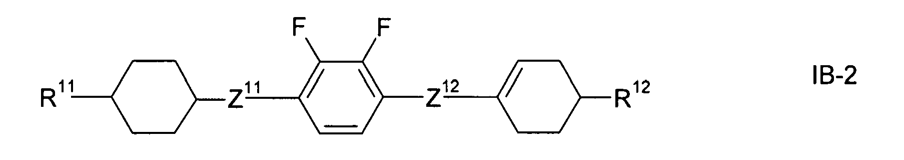 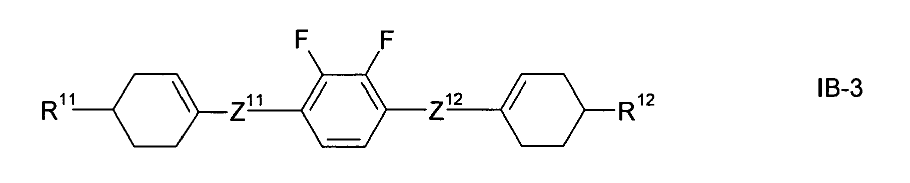 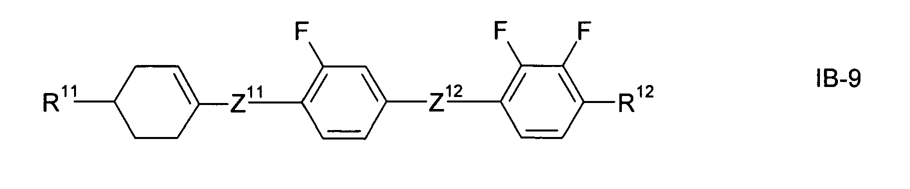 dans lesquelles les paramètres présentent la signification donnée selon la revendication 1.

9. Milieu selon une ou plusieurs des revendications 1 à 8, **caractérisé en ce qu'**il comprend un ou plusieurs composés de la formule I dans laquelle Z¹¹ à Z¹³ représentent chacun une liaison simple.

10. Milieu selon une ou plusieurs des revendications 1 à 9, **caractérisé en ce qu'**il comprend
2-80% en poids d'un ou de plusieurs composés de la formule I,
2-80% en poids d'un ou de plusieurs composés de la formule II,
2-80% en poids d'un ou de plusieurs composés de la formule III, et
2-80% en poids d'un ou de plusieurs composés de la formule IV et/ou V,
où la teneur totale de tous les composés de la formule I dans le milieu est de 100% en poids ou moins.

11. Milieu selon une ou plusieurs des revendications 1 à 10, **caractérisé en ce qu'**il comprend un précurseur de polymère qui comprend lui-même un ou plusieurs composé(s) réactif(s).

12. Affichage électro-optique, **caractérisé en ce qu'**il contient, en tant que diélectrique, un milieu cristallin liquide selon une ou plusieurs des revendications 1 à 11.

13. Affichage selon la revendication 12, **caractérisé en ce qu'**il comporte un dispositif d'adressage par matrice active.

14. Affichage selon la revendication 12 ou 13, **caractérisé en ce qu'**il est basé sur l'effet VA, ECB, PALC, FFS ou IPS.

15. Utilisation d'un milieu cristallin liquide selon au moins une ou plusieurs des revendications 1 à 11 dans un affichage électro-optique.

16. Utilisation d'un milieu cristallin liquide selon la revendication 15 dans un affichage électro-optique qui comporte un dispositif d'adressage par matrice active.
